(19) Europäisches Patentamt
European Patent Office
Office européen des brevets

(11) EP 1 938 685 A1

(12) **EUROPEAN PATENT APPLICATION**
published in accordance with Art. 153(4) EPC

(43) Date of publication:
**02.07.2008 Bulletin 2008/27**

(21) Application number: **06781253.7**

(22) Date of filing: **19.07.2006**

(51) Int Cl.:
***A01N 37/24*** *(2006.01)* ***A01N 41/10*** *(2006.01)*
***A01N 41/12*** *(2006.01)* ***A01N 43/08*** *(2006.01)*
***A01N 43/10*** *(2006.01)* ***A01N 43/36*** *(2006.01)*
***A01N 43/40*** *(2006.01)* ***A01N 47/20*** *(2006.01)*

(86) International application number:
**PCT/JP2006/314246**

(87) International publication number:
**WO 2007/013332 (01.02.2007 Gazette 2007/05)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.07.2005 JP 2005214743**

(71) Applicant: **Mitsui Chemicals, Inc.**
**Tokyo 105-7117 (JP)**

(72) Inventors:
- **NOMURA, Michikazu**
  **Mobara-shi,**
  **Chiba 2970017 (JP)**
- **TOMURA, Naofumi**
  **Mobara-shi,**
  **Chiba 2970017 (JP)**
- **EZAKI, Ryutaro**
  **Mobara-shi,**
  **Chiba 2970017 (JP)**
- **KAWAHARA, Nobuyuki,**
  **c/o Mitsui Chem. Crop Life Inc**
  **Tokyo 1030027 (JP)**

(74) Representative: **Stuart, Ian Alexander et al**
**Mewburn Ellis LLP**
**York House**
**23 Kingsway**
**London WC2B 6HP (GB)**

# (54) INSECTICIDAL AND BACTERICIDAL COMPOSITION

(57) An insecticidal and fungicidal composition capable of controlling crop diseases and insect pests at the same time by combining an insecticidal active ingredient and a fungicidal active ingredient is provided. The insecticidal and fungicidal composition is **characterized by** comprising as active ingredients a compound represented by the general formula (1) or (2) and a compound represented by the general formula (3) or (4).

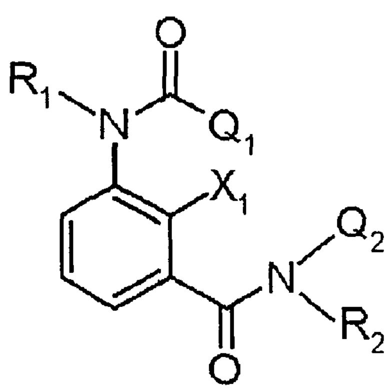
(1)
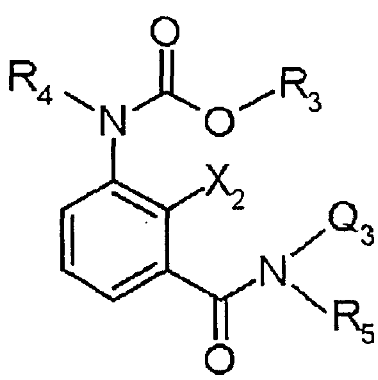
(2)

EP 1 938 685 A1



**(Cont. next page)**

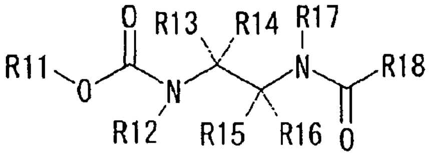 (3) 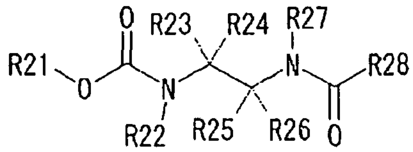 (4)

wherein, in the formula, $A_1$, $A_2$, $A_3$, and $A_4$ independently represent a carbon atom, a nitrogen atom or an oxidized nitrogen atom; $G_1$ and $G_2$ independently represent an oxygen atom or a sulfur atom; $R_1$ and $R_2$ independently a hydrogen atom or a C1-C4 alkyl group; Xs may be the same or different and represent a hydrogen atom, a halogen atom or a trifluoromethyl group; $Q_1$ represents substituents such as a phenyl group, a heterocyclic group or the like; and $Q_2$ represents substituents such as a phenyl group, a heterocyclic group or the like.

## Description

### TECHNICAL FIELD

The present invention relates to a novel insecticidal and fungicidal composition exhibiting excellent insecticidal and fungicidal actions for the labor-saving control of crop diseases and insect pests.

### BACKGROUND ART

The compound represented by the general formula (1) of the present invention is a novel compound having an insecticidal activity.
In International Publication No. 2000 / 55120 pamphlet and US Patent No. 6548514, a compound similar to the compound represented by the general formula (1) of the present invention for medical use is described. But activity against insects is never described therein. Furthermore, it is obvious that such compounds are not included in the claims of the present invention.
In International Publication No. 2000 / 7980 pamphlet, a compound similar to the compound represented by the general formula (1) of the present invention for medical use is described. But activity against insects is never described therein. Furthermore, it is obvious that such a compound is not included in the claims of the present invention.
In US Patent Laid-Open No. 2002-032238, a compound similar to the compound represented by the general formula (1) of the present invention for medical use is described. But activity against insects is never described therein. Furthermore, it is obvious that such a compound is not included in the claims of the present invention.
Meanwhile, the compound represented by the general formula (2) is described in International Publication No. 2005 / 21488 pamphlet before the application of the present invention and the compound itself has an insecticidal action. In addition, in International Publication No. 2003 / 008372 pamphlet and International Publication No. 2005 / 042474 pamphlet, it has been described that the compound represented by the general formula (3) or (4) has a control action against rice blast (Pyricularia oryzae)
However, these active compounds have an action exhibiting any of an insecticidal effect or a fungicidal effect with the use of a single agent thereof, but cannot control crop diseases and insect pests at the same time.
Patent Document 1: International Publication No. 2000 / 55120 pamphlet
Patent Document 2: US Patent No. 6548514
Patent Document 3: International Publication No. 2000 / 7980 pamphlet
Patent Document 4: US Patent Laid-Open No. 2002-032238
Patent Document 5: International Publication No. 2005 / 21488 pamphlet
Patent Document 6: International Publication No. 2003 / 8372 pamphlet
Patent Document 7: International Publication No. 2005 / 42474 pamphlet

### DISCLOSURE OF THE INVENTION

The present invention is to provide an insecticidal and fungicidal composition capable of controlling crop diseases and insect pests at the same time by combining an insecticidal active ingredient and a fungicidal active ingredient.
In order to solve the aforementioned object, the present inventors have repeatedly conducted an extensive study and as a result, have found that an insecticidal and fungicidal composition containing one or more compounds represented by the general formula (1) or (2) as insecticidal active ingredients, and one or more compounds represented by the general formula (3) or (4) as fungicidal active ingredients has excellent insecticidal and fungicidal effects on crop diseases and insect pests. Thus, the present invention has been completed.
That is, the present invention is specified by the following matters:

[1] an insecticidal and fungicidal composition comprising; one or two or more compounds selected from compounds represented by the general formula (1) or (2); and one or two or more compounds selected from compounds represented by the general formula (3) or (4) as active ingredients,

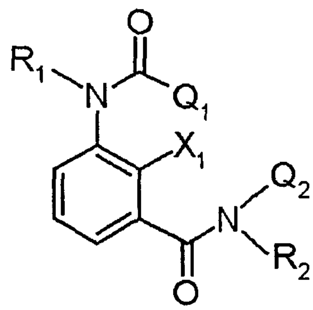

(1)

wherein, in the formula (1), $X_1$ is a hydrogen atom or a fluorine atom; $R_1$ and $R_2$ are independently a hydrogen atom or a C1-C4 alkyl group; $Q_1$ is a phenyl group,
a substituted phenyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group, an acetylamino group and a phenyl group,
a pyridyl group, or
a pyridyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group, an acetylamino group and a phenyl group; and
$Q_2$ is represented by the general formula (A),

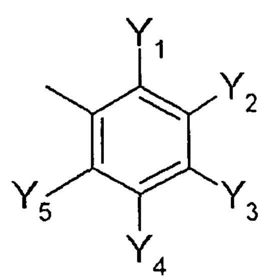

(A)

wherein, in the formula (A), $Y_1$ and $Y_5$ may be the same or different and represent a halogen atom, a C1-C4 alkyl group, a C1-C4 haloalkyl group, a C1-C4 alkoxy group, a C1-C4 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group or a cyano group; $Y_3$ represents a C2-C6 perfluoroalkyl group, a C2-C6 perfluoroalkylthio group, a C1-C6 perfluoroalkylsulfinyl group or a C1-C6 perfluoroalkylsulfonyl group; and $Y_2$ and $Y_4$ represent a hydrogen atom, a halogen atom or a C1-C4 alkyl group, or

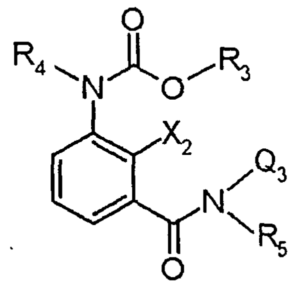

(2)

wherein, in the formula (2), $X_2$ is a hydrogen atom or a fluorine atom; $R_4$ and $R_5$ are independently a hydrogen atom or a C1-C4 alkyl group; $R_3$ represents a C1-C6 alkyl group, a C1-C6 haloalkyl group, a C2-C6 alkenyl group, a C2-C6 haloalkenyl group, a C2-C6 alkynyl group, a C2-C6 haloalkynyl group, a C3-C8 cycloalkyl group, a C3-C8 halocycloalkyl group,

$-E_1-Z_1-R_6$ (wherein, in the formula, $E_1$ represents a C1-C4 alkylene group, a C2-C4 alkenylene group, a C3-C4 alkynylene group, a C1-C4 haloalkylene group, a C2-C4 haloalkenylene group or a C3-C4 haloalkynylene group; $R_6$ represents a hydrogen atom, a C1-C6 alkyl group, a C2-C6 alkenyl group, a C2-C6 alkynyl group, a C1-C6 haloalkyl group, a C2-C6 haloalkenyl group or a C2-C6 haloalkynyl group; $Z_1$ represents -O-, -S-, -SO-, $-SO_2-$, -C(=O)-, -C(=O)O-, -OC(=O)-, $-N(R_7)-$, $-C(=O)N(R_7)-$ or $-N(R_7)C(=O)-$ ($R_7$ represents a hydrogen atom, a C1-C4 alkyl group, a C1-C4 alkylcarbonyl group, a C1-C4 haloalkylcarbonyl group or a C1-C4 alkoxycarbonyl group)) or

$-E_2-R_8$ (wherein, in the formula, $E_2$ represents a C1-C4 alkylene group, a C2-C4 alkenylene group, a C3-C4 alkynylene group, a C1-C4 haloalkylene group, a C2-C4 haloalkenylene group or a C3-C4 haloalkynylene group; $R_8$ represents a C3-C8 cycloalkyl group, a C3-C8 halocycloalkyl group, a cyano group, a nitro group, a hydroxy group, a phenyl group,

a substituted phenyl group having one or more substituents which may be the same or different and are selected from a halogen atom, a C1-C6 alkyl group, a C1-C6 haloalkyl group, a C1-C6 alkoxy group, a C1-C6 haloalkoxy group, a C1-C6 alkylthio group, a C1-C6 haloalkylthio group, a C1-C6 alkylsulfinyl group, a C1-C6 haloalkylsulfinyl group, a C1-C6 alkylsulfonyl group, a C1-C6 haloalkylsulfonyl group, a cyano group, a nitro group, a hydroxy group, a C1-C4 alkylcarbonyl group, a C1-C4 haloalkylcarbonyl group, a C1-C4 alkylcarbonyloxy group and a C1-C4 alkoxycarbonyl group,

a pyridyl group,

a substituted pyridyl group having one or more substituents selected from a halogen atom, a C1-C6 haloalkyl group and a C1-C6 haloalkoxy group,

a thienyl group, or

a tetrahydrofuran group); and

$Q_3$ represents the general formula (B),

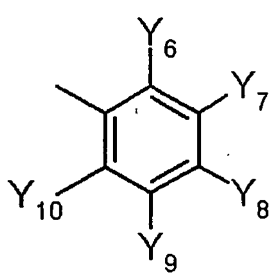

(B)

wherein, in the formula (B), $Y_6$ and $Y_{10}$ may be the same or different and represent a halogen atom, a C1-C4 alkyl group, a C1-C4 haloalkyl group, a C1-C4 alkoxy group, a C1-C4 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group or a cyano group; $Y_8$ represents a C2-C6 perfluoroalkyl group, a C1-C6 perfluoroalkylthio group, a C1-C6 perfluoroalkylsulfinyl group or a C1-C6 perfluoroalkylsulfonyl group; and $Y_7$ and $Y_9$ represent a hydrogen atom, a halogen atom or a C1-C4 alkyl group, and

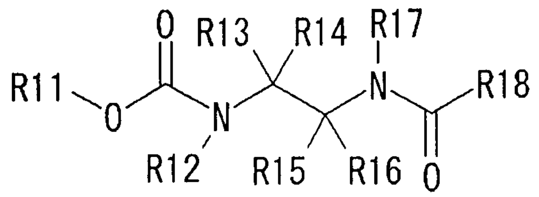 (3)

wherein, in the formula (3) , R11 represents an alkyl group having 1 to 6 carbon atoms, an alkenyl group having 2 to 6 carbon atoms, an arylalkyl group or a heterocyclic alkyl group; R12 and R17 independently represent a hydrogen atom; R13 and R14 each independently represent a hydrogen atom or an alkyl group having 1 to 6 carbon atoms; R15 and R16 independently represent a hydrogen atom; and R18 represents an aryl group or a heterocycle, or

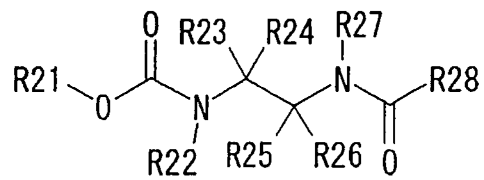 (4)

wherein, in the formula (4), R21 represents an alkyl group having 1 to 6 carbon atoms substituted with halogen, a cycloalkyl group having 3 to 6 carbon atoms substituted with halogen or an alkenyl group having 2 to 6 carbon atoms substituted with halogen; R22 and R27 independently represent a hydrogen atom; R23 and R24 each independently represent a hydrogen atom or an alkyl group having 1 to 6 carbon atoms; R25 and R26 independently represent a hydrogen atom; and R28 represents an aryl group or a heterocycle;

[2] an insecticidal and fungicidal composition containing one or two or more compounds selected from compounds represented by the general formula (1) as set forth in [1] and one or two or more compounds selected from compounds represented by the general formula (3) as set forth in [1] as active ingredients;

[3] an insecticidal and fungicidal composition containing one or two or more compounds selected from compounds represented by the general formula (1) as set forth in [1] and one or two or more compounds selected from compounds represented by the general formula (4) as set forth in [1] as active ingredients;

[4] an insecticidal and fungicidal composition containing one or two or more compounds selected from compounds represented by the general formula (2) as set forth in [1] and one or two or more compounds selected from compounds represented by the general formula (3) as set forth in [1] as active ingredients; and

[5] an insecticidal and fungicidal composition containing one or two or more compounds selected from compounds represented by the general formula (2) as set forth in [1] and one or two or more compounds selected from compounds represented by the general formula (4) as set forth in [1] as active ingredients.

The nursery box treatment of paddy rice using the insecticidal and fungicidal composition of the present invention is helpful in decreasing the amount of a liquid chemical per unit area and reducing the influence on the environment as well as in reducing burden of a farmhouse's labor. Furthermore, it is further helpful in saving much labor by mixing with a fertilizer and carrying out fertilizer application at the time of rice transplantation or setting. Accordingly, the insecticidal and fungicidal composition of the present invention is extremely effective in control of diseases and insect pests at the same time, and saving labor for agricultural products, and horticultural products, and provides technical inventiveness which is also excellent in industrial effectiveness.

Control of insect pests and control of diseases must be conducted with the use of a single active compound, but the insecticidal and fungicidal composition of the present invention is capable of the labor-saving control of diseases and insect pests at the same time.

BEST MODE FOR CARRYING OUT THE INVENTION

The present invention will be described in more detail below. Wordings used in general formulae (1) and the (2) of the present invention have the respective meanings as described hereinafter in terms of definitions.

The "halogen atom" represents a fluorine atom, a chlorine atom, a bromine atom or an iodine atom.

In expression of "Ca-Cb (a and b represent an integer of not less than 1)", for example, "C1-C3" refers to 1 to 3 carbon atoms, "C2-C6" refers to 2 to 6 carbon atoms, and "C1-C4" refers to 1 to 4 carbon atoms.

"n-" refers to normal, "i-" refers to iso, "s-" refers to secondary and "t-" refers to tertiary.

The "C1-C3 alkyl group" represents, for example, linear, branched or cyclic alkyl groups having 1 to 3 carbon atoms such as methyl, ethyl, n-propyl, i-propyl, cyclopropyl and the like. The "C1-C4 alkyl group" represents, for example, linear or branched alkyl groups having 1 to 4 carbon atoms such as n-butyl, s-butyl, i-butyl, t-butyl and the like, in addition to "C1-C3 alkyl group." The "C1-C6 alkyl group" represents, for example, linear or branched alkyl groups having 1 to 6 carbon atoms such as n-pentyl, 2-pentyl, 3-pentyl, neopentyl, n-hexyl, 2-hexyl, 4-methyl-2-pentyl, 3-methyl-n-pentyl and the like, in addition to "C1-C4 alkyl group."

The "C1-C3 haloalkyl group" represents, for example, linear or branched alkyl groups having 1 to 3 carbon atoms substituted with one or more halogen atoms which may be the same or different, such as monofluoromethyl, difluoromethyl, trifluoromethyl, monochloromethyl, dichloromethyl, trichloromethyl, monobromomethyl, dibromomethyl, tribromomethyl, 1-fluoroethyl, 2-fluoroethyl, 2,2-difluoroethyl, 2,2,2-trifluoroethyl, 1-chloroethyl, 2-chloroethyl, 2,2-dichloroethyl, 2,2,2-trichloroethyl, 1-bromoethyl, 2-bromoethyl, 2,2-dibromoethyl, 2,2,2-tribromoethyl, 2-iodoethyl, pentafluoroethyl, 3-fluoro-n-propyl, 3-chloro-n-propyl, 3-bromo-n-propyl, 1,3-difluoro-2-propyl, 1,3-dichloro-2-propyl, 1,1,1-trifluoro-2-propyl, 1-chloro-3-fluoro-2-propyl, 1,1,1,3,3,3-hexafluoro-2-propyl, 1,1,1,3,3,3-hexafluoro-2-chloro-2-propyl, 2,2,3,3,3-pentafluoro-n-propyl, heptafluoro-i-propyl, heptafluoro-n-propyl and the like. The "C1-C4 haloalkyl group" represents, for example, linear or branched alkyl groups having 1 to 4 carbon atoms substituted with one or more halogen atoms which may be the same or different, such as 4-fluoro-n-butyl, nonafluoro-n-butyl, nonafluoro-2-butyl and the like, in addition to "C1-C3 haloalkyl group." The "C1-C6 haloalkyl group" represents, for example, linear or branched alkyl groups having 1 to 6 carbon atoms substituted with one or more halogen atoms which may be the same or different.

The "C2-C4 alkenyl group" represents, for example, alkenyl groups of 2 to 4 carbon atoms having a double bond in the carbon chain such as vinyl, allyl, 2-butenyl, 3-butenyl and the like, and the "C2-C6 alkenyl group" represents, for example, alkenyl groups of 2 to 6 carbon atoms having a double bond in the carbon chain. The "C2-C4 haloalkenyl group" represents, for example, linear or branched alkenyl groups of 2 to 4 carbon atoms having a double bond in the carbon atom substituted with one or more halogen atoms which may be the same or different, such as 3,3-difluoro-2-propenyl, 3,3-dichloro-2-propenyl, 3,3-dibromo-2-propenyl, 2,3-dibromo-2-propenyl, 4,4-difluoro-3-butenyl, 3,4,4-tribromo-3-butenyl and the like, and the "C2-C6 haloalkenyl group" represents, for example, linear or branched alkenyl groups of 2 to 6 carbon atoms having a double bond in the carbon chain substituted with one or more halogen atoms which may be the same or different.

The "C2-C4 alkynyl group" represents, for example, linear or branched alkynyl groups of 2 to 4 carbon atoms having a triple bond in the carbon chain such as propargyl, 1-butyne-3-yl, 1-butyne-3-methyl-3-yl and the like, and the "C2-C6 alkynyl group" represents, for example, linear or branched alkynyl groups of 2 to 6 carbon atoms having a triple bond in the carbon chain. The "C2-C4 haloalkynyl group" represents, for example, linear or branched alkenyl groups of 2 to 4 carbon atoms having a triple bond in the carbon chain substituted with one or more halogen atoms which may be the same or different, the "C2-C6 haloalkynyl group" represents, for example, linear or branched alkenyl groups of 2 to 6 carbon atoms having a triple bond in the carbon chain substituted with one or more halogen atoms which may be the same or different.

The "C3-C6 cycloalkyl group" represents, for example, cycloalkyl groups of 3 to 6 carbon atoms having a cyclic structure, such as cyclopropyl, cyclobutyl, cyclopentyl, 2-methylcyclopentyl, 3-methylcyclopentyl, cyclohexyl and the like, and the "C3-C8 cycloalkyl group" represents, for example, cycloalkyl groups of 3 to 8 carbon atoms having a cyclic structure. The "C3-C6 halocycloalkyl group" represents, for example, cycloalkyl groups of 3 to 6 carbon atoms having a cyclic structure substituted with one or more halogen atoms which may be the same or different, such as 2,2,3,3-tetrafluorocyclobutyl, 2-chlorocyclohexyl, 4-chlorocyclohexyl and the like, and the "C3-C8 halocycloalkyl group" represents, for example, cycloalkyl groups of 3 to 8 carbon atoms having a cyclic structure substituted with one or more halogen atoms which may be the same or different.

The "C1-C3 alkoxy group" represents, for example, linear or branched alkoxy groups having 1 to 3 carbon atoms such as methoxy, ethoxy, n-propyloxy, isopropyloxy and the like, and the "C1-C6 alkoxy group" represents linear or branched alkoxy groups having 1 to 6 carbon atoms. The "C1-C3 haloalkoxy group" represents, for example, linear or branched haloalkoxy groups having 1 to 3 carbon atoms substituted with one or more halogen atoms which may be the same or different, such as trifluoromethoxy, 1,1,1,3,3,3-hexafluoro-2-propyloxy, 2,2,2-trifluoroethoxy, 2-chloroethoxy, 3-fluoro-n-propyloxy and the like, the "C1-C4 haloalkoxy group" represents, for example, linear or branched haloalkoxy groups having 1 to 4 carbon atoms substituted with one or more halogen atoms which may be the same or different, such as 1,1,1,3,3,4,4,4-octafluoro-2-butyloxy and the like, in addition to "C1-C3 haloalkoxy group," and the "C1-C6 haloalkoxy group" represents, for example, linear or branched haloalkoxy groups having 1 to 6 carbon atoms substituted with one or more halogen atoms which may be the same or different.

The "C1-C3 alkylthio group" represents, for example, linear, branched or cyclic alkylthio groups having 1 to 3 carbon atoms such as methylthio, ethylthio, n-propylthio, i-propylthio, cyclopropylthio and the like, the "C1-C4 alkylthio group" represents, for example, linear, branched or cyclic alkylthio groups having 1 to 4 carbon atoms such as n-butylthio, i-butylthio, s-butylthio, t-butylthio, cyclopropylmethylthio and the like, in addition to "C1-C3 alkylthio group," and the "C1-C6 alkylthio group" represents, for example, linear or branched alkylthio groups having 1 to 6 carbon atoms. The "C1-C3 haloalkylthio group" represents, for example, linear or branched alkylthio groups having 1 to 3 carbon atoms substituted with one or more halogen atoms which may be the same or different, such as trifluoromethylthio, pentafluoroethylthio, 2,2,2-trifluoroethylthio, heptafluoro-n-propylthio, heptafluoro-i-propylthio and the like. The "C1-C4 haloalkylthio group" represents, for example, linear or branched alkylthio groups having 1 to 4 carbon atoms substituted with one or more halogen atoms which may be the same or different, such as nonafluoro-n-butylthio, nonafluoro-s-butylthio, 4,4,4-trifluoro-n-butylthio and the like, in addition to "C1-C3 haloalkylthio group," and the "C1-C6 haloalkylthio group" represents, for example, linear or branched alkylthio groups having 1 to 6 carbon atoms substituted with one or more halogen atoms which may be the same or different.

The "C1-C3 alkylsulfinyl group" represents, for example, linear, branched or cyclic alkylsulfinyl groups having 1 to 3 carbon atoms, such as methylsulfinyl, ethylsulfinyl, n-propylsulfinyl, i-propylsulfinyl, cyclopropylsulfinyl and the like, and the "C1-C6 alkylsulfinyl group" represents linear or branched alkylsulfinyl groups having 1 to 6 carbon atoms. The "C1-C3 haloalkylsulfinyl group" represents, for example, linear or branched alkylsulfinyl groups having 1 to 3 carbon atoms substituted with one or more halogen atoms which may be the same or different, such as trifluoromethylsulfinyl, pentafluoroethylsulfinyl, 2,2,2-trifluoroethylsulfinyl', heptafluoro-n-propylsulfinyl, heptafluoro-i-propylsulfinyl and the like, and the "C1-C6 haloalkylsulfinyl group" represents, for example, linear or branched alkylsulfinyl groups having 1 to 6 carbon atoms substituted with one or more halogen atoms which may be the same or different.

The "C1-C3 alkylsulfonyl group" represents, for example, linear, branched or cyclic alkylsulfonyl groups having 1 to 3 carbon atoms, such as methylsulfonyl, ethylsulfonyl, n-propylsulfonyl, i-propylsulfonyl, cyclopropylsulfonyl and the like, and the "C1-C6 alkylsulfonyl group" represents linear or branched alkylsulfonyl groups having 1 to 6 carbon atoms. The "C1-C3 haloalkylsulfonyl group" represents, for example, linear or branched alkylsulfonyl groups having 1 to 3 carbon atoms substituted with one or more halogen atoms which may be the same or different, such as trifluoromethylsulfonyl, pentafluoroethylsulfonyl, 2,2,2-trifluoroethylsulfonyl, heptafluoro-n-propylsulfonyl, heptafluoro-i-propylsulfonyl and the like, and the "C1-C6 haloalkylsulfonyl group" represents, for example, linear or branched alkylsulfonyl groups having 1 to 6 carbon atoms substituted with one or more halogen atoms which may be the same or different.

The "C1-C4 alkylamino group" represents, for example, linear, branched or cyclic alkylamino groups having 1 to 4 carbon atoms, such as methylamino, ethylamino, n-propylamino, i-propylamino, n-butylamino, cyclopropylamino and the like, and the "di C1-C4 alkylamino group" represents, for example, linear or branched amino groups substituted with two alkyl groups having 1 to 4 carbon atoms which may be the same or different, such as dimethylamino, diethylamino, N-ethyl-N-methylamino and the like.

The "C1-C4 alkylcarbonyl group" represents, for example, linear, branched or cyclic alkylcarbonyl groups having 1 to 4 carbon atoms, such as formyl, acetyl, propionyl, isopropylcarbonyl, cyclopropylcarbonyl and the like.

The "C1-C4 haloalkylcarbonyl group" include linear or branched alkylcarbonyl groups having 1 to 4 carbon atoms substituted with one or more halogen atoms which may be the same or different, such as fluoroacetyl, difluoroacetyl, trifluoroacetyl, chloroacetyl, dichloroacetyl, trichloroacetyl, bromoacetyl, iodoacetyl, 3,3,3-trifluoropropionyl, 2,2,3,3,3-pentafluoropropionyl and the like.

The "C1-C4 alkylcarbonyloxy group" represents, for example, linear or branched alkylcarbonyloxy groups having 1 to 4 carbon atoms, such as acetoxy, propionyloxy and the like.

The "C1-C4 alkoxycarbonyl group" represents, for example, linear or branched alkoxycarbonyl groups having 1 to 4 carbon atoms, such as methoxycarbonyl, ethoxycarbonyl, isopropyloxycarbonyl and the like.

The "C1-C4 perfluoroalkyl group" represents, for example, linear or branched alkyl groups having 1 to 4 carbon atoms which are all substituted with fluorine atoms, such as trifluoromethyl, pentafluoroethyl, heptafluoro-n-propyl, heptafluoro-i-propyl, nonafluoro-n-butyl, nonafluoro-2-butyl, nonafluoro-i-butyl and the like, and the "C2-C6 perfluoroalkyl group" represents, for example, linear or branched alkyl groups having 2 to 6 carbon atoms which are all substituted with fluorine atoms, such as pentafluoroethyl, heptafluoro-n-propyl, heptafluoro-i-propyl, nonafluoro-n-butyl, nonafluoro-2-butyl, nonafluoro-i-butyl, perfluoro-n-pentyl, perfluoro-n-hexyl and the like.

The "C1-C6 perfluoroalkylthio group" represents, for example, linear or branched alkylthio groups having 1 to 6 carbon atoms which are all substituted with fluorine atoms, such as trifluoromethylthio, pentafluoroethylthio, heptafluoro-n-propylthio, heptafluoro-i-propylthio, nonafluoro-n-butylthio, nonafluoro-2-butylthio, nonafluoro-i-butylthio, perfluoro-n-pentylthio, perfluoro-n-hexylthio and the like.

The "C1-C6 perfluoroalkylsulfinyl group" represents, for example, linear or branched alkylsulfinyl groups having 1 to 6 carbon atoms which are all substituted with fluorine atoms, such as trifluoromethylsulfinyl, pentafluoroethylsulfinyl, heptafluoro-n-propylsulfinyl, heptafluoro-i-propylsulfinyl, nonafluoro-n-butylsulfinyl, nonafluoro-2-butylsulfinyl, nonafluoro-i-butylsulfinyl, perfluoro-n-pentylsulfinyl, perfluoro-n-hexylsulfinyl and the like.

The "C1-C6 perfluoroalkylsulfonyl group" represents, for example, linear or branched alkylsulfonyl groups having 1 to 6 carbon atoms which are all substituted with fluorine atoms, such as trifluoromethylsulfonyl, pentafluoroethylsulfonyl, heptafluoro-n-propylsulfonyl, heptafluoro-i-propylsulfonyl, nonafluoro-n-butylsulfonyl, nonafluoro-2-butylsulfonyl, nonafluoro-i-butylsulfonyl, perfluoro-n-pentylsulfonyl, perfluoro-n-hexylsulfonyl and the like.

The "C1-C4 alkylene group" represents, for example, linear or branched alkylene groups having 1 to 4 carbon atoms such as methylene, ethylene, propylene, dimethylmethylene, isobutylene and the like. The "C2-C4 alkenylene group" represents, for example, linear or branched alkenylene groups of 2 to 4 carbon atoms having a double bond in the carbon atom. The "C3-C4 alkynylene group" represents, for example, linear or branched alkynylene groups of 3 to 4 carbon atoms having a triple bond in the carbon chain. The "C1-C4 haloalkylene group" represents, for example, linear or branched alkylene groups having 1 to 4 carbon atoms substituted with one or more halogen atoms which may be the same or different, such as chloromethylene, chloroethylene, dichloromethylene, difluoromethylene and the like. The "C2-C4 haloalkenylene group" represents, for example, linear or branched alkynylene groups of 2 to 4 carbon atoms having a double bond in the carbon chain substituted with one or more halogen atoms which may be the same or different. The "C3-C4 haloalkynylene group" represents, for example, linear or branched alkynylene groups of 3 to 4 carbon atoms having a triple bond in the carbon chain substituted with one or more halogen atoms which may be the same or different.

The compounds represented by the general formulae (1) and (2) of the present invention contain one or more asymmetric carbon atoms or asymmetric centers in its structural formula in some cases and have two or more optical isomers in some cases. However, the present invention also includes all of the respective optical isomers and mixtures consisting of these isomers in any ratio. Furthermore, the compounds represented by the general formulae (1) and (2) of the present invention have two or more geometrical isomers derived from a carbon-carbon double bond in its structural formula in some cases. However, the present invention also includes all of the respective geometrical isomers and mixtures consisting of these isomers in any ratio.

As the substituents in the compounds represented by the general formulae (1) and (2) of the present invention, preferable substituents or atoms are as follows.

$R_1$ is preferably a hydrogen atom or a C1-C4 alkyl group and further preferably a hydrogen atom, a methyl group or an ethyl group.

$R_2$ is preferably a hydrogen atom or a C1-C4 alkyl group, and further preferably a hydrogen atom, a methyl group or an ethyl group.

$R_4$ is preferably a hydrogen atom or a C1-C4 alkyl group, and further preferably a hydrogen atom, a methyl group or an ethyl group.

$R_5$ is preferably a hydrogen atom or a C1-C4 alkyl group, and further preferably a hydrogen atom, a methyl group or an ethyl group.

$X_1$ is preferably a hydrogen atom or a fluorine atom.

$X_2$ is preferably a hydrogen atom or a fluorine atom.

$Q_1$ is preferably a phenyl group,
a substituted phenyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group and an acetylamino group,
a pyridyl group, or
a pyridyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group and an acetylamino group,
and further preferably a phenyl group,
a substituted phenyl group having one to three substituents which may be the same or different and are selected from a fluorine atom, a chlorine atom, a bromine atom, an iodine atom, a methyl group, a trifluoromethyl group, a methoxy group, a trifluoromethoxy group, a methylthio group, a methylsulfinyl group, a methylsulfonyl group, a trifluoromethylthio group, a trifluoromethylsulfinyl group, a trifluoromethylsulfonyl group, a methylamino group, a dimethylamino group, a cyano group and a nitro group,
a pyridyl group, or
a pyridyl group having one to two substituents which may be the same or different and are selected from a fluorine atom, a chlorine atom, a bromine atom, an iodine atom, a methyl group, a trifluoromethyl group, a methoxy group, a trifluoromethoxy group, a methylthio group, a methylsulfinyl group, a methylsulfonyl group, a trifluoromethylthio group, a trifluoromethylsulfinyl group, a trifluoromethylsulfonyl group, a methylamino group, a dimethylamino group, a cyano group

and a nitro group.

$Q_2$ is preferably is a substituted phenyl group represented by the general formula (A). In the formula, $Y_1$ and $Y_5$ are preferably independently a chlorine atom, a bromine atom, an iodine atom, a methyl group, an ethyl group, an n-propyl group, an i-propyl group, an n-butyl group, a 2-butyl group, a trifluoromethyl group, a methylthio group, a methylsulfinyl group, a methylsulfonyl group, a trifluoromethylthio group, a pentafluoroethylthio group, a trifluoromethylsulfinyl group, a pentafluoroethylsulfinyl group, a trifluoromethylsulfonyl group, a pentafluoroethylsulfonyl group or a cyano group; $Y_2$ and $Y_4$ are preferably a hydrogen atom, a halogen atom or a methyl group, and further preferably a hydrogen atom; and $Y_3$ is preferably a pentafluoroethyl group, a heptafluoro-n-propyl group, a heptafluoro-i-propyl group, a nonafluoro-n-butyl group, a nonafluoro-2-butyl group, a nonafluoro-i-butyl group, a trifluoromethylthio group, a pentafluoroethylthio group, a heptafluoro-n-propylthio group, a heptafluoro-i-propylthio group, a nonafluoro-n-butylthio group, a nonafluoro-2-butylthio group, a trifluoromethylsulfinyl group, a pentafluoroethylsulfinyl group, a heptafluoro-n-propylsulfinyl group, a heptafluoro-i-propylsulfinyl group, a nonafluoro-n-butylsulfinyl group, a nonafluoro-2-butylsulfinyl group, a trifluoromethylsulfonyl group, a pentafluoroethylsulfonyl group, a heptafluoro-n-propylsulfonyl group, a heptafluoro-i-propylsulfonyl group, a nonafluoro-n-butylsulfonyl group or a nonafluoro-2-butylsulfonyl group. $Q_3$ is preferably a substituted phenyl group represented by the general formula (B). In the formula, $Y_6$ and $Y_{10}$ are preferably independently a chlorine atom, a bromine atom, an iodine atom, a methyl group, an ethyl group, an n-propyl group, an i-propyl group, an n-butyl group, a 2-butyl group, a trifluoromethyl group, a methylthio group, a methylsulfinyl group, a methylsulfonyl group, a trifluoromethylthio group, a pentafluoroethylthio group, a trifluoromethylsulfinyl group, a pentafluoroethylsulfinyl group, a trifluoromethylsulfonyl group, a pentafluoroethylsulfonyl group or a cyano group; $Y_7$ and $Y_9$ are preferably a hydrogen atom, a halogen atom or a methyl group, and further preferably a hydrogen atom; $Y_8$ is preferably a pentafluoroethyl group, a heptafluoro-n-propyl group, a heptafluoro-i-propyl group, a nonafluoro-n-butyl group, a nonafluoro-2-butyl group, a nonafluoro-i-butyl group, a trifluoromethylthio group, a pentafluoroethylthio group, a heptafluoro-n-propylthio group, a heptafluoro-i-propylthio group, a nonafluoro-n-butylthio group, a nonafluoro-2-butylthio group, a trifluoromethylsulfinyl group, a pentafluoroethylsulfinyl group, a heptafluoro-n-propylsulfinyl group, a heptafluoro-i-propylsulfinyl group, a nonafluoro-n-butylsulfinyl group, a nonafluoro-2-butylsulfinyl group, a trifluoromethylsulfonyl group, a pentafluoroethylsulfonyl group, a heptafluoro-n-propylsulfonyl group, a heptafluoro-i-propylsulfonyl group, a nonafluoro-n-butylsulfonyl group or a nonafluoro-2-butylsulfonyl group; $R_3$ is preferably a C1-C6 alkyl group, a C1-C6 haloalkyl group, a C2-C6 alkenyl group, a C2-C6 haloalkenyl group, a C2-C6 alkynyl group, a C2-C6 haloalkynyl group, a C3-C8 cycloalkyl group, a C3-C8 halocycloalkyl group, $-E_1-Z_1-R_6$ (wherein, in the formula, $E_1$ represents a C1-C4 alkylene group, a C2-C4 alkenylene group, a C3-C4 alkynylene group, a C1-C4 haloalkylene group, a C2-C4 haloalkenylene group or a C3-C4 haloalkynylene group; $R_6$ represents a hydrogen atom, a C1-C6 alkyl group, a C2-C6 alkenyl group, a C2-C6 alkynyl group, a C1-C6 haloalkyl group, a C2-C6 haloalkenyl group or a C2-C6 haloalkynyl group; and $Z_1$ represents -O-, -S-, -SO- or $-SO_2-$), $-E_2-R_8$ (wherein, in the formula, $E_2$ represents a C1-C4 alkyl group, a C2-C4 alkenyl group, a C3-C4 alkynyl group, a C1-C4 haloalkyl group, a C2-C4 haloalkenyl group or a C3-C4 haloalkynyl group; and $R_8$ represents a C3-C8 cycloalkyl group, a C3-C8 halocycloalkyl group, a cyano group, a nitro group, a hydroxy group, a phenyl group, a substituted phenyl group having one or more substituents which may be the same or different and are selected from a halogen atom, a C1-C6 alkyl group, a C1-C6 haloalkyl group, a C1-C6 alkoxy group, a C1-C6 haloalkoxy group, a C1-C6 alkylthio group, a C1-C6 haloalkylthio group, a C1-C6 alkylsulfinyl group, a C1-C6 haloalkylsulfinyl group, a C1-C6 alkylsulfonyl group, a C1-C6 haloalkylsulfonyl group, a cyano group, a nitro group, a hydroxy group, a C1-C4 alkylcarbonyl group, a C1-C4 haloalkylcarbonyl group, a C1-C4 alkylcarbonyloxy group and a C1-C4 alkoxycarbonyl group, a pyridyl group, or

a substituted pyridyl group having one or more substituents selected from a halogen atom, a C1-C6 haloalkyl group and a C1-C6 haloalkoxy group); and $R_3$ is more preferably a C1-C6 alkyl group, a C1-C6 haloalkyl group, a C3-C8 cycloalkyl group, a C3-C8 halocycloalkyl group, $-E_1-Z_1-R_6$ (wherein, in the formula, $E_1$ represents a C1-C4 alkylene group or a C1-C4 haloalkylene group; $R_6$ represents a C1-C6 alkyl group; and $Z_1$ represents -O-, -S-, -SO-, $-SO_2-$), or $-E_2-R_8$ (wherein, in the formula, $E_2$ represents a C1-C4 alkyl group; and $R_8$ represents a C3-C8 cycloalkyl group, a cyano group, a substituted phenyl group having one or more substituents which may be the same or different and are selected from a halogen atom, a C1-C6 haloalkyl group, a C1-C6 haloalkoxy group, a C1-C6 haloalkylthio group, a C1-C6 haloalkylsulfinyl group, a C1-C6 haloalkylsulfonyl group, a cyano group and a nitro group,

a pyridyl group,

a substituted pyridyl group having one or more substituents selected from a halogen atom, a C1-C6 haloalkyl group and a C1-C6 haloalkoxy group,

a thienyl group, or

a tetrahydrofuran group).

In the compounds represented by the general formulae (3) and (4), typical examples of the substituent can be cited as follows, but the present invention is not restricted to the following substituents.

Examples of the alkyl group having 1 to 6 carbon atoms include a methyl group, an ethyl group, a propyl group, a butyl group, a pentyl group, a hexyl group and the like.

Examples of the alkenyl group having 2 to 6 carbon atoms include a vinyl group, a propenyl group, a butenyl group, a pentenyl group, a hexenyl group and the like.

Examples of the alkyl group having 1 to 6 carbons substituted with halogen include chlorine substituted alkyl groups such as a chloromethyl group, a 2-chloroethyl group, a 2,2,2-trichloroethyl group, a 3-chloro-1-propyl group, a 4-chloro-1-butyl group and the like; fluorine substituted alkyl groups such as a 2-fluoroethyl group, a 2,2,2-trifluoroethyl group, a 1,1,1,3,3,3-hexafluoro-2-propyl group, a 1,3-difluoro-2-propyl group, a 5-fluoro-1-pentyl group, a 6,6,6,5,5,4,4,3,3-nonafluoro-1-hexyl group, a 1-ethoxy-2,2,2-trifluoroethyl group and the like; bromine substituted alkyl groups such as a 2-bromoethyl group., a 1,3-dibromo-2-propyl group and the like; iodine substituted alkyl groups such as a 2-iodoethyl group and the like; and alkyl groups containing two or more halogens such as a 3-bromo-1,1,1-trifluoro-2-propyl group and the like.

Examples of the cycloalkyl group having 3 to 6 carbons substituted with halogen include chlorine substituted cycloalkyl groups such as a chlorocyclopropyl group, a 2-chlorocyclobutyl group, a 2-chlorocyclopentyl group, a 2-chlorocyclohexyl group, a 3-chlorocyclohexyl group, a 4-chlorocyclohexyl group and the like; fluorine substituted cycloalkyl groups such as a 2-fluorocyclohexyl group, a 2,2,3,3-tetrafluorocyclopropyl group and the like; bromine substituted cycloalkyl groups such as a 2-bromocyclohexyl group and the like; and iodine substituted cycloalkyl groups such as a 2-iodocyclohexyl group and the like.

Examples of the alkenyl group having 2 to 6 carbons substituted with halogen include chlorine substituted alkenyl group such as a 2-chloro-2-propenyl group, a 5-chloro-4-pentenyl group and the like; and fluorine substituted alkenyl groups such as a 4,4,4-trifluoro-2-butenyl group, a 6,6,6-trifluoro-5-hexenyl and the like.

Examples of the aryl group include a phenyl group, a naphthyl group and the like.

Examples of the heterocycle include a pyridyl group, a pyrimidyl group, a thienyl group, a furanyl group, a pyrazolyl group, an imidazolyl group, an isothiazolyl group, an isoxazolyl group, an indolyl group, a quinolyl group, a benzofuranyl group, a benzothienyl group, a benzoxazolyl group, a benzoisoxazolyl group, a benzimidazoly group, a benzothiazolyl group, a benzoisothiazolyl group and the like.

As the substituents of the aryl group and the heterocycle, there can be respectively exemplified, for example, alkyl groups such as a.methyl group, an ethyl group, a propyl group, a butyl group and the like; cycloalkyl groups such as a cyclopropyl group, a cyclobutyl group, a cyclopentyl group, a cyclohexyl group and the like; halogen substituted alkyl groups such as a trifluoromethyl group, a difluoromethyl group, a bromodifluoromethyl group, a trifluoroethyl group and the like; alkoxy groups such as a methoxy group, an ethoxy group, a propoxy group, a butoxy group and the like; halogen substituted alkoxy groups such as a trifluoromethoxy group, a difluoromethoxy group, a trifluoroethoxy group and the like; alkoxycarbonyl groups such as a methoxycarbonyl group, an ethoxycarbonyl group, a propoxycarbonyl group, a butoxycarbonyl group and the like; aryloxycarbonyl groups such as a phenoxycarbonyl group and the like; alkylamino groups such as a methylamino group, an ethylamino group, a propylamino group, a butylamino group, a dimethylamino group and the like; cycloalkylamino groups such as a cyclopropylamino group, a cyclobutylamino group, a cyclopentylamino group, a cyclohexylamino group, a dicyclopropylamino group and the like; alkylcarbamoyl groups such as a methylcarbamoyl group, an ethylcarbamoyl group, a propylcarbamoyl group, a butylcarbamoyl group, a dimethylcarbamoyl group and the like; cycloalkylcarbamoyl groups such as a cyclopropylcarbamoyl group, a cyclobutylcarbamoyl group, a cyclopentylcarbamoyl group, a cyclohexylcarbamoyl group, a dicyclopropylcarbamoyl group and the like; alkylcarbonylamino groups such as a methylcarbonylamino group, an ethylcarbonylamino group, a propylcarbonylamino group, a butylcarbonylamino group and the like; cycloalkylcarbonylamino groups such as a cyclopropylcarbonylamino group, a cyclobutylcarbonylamino group, a cyclopentylcarbonylamino group, a cyclohexylcarbonylamino group and the like; alkyloxycarbonylamino groups such as a methyloxycarbonylamino group, an ethyloxycarbonylamino group, a propyloxycarbonylamino group, a butyloxycarbonylamino group and the like; cycloalkyloxycarbonylamino groups such as a cyclopropyloxycarbonylamino group, a cyclobutyloxycarbonylamino group, a cyclopentyloxycarbonylamino group, a cyclohexyloxycarbonylamino group and the like; alkylthio groups such as a methylthio group, an ethylthio group, a propylthio group, a butylthio group and the like; halogen substituted alkylthio groups such as a trifluoromethylthio group, a difluoromethylthio group, a trifluoroethylthio group and the like; alkylsulfinyl groups such as a methanesulfinyl group, an ethanesulfinyl group, a propanesulfinyl group, a butanesulfinyl group and the like; halogen substituted alkylsulfinyl groups such as a trifluoromethanesulfinyl group, a difluoromethanesulfinyl group, a trifluoroethanesulfinyl group and the like; alkylsulfonyl groups such as a methanesulfonyl group, an ethanesulfonyl group, a propanesulfonyl group, a butanesulfonyl group and the like; halogen substituted alkylsulfonyl groups such as a trifluoromethanesulfonyl group, a difluoromethanesulfonyl group, a trifluoroethanesulfonyl group and the like; alkylsulfonamide groups such as a methanesulfonamide group, an ethanesulfonamide group, a propanesulfonamide group, a butanesulfonamide group and the like; halogen substituted alkylsulfonamide groups such as a trifluoromethanesulfonamide group, a difluoromethanesulfonamide group, a trifluoroethanesulfonamide group and the like; halogen atoms such as a fluorine atom, a chlorine atom, a bromine atom and an iodine atom; and acyl groups such as an acetyl group, a benzoyl group and the like.

Typical preparation methods of the compound represented by the general formula (1) are illustrated below and the

compound represented by the general formula (1) can be prepared according to the preparation methods, but the preparation method paths are not restricted to the following preparation methods. Preferable substituents or atoms in the compounds represented by the general formulae shown in the following preparation methods are illustrated below.

L is preferably a chlorine atom, a bromine atom or a hydroxy group.

$R_1a$ is preferably a hydrogen atom or a C1-C4 alkyl group, and further preferably a hydrogen atom, a methyl group or an ethyl group.

$R_2a$ is preferably a hydrogen atom or a C1-C4 alkyl group, and further preferably a hydrogen atom, a methyl group or an ethyl group.

$G_1a$ and $G_2a$ are preferably independently an oxygen atom or a sulfur atom, and further preferably both of $G_1a$ and $G_2a$ are oxygen atoms.

$X_1a$ is preferably a hydrogen atom or a halogen atom, and further preferably a hydrogen atom or a fluorine atom.

$X_2a$ is preferably a hydrogen atom or a fluorine atom, and further preferably a hydrogen atom.

$X_3a$ and $X_4a$ are preferably a hydrogen atom.

$Y_1a$ and $Y_5a$ are preferably independently a chlorine atom, a bromine atom, an iodine atom, a methyl group, an ethyl group, an n-propyl group, an i-propyl group, an n-butyl group, a 2-butyl group, a trifluoromethyl group, a methylthio group, a methylsulfinyl group, a methylsulfonyl group, a trifluoromethylthio group, a trifluoromethylsulfinyl group, a trifluoromethylsulfonyl group or a cyano group.

$Y_2a$ and $Y_4a$ are preferably a hydrogen atom, a halogen atom or a methyl group, and further preferably a hydrogen atom.

$Q_1a$ is preferably a phenyl group,
a substituted phenyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group and an acetylamino group,
a pyridyl group, or
a pyridyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group and an acetylamino group,
and further preferably a phenyl group,
a substituted phenyl group having one to three substituents which may be the same or different and are selected from a fluorine atom, a chlorine atom, a bromine atom, an iodine atom, a methyl group, a trifluoromethyl group, a methoxy group, a trifluoromethoxy group, a methylthio group, a methylsulfinyl group, a methylsulfonyl group, a trifluoromethylthio group, a trifluoromethylsulfinyl group, a trifluoromethylsulfonyl group, a methylamino group, a dimethylamino group, a cyano group and a nitro group,
a pyridyl group, or
a pyridyl group having one to two substituents which may be the same or different and are selected from a fluorine atom, a chlorine atom, a bromine atom, an iodine atom, a methyl group, a trifluoromethyl group, a methoxy group, a trifluoromethoxy group, a methylthio group, a methylsulfinyl group, a methylsulfonyl group, a trifluoromethylthio group, a trifluoromethylsulfinyl group, a trifluoromethylsulfonyl group, a methylamino group, a dimethylamino group, a cyano group and a nitro group.

$R_a$ and $R_b$ are preferably independently a fluorine atom, a trifluoromethyl group, a pentafluoroethyl group or a heptafluoro-n-propyl group, and further preferably independently a fluorine atom, a trifluoromethyl group or a pentafluoroethyl group.

$R_c$ is preferably a hydroxy group, a chlorine atom, a bromine atom, an iodine atom, a methoxy group, an ethoxy group, a methylsulfonyloxy group, a trifluoromethylsulfonyloxy group, a phenylsulfonyloxy group, a p-toluenesulfonyloxy group, an acetoxy group or a trifluoroacetoxy group, and further preferably a hydroxy group, a chlorine atom, a bromine atom, a methoxy group, a methylsulfonyloxy group, a trifluoromethylsulfonyloxy group, a phenylsulfonyloxy group or a p-toluenesulfonyloxy group, and further preferably a hydroxy group, a chlorine atom or a bromine atom.

$R_c$' is preferably a hydroxy group.

$R_c$" is preferably a chlorine atom or a bromine atom.

In the general formulae shown in the following preparation methods, $X_1$, $X_2$, $X_3$, $X_4$, $Y_1$, $Y_2$, $Y_4$, $Y_5$, $G_1$, $G_2$, $R_1$,

$R_2$ and $Q_1$ may independently correspond to $X_1a$, $X_2a$, $X_3a$, $X_4a$, $Y_1a$, $Y_2a$, $Y_4a$, $Y_5a$, $G_1a$, $G_2a$, $R_1a$, $R_2a$ and $Q_1a$, or vice versa. Furthermore, $Q_2$ represents the same as those in [1] or the general formula (A), (C) or (18),

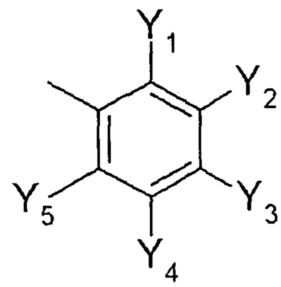

(A)

wherein, in the formula, $Y_1$, $Y_2$, $Y_3$, $Y_4$ and $Y_5$ are the same as those described above,

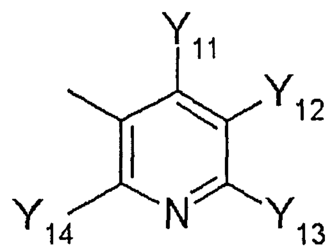

(C)

wherein, in the formula, $Y_{11}$ and $Y_{14}$ may be the same or different and represent a halogen atom, a C1-C4 alkyl group, a C1-C4 haloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group or a cyano group; $Y_{13}$ represents a C1-C4 haloalkoxy group, a C2-C6 perfluoroalkyl group, a C2-C6 perfluoroalkylthio group, a C1-C6 perfluoroalkylsulfinyl group or a C1-C6 perfluoroalkylsulfonyl group; and $Y_{12}$ represents a hydrogen atom, a halogen atom or a C1-C4 alkyl group, or

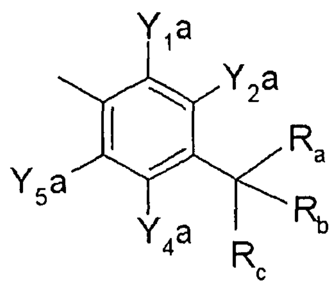

(18)

wherein, in the formula, $Y_1a$, $Y_2a$, $Y_4a$, $Y_5a$, $R_a$, $R_b$ and $R_c$ represent the same as those described above.

Preparation Method 1

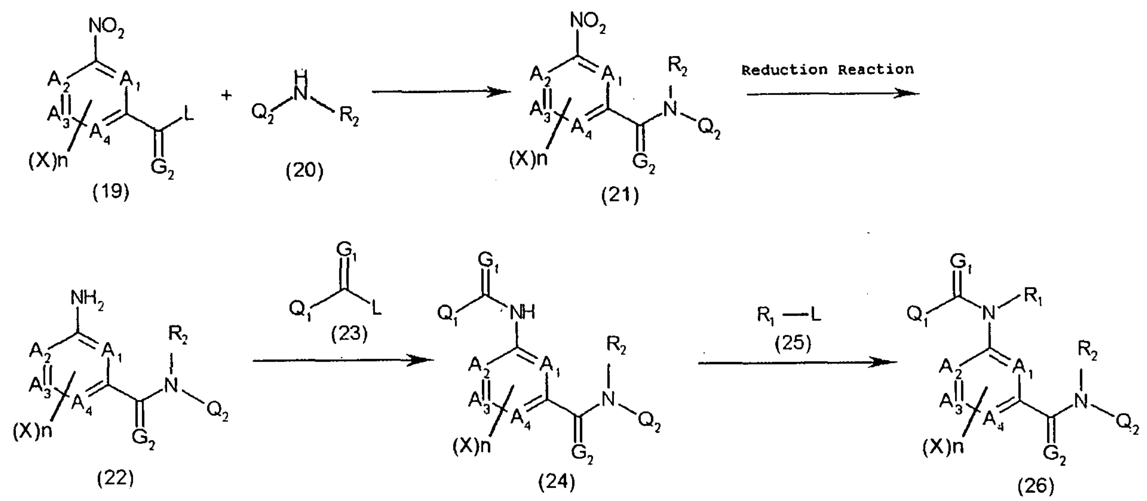


(19) (20) (21)

(22) (23) (24) (25) (26)

wherein, in the formula, $A_1$, $A_2$, $A_3$, $A_4$, $G_1$, $G_2$, $R_1$, $R_2$, X, n, $Q_1$ and $Q_2$ represent the same as those described above; and L represents a functional group having a leaving ability such as a halogen atom, a hydroxy group or the like.

1-(i) General formula (19) + General formula (20) → General formula (21)

By reacting an m-nitroaromatic carboxylic acid derivative having a leaving group represented by the general formula (19) with an aromatic amine derivative represented by the general formula (20) in an appropriate solvent or without a solvent, an aromatic carboxylic acid amide derivative having a nitro group represented by the general formula (21) can be prepared. In the process, a suitable base can also be used.

Solvents may not remarkably hinder the progress of the reaction and examples thereof include water; aromatic hydrocarbons such as benzene, toluene, xylene and the like; halogenated hydrocarbons such as dichloromethane, chloroform, carbon tetrachloride and the like; chained ethers or cyclic ethers such as diethyl ether, dioxane, tetrahydrofuran, 1,2-dimethoxyethane and the like; esters such as ethyl acetate, butyl acetate and the like; alcohols such as methanol, ethanol and the like; ketones such as acetone, methylisobutyl ketone, cyclohexanone and the like; amides such as dimethylformamide, dimethylacetamide and the like; nitriles such as acetonitrile and the like; and inert solvents such as 1, 3-dimethyl-2-imidazolidinone and the like. These solvents can be used singly or in combination of 2 or more kinds.

Furthermore, examples of the base include organic bases such as triethylamine, tri-n-butylamine, pyridine, 4-dimethylaminopyridine and the like; alkali metal hydroxides such as sodium hydroxide, potassium hydroxide and the like; carbonates such as sodium hydrogen carbonate, potassium carbonate and the like; phosphates such as di-potassium mono-hydrogen phosphate, tri-sodium phosphate and the like; alkali metal hydrides such as sodium hydride and the like; and alkali metal alcoholates such as sodium methoxide, sodium ethoxide and the like. These bases may be suitably selected in the range of 0.01 to 5 mole equivalents, based on the compound represented by the general formula (19) and used accordingly.

The reaction temperature may be suitably selected in the range of -20 degree centigrade to the reflux temperature of a solvent in use, while the reaction time may be properly selected in the range of several minutes to 96 hours.

Of the compounds represented by the general formula (19), an aromatic carboxylic acid halide derivative can be easily prepared from an aromatic carboxylic acid according to a usual method employing a halogenating agent. Examples of the halogenating agent include thionyl chloride, thionyl bromide, phosphorus oxychloride, oxalyl chloride, phosphorus trichloride and the like.

On the other hand, the compound represented by the general formula (21) can be prepared from the m-nitroaromatic carboxylic acid derivative and the compound represented by the general formula (20) without using a halogenating agent. As a method thereof, a method suitably using an additive such as 1-hydroxybenzotriazole or the like and employing a condensation agent using N,N'-dicyclohexylcarbodiimide according to a method as described, for example, in Chem. Ber. p. 788 (1970) can be exemplified. Other condensation agents to be used in this case include, for example, 1-ethyl-3-(3-dimethylaminopropyl)carbodiimide, 1,1'-carbonylbis-1H-imidazole and the like.

Furthermore, as other method for preparing the compound represented by the general formula (21), a mixed anhydride procedure using chloroformate esters can be cited. Also, the compound represented by the general formula (21) can be prepared according to a method as described in J. Am. Chem. Soc. p. 5012 (1967). Examples of chloroformate esters to be used in this case include isobutyl chloroformate, isopropyl chloroformate and the like. In addition to chloroformate esters, diethylacetyl chloride, trimethylacetyl chloride and the like can be cited.

Both the method using a condensation agent and mixed anhydride procedure are not restricted to the solvent, reaction temperature and reaction time as described in the above literatures, and an inert solvent which does not remarkably hinder the suitable progress of the reaction may be used. The reaction temperature and reaction time may be suitably selected as the reaction proceeds.

1-(ii): General formula (21) → General formula (22)

An aromatic carboxylic acid amide derivative having a nitro group represented by the general formula (21) can be made into an aromatic carboxylic acid amide derivative having an amino group represented by the general formula (22) by the reduction reaction. As the reduction reaction, a method employing the hydrogenation reaction and a method employing a metallic compound (for example, stannous chloride (anhydride), iron powder, zinc powder and the like) can be cited.

The former method can be carried out in a proper solvent in the presence of a catalyst, at ordinary pressure or under pressure, in a hydrogen atmosphere. Examples of the catalyst include, for example, palladium catalysts such as palladium carbon and the like, nickel catalysts such as Raney nickel and the like, cobalt catalysts, ruthenium catalysts, rhodium catalysts, platinum catalysts and the like. Examples of the solvent include, for example, water; alcohols such as methanol, ethanol and the like; aromatic hydrocarbons such as benzene, toluene and the like; chained ethers or cyclic ethers such as ether, dioxane, tetrahydrofuran and the like; and esters such as ethyl acetate and the like. The pressure may be suitably selected in the range of 0.1 to 10 MPa, the reaction temperature may be suitably selected in the range of -20 degree centigrade to the reflux temperature of a solvent in use, and the reaction time may be properly selected in the range of several minutes to 96 hours. The compound of the general formula (22) can be more effectively prepared.

As the latter method, a method employing stannous chloride (anhydride) as a metallic compound according to the conditions as described in "Organic Syntheses" Coll. Vol. III P. 453 can be cited.

1-(iii): General formula (22) + General formula (23) → General formula (24)

By reacting an aromatic carboxylic acid amide derivative having an amino group represented by the general formula (22) with a compound represented by the general formula (23) in an appropriate solvent, a compound represented by the general formula (24) of the present invention can be prepared. In this process, a suitable base can also be used.

Solvents may not remarkably hinder the progress of the reaction and examples thereof include water; aromatic hydrocarbons such as benzene, toluene, xylene and the like; halogenated hydrocarbons such as dichloromethane, chloroform, carbon tetrachloride and the like; chained ethers or cyclic ethers such as diethyl ether, dioxane, tetrahydrofuran, 1,2-dimethoxyethane and the like; esters such as ethyl acetate, butyl acetate and the like; alcohols such as methanol, ethanol and the like; ketones such as acetone, methylisobutyl ketone, cyclohexanone and the like; amides such as dimethylformamide, dimethylacetamide and the like; nitriles such as acetonitrile and the like; and inert solvents such as 1,3-dimethyl-2-imidazolidinone and the like. These solvents can be used singly or in combination of 2 or more kinds.

Furthermore, examples of the base include organic bases such as triethylamine, tri-n-butylamine, pyridine, 4-dimethylaminopyridine and the like; alkali metal hydroxides such as sodium hydroxide, potassium hydroxide and the like; carbonates such as sodium hydrogen carbonate, potassium carbonate and the like; phosphates such as di-potassium mono-hydrogen phosphate, tri-sodium phosphate and the like; alkali metal hydrides such as sodium hydride and the like; and alkali metal alcoholates such as sodium methoxide, sodium ethoxide and the like. These bases may be suitably selected in the range of 0.01 to 5 mole equivalents based on the compound represented by the general formula (22) and used accordingly. The reaction temperature may be suitably selected in the range of -20 degree centigrade to the reflux temperature of a solvent in use, while the reaction time may be properly selected in the range of several minutes to 96 hours. Furthermore', a method employing a condensation agent and a mixed anhydride procedure as described in 1-(i) can also be used for the production thereof.

1-(iv): General formula (24) + General formula (25) → General formula (26)

By reacting a compound represented by the general formula (24) with an alkyl compound having a leaving group represented by the general formula (25) in a solvent or without a solvent, a compound represented by the general formula (26) of the present invention can be prepared. Examples of the compound represented by the general formula (25) include alkyl halides such as methyl iodide, ethyl iodide, n-propyl bromide and the like. Furthermore, in this process, a suitable base or solvent can be used. As the base or solvent, the bases or solvents cited in 1-(i) can be used. The reaction temperature and reaction time cited in 1-(i) can also be used.

Furthermore, the compound represented by the general formula (26) can also be prepared by a separate method comprising reacting an alkylating agent such as dimethyl sulfate, diethyl sulfate or the like, instead of the compound represented by the general formula (25) , with the compound represented by the general formula (24).

Preparation Method 2

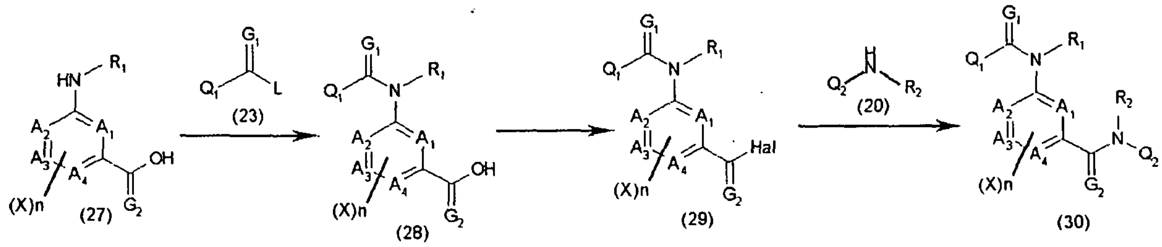

wherein, in the formula, $A_1$, $A_2$, $A_3$, $A_4$, $G_1$, $G_2$, $R_1$, $R_2$, X, n, $Q_1$, $Q_2$, L and Hal are the same as those described above.

2-(i): General formula (27) + General formula (23) → General formula (28)

By reacting a carboxylic acid having an amino group represented by the general formula (27) as a starting material with a compound represented by the general formula (23) in accordance with the conditions described in 1-(i), carboxylic acids having an acylamino group represented by the general formula (28) can be prepared.

2- (ii) : General formula (28) → General formula (29)

A compound represented by the general formula (29) can be prepared by a known usual method comprising reacting a compound represented by the general formula (28) with thionyl chloride, oxalyl chloride, phosgene, phosphorus oxychloride, phosphorus pentachloride, phosphorus trichloride, thionyl bromide, phosphorus tribromide, diethylaminosulfur trifluoride or the like.

2-(iii) : General formula (29) + General formula (20) → General formula (30)

By reacting a compound represented by the general formula (29) with a compound represented by the general formula (20) according to the conditions described in 1-(i), a compound represented by the general formula (30) can be prepared.

2-(iv) : General formula (28) + General formula (20) → General formula (30)

By reacting a compound represented by the general formula (28) with a compound represented by the general formula (20) according to the conditions using a condensation agent or a mixed anhydride procedure described in 1- (i), a compound represented by the general formula (30) can be prepared.

Preparation Method 3

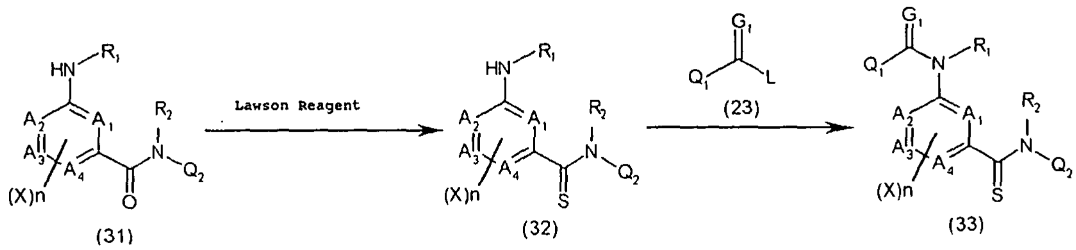


wherein, in the formula, $A_1$, $A_2$, $A_3$, $A_4$, $G_1$, $R_1$, $R_2$, X, n, $Q_1$, $Q_2$ and L are the same as those described above.

3-(i): General formula (31) → General formula (32)

By reacting a compound represented by the general formula (31) with a Lawson reagent according to the known conditions described in Synthesis p. 463 (1993), Synthesis p. 829 (1984) and the like, a compound represented by the general formula (32) can be prepared. The conditions such as a solvent, reaction temperature and the like are not restricted to those described in the literatures.

3-(ii): General formula (32) + General formula (23) → General formula (33)

By reacting a compound represented by the general formula (32) with a compound represented by the general formula (23) according to the conditions described in 1-(i), a compound represented by the general formula (33) can be prepared.

Preparation Method 4

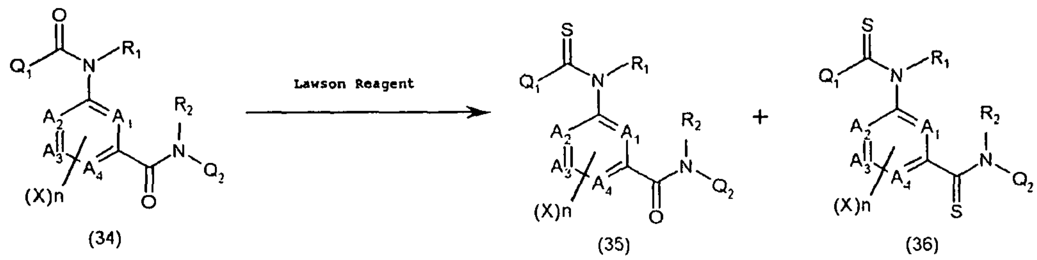


(34) (35) (36)

wherein, in the formula, $A_1$, $A_2$, $A_3$, $A_4$, $R_1$, $R_2$, X, n, $Q_1$ and $Q_2$ are the same as those described above. Compounds represented by the general formulae (35) and (36) can be prepared from a compound represented by the general formula (34) according to the conditions described in 3-(i). The conditions such as a solvent, reaction temperature and the like are not restricted to those described in the literatures. These two compounds can be easily separated and purified by a known separation and purification technique such as silica gel column chromatography and the like.

Preparation Method 5

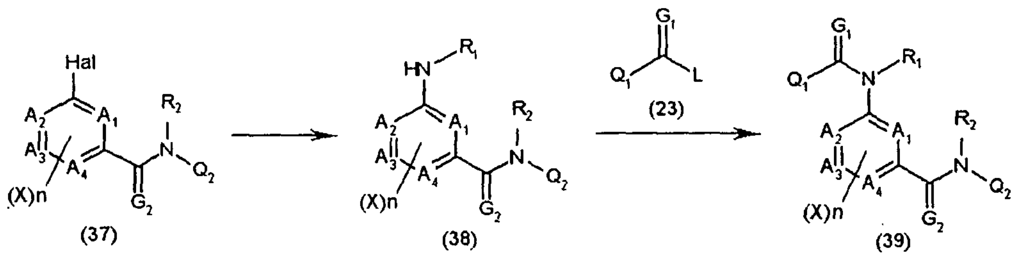

(37) (38) (23) (39)

wherein, in the formula, $A_1$, $A_2$, $A_3$, $A_4$, $G_1$, $G_2$, $R_1$, $R_2$, X, n, $Q_1$, $Q_2$, L and Hal are the same as those described above.

5-(i): General formula (37) → General formula (38)

A compound represented by the general formula (38) can be prepared by carrying out an amination reaction using ammonia according to the conditions described, for example, in J. Org. Chem. p. 280 (1958). However, the conditions such as a reaction solvent and the like are not restricted to those described in the literatures, and an inert solvent which does not remarkably hinder the proper progress of the reaction may be used. The reaction temperature and reaction time may be suitably selected as the reaction proceeds. Furthermore, examples of the amination agent include methylamine, ethylamine or the like, in addition to ammonia .

5-(ii): General formula (38) + General formula (23) → General formula (39)

By reacting a compound represented by the general formula (38) with a compound represented by the general formula (23) according to the conditions described in 1-(i), a compound represented by the general formula (39) can be prepared.

Preparation Method 6

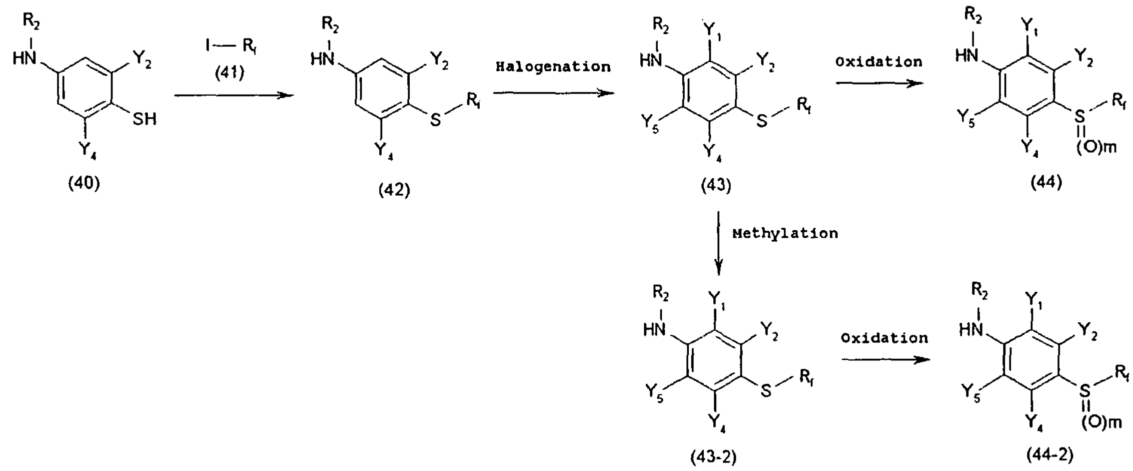


(40) (42) (43) (44) (43-2) (44-2)

wherein, in the formula, $R_2$ represents the same as those described above; $Y_1$ and $Y_5$ independently represent a methyl group, a chlorine atom, a bromine atom or an iodine atom; $Y_2$ and $Y_4$ represent the same as those described above; $R_f$ represents a C1-C6 perfluoroalkyl group; and m represents 1 or 2.

6-(i): General formula (40) + General formula (41) → General formula (42)
By reacting aminothiophenols represented by the general formula (40) with haloalkyl iodide represented by the general formula (41) in accordance with a method described in J. Fluorine Chem. p. 207 (1994), a compound represented by the general formula (42) can be prepared.

Examples of haloalkyl iodide represented by the general formula (41) include trifluoromethyl iodide, pentafluoroethyl iodide, heptafluoro-n-propyl iodide, heptafluoroisopropyl iodide, nonafluoro-n-butyl iodide, nonafluoroisobutyl iodide and the like. These may be suitably used in the range of 1 to 10 mole equivalents, based on the compound represented by the general formula (40).

The solvent to be used in the process is not restricted to solvents described in the above literatures and may not remarkably hinder the progress of the reaction. Examples thereof include water; aromatic hydrocarbons such as benzene, toluene, xylene and the like; halogenated hydrocarbons such as dichloromethane, chloroform, carbon tetrachloride and the like; chained ethers or cyclic ethers such as diethyl ether, dioxane, tetrahydrofuran, 1,2-dimethoxyethane and the like; esters such as ethyl acetate, butyl acetate and the like; alcohols such as methanol, ethanol and the like; ketones such as acetone, methylisobutyl ketone, cyclohexanone and the like; amides such as dimethylformamide, dimethylacetamide and the like; nitriles such as acetonitrile and the like; and inert solvents such as 1,3-dimethyl-2-imidazolidinone, hexamethylphosphoric triamide and the like. These solvents can be used singly or in combination of 2 or more kinds. Particularly preferable is a polar solvent. The reaction temperature may be suitably selected in the range of -20 degree centigrade to the reflux temperature of a solvent in use, while the reaction time may be properly selected in the range of several minutes to 96 hours.

6-(ii): General formula (42) → General formula (43)
A compound represented by the general formula (43) can be prepared by using a suitable halogenating agent. For example, a method as described in Synth. Commun. p. 1261 (1989) can be cited.

Examples of the halogenating agent include chlorine, bromine, iodine, N-chlorosuccinic acid imide, N-bromosuccinic acid imide, N-iodosuccinic acid imide and the like. These may be suitably used in the range of 1 to 10 mole equivalents, based on a compound represented by the general formula (42).

In the process, an appropriate solvent can also be used, but a solvent in use is not restricted to solvents described in the above literatures and may not remarkably hinder the progress of the reaction. Examples thereof include water; aromatic hydrocarbons such as benzene, toluene, xylene and the like; halogenated hydrocarbons such as dichlbromethane, chloroform, carbon tetrachloride and the like; chained ethers or cyclic ethers such as diethyl ether, dioxane, tetrahydrofuran, 1,2-dimethoxyethane and the like; esters such as ethyl acetate, butyl acetate and the like; alcohols such as methanol, ethanol and the like; ketones such as acetone, methylisobutyl ketone, cyclohexanone and the like; amides such as dimethylformamide, dimethylacetamide and the like; nitriles such as acetonitrile and the like; and inert solvents such as 1,3-dimethyl-2-imidazolidinone, hexamethylphosphoric triamide and the like. These solvents can be used singly or in combination of 2 or more kinds. Particularly preferable is a polar solvent. The reaction temperature may be suitably selected in the range of -20 degree centigrade to the reflux temperature of a solvent in use, while the reaction time may be properly selected in the range of several minutes to 96 hours.

6-(iii): General formula (43) → General formula (44)
A compound represented by the general formula (44) can be prepared by using a suitable oxidant. A method described,

for example, in Tetrahedron Lett. p. 4955 (1994) can be cited. Examples of the oxidant include organic peroxides such as m-chloroperbenzoic acid and the like, sodium metaperiodate, hydrogen peroxide, ozone, selenium dioxide, chromic acid, dinitrogen tetraoxide, acyl nitrate, iodine, bromine, N-bromosuccinic acid imide, iodosylbenzyl, t-butyl hypochlorite and the like. The solvent to be used in this process is not restricted to solvents described in the above literatures and may not remarkably hinder the progress of the reaction. These solvents can be used singly or in combination of 2 or more kinds. Particularly preferable is a polar solvent. The reaction temperature may be suitably selected in the range of -20 degree centigrade to the reflux temperature of a solvent in use, while the reaction time may be properly selected in the range of several minutes to 96 hours.

6-(iv): General formula (43) → General formula (43-2)

A compound represented by the general formula (43-2) (wherein, in the formula, any one of $Y_1$ and $Y_5$ must represent a methyl group) can be prepared from a compound represented by the general formula (43) by using a suitable methylating agent. In this process, a method described, for example, in Tetrahedron Lett. p. 6237 (2000) can be cited.

6-(v): General formula (43-2) → General formula (44-2)

A compound represented by the general formula (44-2) (wherein, in the formula, any one of $Y_1$ and $Y_5$ must represent a methyl group) can be prepared according to the method described in 6-(iii).

Furthermore, the compound of the present invention can be prepared by suitably selecting a preparation method as illustrated in the present invention using an aniline derivative represented by the general formula (43), (44), (43-2) or (44-2).

Preparation Method 7

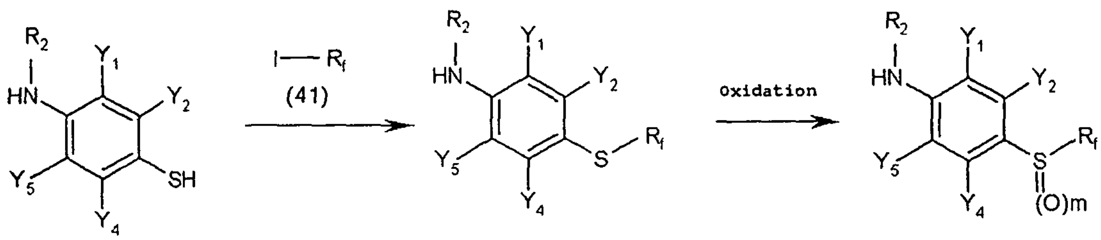


(45) (46) (47)

wherein, in the formula, $R_2$, $Y_1$, $Y_2$, $Y_4$, $Y_5$, $R_f$ and m represent the same as those described in the preparation method 6.

An aniline derivative represented by the general formula (47) can be prepared using a compound represented by the general formula (45) as a starting raw material according to the preparation method 6. Furthermore, by suitably selecting a preparation method as illustrated in the present invention, the compound of the present invention can be prepared.

Preparation Method 8

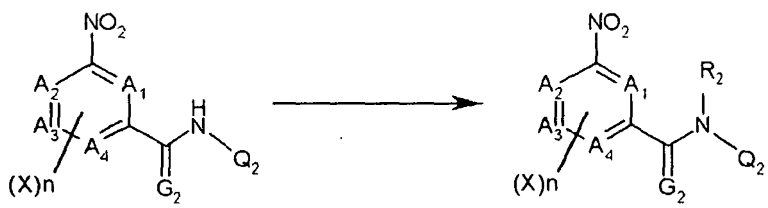

(48) (49)

wherein, in the formula, $A_1$, $A_2$, $A_3$, $A_4$, X, n, $G_2$, $R_2$ and $Q_2$ represent the same as those above.

By reacting a compound represented by the general formula (48) with a suitable reactant using an appropriate base in a proper solvent, a compound represented by the general formula (49) can be prepared.

Solvents may not remarkably hinder the progress of the reaction and examples thereof include aliphatic hydrocarbons such as hexane, cyclohexane, methylcyclohexane and the like; aromatic hydrocarbons such as benzene, xylene, toluene and the like; halogenated hydrocarbons such as dichloromethane, chloroform, carbon tetrachloride, 1, 2-dichloroethane and the like; ethers such as diethyl ether, dioxane, tetrahydrofuran, 1,2-dimethoxyethane and the like; amides such as dimethylformamide, dimethylacetamide and the like; nitriles such as acetonitrile, propionitrile and the

like; ketones such as acetone, methylisobutyl ketone, cyclohexanone, methylethyl ketone and the like; esters such as ethyl acetate, butyl acetate and the like; alcohols such as methanol, ethanol and the like; 1,3-dimethyl-2-imidazolidinone, sulfolane, dimethylsulfoxide; water and the like. These solvents can be used singly or in combination of 2 or more kinds.

Examples of the base include organic bases such as triethylamine, tributylamine, pyridine, 4-dimethylaminopyridine and the like; alkali metal hydroxides such as sodium hydroxide, potassium hydroxide and the like; carbonates such as sodium hydrogen carbonate, potassium carbonate and the like; phosphates such as potassium mono-hydrogen phosphate, tri-sodium phosphate and the like; alkali metal hydrides such as sodium hydride and the like; alkali metal alkoxides such as sodium methoxide, sodium ethoxide and the like; organolithiums such as n-butyl lithium and the like; and Grignard reagents such as ethyl magnesium bromide and the like.

These bases may be suitably selected in the range of 0.01 to 5 mole equivalents, based on the compound represented by the general formula (48) or may be used as a solvent.

Examples of the reactant include halogenated alkyls such as methyl iodide, ethyl bromide, trifluoromethyl iodide, 2,2,2-trifluoroethyl iodide and the like; halogenated allyls such as allyl iodide and the like; halogenated propargyls such as propargyl bromide and the like; halogenated acyls such as acetyl chloride and the like; acid anhydrides such as trifluoroacetic anhydride and the like; and alkyl sulfuric acids such as dimethyl sulfate, diethyl sulfate and the like.

These reactants may be suitably selected in the range of 1 to 5 mole equivalents, based on the compound represented by the general formula (48) or may be used as a solvent.

The reaction temperature may be suitably selected in the range of -80 degree centigrade to the reflux temperature of a solvent in use, while the reaction time may be properly selected in the range of several minutes to 96 hours.

Preparation Method 9

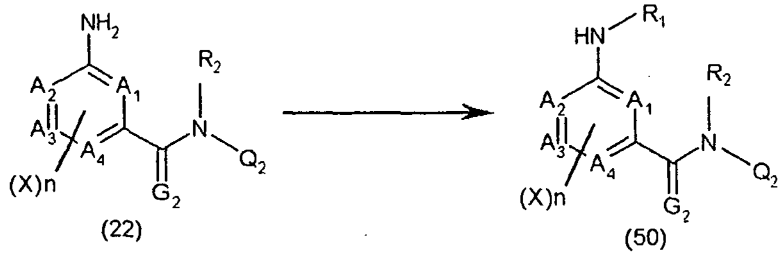

(22) (50)

wherein, in the formula, $A_1$, $A_2$, $A_3$, $A_4$, X, n, $G_2$, $R_1$, $R_2$ and $Q_2$ represent the same as those described above.

9-(i): General formula (22) → General formula (50)

By reacting a compound represented by the general formula (22) with aldehydes or ketones in an appropriate solvent, adding a suitable catalyst and reacting the resultant in a hydrogen atmosphere, a compound represented by the general formula (50) can be prepared.

Solvents may not remarkably hinder the progress of the reaction and examples thereof include aliphatic hydrocarbons such as hexane, cyclohexane, methylcyclohexane and the like; aromatic hydrocarbons such as benzene, xylene, toluene and the like; halogenated hydrocarbons such as dichloromethane, chloroform, carbon tetrachloride, 1,2-dichloroethane and the like; ethers such as diethyl ether, dioxane, tetrahydrofuran, 1,2-dimethoxyethane and the like; amides such as dimethylformamide, dimethylacetamide and the like; nitriles such as acetonitrile, propionitrile and the like; ketones such as acetone, methylisobutyl ketone, cyclohexanone, methylethyl ketone and the like; esters such as ethyl acetate, butyl acetate and the like; alcohols such as 1,3-dimethyl-2-imidazolidinone, sulfolane, dimethylsulfoxide, methanol, ethanol and the like; water and the like. These solvents can be used singly or in combination of 2 or more kinds.

Examples of the catalyst include palladium catalysts such as palladium carbon, palladium hydroxide carbon and the like, nickel catalysts such as Raney nickel and the like, cobalt catalysts, platinum catalysts, ruthenium catalysts, rhodium catalysts and the like.

Examples of aldehydes include formaldehyde, acetaldehyde, propionaldehyde, trifluoroacetaldehyde, difluoroacetaldehyde, fluoroacetaldehyde, chloroacetaldehyde, dichloroacetaldehyde, trichloroacetaldehyde, bromoacetaldehyde and the like.

Examples of ketones include acetone, perfluoroacetone, methylethyl ketone and the like.

The reaction pressure may be suitably selected in the range of 1 to 100 atm.

The reaction temperature may be suitably selected in the range of -20 degree centigrade to the reflux temperature of a solvent in use, while the reaction time may be properly selected in the range of several minutes to 96 hours.

9-(ii): General formula (22) → General formula (50) (separate method 1)

By reacting a compound represented by the general formula (22) with aldehydes or ketones in an appropriate solvent, and applying a suitable reducing agent, a compound represented by the general formula (50) can be prepared.

Solvents may not remarkably hinder the progress of the reaction and examples thereof include aliphatic hydrocarbons such as hexane, cyclohexane, methylcyclohexane and the like; aromatic hydrocarbons such as benzene, xylene, toluene and the like; halogenated hydrocarbons such as dichloromethane, chloroform, carbon tetrachloride, 1,2-dichloroethane and the like; ethers such as diethyl ether, dioxane, tetrahydrofuran, 1,2-dimethoxyethane and the like; amides such as dimethylformamide, dimethylacetamide and the like; nitriles such as acetonitrile, propionitrile and the like; ketones such as acetone, methylisobutyl ketone, cyclohexanone, methylethyl ketone and the like; esters such as ethyl acetate, butyl acetate and the like; alcohols such as 1,3-dimethyl-2-imidazolidinone, sulfolane, dimethylsulfoxide, methanol, ethanol and the like; water and the like. These solvents can be used singly or in combination of 2 or more kinds.

Examples of the reducing agent include borohydrides such as sodium borohydride, sodium cyanoborohydride, sodium triacetate borohydride and the like.

Examples of aldehydes include formaldehyde, acetaldehyde, propionaldehyde, trifluoroacetaldehyde, difluoroacetaldehyde, fluoroacetaldehyde, chloroacetaldehyde, dichloroacetaldehyde, trichloroacetaldehyde, bromoacetaldehyde and the like.

Examples of ketones include acetone, perfluoroacetone, methylethyl ketone and the like.

The reaction temperature may be suitably selected in the range of -20 degree centigrade to the reflux temperature of a solvent in use, while the reaction time may be properly selected in the range of several minutes to 96 hours.

9-(iii) : General formula (22) → General formula (50) (separate method 2)

By reacting a compound represented by the general formula (22) with a formylating agent in an appropriate solvent or without a solvent and applying a proper additive, it is possible to prepare a compound, wherein, in the general formula (50), $R_1$ is a methyl group.

Solvents may not remarkably hinder the progress of the reaction and examples thereof include aliphatic hydrocarbons such as hexane, cyclohexane, methylcyclohexane and the like; aromatic hydrocarbons such as benzene, xylene, toluene and the like; halogenated hydrocarbons such as dichloromethane, chloroform, carbon tetrachloride, 1, 2-dichloroethane and the like; ethers such as diethyl ether, dioxane, tetrahydrofuran, 1,2-dimethoxyethane and the like; amides such as dimethylformamide, dimethylacetamide and the like; nitriles such as acetonitrile, propionitrile and the like; ketones such as acetone, methylisobutyl ketone, cyclohexanone, methylethyl ketone and the like; esters such as ethyl acetate, butyl acetate and the like; alcohols such as 1,3-dimethyl-2-imidazolidinone, sulfolane, dimethylsulfoxide, methanol, ethanol and the like; water and the like. These solvents can be used singly or in combination of 2 or more kinds.

Examples of the formylating agent include formic anhydrides such as formaldehyde, formic acid, fluoroformic acid, formyl (2, 2-dimethylpropionic acid) and the like; formic acid esters such as phenyl formate and the like; pentafluorobenzaldehyde, oxazole and the like.

Examples of the reducing agent include inorganic acids such as sulfuric acid and the like; organic acids such as formic acid and the like; borohydrides such as sodium borohydride, sodium cyanoborohydride and the like; boronic acid, lithium aluminum hydride and the like.

The reaction temperature may be suitably selected in the range of -20 degree centigrade to the reflux temperature of a solvent in use, while the reaction time may be properly selected in the range of several minutes to 96 hours.

Preparation Method 10

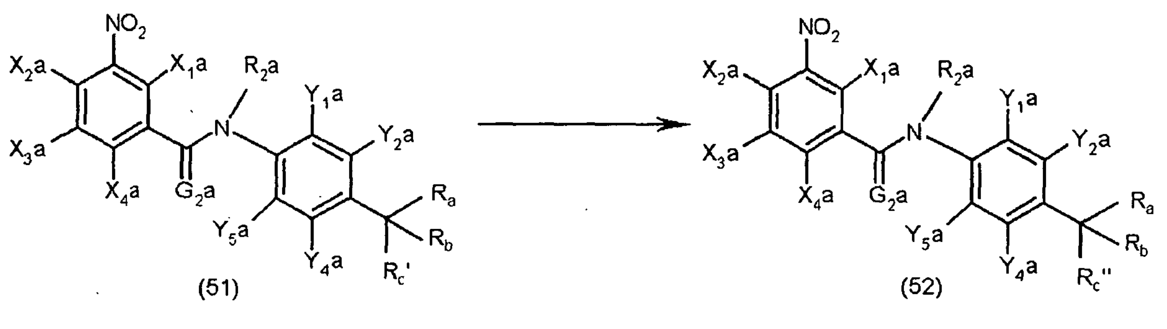

wherein, in the formula, $X_1a$, $X_2a$, $X_3a$, $X_4a$, $Y_1a$, $Y_2a$, $Y_4a$, $Y_5a$, $G_2a$, $R_2a$, $R_a$ and $R_b$ represent the same as those described above; in the general formula (51), $R_c$' represents a hydroxy group or $-O-R_d$ ($R_d$ represents the same as those described above); and in the general formula (52), $R_c$" represents a chlorine atom, a bromine atom or an iodine atom.

By reacting a compound represented by the general formula (51) with a suitable halogenating agent in an appropriate solvent or without a solvent, a chlorine compound (a bromine compound or an iodine compound) represented

by the general formula (52) can be prepared. In the process, an appropriate additive can also be used.

Solvents may not remarkably hinder the progress of the reaction and examples thereof include aliphatic hydrocarbons such as hexane, cyclohexane, methylcyclohexane and the like; aromatic hydrocarbons such as benzene, xylene, toluene and the like; halogenated hydrocarbons such as dichloromethane, chloroform, carbon tetrachloride, 1,2-dichloroethane and the like; ethers such as diethyl ether, dioxane, tetrahydrofuran, 1,2-dimethoxyethane and the like; amides such as dimethylformamide, dimethylacetamide and the like; nitriles such as acetonitrile, propionitrile and the like; ketones such as acetone, methylisobutyl ketone, cyclohexanone and the like; esters such as ethyl acetate, butyl acetate and the like; alcohols such as 1,3-dimethyl-2-imidazolidinone, sulfolane, dimethylsulfoxide, methanol, ethanol and the like; water and the like. These solvents can be used singly or in combination of 2 or more kinds.

Examples of the halogenating agent include thionyl chloride, thionyl bromide, phosphorus oxychloride, oxalyl chloride, phosphorus trichloride, phosphorus tribromide, phosphorus pentachloride, Rydon reagents, sulfonyl halides such as methanesulfonyl chloride, p-toluenesulfonyl chloride, benzenesulfonyl chloride and the like, sulfonium halides, sulfonate esters, chlorine, bromine, iodine, hypohalite esters, N-halogenoamines, hydrogen chloride, hydrogen bromide, sodium bromide, potassium bromide, cyanuric chloride, 1,3-dichloro-1,2,4-triazole, titanium (IV) chloride, vanadium (IV) chloride, arsenic (III) chloride, N,N-diethyl-1,2,2-trichlorovinylamine, trichloroacetonitrile, sodium chloride, ammonium bromide, N,N-dimethylchloroforminium chloride, N,N-dimethylchloroforminium bromide, phosphorus trichloride, phosphorus tribromide, N,N-dimethyl phosphoamidine dichloride and the like.

Examples of the additive include metal salts such as zinc chloride, lithium bromide and the like; organic bases such as a phase transfer catalyst, hexamethylphosphoric triamide and the like; inorganic acids such as sulfuric acid and the like; N,N-dimethylformamide and the like.

These halogenating agents may be suitably selected in the range of 0.01 to 10 mole equivalents, based on the compound represented by the general formula (1) or may be used as a solvent.

The reaction temperature may be suitably selected in the range of -80 degree centigrade to the reflux temperature of a solvent in use, while the reaction time may be properly selected in the range of several minutes to 96 hours.

Preparation Method 11

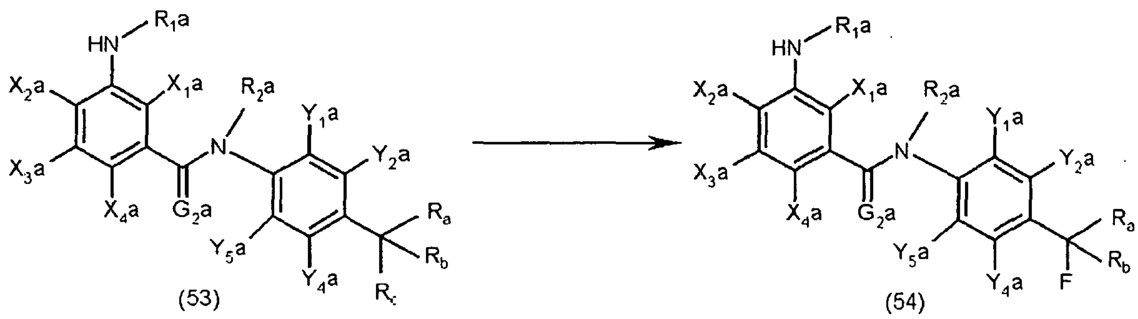

(53) (54)

wherein, in the formula, $X_1$a, $X_2$a, $X_3$a, $X_4$a, $Y_1$a, $Y_2$a, $Y_4$a, $Y_5$a, $G_2$a, $R_1$a, $R_2$a, $R_a$, $R_b$ and $R_c$ represent the same as those described above.

By reacting a compound represented by the general formula (53) with a suitable fluorinating agent in an appropriate solvent or without a solvent, a compound represented by the general formula (54) can be prepared.

Solvents may not remarkably hinder the progress of the reaction and examples thereof include aliphatic hydrocarbons such as hexane, cyclohexane, methylcyclohexane and the like; aromatic hydrocarbons such as benzene, xylene, toluene and the like; halogenated hydrocarbons such as dichloromethane, chloroform, carbon tetrachloride, 1, 2-dichloroethane and the like; ethers such as diethyl ether, dioxane, tetrahydrofuran, 1,2-dimethoxyethane and the like; amides such as dimethylformamide, dimethylacetamide and the like; nitriles such as acetonitrile, propionitrile and the like; ketones such as acetone, methylisobutyl ketone, cyclohexanone, methylethyl ketone and the like; esters such as ethyl acetate, butyl acetate and the like; alcohols such as 1,3-dimethyl-2-imidazolidinone, sulfolane, dimethylsulfoxide, methanol, ethanol and the like; water and the like. These solvents can be used singly or in combination of 2 or more kinds.

Examples of the fluorinating agent include 1,1,2,2-tetrafluoroethyldiethylamine, 2-chloro-1,1,2-trifluoroethyldiethylamine, trifluorodiphenylphosphorane, difluorotriphenylphosphorane, fluoroformate esters, sulfur tetrafluoride, potassium fluoride, potassium hydrogen fluoride, cesium fluoride, rubidium fluoride, sodium fluoride, lithium fluoride, antimony (III) fluoride, antimony (V) fluoride, zinc fluoride, cobalt fluoride, lead fluoride, copper fluoride, mercury (II) fluoride, silver fluoride, silver fluoroborate, thallium (I) fluoride, molybdenum (VI) fluoride, arsenic (III) fluoride, bromine fluoride,

selenium (IV) fluoride, tris(dimethylamino)sulfonium difluorotrimethylsilicate, sodium hexafluorosilicate, quaternary ammonium fluoride, (2-chloroethyl)diethylamine, diethylaminosulfur trifluoride, morpholinosulfur trifluoride, silicon tetrafluoride, hydrogen fluoride, hydrofluoric acid, hydrogen fluoride pyridine complex, hydrogen fluoride triethylamine complex, hydrogen fluoride salt, bis(2-methoxyethyl)aminosulfur trifluoride, 2,2-difluoro-1,3-dimethyl-2-imidazolidinone, iodine pentafluoride, tris(diethylamino)phosphonium-2,2,3,3,4,4-hexafluoro-cyclobuta ne ylide, triethylammonium hexafluorocyclobutane ylide, hexafluoropropene and the like. These fluorinating agents can be used singly or in combination of 2 or more kinds. These halogenating agents may be suitably selected in the range of 1 to 10 mole equivalents, based on the compound represented by the general formula (53) or may be suitably used as a solvent.

An additive may also be used and examples thereof include crown ethers such as 18-crown-6 and the like; phase transfer catalysts such as tetraphenylphosphonium salts and the like; inorganic salts such as calcium fluoride, calcium chloride and the like; metal oxides such as mercury oxide and the like; ion exchange resins and the like. These additives can be not only added in the reaction system,_ but also used as a pretreatment agent of the fluorinating agent.

The reaction temperature may be suitably selected in the range of -80 degree centigrade to the reflux temperature of a solvent in use, while the reaction time may be properly selected in the range of several minutes to 96 hours.

Preparation Method 12

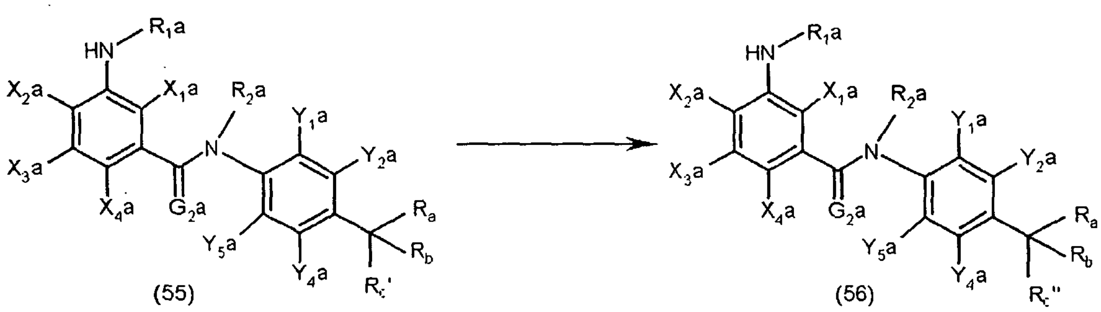

wherein, in the formula, $X_1a$, $X_2a$, $X_3a$, $X_4a$, $Y_1a$, $Y_2a$, $Y_4a$, $Y_5a$, $G_2a$, $R_1a$, $R_2a$, $R_a$, $R_b$, $R_c$' and $R_c$'' represent the same as those described above.

A compound represented by the general formula (56) can be prepared from a compound represented by the general formula (55) according to the method described in the preparation method 10.

Preparation Method 13

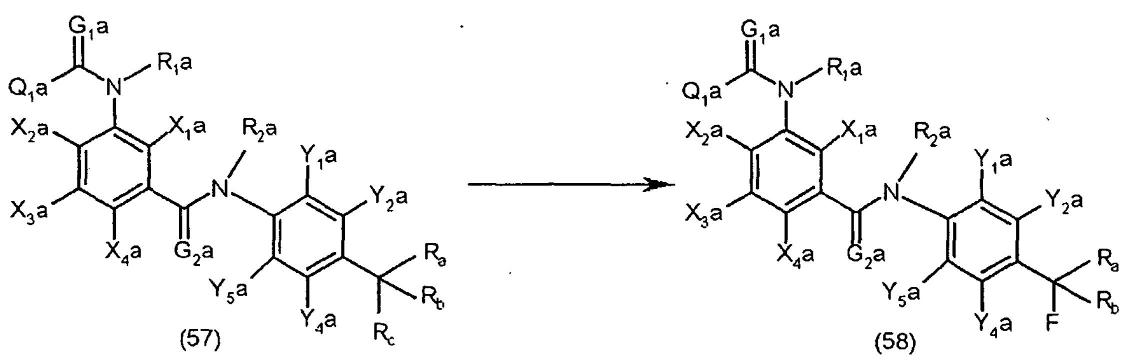

wherein, in the formula, $X_1a$, $X_2a$, $X_3a$, $X_4a$, $Y_1a$, $Y_2a$, $Y_4a$, $Y_5a$, $G_1a$, $G_2a$, $R_1a$, $R_2a$, $R_a$, $R_b$, $R_c$ and $Q_1a$ represent the same as those described above.

A compound represented by the general formula (58) can be prepared from a compound represented by the general formula (57) according to the method described in the preparation method 11.

Preparation Method 14

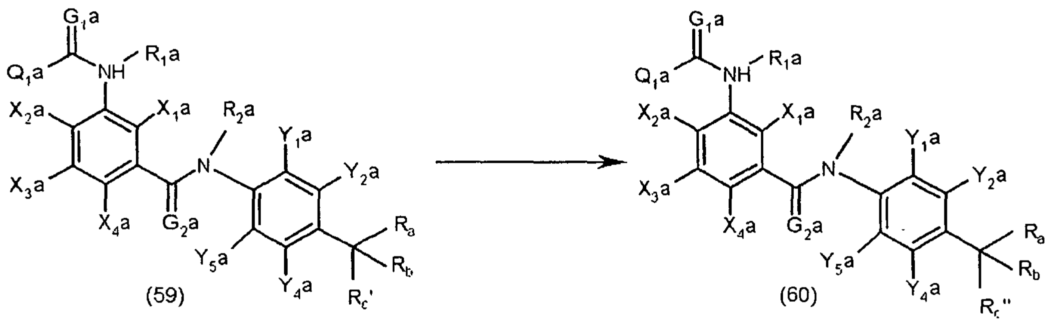

wherein, in the formula, $X_1a$, $X_2a$, $X_3a$, $X_4a$, $Y_1a$, $Y_2a$, $Y_4a$, $Y_5a$, $G_1a$, $G_2a$, $R_1a$, $R_2a$, $R_a$, $R_b$, $R_c'$, $R_c''$ and $Q_1a$ represent the same as those described above.
A compound represented by the general formula (60) can be prepared from a compound represented by the general formula (59) according to the method described in the preparation method 10.

In all preparation methods as illustrated above, desired products may be isolated according to a usual method from the reaction system after completion of the reaction, and can be purified, if needed, by carrying out operations such as recrystallization, column chromatography, distillation and the like. Furthermore, desired products can also be supplied to the next reaction process without isolating them from the reaction system.

The compound represented by the general formula (2) can be prepared according to a method as described in International Publication No. 2005 / 21488 pamphlet.

The compound represented by the general formula (3) can be prepared according to a method as described in International Publication No. 2003 / 8372 pamphlet.

The compound represented by the general formula (4) can be prepared according to a method as described in International Publication No. 2005 / 42474 pamphlet.

Typical compounds of the compound represented by the general formula (1) that is an active ingredient of an insecticide of the present invention are illustrated in Tables 1 to 5 below, but the present invention is not restricted thereto.

Incidentally, in the tables, "n-" refers to normal, "Me" refers to a methyl group, "Et" refers to an ethyl group, "n-Pr" refers to a normal propyl group, "i-Pr" refers to an isopropyl group, "n-Bu" refers to a normal butyl group, "i-Bu" refers to an isobutyl group, "s-Bu" refers to a secondary butyl group, "t-Bu" refers to a tertiary butyl group, "H" refers to a hydrogen atom, "O" refers to an oxygen atom, "S" refers to a sulfur atom, "C" refers to a carbon atom, "N" refers to a nitrogen atom, "F" refers to a fluorine atom, "Cl" refers to a chlorine atom, "Br" refers to a bromine atom, "I" refers to an iodine atom, "$CF_3$" refers to a trifluoromethyl group, "MeS" refers to a methylthio group, "MeSO" refers to a methylsulfinyl group, "$MeSO_2$" refers to a methylsulfonyl group, "MeO" refers to a methoxy group, "$NH_2$" refers to an amino group, "MeNH" refers to a methylamino group, "$Me_2N$" refers to a dimethylamino group, and "OH" refers to a hydroxy group.

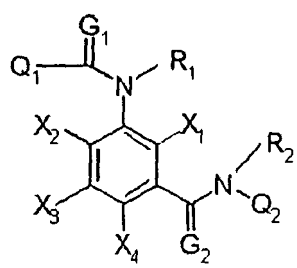

($X_1$, $X_2$, $X_3$, $X_4$ = hydrogen atoms; $G_1$, $G_2$ = oxygen atoms; $R_1$, $R_2$ = hydrogen atoms)

[Table 1-1]

| Compound Nos. | $Q_1$ | $Q_2$ |
|---|---|---|
| 1 | phenyl | 2,6-dimethyl-4-(pentafluoroethyl)phenyl |
| 2 | phenyl | 2,6-dichloro-4-(pentafluoroethyl)phenyl |

(continued)

| Compound Nos. | $Q_1$ | $Q_2$ |
|---|---|---|
| 3 | 2-fluorophenyl | 2,6-dichloro-4-(pentafluoroethyl)phenyl |
| 4 | phenyl | 2,6-dibromo-4-(pentafluoroethyl)phenyl |
| 5 | 2-fluorophenyl | 2,6-dibromo-4-(pentafluoroethyl)phenyl |
| 6 | phenyl | 2,6-dichloro-4-(heptafluoroisopropyl) phenyl |
| 7 | phenyl | 2,6-dibromo-4-(heptafluoroisopropyl) phenyl |
| 8 | 2-fluorophenyl | 2,6-dibromo-4-(heptafluoroisopropyl) phenyl |
| 9 | phenyl | 2,6-dimethyl-4-(heptafluoro-n-propyl) phenyl |
| 10 | phenyl | 2, 6-dimethyl-4-(heptafluoroisopropyl) phenyl |
| 11 | 2-methylphenyl | 2,6-dimethyl-4-(heptafluoroisopropyl) phenyl |
| 12 | 3-methylphenyl | 2,6-dimethyl-4-(heptafluoroisopropyl) phenyl |
| 13 | 4-methylphenyl | 2,6-dimethyl-4-(heptafluoroisopropyl) phenyl |
| 14 | 2-ethylphenyl | 2,6-dimethyl-4-(heptafluoroisopropyl) phenyl |
| 15 | 3-ethylphenyl | 2,6-dimethyl-4-(heptafluoroisopropyl) phenyl |
| 16 | 4-ethylphenyl | 2,-6-dimethyl-4-(heptafluoroisopropyl) phenyl |
| 17 | 2-fluorophenyl | 2,6-dimethyl-4-(heptafluoroisopropyl) phenyl |
| 18 | 3-fluorophenyl | 2,6-dimethyl-4-(heptafluoroisopropyl) phenyl |
| 19 | 4-fluorophenyl | 2,6-dimethyl-4-(heptafluoroisopropyl) phenyl |
| 20 | 2-chlorophenyl | 2,6-dimethyl-4-(heptafluoroisopropyl) phenyl |

[Table 1-2]

| Compound Nos. | $Q_1$ | $Q_2$ |
|---|---|---|
| 21 | 3-chlorophenyl | 2,6-dimethyl-4-(heptafluoroisopropyl) phenyl |
| 22 | 4-chlorophenyl | 2,6-dimethyl-4-(heptafluoroisopropyl) phenyl |
| 23 | 2-bromophenyl | 2,6-dimethyl-4-(heptafluoroisopropyl) phenyl |
| 24 | 3-bromophenyl | 2,6-dimethyl-4-(heptafluoroisopropyl) phenyl |
| 25 | 4-bromophenyl | 2,6-dimethyl-4-(heptafluoroisopropyl) phenyl |
| 26 | 2-iodophenyl | 2,6-dimethyl-4-(heptafluoroisopropyl) phenyl |
| 27 | 3-iodophenyl | 2,6-dimethyl-4-(heptafluoroisopropyl) phenyl |
| 28 | 4-iodophenyl | 2,6-dimethyl-4-(heptafluoroisopropyl) phenyl |
| 29 | 3-cyanophenyl | 2,6-dimethyl-4-(heptafluoroisopropyl) phenyl |
| 30 | 4-cyanophenyl | 2,6-dimethyl-4-(heptafluoroisopropyl) phenyl |
| 31 | 2-nitrophenyl | 2,6-dimethyl-4-(heptafluoroisopropyl) phenyl |
| 32 | 3-nitrophenyl | 2,6-dimethyl-4-(heptafluoroisopropyl) phenyl |
| 33 | 4-nitrophenyl | 2,6-dimethyl-4-(heptafluoroisopropyl) phenyl |
| 34 | 2-aminophenyl | 2,6-dimethyl-4-(heptafluoroisopropyl) phenyl |
| 35 | 3-aminophenyl | 2,6-dimethyl-4-(heptafluoroisopropyl) phenyl |
| 36 | 4-aminophenyl | 2,6-dimethyl-4-(heptafluoroisopropyl) phenyl |

(continued)

| Compound Nos. | $Q_1$ | $Q_2$ |
|---|---|---|
| 37 | 2-trifluoro methylphenyl | 2,6-dimethyl-4-(heptafluoroisopropyl) phenyl |
| 38 | 3-trifluoro methylphenyl | 2,6-dimethyl-4-(heptafluoroisopropyl) phenyl |
| 39 | 4-trifluoro methylphenyl | 2,6-dimethyl-4-(heptafluoroisopropyl) phenyl |
| 40 | 2-hydroxyphenyl | 2,6-dimethyl-4-(heptafluoroisopropyl) phenyl |

[Table 1-3]

| Compound Nos. | $Q_1$ | $Q_2$ |
|---|---|---|
| 41 | 2-methoxyphenyl | 2,6-dimethyl-4-(heptafluoroisopropyl) phenyl |
| 42 | 3-methoxyphenyl | 2,6-dimethyl-4-(heptafluoroisopropyl) phenyl |
| 43 | 4-methoxyphenyl | 2,6-dimethyl-4-(heptafluoroisopropyl) phenyl |
| 44 | 2-phenoxyphenyl | 2,6-dimethyl-4-(heptafluoroisopropyl) phenyl |
| 45 | 4-(1,1-dimethyl ethyl)phenyl | 2,6-dimethyl-4-(heptafluoroisopropyl) phenyl |
| 46 | 3-(dimethylamino) phenyl | 2,6-dimethyl-4-(heptafluoroisopropyl) phenyl |
| 47 | 4-(dimethylamino) phenyl | 2,6-dimethyl-4-(heptafluoroisopropyl) phenyl |
| 48 | 4-trifluoro methoxyphenyl | 2,6-dimethyl-4-(heptafluoroisopropyl) phenyl |
| 49 | 2-(acetylamino) phenyl | 2,6-dimethyl-4-(heptafluoroisopropyl) phenyl |
| 50 | 3-(acetylamino) phenyl | 2,6-dimethyl-4-(heptafluoroisopropyl) phenyl |
| 51 | 4-(acetylamino) phenyl | 2,6-dimethyl-4-(heptafluoroisopropyl) phenyl |
| 52 | 2-acetoxyphenyl | 2,6-dimethyl-4-(heptafluoroisopropyl) phenyl |
| 53 | 2-(methoxy carbonyl)phenyl | 2,6-dimethyl-4-(heptafluoroisopropyl) phenyl |
| 54 | 4-(methoxy carbonyl)phenyl | 2,6-dimethyl-4-(heptafluoroisopropyl) phenyl |
| 55 | 2-(4-trifluoro methylphenyl) phenyl | 2,6-dimethyl-4-(heptafluoroisopropyl) phenyl |
| 56 | 2,3-dimethylphenyl | 2,6-dimethyl-4-(heptafluoroisopropyl) phenyl |
| 57 | 2,4-dimethylphenyl | 2,6-dimethyl-4-(heptafluoroisopropyl) phenyl |
| 58 | 2,6-dimethylphenyl | 2,6-dimethyl-4-(heptafluoroisopropyl) phenyl |
| 59 | 2,3-difluorophenyl | 2,6-dimethyl-4-(heptafluoroisopropyl) phenyl |
| 60 | 2,4-difluorophenyl | 2,6-dimethyl-4-(heptafluoroisopropyl) phenyl |

[Table 1-4]

| Compound Nos. | $Q_1$ | $Q_2$ |
|---|---|---|
| 61 | 2,5-difluorophenyl | 2,6-dimethyl-4-(heptafluoroisopropyl) phenyl |
| 62 | 2,6-difluorophenyl | 2,6-dimethyl-4-(heptafluoroisopropyl) phenyl |
| 63 | 3,4-difluorophenyl | 2,6-dimethyl-4-(heptafluoroisopropyl) phenyl |
| 64 | 3,5-difluorophenyl | 2,6-dimethyl-4-(heptafluoroisopropyl) phenyl |
| 65 | 2,3-dichlorophenyl | 2,6-dimethyl-4-(heptafluoroisopropyl) phenyl |
| 66 | 2,4-dichlorophenyl | 2,6-dimethyl-4-(heptafluoroisopropyl) phenyl |

(continued)

| Compound Nos. | $Q_1$ | $Q_2$ |
|---|---|---|
| 67 | 2,5-dichlorophenyl | 2,6-dimethyl-4-(heptafluoroisopropyl) phenyl |
| 68 | 2,6-dichlorophenyl | 2,6-dimethyl-4-(heptafluoroisopropyl) phenyl |
| 69 | 3,4-dichlorophenyl | 2,6-dimethyl-4-(heptafluoroisopropyl) phenyl |
| 70 | 2,4-dinitrophenyl | 2,6-dimethyl-4-(heptafluoroisopropyl) phenyl |
| 71 | 3,4-dinitrophenyl | 2,6-dimethyl-4-(heptafluoroisopropyl) phenyl |
| 72 | 2,6-dimethoxy phenyl | 2,6-dimethyl-4-(heptafluoroisopropyl) phenyl |
| 73 | 3,5-dimethoxy phenyl | 2,6-dimethyl-4-(heptafluoroisopropyl) phenyl |
| 74 | 3-methyl-4-nitrophenyl | 2,6-dimethyl-4-(heptafluoroisopropyl) phenyl |
| 75 | 5-amino-2-fluorophenyl | 2,6-dimethyl-4-(heptafluoroisopropyl) phenyl |
| 76 | 3-fluoro-2-methylphenyl | 2,6-dimethyl-4-(heptafluoroisopropyl) phenyl |
| 77 | 2-fluoro-5-nitrophenyl | 2,6-dimethyl-4-(heptafluoroisopropyl) phenyl |
| 78 | 4-fluoro-3-nitrophenyl | 2,6-dimethyl-4-(heptafluoroisopropyl) phenyl |
| 79 | 5-fluoro-2-nitrophenyl | 2,6-dimethyl-4-(heptafluoroisopropyl) phenyl |
| 80 | 2-fluoro-6-iodophenyl | 2,6-dimethyl-4-(heptafluoroisopropyl) phenyl |

[Table 1-5]

| Compound Nos. | $Q_1$ | $Q_2$ |
|---|---|---|
| 81 | 2-fluoro-5-trifluoromethyl phenyl | 2,6-dimethyl-4-(heptafluoroisopropyl) phenyl |
| 82 | 2-chloro-4-nitrophenyl | 2,6-dimethyl-4-(heptafluoroisopropyl) phenyl |
| 83 | 2-chloro-4-fluorophenyl | 2,6-dimethyl-4-(heptafluoroisopropyl) phenyl |
| 84 | 2-chloro-6-fluorophenyl | 2,6-dimethyl-4-(heptafluoroisopropyl) phenyl |
| 85 | 3-chloro-4-fluorophenyl | 2,6-dimethyl-4-(heptafluoroisopropyl) phenyl |
| 86 | 4-chloro-2-fluorophenyl | 2,6-dimethyl-4-(heptafluoroisopropyl) phenyl |
| 87 | 4-chloro-2-nitrophenyl | 2,6-dimethyl-4-(heptafluoroisopropyl) phenyl |
| 88 | 3-methoxy-4-nitrophenyl | 2,6-dimethyl-4-(heptafluoroisopropyl) phenyl |
| 89 | 2-methoxy-4-nitrophenyl | 2,6-dimethyl-4-(heptafluoroisopropyl) phenyl |
| 90 | 2,3,4-trifluoro phenyl | 2,6-dimethyl-4-(heptafluoroisopropyl) phenyl |
| 91 | 2,4,6-trimethyl phenyl | 2,6-dimethyl-4-(heptafluoroisopropyl) phenyl |
| 92 | 2,3,6-trifluoro phenyl | 2,6-dimethyl-4-(heptafluoroisopropyl) phenyl |
| 93 | 2,4,5-trimethoxy phenyl | 2,6-dimethyl-4-(heptafluoroisopropyl) phenyl |
| 94 | 3,4,5-trimethoxy phenyl | 2,6-dimethyl-4-(heptafluoroisopropyl) phenyl |
| 95 | 2,3,4,5,6-pentafluorophenyl | 2,6-dimethyl-4-(heptafluoroisopropyl) phenyl |
| 96 | 2-biphenyl | 2,6-dimethyl-4-(heptafluoroisopropyl) phenyl |
| 97 | 3-biphenyl | 2,6-dimethyl-4-(heptafluoroisopropyl) phenyl |
| 98 | 1-naphthyl | 2,6-dimethyl-4-(heptafluoroisopropyl) phenyl |
| 99 | 2-naphthyl | 2,6-dimethyl-4-(heptafluoroisopropyl) phenyl |
| 100 | pyridine-2-yl | 2,6-dimethyl-4-(heptafluoroisopropyl) phenyl |

[Table 1-6]

| Compound Nos. | $Q_1$ | $Q_2$ |
|---|---|---|
| 101 | pyridine-3-yl | 2,6-dimethyl-4-(heptafluoroisopropyl) phenyl |
| 102 | pyridine-4-yl | 2,6-dimethyl-4-(heptafluoroisopropyl) phenyl |
| 103 | 2-methyl pyridine-5-yl | 2,6-dimethyl-4-(heptafluoroisopropyl) phenyl |
| 104 | 3-methyl pyridine-2-yl | 2,6-dimethyl-4-(heptafluoroisopropyl) phenyl |
| 105 | 2-fluoro pyridine-3-yl | 2,6-dimethyl-4-(heptafluoroisopropyl) phenyl |
| 106 | 2-chloro pyridine-3-yl | 2,6-dimethyl-4-(heptafluoroisopropyl) phenyl |
| 107 | 2-chloro pyridine-4-yl | 2,6-dimethyl-4-(heptafluoroisopropyl) phenyl |
| 108 | 2-chloro pyridine-6-yl | 2,6-dimethyl-4-(heptafluoroisopropyl) phenyl |
| 109 | 2-chloro pyridine-5-yl | 2,6-dimethyl-4-(heptafluoroisopropyl) phenyl |
| 110 | 5-chloro pyridine-2-yl | 2,6-dimethyl-4-(heptafluoroisopropyl) phenyl |
| 111 | 4-trifluoromethyl pyridine-3-yl | 2,6-dimethyl-4-(heptafluoroisopropyl) phenyl |
| 112 | 3-hydroxy pyridine-2-yl | 2,6-dimethyl-4-(heptafluoroisopropyl) phenyl |
| 113 | 2-phenoxy pyridine-3-yl | 2,6-dimethyl-4-(heptafluoroisopropyl) phenyl |
| 114 | 2-methylthio pyridine-3-yl | 2,6-dimethyl-4-(heptafluoroisopropyl) phenyl |
| 115 | 2,6-dimethoxy pyridine-3-yl | 2,6-dimethyl-4-(heptafluoroisopropyl) phenyl |
| 116 | 2,3-dichloro pyridine-5-yl | 2,6-dimethyl-4-(heptafluoroisopropyl) phenyl |
| 117 | 2,5-dichloro pyridine-3-yl | 2,6-dimethyl-4-(heptafluoroisopropyl) phenyl |
| 118 | 2,6-dichloro pyridine-3-yl | 2,6-dimethyl-4-(heptafluoroisopropyl) phenyl |
| 119 | 3,5-dichloro pyridine-4-yl | 2,6-dimethyl-4-(heptafluoroisopropyl) phenyl |
| 120 | pyridine-N-oxide-2-yl | 2,6-dimethyl-4-(heptafluoroisopropyl) phenyl |

[Table 1-7]

| Compound Nos. | $Q_1$ | $Q_2$ |
|---|---|---|
| 121 | N-methylpyrrole-2-yl | 2,6-dimethyl-4-(heptafluoroisopropyl) phenyl |
| 122 | pyrazine-2-yl | 2,6-dimethyl-4-(heptafluoroisopropyl) phenyl |
| 123 | 2-methyl pyrazine-5-yl | 2,6-dimethyl-4-(heptafluoroisopropyl) phenyl |
| 124 | 4-trifluoromethyl pyrimidine-5-yl | 2,6-dimethyl-4-(heptafluoroisopropyl) phenyl |
| 125 | furan-2-yl | 2,6-dimethyl-4-(heptafluoroisopropyl) phenyl |
| 126 | furan-3-yl | 2,6-dimethyl-4-(heptafluoroisopropyl) phenyl |
| 127 | 2-tetrahydro furanyl | 2,6-dimethyl-4-(heptafluoroisopropyl) phenyl |
| 128 | 3-tetrahydro furanyl | 2,6-dimethyl-4-(heptafluoroisopropyl) phenyl |
| 129 | benzofuran-2-yl | 2,6-dimethyl-4-(heptafluoroisopropyl) phenyl |
| 130 | tetrahydropyran-2-yl | 2,6-dimethyl-4-(heptafluoroisopropyl) phenyl |
| 131 | 2-methyl-5,6-dihydro-4H pyran-3-yl | 2,6-dimethyl-4-(heptafluoroisopropyl) phenyl |
| 132 | thiophene-2-yl | 2,6-dimethyl-4-(heptafluoroisopropyl) phenyl |

(continued)

| Compound Nos. | $Q_1$ | $Q_2$ |
|---|---|---|
| 133 | thiophene-3-yl | 2,6-dimethyl-4-(heptafluoroisopropyl) phenyl |
| 134 | 3-methyl thiophene-2-yl | 2,6-dimethyl-4-(heptafluoroisopropyl) phenyl |
| 135 | 2-nitrothiophene-4-yl | 2,6-dimethyl-4-(heptafluoroisopropyl) phenyl |
| 136 | 2-methylthiophene-5-yl | 2,6-dimethyl-4-(heptafluoroisopropyl) phenyl |
| 137 | 3-chlorothiophene-2-yl | 2,6-dimethyl-4-(heptafluoroisopropyl) phenyl |
| 138 | 2-chlorothiophene-5-yl | 2,6-dimethyl-4-(heptafluoroisopropyl) phenyl |
| 139 | 3-bromothiophene-2-yl | 2,6-dimethyl-4-(heptafluoroisopropyl) phenyl |
| 140 | 2-bromothiophene-5-yl | 2,6-dimethyl-4-(heptafluoroisopropyl) phenyl |

[Table 1-8]

| Compound Nos. | $Q_1$ | $Q_2$ |
|---|---|---|
| 141 | 3-iodothiophene-2-yl | 2,6-dimethyl-4-(heptafluoroisopropyl) phenyl |
| 142 | 3-phenylthiophene-2-yl | 2,6-dimethyl-4-(heptafluoroisopropyl) phenyl |
| 143 | 2,4-dimethyl thiophene-5-yl | 2,6-dimethyl-4-(heptafluoroisopropyl) phenyl |
| 144 | benzothiophene-2-yl | 2,6-dimethyl-4-(heptafluoroisopropyl) phenyl |
| 145 | 4-nitro-1H-pyrrole -2-yl | 2,6-dimethyl-4-(heptafluoroisopropyl) phenyl |
| 146 | 3-ethyl-3H-pyrazole-4-yl | 2,6-dimethyl-4-(heptafluoroisopropyl) phenyl |
| 147 | 1-methyl-3-nitro-1H-pyrazole-4-yl | 2,6-dimethyl-4-(heptafluoroisopropyl) phenyl |
| 148 | 3-chloro-1-methyl-1H-pyrazole-4-yl | 2,6-dimethyl-4-(heptafluoroisopropyl) phenyl |
| 149 | 3-bromo-1-methyl-1H-pyrazole-4-yl | 2,6-dimethyl-4-(heptafluoroisopropyl), phenyl |
| 150 | 1-methyl-3-trifluoromethyl-1H-pyrazole-4-yl | 2,6-dimethyl-4-(heptafluoroisopropyl) phenyl |
| 151 | 1-methyl-5-trifluoromethyl-1H-pyrazole-4-yl | 2,6-dimethyl-4-(heptafluoroisopropyl) phenyl |
| 152 | isoxazole-5-yl | 2,6-dimethyl-4-(heptafluoroisopropyl) phenyl |
| 153 | 4-trifluoro methylthiazole-5-yl | 2,6-dimethyl-4-(heptafluoroisopropyl) phenyl |
| 154 | 2,4-dimethyl thiazole-5-yl | 2,6-dimethyl-4-(heptafluoroisopropyl) phenyl |
| 155 | 2-ethyl-4-methyl thiazole-5-yl | 2,6-dimethyl-4-(heptafluoroisopropyl) phenyl |
| 156 | 2-chloro-4-methyl thiazole-5-yl | 2,6-dimethyl-4-(heptafluoroisopropyl) phenyl |
| 157 | 3-methyl isothiazole-5-yl | 2,6-dimethyl-4-(heptafluoroisopropyl) phenyl |
| 158 | 3,4-dichloro-isothiazole-5-yl | 2,6-dimethyl-4-(heptafluoroisopropyl) phenyl |
| 159 | 3-chlorobenzo thiazole-2-yl | 2,6-dimethyl-4-(heptafluoroisopropyl) phenyl |
| 160 | 2,2-difluoro-benzo [1.3]dioxole-5-yl | 2,6-dimethyl-4-(heptafluoroisopropyl) phenyl |

[Table 1-9]

| Compound Nos. | $Q_1$ | $Q_2$ |
|---|---|---|
| 161 | 2,2-difluoro-benzo [1.3]dioxole-4-yl | 2,6-dimethyl-4-(heptafluoroisopropyl) phenyl |
| 162 | 2-phenylquinoline -4-yl | 2,6-dimethyl-4-(heptafluoroisopropyl) phenyl |

(continued)

| Compound Nos. | $Q_1$ | $Q_2$ |
|---|---|---|
| 163 | phenyl | 2-bromo-4-(heptafluoroisopropyl)-6-methylphenyl |
| 164 | phenyl | 2-ethyl-4-(heptafluoroisopropyl)-6-methylphenyl |
| 165 | 2-fluorophenyl | 2-ethyl-4-(heptafluoroisopropyl)-6-methylphenyl |
| 166 | phenyl | 4-(heptafluoroisopropyl)-2-iodo-6-methylphenyl |
| 167 | phenyl | 4-(heptafluoroisopropyl)-2-hydroxy-6-methylphenyl |
| 168 | phenyl | 2-chloro-6-ethyl-4-(heptafluoro isopropyl)phenyl |
| 169 | phenyl | 2-bromo-6-ethyl-4-(heptafluoro isopropyl)phenyl |
| 170 | 2-fluorophenyl | 2-bromo-6-ethyl-4-(heptafluoro isopropyl)phenyl |
| 171 | phenyl | 2-ethyl-4-(heptafluoroisopropyl)-6-iodophenyl |
| 172 | 2-fluorophenyl | 2-ethyl-4-(heptafluoroisopropyl)-6-iodophenyl |
| 173 | 4-nitrophenyl | 2-ethyl-4-(heptafluoroisopropyl)-6-iodophenyl |
| 174 | 4-cyanophenyl | 2-ethyl-4-(heptafluoroisopropyl)-6-iodophenyl |
| 175 | 4-nitrophenyl | 4-(heptafluoroisopropyl)-2-methyl-6-n-propylphenyl |
| 176 | phenyl | 4-(heptafluoroisopropyl)-2-isopropyl-6-methylphenyl |
| 177 | 2-fluorophenyl | 4-(heptafluoroisopropyl)-2-isopropyl-6-methylphenyl |
| 178 | phenyl | 2-bromo-4-(heptafluoroisopropyl)-6-n-propylphenyl |
| 179 | 2-fluorophenyl | 2-bromo-4-(heptafluoroisopropyl)-6-n-propylphenyl |
| 180 | 4-nitrophenyl | 2-bromo-4-(heptafluoroisopropyl)-6-n-propylphenyl |

[Table 1-10]

| Compound Nos. | $Q_1$ | $Q_2$ |
|---|---|---|
| 181 | 4-cyanophenyl | 2-bromo-4-(heptafluoroisopropyl)-6-n-propylphenyl |
| 182 | phenyl | 4-(heptafluoroisopropyl)-2-iodo-6-n-propylphenyl |
| 183 | 2-fluorophenyl | 4-(heptafluoroisopropyl)-2-iodo-6-n-propylphenyl |
| 184 | 4-nitrophenyl | 4-(heptafluoroisopropyl)-2-iodo-6-n-propylphenyl |
| 185 | 4-cyanophenyl | 4-(heptafluoroisopropyl)-2-iodo-6-n-propylphenyl |
| 186 | 4-trifluoromethyl phenyl | 4-(heptafluoroisopropyl)-2-iodo-6-n-propylphenyl |
| 187 | phenyl | 2-chloro-4-(heptafluoroisopropyl)-6-n-butylphenyl |
| 188 | 2-fluorophenyl | 2-chloro-4-(heptafluoroisopropyl)-6-n-butylphenyl |
| 189 | phenyl | 2-bromo-4-(heptafluoroisopropyl)-6-n-butylphenyl |
| 190 | 2-fluorophenyl | 2-bromo-4-(heptafluoroisopropyl)-6-n-butylphenyl |
| 191 | phenyl | 4-(heptafluoroisopropyl)-2-iodo-6-n-butylphenyl |
| 192 | 2-fluorophenyl | 4-(heptafluoroisopropyl)-2-iodo-6-n-butylphenyl |
| 193 | phenyl | 2-(2-butyl)-6-chloro-4-(heptafluoro isopropyl)phenyl |
| 194 | phenyl | 2-bromo-6-(2-butyl)-4-(hepta fluoroisopropyl)phenyl |
| 195 | 2-fluorophenyl | 2-bromo-6-(2-butyl)-4-(hepta fluoroisopropyl)phenyl |
| 196 | phenyl | 2-(2-butyl)-4-(heptafluoroisopropyl)-6-iodophenyl |

(continued)

| Compound Nos. | $Q_1$ | $Q_2$ |
|---|---|---|
| 197 | 2-fluorophenyl | 2-bromo-6-cyano-4-(heptafluoro isopropyl)phenyl |
| 198 | phenyl | 2-bromo-4-(heptafluoroisopropyl)-6-methylthiophenyl |
| 199 | 2-fluorophenyl | 2-bromo-4-(heptafluoroisopropyl)-6-methylthiophenyl |
| 200 | phenyl | 2-bromo-4-(heptafluoroisopropyl)-6-(methylsulfinyl)phenyl |

[Table 1-11]

| Compound Nos. | $Q_1$ | $Q_2$ |
|---|---|---|
| 201 | 2-fluorophenyl | 2-chloro-4-(heptafluoroisopropyl)-6-(methylsulfonyl)phenyl |
| 202 | 2-chloropyridine-3-yl | 2-chloro-4-(heptafluoroisopropyl)-6-(methylsulfonyl)phenyl |
| 203 | phenyl | 2-bromo-4-(heptafluoroisopropyl)-6-(methylsulfonyl)phenyl |
| 204 | 2-fluorophenyl | 2-bromo-4-(heptafluoroisopropyl)-6-(methylsulfonyl)phenyl |
| 205 | 4-fluorophenyl | 2-bromo-4-(heptafluoroisopropyl)-6-(methylsulfonyl)phenyl |
| 206 | 4-nitrophenyl | 2-bromo-4-(heptafluoroisopropyl)-6-(methylsulfonyl)phenyl |
| 207 | 4-cyanophenyl | 2-bromo-4-(heptafluoroisopropyl)-6-(methylsulfonyl)phenyl |
| 208 | 2-chloropyridine-3-yl | 2-bromo-4-(heptafluoroisopropyl)-6-(methylsulfonyl)phenyl |
| 209 | phenyl | 4-(heptafluoroisopropyl)-2-methyl thiomethyl-6-trifluoromethylphenyl |
| 210 | phenyl | 2-bromo-4-(heptafluoroisopropyl)-6-(trifluoromethylthio)phenyl |
| 211 | phenyl | 2,6-dimethyl-4-(nonafluoro-n-butyl) phenyl |
| 212 | phenyl | 2,6-dimethyl-4-(nonafluoro-2-butyl) phenyl |
| 213 | 2-methylphenyl | 2,6-dimethyl-4-(nonafluoro-2-butyl) phenyl |
| 214 | 4-methylphenyl | 2,6-dimethyl-4-(nonafluoro-2-butyl) phenyl |
| 215 | 2-fluorophenyl | 2,6-dimethyl-4-(nonafluoro-2-butyl) phenyl |
| 216 | 3-fluorophenyl | 2,6-dimethyl-4-(nonafluoro-2-butyl) phenyl |
| 217 | 4-fluorophenyl | 2,6-dimethyl-4-(nonafluoro-2-butyl) phenyl |
| 218 | 2-chlorophenyl | 2,6-dimethyl-4-(nonafluoro-2-butyl) phenyl |
| 219 | 4-chlorophenyl | 2,6-dimethyl-4-(nonafluoro-2-butyl) phenyl |
| 220 | 2-bromophenyl | 2,6-dimethyl-4-(nonafluoro-2-butyl) phenyl |

[Table 1-12]

| Compound Nos. | $Q_1$ | $Q_2$ |
|---|---|---|
| 221 | 2-iodophenyl | 2,6-dimethyl-4-(nonafluoro-2-butyl) phenyl |
| 222 | 3-cyanophenyl | 2,6-dimethyl-4-(nonafluoro-2-butyl) phenyl |
| 223 | 4-cyanophenyl | 2,6-dimethyl-4-(nonafluoro-2-butyl) phenyl |
| 224 | 2-nitrophenyl | 2,6-dimethyl-4-(nonafluoro-2-butyl) phenyl |
| 225 | 3-nitrophenyl | 2,6-dimethyl-4-(nonafluoro-2-butyl) phenyl |
| 226 | 4-nitrophenyl | 2,6-dimethyl-4-(nonafluoro-2-butyl) phenyl |

(continued)

| Compound Nos. | $Q_1$ | $Q_2$ |
|---|---|---|
| 227 | 2-trifluoromethyl phenyl | 2,6-dimethyl-4-(nonafluoro-2-butyl) phenyl |
| 228 | 4-trifluoromethyl phenyl | 2,6-dimethyl-4-(nonafluoro-2-butyl) phenyl |
| 229 | 4-trifluoromethoxy phenyl | 2,6-dimethyl-4-(nonafluoro-2-butyl) phenyl |
| 230 | 2,3-difluorophenyl | 2,6-dimethyl-4-(nonafluoro-2-butyl) phenyl |
| 231 | 2,4-difluorophenyl | 2,6-dimethyl-4-(nonafluoro-2-butyl) phenyl |
| 232 | 2,5-difluorophenyl | 2,6-dimethyl-4-(nonafluoro-2-butyl) phenyl |
| 233 | 2,6-difluorophenyl | 2,6-dimethyl-4-(nonafluoro-2-butyl) phenyl |
| 234 | 2,4-dichlorophenyl | 2,6-dimethyl-4-(nonafluoro-2-butyl)-phenyl |
| 235 | 2,6-dichlorophenyl | 2,6-dimethyl-4-(nonafluoro-2-butyl) phenyl |
| 236 | 3,4-dichlorophenyl | 2,6-dimethyl-4-(nonafluoro-2-butyl) phenyl |
| 237 | 2-chloro-4-nitro phenyl | 2,6-dimethyl-4-(nonafluoro-2-butyl) phenyl |
| 238 | 2-chloro-4-fluoro phenyl | 2,6-dimethyl-4-(nonafluoro-2-butyl) phenyl |
| 239 | 2-chloro-6-fluoro phenyl | 2,6-dimethyl-4-(nonafluoro-2-butyl) phenyl |
| 240 | 4-chloro-2-fluoro phenyl | 2,6-dimethyl-4-(nonafluoro-2-butyl) phenyl |

[Table 1-13]

| Compound Nos. | $Q_1$ | $Q_2$ |
|---|---|---|
| 241 | 4-chloro-2-nitrophenyl | 2,6-dimethyl-4-(nonafluoro-2-butyl) phenyl |
| 242 | 2,3,6-trifluoro phenyl | 2,6-dimethyl-4-(nonafluoro-2-butyl) phenyl |
| 243 | pyridine-2-yl | 2,6-dimethyl-4-(nonafluoro-2-butyl) phenyl |
| 244 | pyridine-3-yl | 2,6-dimethyl-4-(nonafluoro-2-butyl) phenyl |
| 245 | 2-fluoropyridine-3-yl | 2,6-dimethyl-4-(nonafluoro-2-butyl) phenyl |
| 246 | 2-chloropyridine-3-yl | 2,6-dimethyl-4-(nonafluoro-2-butyl) phenyl |
| 247 | 2-chloropyridine-5-yl | 2,6-dimethyl-4-(nonafluoro-2-butyl) phenyl |
| 248 | 2-methylthio pyridine-3-yl | 2,6-dimethyl-4-(nonafluoro-2-butyl) phenyl |
| 249 | pyrazine-2-yl | 2,6-dimethyl-4-(nonafluoro-2-butyl) phenyl |
| 250 | furan-2-yl | 2,6-dimethyl-4-(nonafluoro-2-butyl) phenyl |
| 251 | furan-3-yl | 2,6-dimethyl-4-(nonafluoro-2-butyl) phenyl |
| 252 | 2-tetrahydro furanyl | 2,6-dimethyl-4-(nonafluoro-2-butyl) phenyl |
| 253 | benzofuran-2-yl | 2,6-dimethyl-4-(nonafluoro-2-butyl) phenyl |
| 254 | thiophene-2-yl | 2,6-dimethyl-4-(nonafluoro-2-butyl) phenyl |
| 255 | 2,6-difluorophenyl | 2,6-dichloro-4-(trifluoromethylthio) phenyl |
| 256 | phenyl | 2,6-dibromo-4-(trifluoromethylthio) phenyl |
| 257 | 2,6-difluorophenyl | 2,6-dibromo-4-(trifluoromethylthio) phenyl |
| 258 | phenyl | 2,6-dibromo-4-(pentafluoroethylthio) phenyl |
| 259 | 2-fluorophenyl | 2,6-dibromo-4-(pentafluoroethylthio) phenyl |
| 260 | phenyl | 2,6-dimethyl-4-(heptafluoro-n-propylthio)phenyl |

[Table 1-14]

| Compound Nos. | $Q_1$ | $Q_2$ |
|---|---|---|
| 261 | 2-fluorophenyl | 2,6-dimethyl-4-(heptafluoro-n-propylthio)phenyl |
| 262 | phenyl | 2,6-dichloro-4-(heptafluoro-n-propylthio)phenyl |
| 263 | phenyl | 2,6-dibromo-4-(heptafluoro-n-propylthio)phenyl |
| 264 | 2-methylphenyl | 2,6-dibromo-4-(heptafluoro-n-propylthio)phenyl |
| 265 | 4-methylphenyl | 2,6-dibromo-4-(heptafluoro-n-propylthio)phenyl |
| 266 | 2-fluorophenyl | 2,6-dibromo-4-(heptafluoro-n-propylthio)phenyl |
| 267 | 3-fluorophenyl | 2,6-dibromo-4-(heptafluoro-n-propylthio)phenyl |
| 268 | 4-fluorophenyl | 2,6-dibromo-4-(heptafluoro-n-propylthio)phenyl |
| 269 | 2-chlorophenyl | 2,6-dibromo-4-(heptafluoro-n-propylthio)phenyl |
| 270 | 4-chlorophenyl | 2,6-dibromo-4-(heptafluoro-n-propylthio)phenyl |
| 271 | 2-bromophenyl | 2,6-dibromo-4-(heptafluoro-n-propylthio)phenyl |
| 272 | 2-iodophenyl | 2,6-dibromo-4-(heptafluoro-n-propylthio)phenyl |
| 273 | 3-cyanophenyl | 2,6-dibromo-4-(heptafluoro-n-propylthio)phenyl |
| 274 | 4-cyanophenyl | 2,6-dibromo-4-(heptafluoro-n-propylthio)phenyl |
| 275 | 2-nitrophenyl | 2,6-dibromo-4-(heptafluoro-n-propylthio)phenyl |
| 276 | 3-nitrophenyl | 2,6-dibromo-4-(heptafluoro-n-propylthio)phenyl |
| 277 | 4-nitrophenyl | 2,6-dibromo-4-(heptafluoro-n-propylthio)phenyl |
| 278 | 2-trifluoromethyl phenyl | 2,6-dibromo-4-(heptafluoro-n-propylthio)phenyl |
| 279 | 4-trifluoromethyl phenyl | 2,6-dibromo-4-(heptafluoro-n-propylthio)phenyl |
| 280 | 4-trifluoromethoxy phenyl | 2,6-dibromo-4-(heptafluoro-n-propylthio)phenyl |

[Table 1-15]

| Compound Nos. | $Q_1$ | $Q_2$ |
|---|---|---|
| 281 | 2,3-difluorophenyl | 2,6-dibromo-4-(heptafluoro-n-propylthio)phenyl |
| 282 | 2,4-difluorophenyl | 2,6-dibromo-4-(heptafluoro-n-propylthio)phenyl |
| 283 | 2,5-difluorophenyl | 2,6-dibromo-4-(heptafluoro-n-propylthio)phenyl |
| 284 | 2,6-difluorophenyl | 2,6-dibromo-4-(heptafluoro-n-propylthio)phenyl |
| 285 | 3-aminophenyl | 2, 6-dibromo-4-(heptafluoro-n-propylthio)phenyl |
| 286 | 3-(acetylamino) phenyl | 2,6-dibromo-4-(heptafluoro-n-propylthio)phenyl |
| 287 | 3-(methylsulfonyl amino)phenyl | 2,6-dibromo-4-(heptafluoro-n-propylthio)phenyl |
| 288 | 2,4-dinitrophenyl | 2,6-dibromo-4-(heptafluoro-n-propylthio)phenyl |
| 289 | 3,4-dinitrophenyl | 2,6-dibromo-4-(heptafluoro-n-propylthio)phenyl |
| 290 | 3-methyl-4-nitro phenyl | 2,6-dibromo-4-(heptafluoro-n-propylthio)phenyl |
| 291 | 5-amino-2-fluoro phenyl | 2,6-dibromo-4-(heptafluoro-n-propylthio)phenyl. |
| 292 | 2-fluoro-5-nitro phenyl | 2,6-dibromo-4-(heptafluoro-n-propylthio)phenyl |

(continued)

| Compound Nos. | $Q_1$ | $Q_2$ |
|---|---|---|
| 293 | 2-fluoro-5-(methyl sulfonylamino) phenyl | 2,6-dibromo-4-(heptafluoro-n-propylthio)phenyl |
| 294 | 2-methoxy-4-nitrophenyl | 2,6-dibromo-4-(heptafluoro-n-propylthio)phenyl |
| 295 | 3-methoxy-4-nitrophenyl | 2,6-dibromo-4-(heptafluoro-n-propylthio)phenyl |
| 296 | 5-(acetylamino)-2-fluorophenyl | 2,6-dibromo-4-(heptafluoro-n-propylthio)phenyl |
| 297 | 2,4-dichlorophenyl | 2,6-dibromo-4-(heptafluoro-n-propylthio)phenyl |
| 298 | 2,6-dichlorophenyl | 2,6-dibromo-4-(heptafluoro-n-propylthio)phenyl |
| 299 | 3,4-dichlorophenyl | 2,6-dibromo-4-(heptafluoro-n-propylthio)phenyl |
| 300 | 2-chloro-4-nitrophenyl | 2,6-dibromo-4-(heptafluoro-n-propylthio)phenyl |

[Table 1-16]

| Compound Nos. | $Q_1$ | $Q_2$ |
|---|---|---|
| 301 | 2-chloro-4-fluorophenyl | 2,6-dibromo-4-(heptafluoro-n-propylthio)phenyl |
| 302 | 2-chloro-6-fluorophenyl | 2,6-dibromo-4-(heptafluoro-n-propylthio)phenyl |
| 303 | 4-chloro-2-fluorophenyl | 2,6-dibromo-4-(heptafluoro-n-propylthio)phenyl |
| 304 | 4-chloro-2-nitrophenyl | 2,6-dibromo-4-(heptafluoro-n-propylthio)phenyl |
| 305 | 2,3,6-trifluoro phenyl | 2,6-dibromo-4-(heptafluoro-n-propylthio)phenyl |
| 306 | pyridine-2-yl | 2,6-dibromo-4-(heptafluoro-n-propylthio)phenyl |
| 307 | pyridine-3-yl | 2,6-dibromo-4-(heptafluoro-n-propylthio)phenyl |
| 308 | 2-fluoropyridine-3-yl | 2,6-dibromo-4-(heptafluoro-n-propylthio)phenyl |
| 309 | 2-chloropyridine-3-yl | 2,6-dibromo-4-(heptafluoro-n-propylthio)phenyl |
| 310 | 2-chloropyridine-5-yl | 2,6-dibromo-4-(heptafluoro-n-propylthio)phenyl |
| 311 | 2-methylthio pyridine-3-yl | 2,6-dibromo-4-(heptafluoro-n-propylthio)phenyl |
| 312 | 2,6-dichloro pyridine-3-yl | 2,6-dibromo-4-(heptafluoro-n-propylthio)phenyl |
| 313 | 2,6-dichloro pyridine-4-yl | 2,6-dibromo-4-(heptafluoro-n-propylthio)phenyl |
| 314 | 2-chloro-6-methyl pyridine-3-yl | 2,6-dibromo-4-(heptafluoro-n-propylthio)phenyl |
| 315 | pyridine-N-oxide-2-yl | 2,6-dibromo-4-(heptafluoro-n-propylthio)phenyl |
| 316 | pyrazine-2-yl | 2,6-dibromo-4-(heptafluoro-n-propylthio)phenyl |
| 317 | 1-methyl-3-nitro-1H-pyrazole-4-yl | 2,6-dibromo-4-(heptafluoro-n-propylthio)phenyl |
| 318 | 1-methyl-3-tri fluoromethyl-1H-pyrazole-4-yl | 2,6-dibromo-4-(heptafluoro-n-propylthio)phenyl |
| 319 | 1-methyl-5-tri fluoromethyl-1H-pyrazole-4-yl | 2,6-dibromo-4-(heptafluoro-n-propylthio)phenyl |
| 320 | 2-tetrahydro furanyl | 2,6-dibromo-4-(heptafluoro-n-propylthio)phenyl |

[Table 1-17]

| Compound Nos. | $Q_1$ | $Q_2$ |
|---|---|---|
| 321 | 2-phenylthiazole-4-yl | 2,6-dibromo-4-(heptafluoro-n-propylthio)phenyl |
| 322 | furan-2-yl | 2,6-dibromo-4-(heptafluoro-n-propylthio)phenyl |

(continued)

| Compound Nos. | $Q_1$ | $Q_2$ |
|---|---|---|
| 323 | furan-3-yl | 2,6-dibromo-4-(heptafluoro-n-propylthio)phenyl |
| 324 | 2-tetrahydro furanyl | 2,6-dibromo-4-(heptafluoro-n-propylthio)phenyl |
| 325 | benzofuran-2-yl | 2,6-dibromo-4-(heptafluoro-n-propylthio)phenyl |
| 326 | thiophene-2-yl | 2,6-dibromo-4-(heptafluoro-n-propylthio)phenyl |
| 327 | phenyl | 2,6-diiodo-4-(heptafluoro-n-propylthio)phenyl |
| 328 | 2-fluorophenyl | 2,6-diiodo-4-(heptafluoro-n-propylthio)phenyl |
| 329 | phenyl | 2,6-dichloro-4-(heptafluoro isopropylthio)phenyl |
| 330 | 2-fluorophenyl | 2,6-dichloro-4-(heptafluoro isopropylthio)phenyl |
| 331 | 2-chloropyridine-3-yl | 2,6-dichloro-4-(heptafluoro isopropylthio)phenyl |
| 332 | phenyl | 2,6-dibromo-4-(heptafluoro isopropylthio)phenyl |
| 333 | phenyl | 2,6-dibromo-4-(nonafluoro-n-butylthio)phenyl |
| 334 | 2-fluorophenyl | 2,6-dibromo-4-(nonafluoro-n-butylthio)phenyl |
| 335 | phenyl | 2,6-dibromo-4-(heptafluoro-n-propylsulfinyl)phenyl |
| 336 | 2-methylphenyl | 2,6-dibromo-4-(heptafluoro-n-propylsulfinyl)phenyl |
| 337 | 4-methylphenyl | 2,6-dibromo-4-(heptafluoro-n-propylsulfinyl)phenyl |
| 338 | 2-fluorophenyl | 2,6-dibromo-4-(heptafluoro-n-propylsulfinyl)phenyl |
| 339 | 3-fluorophenyl | 2,6-dibromo-4-(heptafluoro-n-propylsulfinyl)phenyl |
| 340 | 4-fluorophenyl | 2,6-dibromo-4-(heptafluoro-n-propylsulfinyl)phenyl |

[Table 1-18]

| Compound Nos. | $Q_1$ | $Q_2$ |
|---|---|---|
| 341 | 2-chlorophenyl | 2,6-dibromo-4-(heptafluoro-n-propylsulfinyl)phenyl |
| 342 | 4-chlorophenyl | 2,6-dibromo-4-(heptafluoro-n-propylsulfinyl)phenyl |
| 343 | 2-bromophenyl | 2,6-dibromo-4-(heptafluoro-n-propylsulfinyl)phenyl |
| 344 | 2-iodophenyl | 2,6-dibromo-4-(heptafluoro-n-propylsulfinyl)phenyl |
| 345 | 3-cyanophenyl | 2,6-dibromo-4-(heptafluoro-n-propylsulfinyl)phenyl |
| 346 | 4-cyanophenyl | 2,6-dibromo-4-(heptafluoro-n-propylsulfinyl)phenyl |
| 347 | 2-nitrophenyl | 2,6-dibromo-4-(heptafluoro-n-propylsulfinyl)phenyl |
| 348 | 3-nitrophenyl | 2,6-dibromo-4-(heptafluoro-n-propylsulfinyl)phenyl |
| 349 | 4-nitrophenyl | 2,6-dibromo-4-(heptafluoro-n-propylsulfinyl)phenyl |
| 350 | 2-trifluoromethyl phenyl | 2,6-dibromo-4-(heptafluoro-n-propylsulfinyl)phenyl |
| 351 | 4-trifluoromethyl phenyl | 2,6-dibromo-4-(heptafluoro-n-propylsulfinyl)phenyl |
| 352 | 4-trifluoromethoxy phenyl | 2,6-dibromo-4-(heptafluoro-n-propylsulfinyl)phenyl |
| 353 | 2,3-difluorophenyl | 2,6-dibromo-4-(heptafluoro-n-propylsulfinyl)phenyl |
| 354 | 2,4-difluorophenyl | 2,6-dibromo-4-(heptafluoro-n-propylsulfinyl)phenyl |
| 355 | 2,5-difluorophenyl | 2,6-dibromo-4-(heptafluoro-n-propylsulfinyl)phenyl |
| 356 | 2,6-difluorophenyl | 2,6-dibromo-4-(heptafluoro-n-propylsulfinyl)phenyl |

(continued)

| Compound Nos. | $Q_1$ | $Q_2$ |
|---|---|---|
| 357 | 2,4-dichlorophenyl | 2,6-dibromo-4-(heptafluoro-n-propylsulfinyl)phenyl |
| 358 | 2,6-dichlorophenyl | 2,6-dibromo-4-(heptafluoro-n-propylsulfinyl)phenyl |
| 359 | 3,4-dichlorophenyl | 2,6-dibromo-4-(heptafluoro-n-propylsulfinyl)phenyl |
| 360 | 2-chloro-4-nitrophenyl | 2,6-dibromo-4-(heptafluoro-n-propylsulfinyl)phenyl |

[Table 1-19]

| Compound Nos. | $Q_1$ | $Q_2$ |
|---|---|---|
| 361 | 2-chloro-4-fluorophenyl | 2,6-dibromo-4-(heptafluoro-n-propylsulfinyl)phenyl |
| 362 | 2-chloro-6-fluorophenyl | 2,6-dibromo-4-(heptafluoro-n-propylsulfinyl)phenyl |
| 363 | 4-chloro-2-fluorophenyl | 2,6-dibromo-4-(heptafluoro-n-propylsulfinyl)phenyl |
| 364 | 4-chloro-2-nitrophenyl | 2,6-dibromo-4-(heptafluoro-n-propylsulfinyl)phenyl |
| 365 | 2,3,6-trifluoro phenyl | 2,6-dibromo-4-(heptafluoro-n-propylsulfinyl)phenyl |
| 366 | pyridine-2-yl | 2,6-dibromo-4-(heptafluoro-n-propylsulfinyl)phenyl |
| 367 | pyridine-3-yl | 2,6-dibromo-4-(heptafluoro-n-propylsulfinyl)phenyl |
| 368 | 2-fluoropyridine-3-yl | 2,6-dibromo-4-(heptafluoro-n-propylsulfinyl)phenyl |
| 369 | 2-chloropyridine-3-yl | 2,6-dibromo-4-(heptafluoro-n-propylsulfinyl)phenyl |
| 370 | 2-chloropyridine-5-yl | 2,6-dibromo-4-(heptafluoro-n-propylsulfinyl)phenyl |
| 371 | 2-methylthio pyridine-3-yl | 2,6-dibromo-4-(heptafluoro-n-propylsulfinyl)phenyl |
| 372 | pyrazine-2-yl | 2,6-dibromo-4-(heptafluoro-n-propylsulfinyl)phenyl |
| 373 | furan-2-yl | 2,6-dibromo-4-(heptafluoro-n-propylsulfinyl)phenyl |
| 374 | thiophene-2-yl | 2,6-dibromo-4-(heptafluoro-n-propylsulfinyl)phenyl |
| 375 | 2,6-difluorophenyl | 2,6-dichloro-4-(trifluoromethyl sulfonyl)phenyl |
| 376 | phenyl | 2,6-dibromo-4-(trifluoromethyl sulfonyl)phenyl |
| 377 | 2,6-difluorophenyl | 2,6-dibromo-4-(trifluoromethyl sulfonyl)phenyl |
| 378 | 2-fluorophenyl | 2,6-dichloro-4-(heptafluoro isopropylsulfonyl)phenyl |
| 379 | phenyl | 2,6-dichloro-4-(heptafluoro isopropylsulfonyl)phenyl |
| 380 | phenyl | 2,6-dibromo-4-(heptafluoro-n-propylsulfonyl)phenyl |

[Table 1-20]

| Compound Nos. | $Q_1$ | $Q_2$ |
|---|---|---|
| 381 | 2-methylphenyl | 2,6-dibromo-4-(heptafluoro-n-propylsulfonyl)phenyl |
| 382 | 4-methylphenyl | 2,6-dibromo-4-(heptafluoro-n-propylsulfonyl)phenyl |
| 383 | 2-fluorophenyl | 2,6-dibromo-4-(heptafluoro-n-propylsulfonyl)phenyl |
| 384 | 3-fluorophenyl | 2,6-dibromo-4-(heptafluoro-n-propylsulfonyl)phenyl |
| 385 | 4-fluorophenyl | 2,6-dibromo-4-(heptafluoro-n-propylsulfonyl)phenyl |
| 386 | 2-chlorophenyl | 2,6-dibromo-4-(heptafluoro-n-propylsulfonyl)phenyl |

(continued)

| Compound Nos. | $Q_1$ | $Q_2$ |
|---|---|---|
| 387 | 4-chlorophenyl | 2,6-dibromo-4-(heptafluoro-n-propylsulfonyl)phenyl |
| 388 | 2-bromophenyl | 2,6-dibromo-4-(heptafluoro-n-propylsulfonyl)phenyl |
| 389 | 2-iodophenyl | 2,6-dibromo-4-(heptafluoro-n-propylsulfonyl)phenyl |
| 390 | 3-cyanophenyl | 2,6-dibromo-4-(heptafluoro-n-propylsulfonyl)phenyl |
| 391 | 4-cyanophenyl | 2,6-dibromo-4-(heptafluoro-n-propylsulfonyl)phenyl |
| 392 | 2-nitrophenyl | 2,6-dibromo-4-(heptafluoro-n-propylsulfonyl)phenyl |
| 393 | 3-nitrophenyl | 2,6-dibromo-4-(heptafluoro-n-propylsulfonyl)phenyl |
| 394 | 4-nitrophenyl | 2,6-dibromo-4-(heptafluoro-n-propylsulfonyl)phenyl |
| 395 | 2-trifluoromethyl phenyl | 2,6-dibromo-4-(heptafluoro-n-propylsulfonyl)phenyl |
| 396 | 4-trifluoromethyl phenyl | 2,6-dibromo-4-(heptafluoro-n-propylsulfonyl)phenyl |
| 397 | 4-trifluoromethoxy phenyl | 2,6-dibromo-4-(heptafluoro-n-propylsulfonyl)phenyl |
| 398 | 2,3-difluorophenyl | 2,6-dibromo-4-(heptafluoro-n-propylsulfonyl)phenyl |
| 399 | 2,4-difluorophenyl | 2,6-dibromo-4-(heptafluoro-n-propylsulfonyl)phenyl |
| 400 | 2,5-difluorophenyl | 2,6-dibromo-4-(heptafluoro-n-propylsulfonyl)phenyl |

[Table 1-21]

| Compound Nos. | $Q_1$ | $Q_2$ |
|---|---|---|
| 401 | 2,6-difluorophenyl | 2,6-dibromo-4-(heptafluoro-n-propylsulfonyl)phenyl |
| 402 | 2,4-dichlorophenyl | 2,6-dibromo-4-(heptafluoro-n-propylsulfonyl)phenyl |
| 403 | 2,6-dichlorophenyl | 2,6-dibromo-4-(heptafluoro-n-propylsulfonyl)phenyl |
| 404 | 3,4-dichlorophenyl | 2,6-dibromo-4-(heptafluoro-n-propylsulfonyl)phenyl |
| 405 | 2-chloro-4-nitro phenyl | 2,6-dibromo-4-(heptafluoro-n-propylsulfonyl)phenyl |
| 406 | 2-chloro-4-fluoro phenyl | 2,6-dibromo-4-(heptafluoro-n-propylsulfonyl)phenyl |
| 407 | 2-chloro-6-fluoro phenyl | 2,6-dibromo-4-(heptafluoro-n-propylsulfonyl)phenyl |
| 408 | 4-chloro-2-fluoro phenyl | 2,6-dibromo-4-(heptafluoro-n-propylsulfonyl)phenyl |
| 409 | 4-chloro-2-nitro phenyl | 2,6-dibromo-4-(heptafluoro-n-propylsulfonyl)phenyl |
| 410 | 2,3,6-trifluoro phenyl | 2,6-dibromo-4-(heptafluoro-n-propylsulfonyl)phenyl |
| 411 | pyridine-2-yl | 2,6-dibromo-4-(heptafluoro-n-propylsulfonyl)phenyl |
| 412 | pyridine-3-yl | 2,6-dibromo-4-(heptafluoro-n-propylsulfonyl)phenyl |
| 413 | 2-fluoropyridine-3-yl | 2,6-dibromo-4-(heptafluoro-n-propylsulfonyl)phenyl |
| 414 | 2-chloropyridine-3-yl | 2,6-dibromo-4-(heptafluoro-n-propylsulfonyl)phenyl |
| 415 | 2-chloropyridine-5-yl | 2,6-dibromo-4-(heptafluoro-n-propylsulfonyl)phenyl |
| 416 | 2-methylthio pyridine-3-yl | 2,6-dibromo-4-(heptafluoro-n-propylsulfonyl)phenyl |
| 417 | pyrazine-2-yl | 2,6-dibromo-4-(heptafluoro-n-propylsulfonyl)phenyl |
| 418 | furan-2-yl | 2,6-dibromo-4-(heptafluoro-n-propylsulfonyl)phenyl |
| 419 | thiophene-2-yl | 2,6-dibromo-4-(heptafluoro-n-propylsulfonyl)phenyl |
| 420 | phenyl | 2,6-dimethyl-4-(heptafluoro-n-propylthio)phenyl |

[Table 1-22]

| Compound Nos. | $Q_1$ | $Q_2$ |
|---|---|---|
| 421 | 2-methylphenyl | 2,6-dimethyl-4-(heptafluoro-n-propylthio)phenyl |
| 422 | 4-methylphenyl | 2,6-dimethyl-4-(heptafluoro-n-propylthio)phenyl |
| 423 | 2-fluorophenyl | 2,6-dimethyl-4-(heptafluoro-n-propylthio)phenyl |
| 424 | 3-fluorophenyl | 2,6-dimethyl-4-(heptafluoro-n-propylthio)phenyl |
| 425 | 4-fluorophenyl | 2,6-dimethyl-4-(heptafluoro-n-propylthio)phenyl |
| 426 | 2-chlorophenyl | 2,6-dimethyl-4-(heptafluoro-n-propylthio)phenyl |
| 427 | 4-chlorophenyl | 2,6-dimethyl-4-(heptafluoro-n-propylthio)phenyl |
| 428 | 2-bromophenyl | 2,6-dimethyl-4-(heptafluoro-n-propylthio)phenyl |
| 429 | 2-iodophenyl | 2,6-dimethyl-4-(heptafluoro-n-propylthio)phenyl |
| 430 | 3-cyanophenyl | 2,6-dimethyl-4-(heptafluoro-n-propylthio)phenyl |
| 431 | 4-cyanophenyl | 2,6-dimethyl-4-(heptafluoro-n-propylthio)phenyl |
| 432 | 2-nitrophenyl | 2,6-dimethyl-4-(heptafluoro-n-propylthio)phenyl |
| 433 | 3-nitrophenyl | 2,6-dimethyl-4-(heptafluoro-n-propylthio)phenyl |
| 434 | 4-nitrophenyl | 2,6-dimethyl-4-(heptafluoro-n-propylthio)phenyl |
| 435 | 2-trifluoromethyl phenyl | 2,6-dimethyl-4-(heptafluoro-n-propylthio)phenyl |
| 436 | 4-trifluoromethyl phenyl | 2,6-dimethyl-4-(heptafluoro-n-propylthio)phenyl |
| 437 | 4-trifluoromethoxy phenyl | 2,6-dimethyl-4-(heptafluoro-n-propylthio)phenyl |
| 438 | 2,3-difluorophenyl | 2,6-dimethyl-4-(heptafluoro-n-propylthio)phenyl |
| 439 | 2,4-difluorophenyl | 2,6-dimethyl-4-(heptafluoro-n-propylthio)phenyl |
| 440 | 2,5-difluorophenyl | 2,6-dimethyl-4-(heptafluoro-n-propylthio)phenyl |

[Table 1-23]

| Compound Nos. | $Q_1$ | $Q_2$ |
|---|---|---|
| 441 | 2,6-difluorophenyl | 2,6-dimethyl-4-(heptafluoro-n-propylthio)phenyl |
| 442 | 2,4-dichlorophenyl | 2,6-dimethyl-4-(heptafluoro-n-propylthio)phenyl |
| 443 | 2,6-dichlorophenyl | 2,6-dimethyl-4-(heptafluoro-n-propylthio)phenyl |
| 444 | 3,4-dichlorophenyl | 2,6-dimethyl-4-(heptafluoro-n-propylthio)phenyl |
| 445 | 2-chloro-4-nitro phenyl | 2,6-dimethyl-4-(heptafluoro-n-propylthio)phenyl |
| 446 | 2-chloro-4-fluoro phenyl | 2,6-dimethyl-4-(heptafluoro-n-propylthio)phenyl |
| 447 | 2-chloro-6-fluoro phenyl | 2,6-dimethyl-4-(heptafluoro-n-propylthio)phenyl |
| 448 | 4-chloro-2-fluoro phenyl | 2,6-dimethyl-4-(heptafluoro-n-propylthio)phenyl |
| 449 | 4-chloro-2-nitro phenyl | 2,6-dimethyl-4-(heptafluoro-n-propylthio)phenyl |
| 450 | 2,3,6-trifluoro phenyl | 2,6-dimethyl-4-(heptafluoro-n-propylthio)phenyl |
| 451 | pyridine-2-yl | 2,6-dimethyl-4-(heptafluoro-n-propylthio)phenyl |
| 452 | pyridine-3-yl | 2,6-dimethyl-4-(heptafluoro-n-propylthio)phenyl |

(continued)

| Compound Nos. | $Q_1$ | $Q_2$ |
|---|---|---|
| 453 | 2-fluoropyridine-3-yl | 2,6-dimethyl-4-(heptafluoro-n-propylthio)phenyl |
| 454 | 2-chloropyridine-3-yl | 2,6-dimethyl-4-(heptafluoro-n-propylthio)phenyl |
| 455 | 2-chloropyridine-5-yl | 2,6-dimethyl-4-(heptafluoro-n-propylthio)phenyl |
| 456 | 2-methylthio pyridine-3-yl | 2,6-dimethyl-4-(heptafluoro-n-propylthio)phenyl |
| 457 | pyrazine-2-yl | 2,6-dimethyl-4-(heptafluoro-n-propylthio)phenyl |
| 458 | furan-2-yl | 2,6-dimethyl-4-(heptafluoro-n-propylthio)phenyl |
| 459 | thiophene-2-yl | 2,6-dimethyl-4-(heptafluoro-n-propylthio)phenyl |
| 460 | 2,6-difuorophenyl | 2,6-dichloro-4-(trifluoromethyl sulfonyl)phenyl |

[Table 1-24]

| Compound Nos. | $Q_1$ | $Q_2$ |
|---|---|---|
| 461 | phenyl | 2-bromo-6-(heptafluoroisopropyloxy)-4-methylpyridine-3-yl |
| 462 | 2-fluorophenyl | 2-bromo-6-(heptafluoroisopropyloxy)-4-methylpyridine-3-yl |
| 463 | phenyl | 2,4-dimethyl-6-(2,2,2-trifluoro-1-trifluoromethylethoxy)pyridine-3-yl |
| 464 | phenyl | 2-chloro-4-methyl-6-(2,2,2-trifluoro-1-trifluoromethylethoxy)pyridine-3-yl |
| 465 | phenyl | 2-bromo-4-methyl-6-(2,2,2-trifluoro-1-trifluoromethylethoxy)pyridine-3-yl |
| 466 | 2-fluorophenyl | 2-bromo-4-methyl-6-(2,2,2-trifluoro-1-trifluoromethylethoxy)pyridine-3-yl |
| 467 | phenyl | 2-iodo-4-methyl-6-(2,2,2-trifluoro-1-trifluoromethylethoxy)pyridine-3-yl |

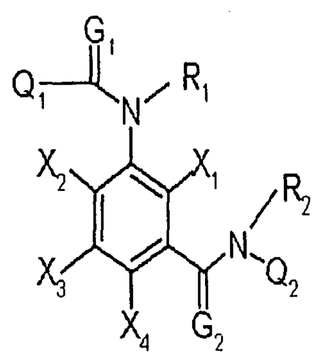

($G_1$, $G_2$ = oxygen atoms; $R_1$, $R_2$ = hydrogen atoms)

[Table 2-1]

| Compound Nos. | $Q_1$ | $X_1$ | $X_2$ | $X_3$ | $X_4$ | $Q_2$ |
|---|---|---|---|---|---|---|
| 601 | phenyl | F | H | H | H | 2,6-dimethyl-4-(heptafluoro isopropyl) phenyl |
| 602 | 2-methylphenyl | F | H | H | H | 2,6-dimethyl-4-(heptafluoro isopropyl) phenyl |

(continued)

| Compound Nos. | $Q_1$ | $X_1$ | $X_2$ | $X_3$ | $X_4$ | $Q_2$ |
|---|---|---|---|---|---|---|
| 603 | 3-methylphenyl | F | H | H | H | 2,6-dimethyl-4-(heptafluoro isopropyl) phenyl |
| 604 | 4-methylphenyl | F | H | H | H | 2,6-dimethyl-4-(heptafluoro isopropyl) phenyl |
| 605 | 2-nitrophenyl | F | H | H | H | 2,6-dimethyl-4-(heptafluoro isopropyl) phenyl |
| 606 | 3-nitrophenyl | F | H | H | H | 2,6-dimethyl-4-(heptafluoro isopropyl) phenyl |
| 607 | 4-nitrophenyl | F | H | H | H | 2,6-dimethyl-4-(heptafluoro isopropyl) phenyl |
| 608 | 3-cyanophenyl | F | H | H | H | 2,6-dimethyl-4-(heptafluoro isopropyl) phenyl |
| 609 | 4-cyanophenyl | F | H | H | H | 2,6-dimethyl-4-(heptafluoro isopropyl) phenyl |
| 610 | 2-fluorophenyl | F | H | H | H | 2,6-dimethyl-4-(heptafluoro isopropyl) phenyl |
| 611 | 3-fluorophenyl | F | H | H | H | 2,6-dimethyl-4-(heptafluoro isopropyl) phenyl |
| 612 | 4-fluorophenyl | F | H | H | H | 2,6-dimethyl-4-(heptafluoro isopropyl) phenyl |
| 613 | 2-chlorophenyl | F | H | H | H | 2,6-dimethyl-4-(heptafluoro isopropyl) phenyl |
| 614 | 4-chlorophenyl | F | H | H | H | 2,6-dimethyl-4-(heptafluoro isopropyl) phenyl |
| 615 | 2-bromophenyl | F | H | H | H | 2,6-dimethyl-4-(heptafluoro isopropyl) phenyl |
| 616 | 2-iodophenyl | F | H | H | H | 2,6-dimethyl-4-(heptafluoro isopropyl) phenyl |
| 617 | 2-trifluoromethyl phenyl | F | H | H | H | 2,6-dimethyl-4-(heptafluoro isopropyl) phenyl |
| 618 | 4-trifluoromethyl phenyl | F | H | H | H | 2,6-dimethyl-4-(heptafluoro isopropyl) phenyl |
| 619 | 4-trifluoromethoxy phenyl | F | H | H | H | 2,6-dimethyl-4-(heptafluoro isopropyl) phenyl |
| 620 | 4-(dimethylamino) phenyl | F | H | H | H | 2,6-dimethyl-4-(heptafluoro isopropyl) phenyl |

[Table 2-2]

| Compound Nos. | $Q_1$ | $X_1$ | $X_2$ | $X_3$ | $X_4$ | $Q_2$ |
|---|---|---|---|---|---|---|
| 621 | 2,3-difluorophenyl | F | H | H | H | 2,6-dimethyl-4-(heptafluoro isopropyl) phenyl |
| 622 | 2,4-difluorophenyl | F | H | H | H | 2,6-dimethyl-4-(heptafluoro isopropyl) phenyl |

(continued)

| Compound Nos. | $Q_1$ | $X_1$ | $X_2$ | $X_3$ | $X_4$ | $Q_2$ |
|---|---|---|---|---|---|---|
| 623 | 2,5-difluorophenyl | F | H | H | H | 2,6-dimethyl-4-(heptafluoro isopropyl) phenyl |
| 624 | 2,6-difluorophenyl | F | H | H | H | 2,6-dimethyl-4-(heptafluoro isopropyl) phenyl |
| 625 | 2,4-dichlorophenyl | F | H | H | H | 2,6-dimethyl-4-(heptafluoro isopropyl) phenyl |
| 626 | 2,6-dichlorophenyl | F | H | H | H | 2,6-dimethyl-4-(heptafluoro isopropyl) phenyl |
| 627 | 3,4-dichlorophenyl | F | H | H | H | 2,6-dimethyl-4-(heptafluoro isopropyl) phenyl |
| 628 | 2-fluoro-4-nitro phenyl | F | H | H | H | 2,6-dimethyl-4-(heptafluoro isopropyl) phenyl |
| 629 | 4-fluoro-2-nitro phenyl | F | H | H | H | 2,6-dimethyl-4-(heptafluoro isopropyl) phenyl |
| 630 | 2-chloro-4-fluoro phenyl | F | H | H | H | 2,6-dimethyl-4-(heptafluoro isopropyl) phenyl |
| 631 | 4-chloro-2-fluoro phenyl | F | H | H | H | 2,6-dimethyl-4-(heptafluoro isopropyl) phenyl |
| 632 | 2-chloro-6-fluoro phenyl | F | H | H | H | 2,6-dimethyl-4-(heptafluoro isopropyl) phenyl |
| 633 | 2-chloro-4-nitro phenyl | F | H | H | H | 2,6-dimethyl-4-(heptafluoro isopropyl) phenyl |
| 634 | 4-chloro-2-nitro phenyl | F | H | H | H | 2,6-dimethyl-4-(heptafluoro isopropyl) phenyl |
| 635 | 2,3,6-trifluoro phenyl | F | H | H | H | 2,6-dimethyl-4-(heptafluoro isopropyl) phenyl |
| 636 | pyridine-2-yl | F | H | H | H | 2,6-dimethyl-4-(heptafluoro isopropyl) phenyl |
| 637 | pyridine-3-yl | F | H | H | H | 2,6-dimethyl-4-(heptafluoro isopropyl) phenyl |
| 638 | 2-fluoropyridine-3-yl | F | H | H | H | 2,6-dimethyl-4-(heptafluoro isopropyl) phenyl |
| 639 | 2-chloropyridine-3-yl | F | H | H | H | 2,6-dimethyl-4-(heptafluoro isopropyl) phenyl |
| 640 | 2-chloropyridine-5-yl | F | H | H | H | 2,6-dimethyl-4-(heptafluoro isopropyl) phenyl |

[Table 2-3]

| Compound Nos. | $Q_1$ | $X_1$ | $X_2$ | $X_3$ | $X_4$ | $Q_2$ |
|---|---|---|---|---|---|---|
| 641 | 2-methylthio pyridine-3-yl | F | H | H | H | 2,6-dimethyl-4-(heptafluoro isopropyl)phenyl |
| 642 | pyrazine-2-yl | F | H | H | H | 2,6-dimethyl-4-(heptafluoro isopropyl)phenyl |

(continued)

| Compound Nos. | $Q_1$ | $X_1$ | $X_2$ | $X_3$ | $X_4$ | $Q_2$ |
|---|---|---|---|---|---|---|
| 643 | furan-2-yl | F | H | H | H | 2,6-dimethyl-4-(heptafluoro isopropyl)phenyl |
| 644 | furan-3-yl | F | H | H | H | 2,6-dimethyl-4-(heptafluoro isopropyl)phenyl |
| 645 | 2-tetrahydrofuranyl | F | H | H | H | 2,6-dimethyl-4-(heptafluoro isopropyl)phenyl |
| 646 | benzofuran-2-yl | F | H | H | H | 2,6-dimethyl-4-(heptafluoro isopropyl)phenyl |
| 647 | thiophene-2-yl | F | H | H | H | 2,6-dimethyl-4-(heptafluoro isopropyl)phenyl |
| 648 | 2-methyl-5,6-dihydro-4H-pyran-3-yl | F | H | H | H | 2,6-dimethyl-4-(heptafluoro isopropyl)phenyl |
| 649 | phenyl | H | C1 | H | H | 2,6-dimethyl-4-(heptafluoro isopropyl)phenyl |
| 650 | phenyl | H | F | H | H | 2,6-dimethyl-4-(heptafluoro isopropyl)phenyl |
| 651 | 4-nitrophenyl | H | F | H | H | 2,6-dimethyl-4-(heptafluoro isopropyl)phenyl |
| 652 | 4-cyanophenyl | H | F | H | H | 2,6-dimethyl-4-(heptafluoro isopropyl)phenyl |
| 653 | 2-fluorophenyl | H | F | H | H | 2,6-dimethyl-4-(heptafluoro isopropyl)phenyl |
| 654 | 4-fluorophenyl | H | F | H | H | 2,6-dimethyl-4-(heptafluoro isopropyl)phenyl |
| 655 | 4-trifluoromethyl phenyl | H | F | H | H | 2,6-dimethyl-4-(heptafluoro isopropyl)phenyl |
| 656 | 2,4-difluorophenyl | H | F | H | H | 2,6-dimethyl-4-(heptafluoro isopropyl)phenyl |
| 657 | 2-chloropyridine-3-yl | H | F | H | H | 2,6-dimethyl-4-(heptafluoro isopropyl)phenyl |
| 658 | phenyl | H | H | $CF_3$ | H | 2,6-dimethyl-4-(heptafluoro isopropyl)phenyl |
| 659 | phenyl | H | H | H | F | 2,6-dimethyl-4-(heptafluoro isopropyl)phenyl |
| 660 | phenyl | H | H | H | C1 | 2,6-dimethyl-4-(heptafluoro isopropyl)phenyl |

[Table 2-4]

| Compound Nos. | $Q_1$ | $X_1$ | $X_2$ | $X_3$ | $X_4$ | $Q_2$ |
|---|---|---|---|---|---|---|
| 661 | phenyl | H | H | H | Br | 2,6-dimethyl-4-(heptafluoro isopropyl) phenyl |
| 662 | phenyl | H | H | H | I | 2,6-dimethyl-4-(heptafluoro isopropyl) phenyl |

(continued)

| Compound Nos. | $Q_1$ | $X_1$ | $X_2$ | $X_3$ | $X_4$ | $Q_2$ |
|---|---|---|---|---|---|---|
| 663 | phenyl | F | H | H | F | 2,6-dimethyl-4-(heptafluoro isopropyl) phenyl |
| 664 | phenyl | H | Br | H | Br | 2,6-dimethyl-4-(heptafluoro isopropyl) phenyl |
| 665 | phenyl | F | H | H | H | 2,6-dimethyl-4-(nonafluoro-2-butyl) phenyl |
| 666 | 2-methylphenyl | F | H | H | H | 2,6-dimethyl-4-(nonafluoro-2-butyl) phenyl |
| 667 | 4-methylphenyl | F | H | H | H | 2,6-dimethyl-4-(nonafluoro-2-butyl) phenyl |
| 668 | 2-fluorophenyl | F | H | H | H | 2,6-dimethyl-4-(nonafluoro-2-butyl) phenyl |
| 669 | 3-fluorophenyl | F | H | H | H | 2,6-dimethyl-4-(nonafluoro-2-butyl) phenyl |
| 670 | 4-fluorophenyl | F | H | H | H | 2,6-dimethyl-4-(nonafluoro-2-butyl) phenyl |
| 671 | 2-chlorophenyl | F | H | H | H | 2,6-dimethyl-4-(nonafluoro-2-butyl) phenyl |
| 672 | 4-chlorophenyl | F | H | H | H | 2,6-dimethyl-4-(nonafluoro-2-butyl) phenyl |
| 673 | 2-bromophenyl | F | H | H | H | 2,6-dimethyl-4-(nonafluoro-2-butyl) phenyl |
| 674 | 2-iodophenyl | F | H | H | H | 2,6-dimethyl-4-(nonafluoro-2-butyl) phenyl |
| 675 | 3-cyanophenyl | F | H | H | H | 2,6-dimethyl-4-(nonafluoro-2-butyl) phenyl |
| 676 | 4-cyanophenyl | F | H | H | H | 2,6-dimethyl-4-(nonafluoro-2-butyl) phenyl |
| 677 | 2-nitrophenyl | F | H | H | H | 2,6-dimethyl-4-(nonafluoro-2-butyl) phenyl |
| 678 | 3-nitrophenyl | F | H | H | H | 2,6-dimethyl-4-(nonafluoro-2-butyl) phenyl |
| 679 | 4-nitrophenyl | F | H | H | H | 2,6-dimethyl-4-(nonafluoro-2-butyl) phenyl |
| 680 | 2-trifluoromethyl phenyl | F | H | H | H | 2,6-dimethyl-4-(nonafluoro-2-butyl) phenyl |

[Table 2-5]

| Compound Nos. | $Q_1$ | $X_1$ | $X_2$ | $X_3$ | $X_4$ | $Q_2$ |
|---|---|---|---|---|---|---|
| 681 | 4-trifluoromethyl phenyl | F | H | H | H | 2,6-dimethyl-4-(nonafluoro-2-butyl) phenyl |
| 682 | 4-trifluoromethoxy phenyl | F | H | H | H | 2,6-dimethyl-4-(nonafluoro-2-butyl) phenyl |

(continued)

| Compound Nos. | $Q_1$ | $X_1$ | $X_2$ | $X_3$ | $X_4$ | $Q_2$ |
|---|---|---|---|---|---|---|
| 683 | 2,3-difluorophenyl | F | H | H | H | 2,6-dimethyl-4-(nonafluoro-2-butyl) phenyl |
| 684 | 2,4-difluorophenyl | F | H | H | H | 2, 6-dimethyl-4-(nonafluoro-2-butyl) phenyl |
| 685 | 2,5-difluorophenyl | F | H | H | H | 2,6-dimethyl-4-(nonafluoro-2-butyl) phenyl |
| 686 | 2,6-difluorophenyl | F | H | H | H | 2,6-dimethyl-4-(nonafluoro-2-butyl) phenyl |
| 687 | 2,4-dichlorophenyl | F | H | H | H | 2,6-dimethyl-4-(nonafluoro-2-butyl) phenyl |
| 688 | 2,6-dichlorophenyl | F | H | H | H | 2,6-dimethyl-4-(nonafluoro-2-butyl) phenyl |
| 689 | 3,4-dichlorophenyl | F | H | H | H | 2,6-dimethyl-4-(nonafluoro-2-' butyl) phenyl |
| 690 | 2-chloro-4-nitro phenyl | F | H | H | H | 2,6-dimethyl-4-(nonafluoro-2-butyl) phenyl |
| 691 | 2-chloro-4-fluoro phenyl | F | H | H | H | 2,6-dimethyl-4-(nonafluoro-2-butyl) phenyl |
| 692 | 2-chloro-6-fluoro phenyl | F | H | H | H | 2,6-dimethyl-4-(nonafluoro-2-butyl) phenyl |
| 693 | 4-chloro-2-fluoro phenyl | F | H | H | H | 2,6-dimethyl-4-(nonafluoro-2-butyl) phenyl |
| 694 | 4-chloro-2-nitro phenyl | F | H | H | H | 2,6-dimethyl-4-(nonafluoro-2-butyl) phenyl |
| 695 | 2,3,6-trifluoro phenyl | F | H | H | H | 2,6-dimethyl-4-(nonafluoro-2-butyl) phenyl |
| 696 | pyridine-2-yl | F | H | H | H | 2,6-dimethyl-4-(nonafluoro-2-butyl) phenyl |
| 697 | pyridine-3-yl | F | H | H | H | 2,6-dimethyl-4-(nonafluoro-2-butyl) phenyl |
| 698 | 2-fluoropyridine-3-yl | F | H | H | H | 2,6-dimethyl-4-(nonafluoro-2-butyl) phenyl |
| 699 | 2-chloropyridine-3-yl | F | H | H | H | 2,6-dimethyl-4-(nonafluoro-2-butyl) phenyl |
| 700 | 2-chloropyridine-5-yl | F | H | H | H | 2,6-dimethyl-4-(nonafluoro-2-butyl) phenyl |

[Table 2-6]

| Compound Nos. | $Q_1$ | $X_1$ | $X_2$ | $X_3$ | $X_4$ | $Q_2$ |
|---|---|---|---|---|---|---|
| 701 | 2-methylthio pyridine-3-yl | F | H | H | H | 2,6-dimethyl-4-(nonafluoro-2-butyl) phenyl |
| 702 | pyrazine-2-yl | F | H | H | H | 2,6-dimethyl-4-(nonafluoro-2-butyl) phenyl |

(continued)

| Compound Nos. | $Q_1$ | $X_1$ | $X_2$ | $X_3$ | $X_4$ | $Q_2$ |
|---|---|---|---|---|---|---|
| 703 | furan-2-yl | F | H | H | H | 2,6-dimethyl-4-(nonafluoro-2-butyl) phenyl |
| 704 | furan-3-yl | F | H | H | H | 2,6-dimethyl-4-(nonafluoro-2-butyl) phenyl |
| 705 | 2-tetrahydrofuranyl | F | H | H | H | 2,6-dimethyl-4-(nonafluoro-2-butyl) phenyl |
| 706 | benzofuran-2-yl | F | H | H | H | 2,6-dimethyl-4-(nonafluoro-2-butyl) phenyl |
| 707 | thiophene-2-yl | F | H | H | H | 2,6-dimethyl-4-(nonafluoro-2-butyl) phenyl |
| 708 | phenyl | F | H | H | H | 2,6-dibromo-4-(heptafluoro-n-propylthio)phenyl |
| 709 | 2-methylphenyl | F | H | H | H | 2,6-dibromo-4-(heptafluoro-n-propylthio)phenyl |
| 710 | 4-methylphenyl | F | H | H | H | 2,6-dibromo-4-(heptafluoro-n-propylthio)phenyl |
| 711 | 2-fluorophenyl | F | H | H | H | 2,6-dibromo-4-(heptafluoro-n-propylthio)phenyl |
| 712 | 3-fluorophenyl | F | H | H | H | 2,6-dibromo-4-(heptafluoro-n-propylthio)phenyl |
| 713 | 4-fluorophenyl | F | H | H | H | 2,6-dibromo-4-(heptafluoro-n-propylthio)phenyl |
| 714 | 2-chlorophenyl | F | H | H | H | 2,6-dibromo-4-(heptafluoro-n-propylthio)phenyl |
| 715 | 4-chlorophenyl | F | H | H | H | 2,6-dibromo-4-(heptafluoro-n-propylthio)phenyl |
| 716 | 2-bromophenyl | F. | H | H | H | 2,6-dibromo-4-(heptafluoro-n-propylthio)phenyl |
| 717 | 2-iodophenyl | F | H | H | H | 2,6-dibromo-4-(heptafluoro-n-propylthio)phenyl |
| 718 | 3-cyanophenyl | F | H | H | H | 2,6-dibromo-4-(heptafluoro-n-propylthio)phenyl |
| 719 | 4-cyanophenyl | F | H | H | H | 2,6-dibromo-4-(heptafluoro-n-propylthio)phenyl |
| 720 | 2-nitrophenyl | F | H | H | H | 2,6-dibromo-4-(heptafluoro-n-propylthio)phenyl |

[Table 2-7]

| Compound Nos. | $Q_1$ | $X_1$ | $X_2$ | $X_3$ | $X_4$ | $Q_2$ |
|---|---|---|---|---|---|---|
| 721 | 3-nitrophenyl | F | H | H | H | 2,6-dibromo-4-(heptafluoro-n-propylthio)phenyl |
| 722 | 4-nitrophenyl | F | H | H | H | 2,6-dibromo-4-(heptafluoro-n-propylthio)phenyl |

(continued)

| Compound Nos. | $Q_1$ | $X_1$ | $X_2$ | $X_3$ | $X_4$ | $Q_2$ |
|---|---|---|---|---|---|---|
| 723 | 2-trifluoromethyl phenyl | F | H | H | H | 2,6-dibromo-4-(heptafluoro-n-propylthio)phenyl |
| 724 | 4-trifluoromethyl phenyl | F | H | H | H | 2,6-dibromo-4-(heptafluoro-n-propylthio)phenyl |
| 725 | 4-trifluoromethoxy phenyl | F | H | H | H | 2,6-dibromo-4-(heptafluoro-n-propylthio)phenyl |
| 726 | 2,3-difluorophenyl | F | H | H | H | 2,6-dibromo-4-(heptafluoro-n-propylthio)phenyl |
| 727 | 2,4-difluorophenyl | F | H | H | H | 2,6-dibromo-4-(heptafluoro-n-propylthio)phenyl |
| 728 | 2,5-difluorophenyl | F | H | H | H | 2,6-dibromo-4-(heptafluoro-n-propylthio)phenyl |
| 729 | 2,6-difluorophenyl | F | H | H | H | 2,6-dibromo-4-(heptafluoro-n-propylthio)phenyl |
| 730 | 2,4-dichlorophenyl | F | H | H | H | 2,6-dibromo-4-(heptafluoro-n-propylthio)phenyl |
| 731 | 2,6-dichlorophenyl | F | H | H | H | 2,6-dibromo-4-(heptafluoro-n-propylthio)phenyl |
| 732 | 3,4-dichlorophenyl | F | H | H | H | 2,6-dibromo-4-(heptafluoro-n-propylthio)phenyl |
| 733 | 2-chloro-4-nitro phenyl | F | H | H | H | 2,6-dibromo-4-(heptafluoro-n-propylthio)phenyl |
| 734 | 2-chloro-4-fluoro phenyl | F | H | H | H | 2,6-dibromo-4-(heptafluoro-n-propylthio)phenyl |
| 735 | 2-chloro-6-fluoro phenyl | F | H | H | H | 2,6-dibromo-4-(heptafluoro-n-propylthio)phenyl |
| 736 | 4-chloro-2-fluoro phenyl | F | H | H | H | 2,6-dibromo-4-(heptafluoro-n-propylthio)phenyl |
| 737 | 4-chloro-2-nitro phenyl | F | H | H | H | 2,6-dibromo-4-(heptafluoro-n-propylthio)phenyl |
| 738 | 2,3,6-trifluoro phenyl | F | H | H | H | 2,6-dibromo-4-(heptafluoro-n-propylthio)phenyl |
| 739 | pyridine-2-yl | F | H | H | H | 2,6-dibromo-4-(heptafluoro-n-propylthio)phenyl |
| 740 | pyridine-3-yl | F | H | H | H | 2,6-dibromo-4-(heptafluoro-n-propylthio)phenyl |

[Table 2-8]

| Compound Nos. | $Q_1$ | $X_1$ | $X_2$ | $X_3$ | $X_4$ | $Q_2$ |
|---|---|---|---|---|---|---|
| 741 | 2-fluoropyridine-3-yl | F | H | H | H | 2,6-dibromo-4-(heptafluoro-n-propylthio)phenyl |
| 742 | 2-chloropyridine-3-yl | F | H | H | H | 2,6-dibromo-4-(heptafluoro-n-propylthio)phenyl |

(continued)

| Compound Nos. | $Q_1$ | $X_1$ | $X_2$ | $X_3$ | $X_4$ | $Q_2$ |
|---|---|---|---|---|---|---|
| 793 | 2-chloropyridine-5-yl | F | H | H | H | 2,6-dibromo-4-(heptafluoro-n-propylthio)phenyl |
| 744 | 2-methylthio pyridine-3-yl | F | H | H | H | 2,6-dibromo-4-(heptafluoro-n-propylthio)phenyl |
| 745 | pyrazine-2-yl | F | H | H | H | 2,6-dibromo-4-(heptafluoro-n-propylthio)phenyl |
| 746 | furan-2-yl | F | H | H | H | 2,6-dibromo-4-(heptafluoro-n-propylthio)phenyl |
| 747 | furan-3-yl | F | H | H | H | 2,6-dibromo-4-(heptafluoro-n-propylthio)phenyl |
| 748 | 2-tetrahydrofuranyl | F | H | H | H | 2,6-dibromo-4-(heptafluoro-n-propylthio)phenyl |
| 749 | benzofuran-2-yl | F | H | H | H | 2,6-dibromo-4-(heptafluoro-n-propylthio)phenyl |
| 750 | thiophene-2-yl | F | H | H | H | 2,6-dibromo-4-(heptafluoro-n-propylthio)phenyl |
| 751 | phenyl | F | H | H | H | 2,6-dibromo-4-(heptafluoro-n-propylsulfinyl)phenyl |
| 752 | 2-methylphenyl | F | H | H | H | 2,6-dibromo-4-(heptafluoro-n-propylsulfinyl)phenyl |
| 753 | 4-methylphenyl | F | H | H | H | 2,6-dibromo-4-(heptafluoro-n-propylsulfinyl)phenyl |
| 754 | 2-fluorophenyl | F | H | H | H | 2,6-dibromo-4-(heptafluoro-n-propylsulfinyl)phenyl |
| 755 | 3-fluorophenyl | F | H | H | H | 2,6-dibromo-4-(heptafluoro-n-propylsulfinyl)phenyl |
| 756 | 4-fluorophenyl | F | H | H | H | 2,6-dibromo-4-(heptafluoro-n-propylsulfinyl)phenyl |
| 757 | 2-chlorophenyl | F | H | H | H | 2,6-dibromo-4-(heptafluoro-n-propylsulfinyl)phenyl |
| 758 | 4-chlorophenyl | F | H | H | H | 2,6-dibromo-4-(heptafluoro-n-propylsulfinyl)phenyl |
| 759 | 2-bromophenyl | F | H | H | H | 2,6-dibromo-4-(heptafluoro-n-propylsulfinyl)phenyl |
| 760 | 2-iodophenyl | F | H | H | H | 2,6-dibromo-4-(heptafluoro-n-propylsulfinyl)phenyl |

[Table 2-9]

| Compound Nos. | $Q_1$ | $X_1$ | $X_2$ | $X_3$ | $X_4$ | $Q_2$ |
|---|---|---|---|---|---|---|
| 761 | 3-cyanophenyl | F | H | H | H | 2,6-dibromo-4-(heptafluoro-n-propylsulfinyl)phenyl |
| 762 | 4-cyanophenyl | F | H | H | H | 2,6-dibromo-4-(heptafluoro-n-propylsulfinyl)phenyl |

(continued)

| Compound Nos. | $Q_1$ | $X_1$ | $X_2$ | $X_3$ | $X_4$ | $Q_2$ |
|---|---|---|---|---|---|---|
| 763 | 2-nitrophenyl | F | H | H | H | 2,6-dibromo-4-(heptafluoro-n-propylsulfinyl)phenyl |
| 764 | 3-nitrophenyl | F | H | H | H | 2,6-dibromo-4-(heptafluoro-n-propylsulfinyl)phenyl |
| 765 | 4-nitrophenyl | F | H | H | H | 2,6-dibromo-4-(heptafluoro-n-propylsulfinyl)phenyl |
| 766 | 2-trifluoromethyl phenyl | F | H | H | H | 2,6-dibromo-4-(heptafluoro-n-propylsulfinyl)phenyl |
| 767 | 4-trifluoromethyl phenyl | F | H | H | H | 2,6-dibromo-4-(heptafluoro-n-propylsulfinyl)phenyl |
| 768 | 4-trifluoromethoxy phenyl | F | H | H | H | 2,6-dibromo-4-(heptafluoro-n-propylsulfinyl)phenyl |
| 769 | 2,3-difluorophenyl | F | H | H | H | 2,6-dibromo-4-(heptafluoro-n-propylsulfinyl)phenyl |
| 770 | 2,4-difluorophenyl | F | H | H | H | 2,6-dibromo-4-(heptafluoro-n-propylsulfinyl)phenyl |
| 771 | 2,5-difluorophenyl | F | H | H | H | 2,6-dibromo-4-(heptafluoro-n-propylsulfinyl)phenyl |
| 772 | 2,6-difluorophenyl | F | H | H | H | 2,6-dibromo-4-(heptafluoro-n-propylsulfinyl)phenyl |
| 773 | 2,4-dichlorophenyl | F | H | H | H | 2,6-dibromo-4-(heptafluoro-n-propylsulfinyl)phenyl |
| 774 | 2,6-dichlorophenyl | F | H | H | H | 2,6-dibromo-4-(heptafluoro-n-propylsulfinyl)phenyl |
| 775 | 3,4-dichlorophenyl | F | H | H | H | 2,6-dibromo-4-(heptafluoro-n-propylsulfinyl)phenyl |
| 776 | 2-chloro-4-nitro phenyl | F | H | H | H | 2,6-dibromo-4-(heptafluoro-n-propylsulfinyl)phenyl |
| 777 | 2-chloro-4-fluoro phenyl | F | H | H | H | 2,6-dibromo-4-(heptafluoro-n-propylsulfinyl)phenyl |
| 778 | 2-chloro-6-fluoro phenyl | F | H | H | H | 2,6-dibromo-4-(heptafluoro-n-propylsulfinyl)phenyl |
| 779 | 4-chloro-2-fluoro phenyl | F | H | H | H | 2,6-dibromo-4-(heptafluoro-n-propylsulfinyl)phenyl |
| 780 | 4-chloro-2-nitro phenyl | F | H | H | H | 2,6-dibromo-4-(heptafluoro-n-propylsulfinyl)phenyl |

[Table 2-10]

| Compound Nos. | $Q_1$ | $X_1$ | $X_2$ | $X_3$ | $X_4$ | $Q_2$ |
|---|---|---|---|---|---|---|
| 781 | 2,3,6-trifluoro phenyl | F | H | H | H | 2,6-dibromo-4-(heptafluoro-n-propylsulfinyl)phenyl |
| 782 | pyridine-2-yl | F | H | H | H | 2,6-dibromo-4-(heptafluoro-n-propylsulfinyl)phenyl |

(continued)

| Compound Nos. | $Q_1$ | $X_1$ | $X_2$ | $X_3$ | $X_4$ | $Q_2$ |
|---|---|---|---|---|---|---|
| 783 | pyridine-3-yl | F | H | H | H | 2,6-dibromo-4-(heptafluoro-n-propylsulfinyl)phenyl |
| 784 | 2-fluoropyridine-3-yl | F | H | H | H | 2,6-dibromo-4-(heptafluoro-n-propylsulfinyl)phenyl |
| 785 | 2-chloropyridine-3-yl | F | H | H | H | 2,6-dibromo-4-(heptafluoro-n-propylsulfinyl)phenyl |
| 786 | 2-chloropyridine-5-yl | F | H | H | H | 2,6-dibromo-4-(heptafluoro-n-propylsulfinyl)phenyl |
| 787 | 2-methylthio pyridine-3-yl | F | H | H | H | 2,6-dibromo-4-(heptafluoro-n-propylsulfinyl)phenyl |
| 788 | pyrazine-2-yl | F | H | H | H | 2,6-dibromo-4-(heptafluoro-n-propylsulfinyl)phenyl |
| 789 | furan-2-yl | F | H | H | H | 2,6-dibromo-4-(heptafluoro-n-propylsulfinyl)phenyl |
| 790 | thiophene-2-yl | F | H | H | H | 2,6-dibromo-4-(heptafluoro-n-propylsulfinyl)phenyl |
| 791 | phenyl | F | H | H | H | 2,6-dimethyl-4-(heptafluoro-n-propylthio)phenyl |
| 792 | 2-methylphenyl | F | H | H | H | 2,6-dimethyl-4-(heptafluoro-n-propylthio)phenyl |
| 793 | 4-methylphenyl | F | H | H | H | 2,6-dimethyl-4-(heptafluoro-n-propylthio)phenyl |
| 794 | 2-fluorophenyl | F | H | H | H | 2,6-dimethyl-4-(heptafluoro-n-propylthio)phenyl |
| 795 | 3-fluorophenyl | F | H | H | H | 2,6-dimethyl-4-(heptafluoro-n-propylthio)phenyl |
| 796 | 4-fluorophenyl | F | H | H | H | 2,6-dimethyl-4-(heptafluoro-n-propylthio)phenyl |
| 797 | 2-chlorophenyl | F | H | H | H | 2,6-dimethyl-4-(heptafluoro-n-propylthio)phenyl |
| 798 | 4-chlorophenyl | F | H | H | H | 2,6-dimethyl-4-(heptafluoro-n-propylthio)phenyl |
| 799 | 2-bromophenyl | F | H | H | H | 2,6-dimethyl-4-(heptafluoro-n-propylthio)phenyl |
| 800 | 2-iodophenyl | F | H | H | H | 2,6-dimethyl-4-(heptafluoro-n-propylthio)phenyl |

[Table 2-11]

| Compound Nos. | $Q_1$ | $X_1$ | $X_2$ | $X_3$ | $X_4$ | $Q_2$ |
|---|---|---|---|---|---|---|
| 801 | 3-cyanophenyl | F | H | H | H | 2,6-dimethyl-4-(heptafluoro-n-propylthio)phenyl |
| 802 | 4-cyanophenyl | F | H | H | H | 2,6-dimethyl-4-(heptafluoro-n-propylthio)phenyl |

(continued)

| Compound Nos. | $Q_1$ | $X_1$ | $X_2$ | $X_3$ | $X_4$ | $Q_2$ |
|---|---|---|---|---|---|---|
| 803 | 2-nitrophenyl | F | H | H | H | 2,6-dimethyl-4-(heptafluoro-n-propylthio)phenyl |
| 804 | 3-nitrophenyl | F | H | H | H | 2,6-dimethyl-4-(heptafluoro-n-propylthio)phenyl |
| 805 | 4-nitrophenyl | F | H | H | H | 2,6-dimethyl-4-(heptafluoro-n-propylthio)phenyl |
| 806 | 2-trifluoromethyl phenyl | F | H | H | H | 2,6-dimethyl-4-(heptafluoro-n-propylthio)phenyl |
| 807 | 4-trifluoromethyl phenyl | F | H | H | H | 2,6-dimethyl-4-(heptafluoro-n-propylthio)phenyl |
| 808 | 4-trifluoromethoxy phenyl | F | H | H | H | 2,6-dimethyl-4-(heptafluoro-n-propylthio)phenyl |
| 809 | 2,3-difluorophenyl | F | H | H | H | 2,6-dimethyl-4-(heptafluoro-n-propylthio)phenyl |
| 810 | 2,4-difluorophenyl | F | H | H | H | 2,6-dimethyl-4-(heptafluoro-n-propylthio)phenyl |
| 811 | 2,5-difluorophenyl | F | H | H | H | 2,6-dimethyl-4-(heptafluoro-n-propylthio)phenyl |
| 812 | 2,6-difluorophenyl | F | H | H | H | 2,6-dimethyl-4-(heptafluoro-n-propylthio)phenyl |
| 813 | 2,4-dichlorophenyl | F | H | H | H | 2,6-dimethyl-4-(heptafluoro-n-propylthio)phenyl |
| 814 | 2,6-dichlorophenyl | F | H | H | H | 2,6-dimethyl-4-(heptafluoro-n-propylthio)phenyl |
| 815 | 3,4-dichlorophenyl | F | H | H | H | 2,6-dimethyl-4-(heptafluoro-n-propylthio)phenyl |
| 816 | 2-chloro-4-nitro phenyl | F | H | H | H | 2,6-dimethyl-4-(heptafluoro-n-propylthio)phenyl |
| 817 | 2-chloro-4-fluoro phenyl | F | H | H | H | 2,6-dimethyl-4-(heptafluoro-n-propylthio)phenyl |
| 818 | 2-chloro-6-fluoro phenyl | F | H | H | H | 2,6-dimethyl-4-(heptafluoro-n-propylthio)phenyl |
| 819 | 4-chloro-2-fluoro phenyl | F | H | H | H | 2,6-dimethyl-4-(heptafluoro-n-propylthio)phenyl |
| 820 | 4-chloro-2-nitro phenyl | F | H | H | H | 2,6-dimethyl-4-(heptafluoro-n-propylthio)phenyl |

[Table 2-12]

| Compound Nos. | $Q_1$ | $X_1$ | $X_2$ | $X_3$ | $X_4$ | $Q_2$ |
|---|---|---|---|---|---|---|
| 821 | 2,3,6-trifluoro phenyl | F | H | H | H | 2,6-dimethyl-4-(heptafluoro-n-propylthio)phenyl |
| 822 | pyridine-2-yl | F | H | H | H | 2,6-dimethyl-4-(heptafluoro-n-propylthio)phenyl |

(continued)

| Compound Nos. | $Q_1$ | $X_1$ | $X_2$ | $X_3$ | $X_4$ | $Q_2$ |
|---|---|---|---|---|---|---|
| 823 | pyridine-3-yl | F | H | H | H | 2,6-dimethyl-4-(heptafluoro-n-propylthio)phenyl |
| 824 | 2-fluoropyridine-3-yl | F | H | H | H | 2,6-dimethyl-4-(heptafluoro-n-propylthio)phenyl |
| 825 | 2-chloropyridine-3-yl | F | H | H | H | 2,6-dimethyl-4-(heptafluoro-n-propylthio)phenyl |
| 826 | 2-chloropyridine-5-yl | F | H | H | H | 2,6-dimethyl-4-(heptafluoro-n-propylthio)phenyl |
| 827 | 2-methylthio pyridine-3-yl | F | H | H | H | 2,6-dimethyl-4-(heptafluoro-n-propylthio)phenyl |
| 828 | pyrazine-2-yl | F | H | H | H | 2,6-dimethyl-4-(heptafluoro-n-propylthio)phenyl |
| 829 | furan-2-yl | F | H | H | H | 2,6-dimethyl-4-(heptafluoro-n-propylthio)phenyl |
| 830 | thiophene-2-yl | F | H | H | H | 2,6-dimethyl-4-(heptafluoro-n-propylthio)phenyl |
| 831 | phenyl | Cl | H | H | H | 2,6-dibromo-4-(heptafluoro-n-propylthio)phenyl |
| 832 | 2-fluorophenyl | Cl | H | H | H | 2,6-dibromo-4-(heptafluoro-n-propylthio)phenyl |
| 833 | 2-chloropyridine-3-yl | Cl | H | H | H | 2,6-dibromo-4-(heptafluoro-n-propylthio)phenyl |

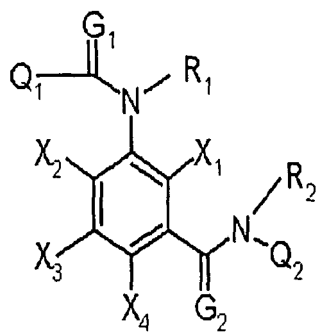

($X_3$, $X_4$ = hydrogen atoms; $G_1$, $G_2$ = oxygen atoms)

[Table 3-1]

| Compound Nos. | $Q_1$ | $R_1$ | $R_2$ | $X_1$ | $X_2$ | $Q_2$ |
|---|---|---|---|---|---|---|
| 1001 | phenyl | Me | H | H | H | 2,6-dimethyl-4-(heptafluoro isopropyl) phenyl |
| 1002 | 2-methylphenyl | Me | H | H | H | 2,6-dimethyl-4-(heptafluoro isopropyl) phenyl |
| 1003 | 4-methylphenyl | Me | H | H | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1004 | 2-fluorophenyl | Me | H | H | H | 2,6-dimethyl-4-(heptafluoro isopropyl) phenyl |
| 1005 | 3-fluorophenyl | Me | H | H | H | 2,6-dimethyl-4-(heptafluoro isopropyl) phenyl |
| 1006 | 4-fluorophenyl | Me | H | H | H | 2,6-dimethyl-4-(heptafluoro isopropyl) phenyl |
| 1007 | 2-chlorophenyl | Me | H | H | H | 2,6-dimethyl-4-(heptafluoro isopropyl) phenyl |
| 1008 | 4-chlorophenyl | Me | H | H | H | 2,6-dimethyl-4-(heptafluoro isopropyl) phenyl |
| 1009 | 2-bromophenyl | Me | H | H | H | 2,6-dimethyl-4-(heptafluoro isopropyl) phenyl |
| 1010 | 2-iodophenyl | Me | H | H | H | 2,6-dimethyl-4-(heptafluoro isopropyl) phenyl |
| 1011 | 3-cyanophenyl | Me | H | H | H | 2,6-dimethyl-4-(heptafluoro isopropyl) phenyl |
| 1012 | 4-cyanophenyl | Me | H | H | H | 2,6-dimethyl-4-(heptafluoro isopropyl) phenyl |
| 1013 | 2-nitrophenyl | Me | H | H | H | 2,6-dimethyl-4-(heptafluoro isopropyl) phenyl |
| 1014 | 3-nitrophenyl | Me | H | H | H | 2,6-dimethyl-4-(heptafluoro isopropyl) phenyl |
| 1015 | 4-nitrophenyl | Me | H | H | H | 2,6-dimethyl-4-(heptafluoro isopropyl) phenyl |
| 1016 | 2-trifluoromethyl phenyl | Me | H | H | H | 2,6-dimethyl-4-(heptafluoro isopropyl) phenyl |
| 1017 | 4-trifluoromethyl phenyl | Me | H | H | H | 2,6-dimethyl-4-(heptafluoro isopropyl) phenyl |
| 1018 | 4-trifluoromethoxy phenyl | Me | H | H | H | 2,6-dimethyl-4-(heptafluoro isopropyl) phenyl |
| 1019 | 2,3-difluorophenyl | Me | H | H | H | 2,6-dimethyl-4-(heptafluoro isopropyl) phenyl |
| 1020 | 2,4-difluorophenyl | Me | H | H | H | 2,6-dimethyl-4-(heptafluoro isopropyl) phenyl |

[Table 3-2]

| Compound Nos. | $Q_1$ | $R_1$ | $R_2$ | $X_1$ | $X_2$ | $Q_2$ |
|---|---|---|---|---|---|---|
| 1021 | 2,5-difluorophenyl | Me | H | H | H | 2,6-dimethyl-4-(heptafluoro isopropyl)phenyl |
| 1022 | 2,6-difluorophenyl | Me | H | H | H | 2,6-dimethyl-4-(heptafluoro isopropyl)phenyl |
| 1023 | 2,4-dichlorophenyl | Me | H | H | H | 2,6-dimethyl-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1024 | 2,6-dichlorophenyl | Me | H | H | H | 2,6-dimethyl-4-(heptafluoro isopropyl)phenyl |
| 1025 | 3,4-dichlorophenyl | Me | H | H | H | 2,6-dimethyl-4-(heptafluoro isopropyl)phenyl |
| 1026 | 2-chloro-4-nitro phenyl | Me | H | H | H | 2,6-dimethyl-4-(heptafluoro isopropyl)phenyl |
| 1027 | 2-chloro-4-fluoro phenyl | Me | H | H | H | 2,6-dimethyl-4-(heptafluoro isopropyl)phenyl |
| 1028 | 2-chloro-6-fluoro phenyl | Me | H | H | H | 2,6-dimethyl-4-(heptafluoro isopropyl)phenyl |
| 1029 | 4-chloro-2-fluoro phenyl | Me | H | H | H | 2,6-dimethyl-4-(heptafluoro isopropyl)phenyl |
| 1030 | 4-chloro-2-nitro phenyl | Me | H | H | H | 2,6-dimethyl-4-(heptafluoro isopropyl)phenyl |
| 1031 | 2,3,6-trifluoro phenyl | Me | H | H | H | 2,6-dimethyl-4-(heptafluoro isopropyl)phenyl |
| 1032 | 3-(acetylamino) phenyl | Me | H | H | H | 2,6-dimethyl-4-(heptafluoro isopropyl)phenyl |
| 1033 | pyridine-2-yl | Me | H | H | H | 2,6-dimethyl-4-(heptafluoro isopropyl)phenyl |
| 1034 | pyridine-3-yl | Me | H | H | H | 2,6-dimethyl-4-(heptafluoro isopropyl)phenyl |
| 1035 | 2-fluoropyridine-3-yl | Me | H | H | H | 2,6-dimethyl-4-(heptafluoro isopropyl)phenyl |
| 1036 | 2-chloropyridine-3-yl | Me | H | H | H | 2,6-dimethyl-4-(heptafluoro isopropyl)phenyl |
| 1037 | 2-chloropyridine-5-yl | Me | H | H | H | 2,6-dimethyl-4-(heptafluoro isopropyl)phenyl |
| 1038 | 2-trifluoromethyl pyridine-3-yl | Me | H | H | H | 2,6-dimethyl-4-(heptafluoro isopropyl)phenyl |
| 1039 | 2-methylthio pyridine-3-yl | Me | H | H | H | 2,6-dimethyl-4-(heptafluoro isopropyl)phenyl |
| 1040 | pyrazine-2-yl | Me | H | H | H | 2,6-dimethyl-4-(heptafluoro isopropyl)phenyl |

[Table 3-3]

| Compound Nos. | $Q_1$ | $R_1$ | $R_2$ | $X_1$ | $X_2$ | $Q_2$ |
|---|---|---|---|---|---|---|
| 1041 | furan-2-yl | Me | H | H | H | 2,6-dimethyl-4-(heptafluoro isopropyl) phenyl |
| 1042 | furan-3-yl | Me | H | H | H | 2,6-dimethyl-4-(heptafluoro isopropyl) phenyl |
| 1043 | 2-tetrahydrofuranyl | Me | H | H | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1044 | benzofuran-2-yl | Me | H | H | H | 2,6-dimethyl-4-(heptafluoro isopropyl) phenyl |
| 1045 | thiophene-2-yl | Me | H | H | H | 2,6-dimethyl-4-(heptafluoro isopropyl) phenyl |
| 1046 | phenyl | Me | H | H | H | 2-bromo-4-(heptafluoroisopropyl)-6-(methylsulfony)phenyl |
| 1047 | 2-methylphenyl | Me | H | H | H | 2-bromo-4-(heptafluoroisopropyl)-6-(methylsulfony)phenyl |
| 1048 | 4-methylphenyl | Me | H | H | H | 2-bromo-9-(heptafluoroisopropyl)-6-(methylsulfony)phenyl |
| 1049 | 2-fluorophenyl | Me | H | H | H | 2-bromo-4-(heptafluoroisopropyl)-6-(methylsulfony)phenyl |
| 1050 | 3-fluorophenyl | Me | H | H | H | 2-bromo-4-(heptafluoroisopropyl)-6-(methylsulfony)phenyl |
| 1051 | 4-fluorophenyl | Me | H | H | H | 2-bromo-4-(heptafluoroisopropyl)-6-(methylsulfony)phenyl |
| 1052 | 2-chlorophenyl | Me | H | H | H | 2-bromo-4-(heptafluoroisopropyl)-6-(methylsulfony)phenyl |
| 1053 | 4-chlorophenyl | Me | H | H | H | 2-bromo-4-(heptafluoroisopropyl)-6-(methylsulfony)phenyl |
| 1054 | 2-bromophenyl | Me | H | H | H | 2-bromo-4-(heptafluoroisopropyl)-6-(methylsulfony)phenyl |
| 1055 | 2-iodophenyl | Me | H | H | H | 2-bromo-4-(heptafluoroisopropyl)-6-(methylsulfony)phenyl |
| 1056 | 3-cyanophenyl | Me | H | H | H | 2-bromo-4-(heptafluoroisopropyl)-6-(methylsulfony)phenyl |
| 1057 | 4-cyanophenyl | Me | H | H | H | 2-bromo-4-(heptafluoroisopropyl)-6-(methylsulfony)phenyl |
| 1058 | 2-nitrophenyl | Me | H | H | H | 2-bromo-4-(heptafluoroisopropyl)-6-(methylsulfony)phenyl |
| 1059 | 3-nitrophenyl | Me | H | H | H | 2-bromo-4-(heptafluoroisopropyl)-6-(methylsulfony)phenyl |
| 1060 | 4-nitrophenyl | Me | H | H | H | 2-bromo-4-(heptafluoroisopropyl)-6-(methylsulfony)phenyl |

[Table 3-4]

| Compound Nos. | $Q_1$ | $R_1$ | $R_2$ | $X_1$ | $X_2$ | $Q_2$ |
|---|---|---|---|---|---|---|
| 1061 | 2-trifluoromethyl phenyl | Me | H | H | H | 2-bromo-4-(heptafluoroisopropyl)-6-(methylsulfony)phenyl |
| 1062 | 4-trifluoromethyl phenyl | Me | H | H | H | 2-bromo-4-(heptafluoroisopropyl)-6-(methylsulfony)phenyl |
| 1063 | 4-trifluoromethoxy phenyl | Me | H | H | H | 2-bromo-4-(heptafluoroisopropyl)-6-(methylsulfony)phenyl |

(continued)

| Compound Nos. | $Q_1$ | $R_1$ | $R_2$ | $X_1$ | $X_2$ | $Q_2$ |
|---|---|---|---|---|---|---|
| 1064 | 2,3-difluorophenyl | Me | H | H | H | 2-bromo-4-(heptafluoroisopropyl)-6-(methylsulfony)phenyl |
| 1065 | 2,4-difluorophenyl | Me | H | H | H | 2-bromo-4-(heptafluoroisopropyl)-6-(methylsulfony)phenyl |
| 1066 | 2,5-difluorophenyl | Me | H | H | H | 2-bromo-4-(heptafluoroisopropyl)-6-(methylsulfony)phenyl |
| 1067 | 2,6-difluorophenyl | Me | H | H | H | 2-bromo-4-(heptafluoroisopropyl)-6-(methylsulfony)phenyl |
| 1068 | 2,4-dichlorophenyl | Me | H | H | H | 2-bromo-4-(heptafluoroisopropyl)-6-(methylsulfony)phenyl |
| 1069 | 2,6-dichlorophenyl | Me | H | H | H | 2-bromo-4-(heptafluoroisopropyl)-6-(methylsulfony)phenyl |
| 1070 | 3,4-dichlorophenyl | Me | H | H | H | 2-bromo-4-(heptafluoroisopropyl)-6-(methylsulfony)phenyl |
| 1071 | 2-chloro-4-nitro phenyl | Me | H | H | H | 2-bromo-4-(heptafluoroisopropyl)-6-(methylsulfony)phenyl |
| 1072 | 2-chloro-4-fluoro phenyl | Me | H | H | H | 2-bromo-4-(heptafluoroisopropyl)-6-(methylsulfony)phenyl |
| 1073 | 2-chloro-6-fluoro phenyl | Me | H | H | H | 2-bromo-4-(heptafluoroisopropyl)-6-(methylsulfony)phenyl |
| 1074 | 4-chloro-2-fluoro phenyl | Me | H | H | H | 2-bromo-4-(heptafluoroisopropyl)-6-(methylsulfony)phenyl |
| 1075 | 4-chloro-2-nitro phenyl | Me | H | H | H | 2-bromo-4-(heptafluoroisopropyl)-6-(methylsulfony)phenyl |
| 1076 | 2,3,6-trifluoro phenyl | Me | H | H | H | 2-bromo-4-(heptafluoroisopropyl)-6-(methylsulfony)phenyl |
| 1077 | pyridine-2-yl | Me | H | H | H | 2-bromo-4-(heptafluoroisopropyl)-6-(methylsulfony)phenyl |
| 1078 | pyridine-3-yl | Me | H | H | H | 2-bromo-4-(heptafluoroisopropyl)-6-(methylsulfony)phenyl |
| 1079 | 2-fluoropyridine-3-yl | Me | H | H | H | 2-bromo-4-(heptafluoroisopropyl)-6-(methylsulfony)phenyl |
| 1080 | 2-chloropyridine-3-yl | Me | H | H | H | 2-bromo-4-(heptafluoroisopropyl)-6-(methylsulfony)phenyl |

[Table 3-5]

| Compound Nos. | $Q_1$ | $R_1$ | $R_2$ | $X_1$ | $X_2$ | $Q_2$ |
|---|---|---|---|---|---|---|
| 1081 | 2-chloropyridine-5-yl | Me | H | H | H | 2-bromo-4-(heptafluoroisopropyl)-6-(methylsulfony)phenyl |
| 1082 | 2-methylthio pyridine-3-yl | Me | H | H | H | 2-bromo-4-(heptafluoroisopropyl)-6-(methylsulfony)phenyl |
| 1083 | pyrazine-2-yl | Me | H | H | H | 2-bromo-4-(heptafluoroisopropyl)-6-(methylsulfony)phenyl |

(continued)

| Compound Nos. | $Q_1$ | $R_1$ | $R_2$ | $X_1$ | $X_2$ | $Q_2$ |
|---|---|---|---|---|---|---|
| 1084 | furan-2-yl | Me | H | H | H | 2-bromo-4-(heptafluoroisopropyl)-6-(methylsulfony)phenyl |
| 1085 | thiophene-2-yl | Me | H | H | H | 2-bromo-4-(heptafluoroisopropyl)-6-(methylsulfony)phenyl |
| 1086 | phenyl | Me | H | H | H | 2-n-propyl-6-iodo-4-(hepta fluoroisopropyl)phenyl |
| 1087 | 2-methylphenyl | Me | H | H | H | 2-n-propyl-6-iodo-4-(hepta fluoroisopropyl)phenyl |
| 1088 | 4-methylphenyl | Me | H | H | H | 2-n-propyl-6-iodo-4-(hepta fluoroisopropyl)phenyl |
| 1089 | 2-fluorophenyl | Me | H | H | H | 2-n-propyl-6-iodo-4-(hepta fluoroisopropyl)phenyl |
| 1090 | 3-fluorophenyl | Me | H | H | H | 2-n-propyl-6-iodo-4-(hepta fluoroisopropyl)phenyl |
| 1091 | 4-fluorophenyl | Me | H | H | H | 2-n-propyl-6-iodo-4-(hepta fluoroisopropyl)phenyl |
| 1092 | 2-chlorophenyl | Me | H | H | H | 2-n-propyl-6-iodo-4-(hepta fluoroisopropyl)phenyl |
| 1093 | 4-chlorophenyl | Me | H | H | H | 2-n-propyl-6-iodo-4-(hepta fluoroisopropyl)phenyl |
| 1094 | 2-bromophenyl | Me | H | H | H | 2-n-propyl-6-iodo-4-(hepta fluoroisopropyl)phenyl |
| 1095 | 2-iodophenyl | Me | H | H | H | 2-n-propyl-6-iodo-4-(hepta fluoroisopropyl)phenyl |
| 1096 | 3-cyanophenyl | Me | H | H | H | 2-n-propyl-6-iodo-4-(hepta fluoroisopropyl)phenyl |
| 1097 | 4-cyanophenyl | Me | H | H | H | 2-n-propyl-6-iodo-4-(hepta fluoroisopropyl)phenyl |
| 1098 | 2-nitrophenyl | Me | H | H | H | 2-n-propyl-6-iodo-4-(hepta fluoroisopropyl)phenyl |
| 1099 | 3-nitrophenyl | Me | H | H | H | 2-n-propyl-6-iodo-4-(hepta fluoroisopropyl)phenyl |
| 1100 | 4-nitrophenyl | Me | H | H | H | 2-n-propyl-6-iodo-4-(hepta fluoroisopropyl)phenyl |

[Table 3-6]

| Compound Nos. | $Q_1$ | $R_1$ | $R_2$ | $X_1$ | $X_2$ | $Q_2$ |
|---|---|---|---|---|---|---|
| 1101 | 2-trifluoromethyl phenyl | Me | H | H | H | 2-n-propyl-6-iodo-4-(hepta fluoroisopropyl)phenyl |
| 1102 | 4-trifluoromethyl phenyl | Me | H | H | H | 2-n-propyl-6-iodo-4-(hepta fluoroisopropyl)phenyl |
| 1103 | 4-trifluoromethoxy phenyl | Me | H | H | H | 2-n-propyl-6-iodo-4-(hepta fluoroisopropyl)phenyl |

(continued)

| Compound Nos. | $Q_1$ | $R_1$ | $R_2$ | $X_1$ | $X_2$ | $Q_2$ |
|---|---|---|---|---|---|---|
| 1104 | 2,3-difluorophenyl | Me | H | H | H | 2-n-propyl-6-iodo-4-(hepta fluoroisopropyl)phenyl |
| 1105 | 2,4-difluorophenyl | Me | H | H | H | 2-n-propyl-6-iodo-4-(hepta fluoroisopropyl)phenyl |
| 1106 | 2,5-difluorophenyl | Me | H | H | H | 2-n-propyl-6-iodo-4-(hepta fluoroisopropyl)phenyl |
| 1107 | 2,6-difluorophenyl | Me | H | H | H | 2-n-propyl-6-iodo-4-(hepta fluoroisopropyl)phenyl |
| 1108 | 2,4-dichlorophenyl | Me | H | H | H | 2-n-propyl-6-iodo-4-(hepta fluoroisopropyl)phenyl |
| 1109 | 2,6-dichlorophenyl | Me | H | H | H | 2-n-propyl-6-iodo-4-(hepta fluoroisopropyl)phenyl |
| 1110 | 3,4-dichlorophenyl | Me | H | H | H | 2-n-propyl-6-iodo-4-(hepta fluoroisopropyl)phenyl |
| 1111 | 2-chloro-4-nitro phenyl | Me | H | H | H | 2-n-propyl-6-iodo-4-(hepta fluoroisopropyl)phenyl |
| 1112 | 2-chloro-4-fluoro phenyl | Me | H | H | H | 2-n-propyl-6-iodo-4-(hepta fluoroisopropyl)phenyl |
| 1113 | 2-chloro-6-fluoro phenyl | Me | H | H | H | 2-n-propyl-6-iodo-4-(hepta fluoroisopropyl)phenyl |
| 1114 | 4-chloro-2-fluoro phenyl | Me | H | H | H | 2-n-propyl-6-iodo-4-(hepta fluoroisopropyl)phenyl |
| 1115 | 4-chloro-2-nitro phenyl | Me | H | H | H | 2-n-propyl-6-iodo-4-(hepta fluoroisopropyl)phenyl |
| 1116 | 2,3,6-trifluoro phenyl | Me | H | H | H | 2-n-propyl-6-iodo-4-(hepta fluoroisopropyl)phenyl |
| 1117 | pyridine-2-yl | Me | H | H | H | 2-n-propyl-6-iodo-4-(hepta fluoroisopropyl)phenyl |
| 1118 | pyridine-3-yl | Me | H | H | H | 2-n-propyl-6-iodo-4-(hepta fluoroisopropyl)phenyl |
| 1119 | 2-fluoropyridine-3-yl | Me | H | H | H | 2-n-propyl-6-iodo-4-(hepta fluoroisopropyl)phenyl |
| 1120 | 2-chloropyridine-3-yl | Me | H | H | H | 2-n-propyl-6-iodo-4-(hepta fluoroisopropyl)phenyl |

[Table 3-7]

| Compound Nos. | $Q_1$ | $R_1$ | $R_2$ | $X_1$ | $X_2$ | $Q_2$ |
|---|---|---|---|---|---|---|
| 1121 | 2-chloropyridine-5-yl | Me | H | H | H | 2-n-propyl-6-iodo-4-(hepta fluoroisopropyl)phenyl |
| 1122 | 2-methylthio pyridine-3-yl | Me | H | H | H | 2-n-propyl-6-iodo-4-(hepta fluoroisopropyl)phenyl |
| 1123 | pyrazine-2-yl | Me | H | H | H | 2-n-propyl-6-iodo-4-(hepta fluoroisopropyl)phenyl |

(continued)

| Compound Nos. | $Q_1$ | $R_1$ | $R_2$ | $X_1$ | $X_2$ | $Q_2$ |
|---|---|---|---|---|---|---|
| 1124 | furan-2-yl | Me | H | H | H | 2-n-propyl-6-iodo-4-(hepta fluoroisopropyl)phenyl |
| 1125 | 2-fluorophenyl | Me | H | H | H | 2,6-dimethyl-4-(heptafluoro-n-propylthio)phenyl |
| 1126 | phenyl | Me | H | H | H | 2,6-dibromo-4-(heptafluoro-n-propylthio)phenyl |
| 1127 | 2-methylphenyl | Me | H | H | H | 2,6-dibromo-4-(heptafluoro-n-propylthio)phenyl |
| 1128 | 4-methylphenyl | Me | H | H | H | 2,6-dibromo-4-(heptafluoro-n-propylthio)phenyl |
| 1129 | 2-fluorophenyl | Me | H | H | H | 2,6-dibromo-4-(heptafluoro-n-propylthio)phenyl |
| 1130 | 3-fluorophenyl | Me | H | H | H | 2,6-dibromo-4-(heptafluoro-n-propylthio)phenyl |
| 1131 | 4-fluorophenyl | Me | H | H | H | 2,6-dibromo-4-(heptafluoro-n-propylthio)phenyl |
| 1132 | 2-chlorophenyl | Me | H | H | H | 2,6-dibromo-9-(heptafluoro-n-propylthio)phenyl |
| 1133 | 4-chlorophenyl | Me | H | H | H | 2,6-dibromo-4-(heptafluoro-n-propylthio)phenyl |
| 1134 | 2-bromophenyl | Me | H | H | H | 2,6-dibromo-4-(heptafluoro-n-propylthio)phenyl |
| 1135 | 2-iodophenyl | Me | H | H | H | 2,6-dibromo-4-(heptafluoro-n-propylthio)phenyl |
| 1136 | 3-cyanophenyl | Me | H | H | H | 2,6-dibromo-4-(heptafluoro-n-propylthio)phenyl |
| 1137 | 4-cyanophenyl | Me | H | H | H | 2,6-dibromo-4-(heptafluoro-n-propylthio)phenyl |
| 1138 | 2-nitrophenyl | Me | H | H | H | 2,6-dibromo-4-(heptafluoro-n-propylthio)phenyl |
| 1139 | 3-nitrophenyl | Me | H | H | H | 2,6-dibromo-9-(heptafluoro-n-propylthio)phenyl |
| 1140 | 4-nitrophenyl | Me | H | H | H | 2,6-dibromo-4-(heptafluoro-n-propylthio)phenyl |

[Table 3-8]

| Compound Nos. | $Q_1$ | $R_1$ | $R_2$ | $X_1$ | $X_2$ | $Q_2$ |
|---|---|---|---|---|---|---|
| 1141 | 2-trifluoromethyl phenyl | Me | H | H | H | 2,6-dibromo-4-(heptafluoro-n-propylthio)phenyl |
| 1142 | 4-trifluoromethyl phenyl | Me | H | H | H | 2,6-dibromo-4-(heptafluoro-n-propylthio)phenyl |
| 1143 | 4-trifluoromethoxy phenyl | Me | H | H | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1144 | 2,3-difluorophenyl | Me | H | H | H | 2,6-dibromo-4-(heptafluoro-n-propylthio)phenyl |
| 1145 | 2,4-difluorophenyl | Me | H | H | H | 2,6-dibromo-4-(heptafluoro-n-propylthio)phenyl |
| 1146 | 2,5-difluorophenyl | Me | H | H | H | 2,6-dibromo-4-(heptafluoro-n-propylthio)phenyl |
| 1147 | 2,6-difluorophenyl | Me | H | H | H | 2,6-dibromo-4-(heptafluoro-n-propylthio)phenyl |
| 1148 | 2,4-dichlorophenyl | Me | H | H | H | 2,6-dibromo-4-(heptafluoro-n-propylthio)phenyl |
| 1149 | 2,6-dichlorophenyl | Me | H | H | H | 2,6-dibromo-4-(heptafluoro-n-propylthio)phenyl |
| 1150 | 3,4-dichlorophenyl | Me | H | H | H | 2,6-dibromo-4-(heptafluoro-n-propylthio)phenyl |
| 1151 | 2-chloro-4-nitro phenyl | Me | H | H | H | 2,6-dibromo-4-(heptafluoro-n-propylthio)phenyl |
| 1152 | 2-chloro-4-fluoro phenyl | Me | H | H | H | 2,6-dibromo-4-(heptafluoro-n-propylthio)phenyl |
| 1153 | 2-chloro-6-fluoro phenyl | Me | H | H | H | 2,6-dibromo-4-(heptafluoro-n-propylthio)phenyl |
| 1154 | 4-chloro-2-fluoro phenyl | Me | H | H | H | 2,6-dibromo-4-(heptafluoro-n-propylthio)phenyl |
| 1155 | 4-chloro-2-nitro phenyl | Me | H | H | H | 2,6-dibromo-4-(heptafluoro-n-propylthio)phenyl |
| 1156 | 2,3,6-trifluoro phenyl | Me | H | H | H | 2,6-dibromo-4-(heptafluoro-n-propylthio)phenyl |
| 1157 | pyridine-2-yl | Me | H | H | H | 2,6-dibromo-4-(heptafluoro-n-propylthio)phenyl |
| 1158 | pyridine-3-yl | Me | H | H | H | 2,6-dibromo-4-(heptafluoro-n-propylthio)phenyl |
| 1159 | 2-fluoropyridine-3-yl | Me | H | H | H | 2,6-dibromo-4-(heptafluoro-n-propylthio)phenyl |
| 1160 | 2-chloropyridine-3-yl | Me | H | H | H | 2,6-dibromo-4-(heptafluoro-n-propylthio)phenyl |

[Table 3-9]

| Compound Nos. | $Q_1$ | $R_1$ | $R_2$ | $X_1$ | $X_2$ | $Q_2$ |
|---|---|---|---|---|---|---|
| 1161 | 2-chloropyridine-5-yl | Me | H | H | H | 2,6-dibromo-4-(heptafluoro-n-propylthio)phenyl |
| 1162 | 2-methylthio pyridine-3-yl | Me | H | H | H | 2,6-dibromo-4-(heptafluoro-n-propylthio)phenyl |
| 1163 | pyrazine-2-yl | Me | H | H | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1164 | furan-2-yl | Me | H | H | H | 2,6-dibromo-4-(heptafluoro-n-propylthio)phenyl |
| 1165 | thiophene-2-yl | Me | H | H | H | 2,6-dibromo-4-(heptafluoro-n-propylthio)phenyl |
| 1166 | phenyl | Me | H | H | H | 2,6-dibromo-4-(heptafluoro-n-propylsulfinyl)phenyl |
| 1167 | 2-methylphenyl | Me | H | H | H | 2,6-dibromo-4-(heptafluoro-n-propylsulfinyl)phenyl |
| 1168 | 4-methylphenyl | Me | H | H | H | 2,6-dibromo-4-(heptafluoro-n-propylsulfinyl)phenyl |
| 1169 | 2-fluorophenyl | Me | H | H | H | 2,6-dibromo-4-(heptafluoro-n-propylsulfinyl)phenyl |
| 1170 | 3-fluorophenyl | Me | H | H | H | 2,6-dibromo-4-(heptafluoro-n-propylsulfinyl)phenyl |
| 1171 | 4-fluorophenyl | Me | H | H | H | 2,6-dibromo-4-(heptafluoro-n-propylsulfinyl)phenyl |
| 1172 | 2-chlorophenyl | Me | H | H | H | 2,6-dibromo-4-(heptafluoro-n-propylsulfinyl)phenyl |
| 1173 | 4-chlorophenyl | Me | H | H | H | 2,6-dibromo-4-(heptafluoro-n-propylsulfinyl)phenyl |
| 1174 | 2-bromophenyl | Me | H | H | H | 2,6-dibromo-4-(heptafluoro-n-propylsulfinyl)phenyl |
| 1175 | 2-iodophenyl | Me | H | H | H | 2,6-dibromo-4-(heptafluoro-n-propylsulfinyl)phenyl |
| 1176 | 3-cyanophenyl | Me | H | H | H | 2,6-dibromo-4-(heptafluoro-n-propylsulfinyl)phenyl |
| 1177 | 4-cyanophenyl | Me | H | H | H | 2,6-dibromo-4-(heptafluoro-n-propylsulfinyl)phenyl |
| 1178 | 2-nitrophenyl | Me | H | H | H | 2,6-dibromo-4-(heptafluoro-n-propylsulfinyl)phenyl |
| 1179 | 3-nitrophenyl | Me | H | H | H | 2,6-dibromo-4-(heptafluoro-n-propylsulfinyl)phenyl |
| 1180 | 4-nitrophenyl | Me | H | H | H | 2,6-dibromo-4-(heptafluoro-n-propylsulfinyl)phenyl |

[Table 3-10]

| Compound Nos. | $Q_1$ | $R_1$ | $R_2$ | $X_1$ | $X_2$ | $Q_2$ |
|---|---|---|---|---|---|---|
| 1181 | 2-trifluoromethyl phenyl | Me | H | H | H | 2,6-dibromo-4-(heptafluoro-n-propylsulfinyl)phenyl |
| 1182 | 4-trifluoromethyl phenyl | Me | H | H | H | 2,6-dibromo-4-(heptafluoro-n-propylsulfinyl)phenyl |
| 1183 | 4-trifluoromethoxy phenyl | Me | H | H | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1184 | 2,3-difluorophenyl | Me | H | H | H | 2,6-dibromo-4-(heptafluoro-n-propylsulfinyl)phenyl |
| 1185 | 2,4-difluorophenyl | Me | H | H | H | 2,6-dibromo-4-(heptafluoro-n-propylsulfinyl)phenyl |
| 1186 | 2,5-difluorophenyl | Me | H | H | H | 2,6-dibromo-4-(heptafluoro-n-propylsulfinyl)phenyl |
| 1187 | 2,6-difluorophenyl | Me | H | H | H | 2,6-dibromo-4-(heptafluoro-n-propylsulfinyl)phenyl |
| 1188 | 2,4-dichlorophenyl | Me | H | H | H | 2,6-dibromo-4-(heptafluoro-n-propylsulfinyl)phenyl |
| 1189 | 2,6-dichlorophenyl | Me | H | H | H | 2,6-dibromo-4-(heptafluoro-n-propylsulfinyl)phenyl |
| 1190 | 3,4-dichlorophenyl | Me | H | H | H | 2,6-dibromo-4-(heptafluoro-n-propylsulfinyl)phenyl |
| 1191 | 2-chloro-4-nitro phenyl | Me | H | H | H | 2,6-dibromo-4-(heptafluoro-n-propylsulfinyl)phenyl |
| 1192 | 2-chloro-4-fluoro phenyl | Me | H | H | H | 2,6-dibromo-4-(heptafluoro-n-propylsulfinyl)phenyl |
| 1193 | 2-chloro-6-fluoro phenyl | Me | H | H | H | 2,6-dibromo-4-(heptafluoro-n-propylsulfinyl)phenyl |
| 1194 | 4-chloro-2-fluoro phenyl | Me | H | H | H | 2,6-dibromo-4-(heptafluoro-n-propylsulfinyl)phenyl |
| 1195 | 4-chloro-2-nitro phenyl | Me | H | H | H | 2,6-dibromo-4-(heptafluoro-n-propylsulfinyl)phenyl |
| 1196 | 2,3,6-trifluoro phenyl | Me | H | H | H | 2,6-dibromo-4-(heptafluoro-n-propylsulfinyl)phenyl |
| 1197 | pyridine-2-yl | Me | H | H | H | 2,6-dibromo-4-(heptafluoro-n-propylsulfinyl)phenyl |
| 1198 | pyridine-3-yl | Me | H | H | H | 2,6-dibromo-4-(heptafluoro-n-propylsulfinyl)phenyl |
| 1199 | 2-fluoropyridine-3-yl | Me | H | H | H | 2,6-dibromo-4-(heptafluoro-n-propylsulfinyl)phenyl |
| 1200 | 2-chloropyridine-3-yl | Me | H | H | H | 2,6-dibromo-4-(heptafluoro-n-propylsulfinyl)phenyl |

[Table 3-11]

| Compound Nos. | $Q_1$ | $R_1$ | $R_2$ | $X_1$ | $X_2$ | $Q_2$ |
|---|---|---|---|---|---|---|
| 1201 | 2-chloropyridine-5-yl | Me | H | H | H | 2,6-dibromo-4-(heptafluoro-n-propylsulfinyl)phenyl |
| 1202 | 2-methylthio pyridine-3-yl | Me | H | H | H | 2,6-dibromo-4-(heptafluoro-n-propylsulfinyl)phenyl |
| 1203 | pyrazine-2-yl | Me | H | H | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1204 | furan-2-yl | Me | H | H | H | 2,6-dibromo-4-(heptafluoro-n-propylsulfinyl)phenyl |
| 1205 | thiophene-2-yl | Me | H | H | H | 2,6-dibromo-4-(heptafluoro-n-propylsulfinyl)phenyl |
| 1206 | 2-fluorophenyl | Et | H | H | H | 2,6-dimethyl-4-(heptafluoro isopropyl) phenyl |
| 1207 | pyridine-3-yl | Et | H | H | H | 2,6-dimethyl-4-(heptafluoro isopropyl) phenyl |
| 1208 | phenyl | Me | H | F | H | 2,6-dimethyl-4-(heptafluoro isopropyl) phenyl |
| 1209 | 2-methylphenyl | Me | H | F | H | 2,6-dimethyl-4-(heptafluoro isopropyl) phenyl |
| 1210 | 3-methylphenyl | Me | H | F | H | 2,6-dimethyl-4-(heptafluoro isopropyl) phenyl |
| 1211 | 4-methylphenyl | Me | H | F | H | 2,6-dimethyl-4-(heptafluoro isopropyl) phenyl |
| 1212 | 2-nitrophenyl | Me | H | F | H | 2,6-dimethyl-4-(heptafluoro isopropyl) phenyl |
| 1213 | 3-nitrophenyl | Me | H | F | H | 2,6-dimethyl-4-(heptafluoro isopropyl) phenyl |
| 1214 | 4-nitrophenyl | Me | H | F | H | 2,6-dimethyl-4-(heptafluoro isopropyl) phenyl |
| 1215 | 2-cyanophenyl | Me | H | F | H | 2,6-dimethyl-4-(heptafluoro isopropyl) phenyl |
| 1216 | 3-cyanophenyl | Me | H | F | H | 2,6-dimethyl-4-(heptafluoro isopropyl) phenyl |
| 1217 | 4-cyanophenyl | Me | H | F | H | 2,6-dimethyl-4-(heptafluoro isopropyl) phenyl |
| 1218 | 2-fluorophenyl | Me | H | F | H | 2,6-dimethyl-4-(heptafluoro isopropyl) phenyl |
| 1219 | 3-fluorophenyl | Me | H | F | H | 2,6-dimethyl-4-(heptafluoro isopropyl) phenyl |
| 1220 | 4-fluorophenyl | Me | H | F | H | 2,6-dimethyl-4-(heptafluoro isopropyl) phenyl |

[Table 3-12]

| Compound Nos. | $Q_1$ | $R_1$ | $R_2$ | $X_1$ | $X_2$ | $Q_2$ |
|---|---|---|---|---|---|---|
| 1221 | 2-chlorophenyl | Me | H | F | H | 2,6-dimethyl-4-(heptafluoro isopropyl) phenyl |
| 1222 | 4-chlorophenyl | Me | H | F | H | 2,6-dimethyl-4-(heptafluoro isopropyl) phenyl |
| 1223 | 2-bromophenyl | Me | H | F | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1224 | 2-iodophenyl | Me | H | F | H | 2,6-dimethyl-4-(heptafluoro isopropyl) phenyl |
| 1225 | 2-trifluoromethyl phenyl | Me | H | F | H | 2,6-dimethyl-4-(heptafluoro isopropyl) phenyl |
| 1226 | 4-trifluoromethyl phenyl | Me | H | F | H | 2,6-dimethyl-4-(heptafluoro isopropyl) phenyl |
| 1227 | 4-trifluoromethoxy phenyl | Me | H | F | H | 2,6-dimethyl-4-(heptafluoro isopropyl) phenyl |
| 1228 | 2,3-difluorophenyl | Me | H | F | H | 2,6-dimethyl-4-(heptafluoro isopropyl) phenyl |
| 1229 | 2,4-difluorophenyl | Me | H | F | H | 2,6-dimethyl-4-(heptafluoro isopropyl) phenyl |
| 1230 | 2,5-difluorophenyl | Me | H | F | H | 2,6-dimethyl-4-(heptafluoro isopropyl) phenyl |
| 1231 | 2,6-difluorophenyl | Me | H | F | H | 2,6-dimethyl-4-(heptafluoro isopropyl) phenyl |
| 1232 | 2,4-dichlorophenyl | Me | H | F | H | 2,6-dimethyl-4-(heptafluoro isopropyl) phenyl |
| 1233 | 2,6-dichlorophenyl | Me | H | F | H | 2,6-dimethyl-4-(heptafluoro isopropyl) phenyl |
| 1234 | 3,4-dichlorophenyl | Me | H | F | H | 2,6-dimethyl-4-(heptafluoro isopropyl) phenyl |
| 1235 | 2-fluoro-4-nitro phenyl | Me | H | F | H | 2,6-dimethyl-4-(heptafluoro isopropyl) phenyl |
| 1236 | 4-fluoro-2-nitro phenyl | Me | H | F | H | 2,6-dimethyl-4-(heptafluoro isopropyl) phenyl |
| 1237 | 2-chloro-4-fluoro phenyl | Me | H | F | H | 2,6-dimethyl-4-(heptafluoro isopropyl) phenyl |
| 1238 | 4-chloro-2-fluoro phenyl | Me | H | F | H | 2,6-dimethyl-4-(heptafluoro isopropyl) phenyl |
| 1239 | 2-chloro-6-fluoro phenyl | Me | H | F | H | 2,6-dimethyl-4-(heptafluoro isopropyl) phenyl |
| 1240 | 2-chloro-4-nitro phenyl | Me | H | F | H | 2,6-dimethyl-4-(heptafluoro isopropyl) phenyl |

[Table 3-13]

| Compound Nos. | $Q_1$ | $R_1$ | $R_2$ | $X_1$ | $X_2$ | $Q_2$ |
|---|---|---|---|---|---|---|
| 1241 | 4-chloro-2-nitro phenyl | Me | H | F | H | 2,6-dimethyl-4-(heptafluoro isopropyl) phenyl |
| 1242 | 2,3,6-trifluoro phenyl | Me | H | F | H | 2,6-dimethyl-4-(heptafluoro isopropyl) phenyl |
| 1243 | pyridine-2-yl | Me | H | F | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1244 | pyridine-3-yl | Me | H | F | H | 2,6-dimethyl-4-(heptafluoro isopropyl) phenyl |
| 1245 | 2-chloropyridine-3-yl | Me | H | F | H | 2,6-dimethyl-4-(heptafluoro isopropyl) phenyl |
| 1246 | 2-fluoropyridine-3-yl | Me | H | F | H | 2,6-dimethyl-4-(heptafluoro isopropyl) phenyl |
| 1247 | 2-chloropyridine-5-yl | Me | H | F | H | 2,6-dimethyl-4-(heptafluoro isopropyl) phenyl |
| 1248 | 2-methylthio pyridine-3-yl | Me | H | F | H | 2,6-dimethyl-4-(heptafluoro isopropyl) phenyl |
| 1249 | pyrazine-2-yl | Me | H | F | H | 2,6-dimethyl-4-(heptafluoro isopropyl) phenyl |
| 1250 | furan-2-yl | Me | H | F | H | 2,6-dimethyl-4-(heptafluoro isopropyl) phenyl |
| 1251 | furan-3-yl | Me | H | F | H | 2,6-dimethyl-4-(heptafluoro isopropyl) phenyl |
| 1252 | 2-tetrahydrofuranyl | Me | H | F | H | 2,6-dimethyl-4-(heptafluoro isopropyl) phenyl |
| 1253 | benzofuran-2-yl | Me | H | F | H | 2,6-dimethyl-4-(heptafluoro isopropyl) phenyl |
| 1254 | thiophene-2-yl | Me | H | F | H | 2,6-dimethyl-4-(heptafluoro isopropyl) phenyl |
| 1255 | phenyl | Me | H | F | H | 2,6-dimethyl-4-(nonafluoro-2-butyl) phenyl |
| 1256 | 2-methylphenyl | Me | H | F | H | 2,6-dimethyl-4-(nonafluoro-2-butyl) phenyl |
| 1257 | 3-methylphenyl | Me | H | F | H | 2,6-dimethyl-4-(nonafluoro-2-butyl) phenyl |
| 1258 | 4-methylphenyl | Me | H | F | H | 2,6-dimethyl-4-(nonafluoro-2-butyl) phenyl |
| 1259 | 2-nitrophenyl | Me | H | F | H | 2,6-dimethyl-4-(nonafluoro-2-butyl) phenyl |
| 1260 | 3-nitrophenyl | Me | H | F | H | 2,6-dimethyl-4-(nonafluoro-2-butyl) phenyl |

[Table 3-14]

| Compound Nos. | $Q_1$ | $R_1$ | $R_2$ | $X_1$ | $X_2$ | $Q_2$ |
|---|---|---|---|---|---|---|
| 1261 | 4-nitrophenyl | Me | H | F | H | 2,6-dimethyl-4-(nonafluoro-2-butyl) phenyl |
| 1262 | 2-cyanophenyl | Me | H | F | H | 2,6-dimethyl-4-(nonafluoro-2-butyl) phenyl |
| 1263 | 3-cyanophenyl | Me | H | F | H | 2,6-dimethyl-4-(nonafluoro-2-butyl) phenyl |

(continued)

| Compound Nos. | $Q_1$ | $R_1$ | $R_2$ | $X_1$ | $X_2$ | $Q_2$ |
|---|---|---|---|---|---|---|
| 1264 | 4-cyanophenyl | Me | H | F | H | 2,6-dimethyl-4-(nonafluoro-2-butyl) phenyl |
| 1265 | 2-fluorophenyl | Me | H | F | H | 2,6-dimethyl-4-(nonafluoro-2-butyl) phenyl |
| 1266 | 3-fluorophenyl | Me | H | F | H | 2,6-dimethyl-4-(nonafluoro-2-butyl) phenyl |
| 1267 | 4-fluorophenyl | Me | H | F | H | 2,6-dimethyl-4-(nonafluoro-2-butyl) phenyl |
| 1268 | 2-chlorophenyl | Me | H | F | H | 2,6-dimethyl-4-(nonafluoro-2-butyl) phenyl |
| 1269 | 4-chlorophenyl | Me | H | F | H | 2,6-dimethyl-4-(nonafluoro-2-butyl) phenyl |
| 1270 | 2-bromophenyl | Me | H | F | H | 2,6-dimethyl-4-(nonafluoro-2-butyl) phenyl |
| 1271 | 2-iodophenyl | Me | H | F | H | 2,6-dimethyl-4-(nonafluoro-2-butyl) phenyl |
| 1272 | 2-trifluoromethyl phenyl | Me | H | F | H | 2,6-dimethyl-4-(nonafluoro-2-butyl) phenyl |
| 1273 | 4-trifluoromethyl phenyl | Me | H | F | H | 2,6-dimethyl-4-(nonafluoro-2-butyl) phenyl |
| 1274 | 4-trifluoromethoxy phenyl | Me | H | F | H | 2,6-dimethyl-4-(nonafluoro-2-butyl) phenyl |
| 1275 | 2,3-difluorophenyl | Me | H | F | H | 2,6-dimethyl-4-(nonafluoro-2-butyl) phenyl |
| 1276 | 2,4-difluorophenyl | Me | H | F | H | 2,6-dimethyl-4-(nonafluoro-2-butyl) phenyl |
| 1277 | 2,5-difluorophenyl | Me | H | F | H | 2,6-dimethyl-4-(nonafluoro-2-butyl) phenyl |
| 1278 | 2,6-difluorophenyl | Me | H | F | H | 2,6-dimethyl-4-(nonafluoro-2-butyl) phenyl |
| 1279 | 2,4-dichlorophenyl | Me | H | F | H | 2,6-dimethyl-4-(nonafluoro-2-butyl) phenyl |
| 1280 | 2,6-dichlorophenyl | Me | H | F | H | 2,6-dimethyl-4-(nonafluoro-2-butyl) phenyl |

[Table 3-15]

| Compound Nos. | $Q_1$ | $R_1$ | $R_2$ | $X_1$ | $X_2$ | $Q_2$ |
|---|---|---|---|---|---|---|
| 1281 | 3,4-dichlorophenyl | Me | H | F | H | 2,6-dimethyl-4-(nonafluoro-2-butyl) phenyl |
| 1282 | 2-fluoro-4-nitro phenyl | Me | H | F | H | 2,6-dimethyl-4-(nonafluoro-2-butyl) phenyl |
| 1283 | 4-fluoro-2-nitro phenyl | Me | H | F | H | 2,6-dimethyl-4-(nonafluoro-2-butyl) phenyl |

(continued)

| Compound Nos. | $Q_1$ | $R_1$ | $R_2$ | $X_1$ | $X_2$ | $Q_2$ |
|---|---|---|---|---|---|---|
| 1284 | 2-chloro-4-fluoro phenyl | Me | H | F | H | 2,6-dimethyl-4-(nonafluoro-2-butyl) phenyl |
| 1285 | 4-chloro-2-fluoro phenyl | Me | H | F | H | 2,6-dimethyl-4-(nonafluoro-2-butyl) phenyl |
| 1286 | 2-chloro-6-fluoro phenyl | Me | H | F | H | 2,6-dimethyl-4-(nonafluoro-2-butyl) phenyl |
| 1287 | 2-chloro-4-nitro phenyl | Me | H | F | H | 2,6-dimethyl-4-(nonafluoro-2-butyl) phenyl |
| 1288 | 4-chloro-2-nitro phenyl | Me | H | F | H | 2,6-dimethyl-4-(nonafluoro-2-butyl) phenyl |
| 1289 | 2,3,6-trifluoro phenyl | Me | H | F | H | 2,6-dimethyl-4-(nonafluoro-2-butyl) phenyl |
| 1290 | pyridine-2-yl | Me | H | F | H | 2,6-dimethyl-4-(nonafluoro-2-butyl) phenyl |
| 1291 | pyridine-3-yl | Me | H | F | H | 2,6-dimethyl-4-(nonafluoro-2-butyl) phenyl |
| 1292 | 2-fluoropyridine-3-yl | Me | H | F | H | 2,6-dimethyl-4-(nonafluoro-2-butyl) phenyl |
| 1293 | 2-chloropyridine-3-yl | Me | H | F | H | 2,6-dimethyl-4-(nonafluoro-2-butyl) phenyl |
| 1294 | 2-chloropyridine-5-yl | Me | H | F | H | 2,6-dimethyl-4-(nonafluoro-2-butyl) phenyl |
| 1295 | 2-methylthio pyridine-3-yl | Me | H | F | H | 2,6-dimethyl-4-(nonafluoro-2-butyl) phenyl |
| 1296 | pyrazine-2-yl | Me | H | F | H | 2,6-dimethyl-4-(nonafluoro-2-butyl) phenyl |
| 1297 | furan-2-yl | Me | H | F | H | 2,6-dimethyl-4-(nonafluoro-2-butyl) phenyl |
| 1298 | furan-3-yl | Me | H | F | H | 2,6-dimethyl-4-(nonafluoro-2-butyl) phenyl |
| 1299 | 2-tetrahydrofuranyl | Me | H | F | H | 2,6-dimethyl-4-(nonafluoro-2-butyl) phenyl |
| 1300 | benzofuran-2-yl | Me | H | F | H | 2,6-dimethyl-4-(nonafluoro-2-butyl) phenyl |

[Table 3-16]

| Compound Nos. | $Q_1$ | $R_1$ | $R_2$ | $X_1$ | $X_2$ | $Q_2$ |
|---|---|---|---|---|---|---|
| 1301 | thiophene-2-yl | Me | H | F | H | 2, 6-dimethyl-4- (nonafluoro-2-butyl) phenyl |
| 1302 | phenyl | Me | H | F | H | 2-bromo-4-(heptafluoroisopropyl)-6-(methylsulfonyl)phenyl |
| 1303 | 2-methylphenyl | Me | H | F | H | 2-bromo-4-(heptafluoroisopropyl)-6-(methylsulfonyl)phenyl |

(continued)

| Compound Nos. | $Q_1$ | $R_1$ | $R_2$ | $X_1$ | $X_2$ | $Q_2$ |
|---|---|---|---|---|---|---|
| 1304 | 4-methylphenyl | Me | H | F | H | 2-bromo-4-(heptafluoroisopropyl)-6-(methylsulfonyl)phenyl |
| 1305 | 2-fluorophenyl | Me | H | F | H | 2-bromo-4-(heptafluoroisopropyl)-6-(methylsulfonyl)phenyl |
| 1306 | 3-fluorophenyl | Me | H | F | H | 2-bromo-4-(heptafluoroisopropyl)-6-(methylsulfonyl)phenyl |
| 1307 | 4-fluorophenyl | Me | H | F | H | 2-bromo-4-(heptafluoroisopropyl)-6-(methylsulfonyl)phenyl |
| 1308 | 2-chlorophenyl | Me | H | F | H | 2-bromo-4-(heptafluoroisopropyl)-6-(methylsulfonyl)phenyl |
| 1309 | 4-chlorophenyl | Me | H | F | H | 2-bromo-4-(heptafluoroisopropyl)-6-(methylsulfonyl)phenyl |
| 1310 | 2-bromophenyl | Me | H | F | H | 2-bromo-4-(heptafluoroisopropyl)-6-(methylsulfonyl)phenyl |
| 1311 | 2-iodophenyl | Me | H | F | H | 2-bromo-4-(heptafluoroisopropyl)-6-(methylsulfonyl)phenyl |
| 1312 | 3-cyanophenyl | Me | H | F | H | 2-bromo-4-(heptafluoroisopropyl)-6-(methylsulfonyl)phenyl |
| 1313 | 4-cyanophenyl | Me | H | F | H | 2-bromo-4-(heptafluoroisopropyl)-6-(methylsulfonyl)phenyl |
| 1314 | 2-nitrophenyl | Me | H | F | H | 2-bromo-4-(heptafluoroisopropyl)-6-(methylsulfonyl)phenyl |
| 1315 | 3-nitrophenyl | Me | H | F | H | 2-bromo-4-(heptafluoroisopropyl)-6-(methylsulfonyl)phenyl |
| 1316 | 4-nitrophenyl | Me | H | F | H | 2-bromo-4-(heptafluoroisopropyl)-6-(methylsulfonyl)phenyl |
| 1317 | 2-trifluoromethyl phenyl | Me | H | F | H | 2-bromo-4-(heptafluoroisopropyl)-6-(methylsulfonyl)phenyl |
| 1318 | 4-trifluoromethyl phenyl | Me | H | F | H | 2-bromo-4-(heptafluoroisopropyl)-6-(methylsulfonyl)phenyl |
| 1319 | 4-trifluoromethoxy phenyl | Me | H | F | H | 2-bromo-4-(heptafluoroisopropyl)-6-(methylsulfonyl)phenyl |
| 1320 | 2,3-difluorophenyl | Me | H | F | H | 2-bromo-4-(heptafluoroisopropyl)-6-(methylsulfonyl)phenyl |

[Table 3-17]

| Compound Nos. | $Q_1$ | $R_1$ | $R_2$ | $X_1$ | $X_2$ | $Q_2$ |
|---|---|---|---|---|---|---|
| 1321 | 2,4-difluorophenyl | Me | H | F | H | 2-bromo-4-(heptafluoroisopropyl)-6-(methylsulfonyl)phenyl |
| 1322 | 2,5-difluorophenyl | Me | H | F | H | 2-bromo-4-(heptafluoroisopropyl)-6-(methylsulfonyl)phenyl |
| 1323 | 2,6-difluorophenyl | Me | H | F | H | 2-bromo-4-(heptafluoroisopropyl)-6-(methylsulfonyl)phenyl |

(continued)

| Compound Nos. | $Q_1$ | $R_1$ | $R_2$ | $X_1$ | $X_2$ | $Q_2$ |
|---|---|---|---|---|---|---|
| 1324 | 2,4-dichlorophenyl | Me | H | F | H | 2-bromo-4-(heptafluoroisopropyl)-6-(methylsulfonyl)phenyl |
| 1325 | 2,6-dichlorophenyl | Me | H | F | H | 2-bromo-4- (heptafluoroisopropyl)-6-(methylsulfonyl)phenyl |
| 1326 | 3,4-dichlorophenyl | Me | H | F | H | 2-bromo-4-(heptafluoroisopropyl)-6-(methylsulfonyl)phenyl |
| 1327 | 2-chloro-4-nitro phenyl | Me | H | F | H | 2-bromo-4-(heptafluoroisopropyl)-6-(methylsulfonyl)phenyl |
| 1328 | 2-chloro-4-fluoro phenyl | Me | H | F | H | 2-bromo-4-(heptafluoroisopropyl)-6-(methylsulfonyl)phenyl |
| 1329 | 2-chloro-6-fluoro phenyl | Me | H | F | H | 2-bromo-4-(heptafluoroisopropyl)-6-(methylsulfonyl)phenyl |
| 1330 | 4-chloro-2-fluoro phenyl | Me | H | F | H | 2-bromo-4-(heptafluoroisopropyl)-6-(methylsulfonyl)phenyl |
| 1331 | 4-chloro-2-nitro phenyl | Me | H | F | H | 2-bromo-4-(heptafluoroisopropyl)-6-(methylsulfonyl)phenyl |
| 1332 | 2,3,6-trifluoro phenyl | Me | H | F | H | 2-bromo-4-(heptafluoroisopropyl)-6-(methylsulfonyl)phenyl |
| 1333 | pyridine-2-yl | Me | H | F | H | 2-bromo-4-(heptafluoroisopropyl)-6-(methylsulfonyl)phenyl |
| 1334 | pyridine-3-yl | Me | H | F | H | 2-bromo-4-(heptafluoroisopropyl)-6-(methylsulfonyl)phenyl |
| 1335 | 2-fluoropyridine-3-yl | Me | H | F | H | 2-bromo-4-(heptafluoroisopropyl)-6-(methylsulfonyl)phenyl |
| 1336 | 2-chloropyridine-3-yl | Me | H | F | H | 2-bromo-4-(heptafluoroisopropyl)-6-(methylsulfonyl)phenyl |
| 1337 | 2-chloropyridine-5-yl | Me | H | F | H | 2-bromo-4-(heptafluoroisopropyl)-6-(methylsulfonyl)phenyl |
| 1338 | 2-methylthio pyridine-3-yl | Me | H | F | H | 2-bromo-4-(heptafluoroisopropyl)-6-(methylsulfonyl)phenyl |
| 1339 | pyrazine-2-yl | Me | H | F | H | 2-bromo-4-(heptafluoroisopropyl)-6-(methylsulfonyl)phenyl |
| 1340 | furan-2-yl | Me | H | F | H | 2-bromo-4-(heptafluoroisopropyl)-6-(methylsulfonyl)phenyl |

[Table 3-18]

| Compound Nos. | $Q_1$ | $R_1$ | $R_2$ | $X_1$ | $X_2$ | $Q_2$ |
|---|---|---|---|---|---|---|
| 1341 | thiophene-2-yl | Me | H | F | H | 2-bromo-4-(heptafluoroisopropyl)-6-(methylsulfonyl)phenyl |
| 1342 | phenyl | Me | H | F | H | 2-n-propyl-6-iodo-4-(heptafluoro isopropyl)phenyl |
| 1343 | 2-methylphenyl | Me | H | F | H | 2-n-propyl-6-iodo-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1344 | 4-methylphenyl | Me | H | F | H | 2-n-propyl-6-iodo-4-(heptafluoro isopropyl)phenyl |
| 1345 | 2-fluorophenyl | Me | H | F | H | 2-n-propyl-6-iodo-4-(heptafluoro isopropyl)phenyl |
| 1346 | 3-fluorophenyl | Me | H | F | H | 2-n-propyl-6-iodo-4-(heptafluoro isopropyl)phenyl |
| 1347' | 4-fluorophenyl | Me | H | F | H | 2-n-propyl-6-iodo-4-(heptafluoro isopropyl)phenyl |
| 1348 | 2-chlorophenyl | Me | H | F | H | 2-n-propyl-6-iodo-4-(heptafluoro isopropyl)phenyl |
| 1349 | 4-chlorophenyl | Me | H | F | H | 2-n-propyl-6-iodo-4-(heptafluoro isopropyl) phenyl |
| 1350 | 2-bromophenyl | Me | H | F | H | 2-n-propyl-6-iodo-4-(heptafluoro isopropyl)phenyl |
| 1351 | 2-iodophenyl | Me | H | F | H | 2-n-propyl-6-iodo-4-(heptafluoro isopropyl)phenyl |
| 1352 | 3-cyanophenyl | Me | H | F | H | 2-n-propyl-6-iodo-4-(heptafluoro isopropyl)phenyl |
| 1353 | 4-cyanophenyl | Me | H | F | H | 2-n-propyl-6-iodo-4-(heptafluoro isopropyl)phenyl |
| 1354 | 2-nitrophenyl | Me | H | F | H | 2-n-propyl-6-iodo-4-(heptafluoro isopropyl)phenyl |
| 1355 | 3-nitrophenyl | Me | H | F | H | 2-n-propyl-6-iodo-4-(heptafluoro isopropyl)phenyl |
| 1356 | 4-nitrophenyl | Me | H | F | H | 2-n-propyl-6-iodo-4-(heptafluoro isopropyl)phenyl |
| 1357 | 2-trifluoromethyl phenyl | Me | H | F | H | 2-n-propyl-6-iodo-4-(heptafluoro isopropyl)phenyl |
| 1358 | 4-trifluoromethyl phenyl | Me | H | F | H | 2-n-propyl-6-iodo-4-(heptafluoro isopropyl)phenyl |
| 1359 | 4-trifluoromethoxy phenyl | Me | H | F | H | 2-n-propyl-6-iodo-4-(heptafluoro isopropyl)phenyl |
| 1360 | 2,3-difluorophenyl | Me | H | F | H | 2-n-propyl-6-iodo-4-(heptafluoro isopropyl)phenyl |

[Table 3-19]

| Compound Nos. | $Q_1$ | $R_1$ | $R_2$ | $X_1$ | $X_2$ | $Q_2$ |
|---|---|---|---|---|---|---|
| 1361 | 2,4-difluorophenyl | Me | H | F | H | 2-n-propyl-6-iodo-4-(heptafluoro isopropyl)phenyl |
| 1362 | 2,5-difluorophenyl | Me | H | F | H | 2-n-propyl-6-iodo-4-(heptafluoro isopropyl)phenyl |
| 1363 | 2,6-difluorophenyl | Me | H | F | H | 2-n-propyl-6-iodo-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1364 | 2,4-dichlorophenyl | Me | H | F | H | 2-n-propyl-6-iodo-4-(heptafluoro isopropyl)phenyl |
| 1365 | 2,6-dichlorophenyl | Me | H | F | H | 2-n-propyl-6-iodo-4-(heptafluoro isopropyl)phenyl |
| 1366 | 3,4-dichlorophenyl | Me | H | F | H | 2-n-propyl-6-iodo-4-(heptafluoro isopropyl)phenyl |
| 1367 | 2-chloro-4-nitro phenyl | Me | H | F | H | 2-n-propyl-6-iodo-4-(heptafluoro isopropyl)phenyl |
| 1368 | 2-chloro-4-fluoro phenyl | Me | H | F | H | 2-n-propyl-6-iodo-4-(heptafluoro isopropyl)phenyl |
| 1369 | 2-chloro-6-fluoro phenyl | Me | H | F | H | 2-n-propyl-6-iodo-4-(heptafluoro isopropyl)phenyl |
| 1370 | 4-chloro-2-fluoro phenyl | Me | H | F | H | 2-n-propyl-6-iodo-4-(heptafluoro isopropyl)phenyl |
| 1371 | 4-chloro-2-nitro phenyl | Me | H | F | H | 2-n-propyl-6-iodo-4-(heptafluoro isopropyl)phenyl |
| 1372 | 2,3,6-trifluoro phenyl | Me | H | F | H | 2-n-propyl-6-iodo-4-(heptafluoro isopropyl)phenyl |
| 1373 | pyridine-2-yl | Me | H | F | H | 2-n-propyl-6-iodo-4-(heptafluoro isopropyl)phenyl |
| 1374 | pyridine-3-yl | Me | H | F | H | 2-n-propyl-6-iodo-4-(heptafluoro isopropyl)phenyl |
| 1375 | 2-fluoropyridine-3-yl | Me | H | F | H | 2-n-propyl-6-iodo-4-(heptafluoro isopropyl)phenyl |
| 1376 | 2-chloropyridine--yl | Me | H | F | H | 2-n-propyl-6-iodo-4-(heptafluoro isopropyl)phenyl |
| 1377 | 2-chloropyridine-5-yl | Me | H | F | H | 2-n-propyl-6-iodo-4-(heptafluoro isopropyl)phenyl |
| 1378 | 2-methylthio pyridine-3-yl | Me | H | F | H | 2-n-propyl-6-iodo-4-(heptafluoro isopropyl)phenyl |
| 1379 | pyrazine-2-yl | Me | H | F | H | 2-n-propyl-6-iodo-4-(heptafluoro isopropyl)phenyl |
| 1380 | furan-2-yl | Me | H | F | H | 2-n-propyl-6-iodo-9-(heptafluoro isopropyl)phenyl |

[Table 3-20]

| Compound Nos. | $Q_1$ | $R_1$ | $R_2$ | $X_1$ | $X_2$ | $Q_2$ |
|---|---|---|---|---|---|---|
| 1381 | thiophene-2-yl | Me | H | F | H | 2-n-propyl-6-iodo-4-(heptafluoro isopropyl)phenyl |
| 1382 | phenyl | Me | H | F | H | 2,6-dibromo-4-(heptafluoro-n-propylthio)phenyl |
| 1383 | 2-methylphenyl | Me | H | F | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1384 | 4-methylphenyl | Me | H | F | H | 2,6-dibromo-4-(heptafluoro-n-propylthio)phenyl |
| 1385 | 2-fluorophenyl | Me | H | F | H | 2,6-dibromo-4-(heptafluoro-n-propylthio)phenyl |
| 1386 | 3-fluorophenyl | Me | H | F | H | 2,6-dibromo-4-(heptafluoro-n-propylthio)phenyl |
| 1387 | 4-fluorophenyl | Me | H | F | H | 2,6-dibromo-4-(heptafluoro-n-propylthio)phenyl |
| 1388 | 2-chlorophenyl | Me | H | F | H | 2,6-dibromo-4-(heptafluoro-n-propylthio)phenyl |
| 1389 | 4-chlorophenyl | Me | H | F | H | 2,6-dibromo-4-(heptafluoro-n-propylthio)phenyl |
| 1390 | 2-bromophenyl | Me | H | F | H | 2,6-dibromo-4-(heptafluoro-n-propylthio)phenyl |
| 1391 | 2-iodophenyl | Me | H | F | H | 2,6-dibromo-4-(heptafluoro-n-propylthio)phenyl |
| 1392 | 3-cyanophenyl | Me | H | F | H | 2,6-dibromo-4-(heptafluoro-n-propylthio)phenyl |
| 1393 | 4-cyanophenyl | Me | H | F | H | 2,6-dibromo-4-(heptafluoro-n-propylthio)phenyl |
| 1394 | 2-nitrophenyl | Me | H | F | H | 2,6-dibromo-4-(heptafluoro-n-propylthio)phenyl |
| 1395 | 3-nitrophenyl | Me | H | F | H | 2,6-dibromo-4-(heptafluoro-n-propylthio)phenyl |
| 1396 | 4-nitrophenyl | Me | H | F | H | 2,6-dibromo-4-(heptafluoro-n-propylthio)phenyl |
| 1397 | 2-trifluoromethyl phenyl | Me | H | F | H | 2,6-dibromo-4-(heptafluoro-n-propylthio)phenyl |
| 1398 | 4-trifluoromethyl phenyl | Me | H | F | H | 2,6-dibromo-4-(heptafluoro-n-propylthio)phenyl |
| 1399 | 4-trifluoromethoxy phenyl | Me | H | F | H | 2,6-dibromo-4-(heptafluoro-n-propylthio)phenyl |
| 1400 | 2,3-difluorophenyl | Me | H | F | H | 2,6-dibromo-4-(heptafluoro-n-propylthio)phenyl |

[Table 3-21]

| Compound Nos. | $Q_1$ | $R_1$ | $R_2$ | $X_1$ | $X_2$ | $Q_2$ |
|---|---|---|---|---|---|---|
| 1401 | 2,4-difluorophenyl | Me | H | F | H | 2,6-dibromo-4-(heptafluoro-n-propylthio)phenyl |
| 1402 | 2,5-difluorophenyl | Me | H | F | H | 2,6-dibromo-4-(heptafluoro-n-propylthio)phenyl |
| 1403 | 2,6-difluorophenyl | Me | H | F | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1404 | 2,4-dichlorophenyl | Me | H | F | H | 2,6-dibromo-4-(heptafluoro-n-propylthio)phenyl |
| 1405 | 2,6-dichlorophenyl | Me | H | F | H | 2,6-dibromo-4-(heptafluoro-n-propylthio)phenyl |
| 1406 | 3,4-dichlorophenyl | Me | H | F | H | 2,6-dibromo-4-(heptafluoro-n-propylthio)phenyl |
| 1407 | 2-chloro-4-nitro phenyl | Me | H | F | H | 2,6-dibromo-4-(heptafluoro-n-propylthio)phenyl |
| 1408 | 2-chloro-4-fluoro phenyl | Me | H | F | H | 2,6-dibromo-4-(heptafluoro-n-propylthio)phenyl |
| 1409 | 2-chloro-6-fluoro phenyl | Me | H | F | H | 2,6-dibromo-4-(heptafluoro-n-propylthio)phenyl |
| 1410 | 4-chloro-2-fluoro phenyl | Me | H | F | H | 2,6-dibromo-4-(heptafluoro-n-propylthio)phenyl |
| 1411 | 4-chloro-2-nitro phenyl | Me | H | F | H | 2,6-dibromo-4-(heptafluoro-n-propylthio)phenyl |
| 1412 | 2,3,6-trifluoro phenyl | Me | H | F | H | 2,6-dibromo-4-(heptafluoro-n-propylthio)phenyl |
| 1413 | pyridine-2-yl | Me | H | F | H | 2,6-dibromo-4-(heptafluoro-n-propylthio)phenyl |
| 1414 | pyridine-3-yl | Me | H | F | H | 2,6-dibromo-4-(heptafluoro-n-propylthio)phenyl |
| 1415 | 2-fluoropyridine-3-yl | Me | H | F | H | 2,6-dibromo-4-(heptafluoro-n-propylthio)phenyl |
| 1416 | 2-chloropyridine-3-yl | Me | H | F | H | 2,6-dibromo-4-(heptafluoro-n-propylthio)phenyl |
| 1417 | 2-chloropyridine-5-yl | Me | H | F | H | 2,6-dibromo-4-(heptafluoro-n-propylthio)phenyl |
| 1418 | 2-methylthio pyridine-3-yl | Me | H | F | H | 2,6-dibromo-4-(heptafluoro-n-propylthio)phenyl |
| 1419 | pyrazine-2-yl | Me | H | F | H | 2,6-dibromo-4-(heptafluoro-n-propylthio)phenyl |
| 1420 | furan-2-yl | Me | H | F | H | 2,6-dibromo-4-(heptafluoro-n-propylthio)phenyl |

[Table 3-22]

| Compound Nos. | $Q_1$ | $R_1$ | $R_2$ | $X_1$ | $X_2$ | $Q_2$ |
|---|---|---|---|---|---|---|
| 1421 | thiophene-2-yl | Me | H | F | H | 2,6-dibromo-4-(heptafluoro-n-propylthio)phenyl |
| 1422 | phenyl | Me | H | F | H | 2, 6-dibromo-4-(heptafluoro-n-propylsulfinyl)phenyl |
| 1423 | 2-methylphenyl | Me | H | F | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1424 | 4-methylphenyl | Me | H | F | H | 2,6-dibromo-4-(heptafluoro-n-propylsulfinyl)phenyl |
| 1425 | 2-fluorophenyl | Me | H | F | H | 2,6-dibromo-4-(heptafluoro-n-propylsulfinyl)phenyl |
| 1426 | 3-fluorophenyl | Me | H | F | H | 2,6-dibromo-4-(heptafluoro-n-propylsulfinyl)phenyl |
| 1427 | 4-fluorophenyl | Me | H | F | H | 2,6-dibromo-4-(heptafluoro-n-propylsulfinyl)phenyl |
| 1428 | 2-chlorophenyl | Me | H | F | H | 2,6-dibromo-4-(heptafluoro-n-propylsulfinyl)phenyl |
| 1429 | 4-chlorophenyl | Me | H | F | H | 2,6-dibromo-4-(heptafluoro-n-propylsulfinyl)phenyl |
| 1430 | 2-bromophenyl | Me | H | F | H | 2,6-dibromo-4-(heptafluoro-n-propylsulfinyl)phenyl |
| 1431 | 2-iodophenyl | Me | H | F | H | 2,6-dibromo-4-(heptafluoro-n-propylsulfinyl)phenyl |
| 1432 | 3-cyanophenyl | Me | H | F | H | 2,6-dibromo-4-(heptafluoro-n-propylsulfinyl)phenyl |
| 1433 | 4-cyanophenyl | Me | H | F | H | 2,6-dibromo-4-(heptafluoro-n-propylsulfinyl)phenyl |
| 1434 | 2-nitrophenyl | Me | H | F | H | 2,6-dibromo-4-(heptafluoro-n-propylsulfinyl)phenyl |
| 1435 | 3-nitrophenyl | Me | H | F | H | 2,6-dibromo-4-(heptafluoro-n-propylsulfinyl)phenyl |
| 1436 | 4-nitrophenyl | Me | H | F | H | 2,6-dibromo-4-(heptafluoro-n-propylsulfinyl)phenyl |
| 1437 | 2-trifluoromethyl phenyl | Me | H | F | H | 2,6-dibromo-4-(heptafluoro-n-propylsulfinyl)phenyl |
| 1438 | 4-trifluoromethyl phenyl | Me | H | F | H | 2,6-dibromo-4-(heptafluoro-n-propylsulfinyl)phenyl |
| 1439 | 4-trifluoromethoxy phenyl | Me | H | F | H | 2,6-dibromo-4-(heptafluoro-n-propylsulfinyl)phenyl |
| 1440 | 2,3-difluorophenyl | Me | H | F | H | 2,6-dibromo-4-(heptafluoro-n-propylsulfinyl)phenyl |

[Table 3-23]

| Compound Nos. | $Q_1$ | $R_1$ | $R_2$ | $X_1$ | $X_2$ | $Q_2$ |
|---|---|---|---|---|---|---|
| 1441 | 2,4-difluorophenyl | Me | H | F | H | 2,6-dibromo-4-(heptafluoro-n-propylsulfinyl)phenyl |
| 1442 | 2,5-difluorophenyl | Me | H | F | H | 2,6-dibromo-4-(heptafluoro-n-propylsulfinyl)phenyl |
| 1443 | 2,6-difluorophenyl | Me | H | F | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1444 | 2,4-dichlorophenyl | Me | H | F | H | 2,6-dibromo-4-(heptafluoro-n-propylsulfinyl)phenyl |
| 1445 | 2,6-dichlorophenyl | Me | H | F | H | 2,6-dibromo-4-(heptafluoro-n-propylsulfinyl)phenyl |
| 1446 | 3,4-dichlorophenyl | Me | H | F | H | 2,6-dibromo-4-(heptafluoro-n-propylsulfinyl)phenyl |
| 1447 | 2-chloro-4-nitro phenyl | Me | H | F | H | 2,6-dibromo-4-(heptafluoro-n-propylsulfinyl)phenyl |
| 1448 | 2-chloro-4-fluoro phenyl | Me | H | F | H | 2,6-dibromo-4-(heptafluoro-n-propylsulfinyl)phenyl |
| 1449 | 2-chloro-6-fluoro phenyl | Me | H | F | H | 2,6-dibromo-4-(heptafluoro-n-propylsulfinyl)phenyl |
| 1450 | 4-chloro-2-fluoro phenyl | Me | H | F | H | 2,6-dibromo-4-(heptafluoro-n-propylsulfinyl)phenyl |
| 1451 | 4-chloro-2-nitro phenyl | Me | H | F | H | 2,6-dibromo-4-(heptafluoro-n-propylsulfinyl)phenyl |
| 1452 | 2,3,6-trifluoro phenyl | Me | H | F | H | 2,6-dibromo-4-(heptafluoro-n-propylsulfinyl)phenyl |
| 1453 | pyridine-2-yl | Me | H | F | H | 2,6-dibromo-4-(heptafluoro-n-propylsulfinyl)phenyl |
| 1454 | pyridine-3-yl | Me | H | F | H | 2,6-dibromo-4-(heptafluoro-n-propylsulfinyl)phenyl |
| 1455 | 2-fluoropyridine-3-yl | Me | H | F | H | 2,6-dibromo-4-(heptafluoro-n-propylsulfinyl)phenyl |
| 1456 | 2-chloropyridine-3-yl | Me | H | F | H | 2,6-dibromo-4-(heptafluoro-n-propylsulfinyl)phenyl |
| 1457 | 2-chloropyridine-5-yl | Me | H | F | H | 2,6-dibromo-4-(heptafluoro-n-propylsulfinyl)phenyl |
| 1458 | 2-methylthio pyridine-3-yl | Me | H | F | H | 2,6-dibromo-4-(heptafluoro-n-propylsulfinyl)phenyl |
| 1459 | pyrazine-2-yl | Me | H | F | H | 2,6-dibromo-4-(heptafluoro-n-propylsulfinyl)phenyl |
| 1460 | furan-2-yl | Me | H | F | H | 2,6-dibromo-4-(heptafluoro-n-propylsulfinyl)phenyl |

[Table 3-24]

| Compound Nos. | $Q_1$ | $R_1$ | $R_2$ | $X_1$ | $X_2$ | $Q_2$ |
|---|---|---|---|---|---|---|
| 1461 | thiophene-2-yl | Me | H | F | H | 2,6-dibromo-4-(heptafluoro-n-propylsulfinyl) phenyl |
| 1462 | phenyl | Et | H | F | H | 2,6-dimethyl-4-(heptafluoro isopropyl)phenyl |
| 1463 | phenyl | Me | H | H | F | 2,6-dimethyl-4-(heptafluoro isopropyl)phenyl |
| 1464 | 4-nitrophenyl | Me | H | H | F | 2,6-dimethyl-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1465 | 4-cyanophenyl | Me | H | H | F | 2,6-dimethyl-4-(heptafluoro isopropyl)phenyl |
| 1466 | phenyl | Me | H | H | F | 2-bromo-4-(heptafluoroisopropyl)-6-(methylsulfonyl)phenyl |
| 1467 | 4-nitrophenyl | Me | H | H | F | 2-bromo-4-(heptafluoroisopropyl)-6-(methylsulfonyl)phenyl |
| 1468 | 4-cyanophenyl | Me | H | H | F | 2-bromo-4-(heptafluoroisopropyl)-6-(methylsulfonyl)phenyl |
| 1469 | phenyl | Me | H | H | F | 2-n-propyl-6-iodo-4-(heptafluoro isopropyl) phenyl |
| 1470 | 4-nitrophenyl | Me | H | H | F | 2-n-propyl-6-iodo-4-(heptafluoro isopropyl) phenyl |
| 1471 | 4-cyanophenyl | Me | H | H | F | 2-n-propyl-6-iodo-4-(heptafluoro isopropyl) phenyl |
| 1472 | phenyl | Me | H | H | F | 2,6-dibromo-4-(heptafluoro-n-propylthio)phenyl |
| 1473 | 4-nitrophenyl | Me | H | H | F | 2,6-dibromo-4-(heptafluoro-n-propylthio)phenyl |
| 1474 | 4-cyanophenyl | Me | H | H | F | 2,6-dibromo-4-(heptafluoro-n-propylthio)phenyl |
| 1475 | phenyl | Me | H | H | F | 2,6-dibromo-4-(heptafluoro-n-propylsulfonyl) phenyl |
| 1476 | 4-nitrophenyl | Me | H | H | F | 2,6-dibromo-4-(heptafluoro-n-propylsulfonyl) phenyl |
| 1477 | 4-cyanophenyl | Me | H | H | F | 2,6-dibromo-4-(heptafluoro-n-propylsulfonyl) phenyl |
| 1478 | phenyl | H | Me | H | H | 2,6-dimethyl-4-(heptafluoro isopropyl)phenyl |
| 1479 | phenyl | H | Me | H | H | 2-bromo-4-(heptafluoroisopropyl)--methyphenyl |
| 1480 | phenyl | H | Me | H | H | 2,6-dibromo-4-(heptafluoro-n-propylthio)phenyl |

[Table 3-25]

| Compound Nos. | $Q_1$ | $R_1$ | $R_2$ | $X_1$ | $X_2$ | $Q_2$ |
|---|---|---|---|---|---|---|
| 1481 | 2-fluorophenyl | H | Me | H | H | 2,6-dibromo-4-(heptafluoro-n-propylthio) phenyl |
| 1482 | phenyl | H | Et | H | H | 2,6-dimethyl-4-(heptafluoro isopropyl)phenyl |
| 1483 | phenyl | H | i-Pr | H | H | 2,6-dimethyl-4-(heptafluoro isopropyl)phenyl |
| 1484 | phenyl | H | acetyl | H | H | 2,6-dimethyl-4-(heptafluoro isopropyl)phenyl |
| 1485 | phenyl | H | Me | F | H | 2,6-dimethyl-4-(heptafluoro isopropyl)phenyl |
| 1486 | 2-fluorophenyl | H | Me | F | H | 2,6-dimethyl-4-(heptafluoro isopropyl)phenyl |
| 1487 | phenyl | Me | Me | H | H | 2,6-dimethyl-4-(heptafluoro isopropyl)phenyl |
| 1488 | 2-methylphenyl | Me | Me | H | H | 2,6-dimethyl-4-(heptafluoro isopropyl)phenyl |
| 1489 | 4-methylphenyl | Me | Me | H | H | 2,6-dimethyl-4-(heptafluoro isopropyl)phenyl |
| 1490 | 2-fluorophenyl | Me | Me | H | H | 2,6-dimethyl-4-(heptafluoro isopropyl)phenyl |
| 1491 | 3-fluorophenyl | Me | Me | H | H | 2,6-dimethyl-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1492 | 4-fluorophenyl | Me | Me | H | H | 2,6-dimethyl-4-(heptafluoro isopropyl)phenyl |
| 1493 | 2-chlorophenyl | Me | Me | H | H | 2,6-dimethyl-4-(heptafluoro isopropyl)phenyl |
| 1494 | 4-chlorophenyl | Me | Me | H | H | 2,6-dimethyl-4-(heptafluoro isopropyl)phenyl |
| 1495 | 2-bromophenyl | Me | Me | H | H | 2,6-dimethyl-4-(heptafluoro isopropyl)phenyl |
| 1496 | 2-iodophenyl | Me | Me | H | H | 2,6-dimethyl-4-(heptafluoro isopropyl)phenyl |
| 1497 | 3-cyanophenyl | Me | Me | H | H | 2,6-dimethyl-4-(heptafluoro isopropyl)phenyl |
| 1498 | 4-cyanophenyl | Me | Me | H | H | 2,6-dimethyl-4-(heptafluoro isopropyl)phenyl |
| 1499 | 2-nitrophenyl | Me | Me | H | H | 2,6-dimethyl-4-(heptafluoro isopropyl)phenyl |
| 1500 | 3-nitrophenyl | Me | Me | H | H | 2,6-dimethyl-4-(heptafluoro isopropyl)phenyl |

[Table 3-26]

| Compound Nos. | $Q_1$ | $R_1$ | $R_2$ | $X_1$ | $X_2$ | $Q_2$ |
|---|---|---|---|---|---|---|
| 1501 | 4-nitrophenyl | Me | Me | H | H | 2,6-dimethyl-4-(heptafluoro isopropyl) phenyl |
| 1502 | 2-trifluoromethyl phenyl | Me | Me | H | H | 2,6-dimethyl-4-(heptafluoro isopropyl) phenyl |
| 1503 | 4-trifluoromethyl phenyl | Me | Me | H | H | 2,6-dimethyl-4-(heptafluoro isopropyl) phenyl |
| 1504 | 4-trifluoromethoxy phenyl | Me | Me | H | H | 2,6-dimethyl-9-(heptafluoro isopropyl) phenyl |
| 1505 | 2,3-difluorophenyl | Me | Me | H | H | 2,6-dimethyl-9-(heptafluoro isopropyl) phenyl |
| 1506 | 2,4-difluorophenyl | Me | Me | H | H | 2,6-dimethyl-4-(heptafluoro isopropyl) phenyl |
| 1507 | 2,5-difluorophenyl | Me | Me | H | H | 2,6-dimethyl-4-(heptafluoro isopropyl) phenyl |
| 1508 | 2,6-difluorophenyl | Me | Me | H | H | 2,6-dimethyl-4-(heptafluoro isopropyl) phenyl |
| 1509 | 2,4-dichlorophenyl | Me | Me | H | H | 2,6-dimethyl-4-(heptafluoro isopropyl) phenyl |
| 1510 | 2,6-dichlorophenyl | Me | Me | H | H | 2,6-dimethyl-4-(heptafluoro isopropyl) phenyl |
| 1511 | 3,4-dichlorophenyl | Me | Me | H | H | 2,6-dimethyl-4-(heptafluoro isopropyl) phenyl |
| 1512 | 2-chloro-4-nitro phenyl | Me | Me | H | H | 2,6-dimethyl-4-(heptafluoro isopropyl) phenyl |
| 1513 | 2-chloro-4-fluoro phenyl | Me | Me | H | H | 2,6-dimethyl-4-(heptafluoro isopropyl) phenyl |
| 1514 | 2-chloro-6-fluoro phenyl | Me | Me | H | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1515 | 4-chloro-2-fluoro phenyl | Me | Me | H | H | 2,6-dimethyl-4-(heptafluoro isopropyl) phenyl |
| 1516 | 4-chloro-2-nitro phenyl | Me | Me | H | H | 2,6-dimethyl-4-(heptafluoro isopropyl) phenyl |
| 1517 | 2,3,6-trifluoro phenyl | Me | Me | H | H | 2,6-dimethyl-4-(heptafluoro isopropyl) phenyl |
| 1518 | pyridine-2-yl | Me | Me | H | H | 2,6-dimethyl-4-(heptafluoro isopropyl) phenyl |
| 1519 | pyridine-3-yl | Me | Me | H | H | 2,6-dimethyl-4-(heptafluoro isopropyl) phenyl |
| 1520 | 2-fluoropyridine-3-yl | Me | Me | H | H | 2,6-dimethyl-4-(heptafluoro isopropyl) phenyl |

[Table 3-27]

| Compound Nos. | $Q_1$ | $R_1$ | $R_2$ | $X_1$ | $X_2$ | $Q_2$ |
|---|---|---|---|---|---|---|
| 1521 | 2-chloropyridine-3-yl | Me | Me | H | H | 2,6-dimethyl-4-(heptafluoro isopropyl) phenyl |
| 1522 | 2-chloropyridine-5-yl | Me | Me | H | H | 2,6-dimethyl-4-(heptafluoro isopropyl) phenyl |
| 1523 | 2-methylthio pyridine-3-yl | Me | Me | H | H | 2,6-dimethyl-4-(heptafluoro isopropyl) phenyl |
| 1524 | pyrazine-2-yl | Me | Me | H | H | 2,6-dimethyl-4-(heptafluoro isopropyl) phenyl |
| 1525 | furan-2-yl | Me | Me | H | H | 2,6-dimethyl-4-(heptafluoro isopropyl) phenyl |
| 1526 , | thiophene-2-yl | Me | Me | H | H | 2,6-dimethyl-4-(heptafluoro isopropyl) phenyl |
| 1527 | phenyl | Me | Me | H | H | 2-bromo-4-(heptafluoroisopropyl)-6-(methylsulfonyl)phenyl |
| 1528 | 2-methylphenyl | Me | Me | H | H | 2-bromo-4-(heptafluoroisopropyl)-6-(methylsulfonyl)phenyl |
| 1529 | 4-methylphenyl | Me | Me | H | H | 2-bromo-4-(heptafluoroisopropyl)-6-(methylsulfonyl)phenyl |
| 1530 | 2-fluorophenyl | Me | Me | H | H | 2-bromo-4-(heptafluoroisopropyl)-6-(methylsulfonyl)phenyl |
| 1531 | 3-fluorophenyl | Me | Me | H | H | 2-bromo-4-(heptafluoroisopropyl)-6-(methylsulfonyl)phenyl |
| 1532 | 4-fluorophenyl | Me | Me | H | H | 2-bromo-4-(heptafluoroisopropyl)-6-(methylsulfonyl)phenyl |
| 1533 | 2-chlorophenyl | Me | Me | H | H | 2-bromo-4-(heptafluoroisopropyl)-6-(methylsulfonyl)phenyl |
| 1534 | 4-chlorophenyl | Me | Me | H | H | 2-bromo-4-(heptafluoroisopropyl)-6-(methylsulfonyl)phenyl |

(continued)

| Compound Nos. | $Q_1$ | $R_1$ | $R_2$ | $X_1$ | $X_2$ | $Q_2$ |
|---|---|---|---|---|---|---|
| 1535 | 2-bromophenyl | Me | Me | H | H | 2-bromo-4-(heptafluoroisopropyl)-6-(methylsulfonyl)phenyl |
| 1536 | 2-iodophenyl | Me | Me | H | H | 2-bromo-4-(heptafluoroisopropyl)-6-(methylsulfonyl)phenyl |
| 1537 | 3-cyanophenyl | Me | Me | H | H | 2-bromo-4-(heptafluoroisopropyl)-6-(methylsulfonyl)phenyl |
| 1538 | 4-cyanophenyl | Me | Me | H | H | 2-bromo-4-(heptafluoroisopropyl)-6-(methylsulfonyl)phenyl |
| 1539 | 2-nitrophenyl | Me | Me | H | H | 2-bromo-4-(heptafluoroisopropyl)-6-(methylsulfonyl)phenyl |
| 1540 | 3-nitrophenyl | Me | Me | H | H | 2-bromo-4-(heptafluoroisopropyl)-6-(methylsulfonyl)phenyl |

[Table 3-28]

| Compound Nos. | $Q_1$ | $R_1$ | $R_2$ | $X_1$ | $X_2$ | $Q_2$ |
|---|---|---|---|---|---|---|
| 1541 | 4-nitrophenyl | Me | Me | H | H | 2-bromo-4-(heptafluoroisopropyl)-6-(methylsulfonyl)phenyl |
| 1542 | 2-trifluoromethyl phenyl | Me | Me | H | H | 2-bromo-4-(heptafluoroisopropyl)-6-(methylsulfonyl)phenyl |
| 1543 | 4-trifluoromethyl phenyl | Me | Me | H | H | 2-bromo-4-(heptafluoroisopropyl)-6-(methylsulfonyl)phenyl |
| 1544 | 4-trifluoromethoxy phenyl | Me | Me | H | H | 2-bromo-4-(heptafluoroisopropyl)-6-(methylsulfonyl)phenyl |
| 1545 | 2,3-difluorophenyl | Me | Me | H | H | 2-bromo-4-(heptafluoroisopropyl)-6-(methylsulfonyl)phenyl |
| 1546 | 2,4-difluorophenyl | Me | Me | H | H | 2-bromo-4-(heptafluoroisopropyl)-6-(methylsulfonyl)phenyl |
| 1547 | 2,5-difluorophenyl | Me | Me | H | H | 2-bromo-4-(heptafluoroisopropyl)-6-(methylsulfonyl)phenyl |
| 1548 | 2,6-difluorophenyl | Me | Me | H | H | 2-bromo-4-(heptafluoroisopropyl)-6-(methylsulfonyl)phenyl |
| 1549 | 2,4-dichlorophenyl | Me | Me | H | H | 2-bromo-4-(heptafluoroisopropyl)-6-(methylsulfonyl)phenyl |
| 1550 | 2,6-dichlorophenyl | Me | Me | H | H | 2-bromo-4-(heptafluoroisopropyl)-6-(methylsulfonyl)phenyl |
| 1551 | 3,4-dichlorophenyl | Me | Me | H | H | 2-bromo-4-(heptafluoroisopropyl)-6-(methylsulfonyl)phenyl |
| 1552 | 2-chloro-4-nitro phenyl | Me | Me | H | H | 2-bromo-4-(heptafluoroisopropyl)-6-(methylsulfonyl)phenyl |
| 1553 | 2-chloro-4-fluoro phenyl | Me | Me | H | H | 2-bromo-4-(heptafluoroisopropyl)-6-(methylsulfonyl)phenyl |
| 1554 | 2-chloro-6-fluoro phenyl | Me | Me | H | H | 2-bromo-4-(heptafluoroisopropyl)-6-(methylsulfonyl)phenyl |

(continued)

| Compound Nos. | $Q_1$ | $R_1$ | $R_2$ | $X_1$ | $X_2$ | $Q_2$ |
|---|---|---|---|---|---|---|
| 1555 | 4-chloro-2-fluoro phenyl | Me | Me | H | H | 2-bromo-4-(heptafluoroisopropyl)-6-(methylsulfonyl)phenyl |
| 1556 | 4-chloro-2-nitro phenyl | Me | Me | H | H | 2-bromo-4-(heptafluoroisopropyl)-6-(methylsulfonyl)phenyl |
| 1557 | 2,3,6-trifluoro phenyl | Me | Me | H | H | 2-bromo-4-(heptafluoroisopropyl)-6-(methylsulfonyl)phenyl |
| 1558 | pyridine-2-yl | Me | Me | H | H | 2-bromo-4-(heptafluoroisopropyl)-6-(methylsulfonyl)phenyl |
| 1559 | pyridine-3-yl | Me | Me | H | H | 2-bromo-4-(heptafluoroisopropyl)-6-(methylsulfonyl)phenyl |
| 1560 | 2-fluoropyridine-3-yl | Me | Me | H | H | 2-bromo-4-(heptafluoroisopropyl)-6-(methylsulfonyl)phenyl |

[Table 3-29]

| Compound Nos. | $Q_1$ | $R_1$ | $R_2$ | $X_1$ | $X_2$ | $Q_2$ |
|---|---|---|---|---|---|---|
| 1561 | 2-chloropyridine-3-yl | Me | Me | H | H | 2-bromo-4-(heptafluoroisopropyl)-6-(methylsulfonyl)phenyl |
| 1562 | 2-chloropyridine-5-yl | Me | Me | H | H | 2-bromo-4-(heptafluoroisopropyl)-6-(methylsulfonyl)phenyl |
| 1563 | 2-methylthio pyridine-3-yl | Me | Me | H | H | 2-bromo-4-(heptafluoroisopropyl)-6-(methylsulfonyl)phenyl |
| 1564 | pyrazine-2-yl | Me | Me | H | H | 2-bromo-4-(heptafluoroisopropyl)-6-(methylsulfonyl)phenyl |
| 1565 | furan-2-yl | Me | Me | H | H | 2-bromo-4-(heptafluoroisopropyl)-6-(methylsulfonyl)phenyl |
| 1566 | thiophene-2-yl | Me | Me | H | H | 2-bromo-4-(heptafluoroisopropyl)-6-(methylsulfonyl)phenyl |
| 1567 | phenyl | Me | Me | H | H | 2-n-propyl-6-iodo-4-(heptafluoro isopropyl)phenyl |
| 1568 | 2-methylphenyl | Me | Me | H | H | 2-n-propyl-6-iodo-4-(heptafluoro isopropyl)phenyl |
| 1569 | 4-methylphenyl | Me | Me | H | H | 2-n-propyl-6-iodo-4-(heptafluoro isopropyl)phenyl |
| 1570 | 2-fluorophenyl | Me | Me | H | H | 2-n-propyl-6-iodo-4-(heptafluoro isopropyl)phenyl |
| 1571 | 3-fluorophenyl | Me | Me | H | H | 2-n-propyl-6-iodo-4-(heptafluoro isopropyl)phenyl |
| 1572 | 4-fluorophenyl | Me | Me | H | H | 2-n-propyl-6-iodo-4-(heptafluoro isopropyl)phenyl |
| 1573 | 2-chlorophenyl | Me | Me | H | H | 2-n-propyl-6-iodo-4-(heptafluoro isopropyl)phenyl |
| 1574 | 4-chlorophenyl | Me | Me | H | H | 2-n-propyl-6-iodo-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1575 | 2-bromophenyl | Me | Me | H | H | 2-n-propyl-6-iodo-4-(heptafluoro isopropyl)phenyl |
| 1576 | 2-iodophenyl | Me | Me | H | H | 2-n-propyl-6-iodo-4-(heptafluoro isopropyl)phenyl |
| 1577 | 3-cyanophenyl | Me | Me | H | H | 2-n-propyl-6-iodo-4-(heptafluoro isopropyl)phenyl |
| 1578 | 4-cyanophenyl | Me | Me | H | H | 2-n-propyl-6-iodo-4-(heptafluoro isopropyl)phenyl |
| 1579 | 2-nitrophenyl | Me | Me | H | H | 2-n-propyl-6-iodo-4-(heptafluoro isopropyl)phenyl |
| 1580 | 3-nitrophenyl | Me | Me | H | H | 2-n-propyl-6-iodo-4-(heptafluoro isopropyl)phenyl |

[Table 3-30]

| Compound Nos. | $Q_1$ | $R_1$ | $R_2$ | $X_1$ | $X_2$ | $Q_2$ |
|---|---|---|---|---|---|---|
| 1581 | 4-nitrophenyl | Me | Me | H | H | 2-n-propyl-6-iodo-4-(heptafluoro isopropyl) phenyl |
| 1582 | 2-trifluoromethyl phenyl | Me | Me | H | H | 2-n-propyl-6-iodo-4-(heptafluoro isopropyl)phenyl |
| 1583 | 4-trifluoromethyl phenyl | Me | Me | H | H | 2-n-propyl-6-iodo-4-(heptafluoro isopropyl)phenyl |
| 1584 | 4-trifluoromethoxy phenyl | Me | Me | H | H | 2-n-propyl-6-iodo-4-(heptafluoro isopropyl)phenyl |
| 1585 | 2,3-difluorophenyl | Me | Me | H | H | 2-n-propyl-6-iodo-4-(heptafluoro isopropyl)phenyl |
| 1586 | 2,4-difluorophenyl | Me | Me | H | H | 2-n-propyl-6-iodo-4-(heptafluoro isopropyl)phenyl |
| 1587 | 2,5-difluorophenyl | Me | Me | H | H | 2-n-propyl-6-iodo-4-(heptafluoro isopropyl)phenyl |
| 1588 | 2,6-difluorophenyl | Me | Me | H | H | 2-n-propyl-6-iodo-4-(heptafluoro isopropyl)phenyl |
| 1589 | 2,4-dichlorophenyl | Me | Me | H | H | 2-n-propyl-6-iodo-4-(heptafluoro isopropyl)phenyl |
| 1590 | 2,6-dichlorophenyl | Me | Me | H | H | 2-n-propyl-6-iodo-4-(heptafluoro isopropyl)phenyl |
| 1591 | 3,4-dichlorophenyl | Me | Me | H | H | 2-n-propyl-6-iodo-4-(heptafluoro isopropyl)phenyl |
| 1592 | 2-chloro-4-nitro phenyl | Me | Me | H | H | 2-n-propyl-6-iodo-4-(heptafluoro isopropyl)phenyl |
| 1593 | 2-chloro-4-fluoro phenyl | Me | Me | H | H | 2-n-propyl-6-iodo-4-(heptafluoro isopropyl)phenyl |
| 1594 | 2-chloro-6-fluoro phenyl | Me | Me | H | H | 2-n-propyl-6-iodo-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1595 | 4-chloro-2-fluoro phenyl | Me | Me | H | H | 2-n-propyl-6-iodo-4-(heptafluoro isopropyl)phenyl |
| 1596 | 4-chloro-2-nitro phenyl | Me | Me | H | H | 2-n-propyl-6-iodo-4-(heptafluoro isopropyl)phenyl |
| 1597 | 2,3,6-trifluoro phenyl | Me | Me | H | H | 2-n-propyl-6-iodo-4-(heptafluoro isopropyl)phenyl |
| 1598 | pyridine-2-yl | Me | Me | H | H | 2-n-propyl-6-iodo-4-(heptafluoro isopropyl)phenyl |
| 1599 | pyridine-3-yl | Me | Me | H | H | 2-n-propyl-6-iodo-4-(heptafluoro isopropyl)phenyl |
| 1600 | 2-fluoropyridine-3-yl | Me | Me | H | H | 2-n-propyl-6-iodo-4-(heptafluoro isopropyl)phenyl |

[Table 3-31]

| Compound Nos. | $Q_1$ | $R_1$ | $R_2$ | $X_1$ | $X_2$ | $Q_2$ |
|---|---|---|---|---|---|---|
| 1601 | 2-chloropyridine-3-yl | Me | Me | H | H | 2-n-propyl-6-iodo-4-(heptafluoro isopropyl)phenyl |
| 1602 | 2-chloropyridine-5-yl | Me | Me | H | H | 2-n-propyl-6-iodo-4-(heptafluoro isopropyl)phenyl |
| 1603 | 2-methylthio pyridine-3-yl | Me | Me | H | H | 2-n-propyl-6-iodo-4-(heptafluoro isopropyl)phenyl |
| 1604 | pyrazine-2-yl | Me | Me | H | H | 2-n-propyl-6-iodo-4-(heptafluoro isopropyl)phenyl |
| 1605 | furan-2-yl | Me | Me | H | H | 2-n-propyl-6-iodo-4-(heptafluoro isopropyl)phenyl |
| 1606 | thiophene-2-yl | Me | Me | H | H | 2-n-propyl-6-iodo-4-(heptafluoro isopropyl)phenyl |
| 1607 | phenyl | Me | Me | H | H | 2,6-dibromo-4-(heptafluoro-n-propylthio)phenyl |
| 1608 | 2-methylphenyl | Me | Me | H | H | 2,6-dibromo-4-(heptafluoro-n-propylthio)phenyl |
| 1609 | 3-methylphenyl | Me | Me | H | H | 2,6-dibromo-4-(heptafluoro-n-propylthio)phenyl |
| 1610 | 4-methylphenyl | Me | Me | H | H | 2,6-dibromo-4-(heptafluoro-n-propylthio)phenyl |
| 1611 | 2-nitrophenyl | Me | Me | H | H | 2,6-dibromo-4-(heptafluoro-n-propylthio)phenyl |
| 1612 | 3-nitrophenyl | Me | Me | H | H | 2,6-dibromo-4-(heptafluoro-n-propylthio)phenyl |
| 1613 | 4-nitrophenyl | Me | Me | H | H | 2,6-dibromo-4-(heptafluoro-n-propylthio)phenyl |
| 1614 | 2-cyanophenyl | Me | Me | H | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1615 | 3-cyanophenyl | Me | Me | H | H | 2,6-dibromo-4-(heptafluoro-n-propylthio)phenyl |
| 1616 | 4-cyanophenyl | Me | Me | H | H | 2,6-dibromo-4-(heptafluoro-n-propylthio)phenyl |
| 1617 | 2-fluorophenyl | Me | Me | H | H | 2,6-dibromo-4-(heptafluoro-n-propylthio)phenyl |
| 1618 | 3-fluorophenyl | Me | Me | H | H | 2,6-dibromo-4-(heptafluoro-n-propylthio)phenyl |
| 1619 | 4-fluorophenyl | Me | Me | H | H | 2,6-dibromo-4-(heptafluoro-n-propylthio)phenyl |
| 1620 | 2-chlorophenyl | Me | Me | H | H | 2,6-dibromo-4-(heptafluoro-n-propylthio)phenyl |

[Table 3-32]

| Compound Nos. | $Q_1$ | $R_1$ | $R_2$ | $X_1$ | $X_2$ | $Q_2$ |
|---|---|---|---|---|---|---|
| 1621 | 4-chlorophenyl | Me | Me | H | H | 2,6-dibromo-4-(heptafluoro-n-propylthio)phenyl |
| 1622 | 2-bromophenyl | Me | Me | H | H | 2,6-dibromo-4-(heptafluoro-n-propylthio)phenyl |
| 1623 | 2-iodophenyl | Me | Me | H | H | 2,6-dibromo-4-(heptafluoro-n-propylthio)phenyl |
| 1624 | 2-trifluoromethyl phenyl | Me | Me | H | H | 2,6-dibromo-4-(heptafluoro-n-propylthio)phenyl |
| 1625 | 4-trifluoromethyl phenyl | Me | Me | H | H | 2,6-dibromo-4-(heptafluoro-n-propylthio)phenyl |
| 1626 | 4-trifluoromethoxy phenyl | Me | Me | H | H | 2,6-dibromo-4-(heptafluoro-n-propylthio)phenyl |
| 1627 | 2,3-difluorophenyl | Me | Me | H | H | 2,6-dibromo-4-(heptafluoro-n-propylthio)phenyl |
| 1628 | 2,4-difluorophenyl | Me | Me | H | H | 2,6-dibromo-4-(heptafluoro-n-propylthio)phenyl |
| 1629 | 2,5-difluorophenyl | Me | Me | H | H | 2,6-dibromo-4-(heptafluoro-n-propylthio)phenyl |
| 1630 | 2,6-difluorophenyl | Me | Me | H | H | 2,6-dibromo-4-(heptafluoro-n-propylthio)phenyl |
| 1631 | 2,4-dichlorophenyl | Me | Me | H | H | 2,6-dibromo-4-(heptafluoro-n-propylthio)phenyl |
| 1632 | 2,6-dichlorophenyl | Me | Me | H | H | 2,6-dibromo-4-(heptafluoro-n-propylthio)phenyl |
| 1633 | 3,4-dichlorophenyl | Me | Me | H | H | 2,6-dibromo-4-(heptafluoro-n-propylthio)phenyl |
| 1634 | 2-fluoro-4-nitro phenyl | Me | Me | H | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1635 | 4-fluoro-2-nitro phenyl | Me | Me | H | H | 2,6-dibromo-4-(heptafluoro-n-propylthio)phenyl |
| 1636 | 2-chloro-4-fluoro phenyl | Me | Me | H | H | 2,6-dibromo-4-(heptafluoro-n-propylthio)phenyl |
| 1637 | 4-chloro-2-fluoro phenyl | Me | Me | H | H | 2,6-dibromo-4-(heptafluoro-n-propylthio)phenyl |
| 1638 | 2-chloro-6-fluoro phenyl | Me | Me | H | H | 2,6-dibromo-4-(heptafluoro-n-propylthio)phenyl |
| 1639 | 2-chloro-4-nitro phenyl | Me | Me | H | H | 2,6-dibromo-4-(heptafluoro-n-propylthio)phenyl |
| 1640 | 4-chloro-2-nitro phenyl | Me | Me | H | H | 2,6-dibromo-4-(heptafluoro-n-propylthio)phenyl |

[Table 3-33]

| Compound Nos. | $Q_1$ | $R_1$ | $R_2$ | $X_1$ | $X_2$ | $Q_2$ |
|---|---|---|---|---|---|---|
| 1641 | 2,3,6-trifluoro phenyl | Me | Me | H | H | 2,6-dibromo-4-(heptafluoro-n-propylthio)phenyl |
| 1642 | pyridine-2-yl | Me | Me | H | H | 2,6-dibromo-4-(heptafluoro-n-propylthio)phenyl |
| 1643 | pyridine-3-yl | Me | Me | H | H | 2,6-dibromo-4-(heptafluoro-n-propylthio)phenyl |
| 1644 | 2-fluoropyridine-3-yl | Me | Me | H | H | 2,6-dibromo-4-(heptafluoro-n-propylthio)phenyl |
| 1645 | 2-chloropyridine-3-yl | Me | Me | H | H | 2,6-dibromo-4-(heptafluoro-n-propylthio)phenyl |
| 1646 | 2-chloropyridine-5-yl | Me | Me | H | H | 2,6-dibromo-4-(heptafluoro-n-propylthio)phenyl |
| 1647 | 2-methylthio pyridine-3-yl | Me | Me | H | H | 2,6-dibromo-4-(heptafluoro-n-propylthio)phenyl |
| 1648 | pyrazine-2-yl | Me | Me | H | H | 2,6-dibromo-4-(heptafluoro-n-propylthio)phenyl |
| 1649 | furan-2-yl | Me | Me | H | H | 2,6-dibromo-4-(heptafluoro-n-propylthio)phenyl |
| 1650 | furan-3-yl | Me | Me | H | H | 2,6-dibromo-4-(heptafluoro-n-propylthio)phenyl |
| 1651 | 2-tetrahydrofuranyl | Me | Me | H | H | 2,6-dibromo-4-(heptafluoro-n-propylthio)phenyl |
| 1652 | benzofuran-2-yl | Me | Me | H | H | 2,6-dibromo-4-(heptafluoro-n-propylthio)phenyl |
| 1653 | thiophene-2-yl | Me | Me | H | H | 2,6-dibromo-4-(heptafluoro-n-propylthio)phenyl |
| 1654 | 3,4-dinitrophenyl | Me | Me | H | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1655 | 3-methoxy-4-nitro phenyl | Me | Me | H | H | 2,6-dibromo-4-(heptafluoro-n-propylthio)phenyl |
| 1656 | 2,3,4-trifluoro phenyl | Me | Me | H | H | 2,6-dibromo-4-(heptafluoro-n-propylthio)phenyl |
| 1657 | phenyl | Me | Me | H | H | 2,6-dibromo-4-(heptafluoro-n-propylsulfinyl)phenyl |
| 1658 | 2-methylphenyl | Me | Me | H | H | 2,6-dibromo-4-(heptafluoro-n-propylsulfinyl)phenyl |
| 1659 | 4-methylphenyl | Me | Me | H | H | 2,6-dibromo-4-(heptafluoro-n-propylsulfinyl)phenyl |
| 1660 | 2-fluorophenyl | Me | Me | H | H | 2,6-dibromo-4-(heptafluoro-n-propylsulfinyl)phenyl |

[Table 3-34]

| Compound Nos. | $Q_1$ | $R_1$ | $R_2$ | $X_1$ | $X_2$ | $Q_2$ |
|---|---|---|---|---|---|---|
| 1661 | 3-fluorophenyl | Me | Me | H | H | 2,6-dibromo-4-(heptafluoro-n-propylsulfinyl)phenyl |
| 1662 | 4-fluorophenyl | Me | Me | H | H | 2,6-dibromo-4-(heptafluoro-n-propylsulfinyl)phenyl |
| 1663 | 2-chlorophenyl | Me | Me | H | H | 2,6-dibromo-4-(heptafluoro-n-propylsulfinyl)phenyl |
| 1664 | 4-chlorophenyl | Me | Me | H | H | 2,6-dibromo-4-(heptafluoro-n-propylsulfinyl)phenyl |
| 1665 | 2-bromophenyl | Me | Me | H | H | 2,6-dibromo-4-(heptafluoro-n-propylsulfinyl)phenyl |
| 1666 | 2-iodophenyl | Me | Me | H | H | 2,6-dibromo-4-(heptafluoro-n-propylsulfinyl)phenyl |
| 1667 | 3-cyanophenyl | Me | Me | H | H | 2,6-dibromo-4-(heptafluoro-n-propylsulfinyl)phenyl |
| 1668 | 4-cyanophenyl | Me | Me | H | H | 2,6-dibromo-4-(heptafluoro-n-propylsulfinyl)phenyl |
| 1669 | 2-nitrophenyl | Me | Me | H | H | 2,6-dibromo-4-(heptafluoro-n-propylsulfinyl)phenyl |
| 1670 | 3-nitrophenyl | Me | Me | H | H | 2,6-dibromo-4-(heptafluoro-n-propylsulfinyl)phenyl |
| 1671 | 4-nitrophenyl | Me | Me | H | H | 2,6-dibromo-4-(heptafluoro-n-propylsulfinyl)phenyl |
| 1672 | 2-trifluoromethyl phenyl | Me | Me | H | H | 2,6-dibromo-4-(heptafluoro-n-propylsulfinyl)phenyl |
| 1673 | 4-trifluoromethyl phenyl | Me | Me | H | H | 2,6-dibromo-4-(heptafluoro-n-propylsulfinyl)phenyl |
| 1674 | 4-trifluoromethoxy phenyl | Me | Me | H | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1675 | 2,3-difluorophenyl | Me | Me | H | H | 2,6-dibromo-9-(heptafluoro-n-propylsulfinyl)phenyl |
| 1676 | 2,4-difluorophenyl | Me | Me | H | H | 2,6-dibromo-4-(heptafluoro-n-propylsulfinyl)phenyl |
| 1677 | 2,5-difluorophenyl | Me | Me | H | H | 2,6-dibromo-4-(heptafluoro-n-propylsulfinyl)phenyl |
| 1678 | 2,6-difluorophenyl | Me | Me | H | H | 2,6-dibromo-4-(heptafluoro-n-propylsulfinyl)phenyl |
| 1679 | 2,4-dichlorophenyl | Me | Me | H | H | 2,6-dibromo-4-(heptafluoro-n-propylsulfinyl)phenyl |
| 1680 | 2,6-dichlorophenyl | Me | Me | H | H | 2,6-dibromo-4-(heptafluoro-n-propylsulfinyl)phenyl |

[Table 3-35]

| Compound Nos. | $Q_1$ | $R_1$ | $R_2$ | $X_1$ | $X_2$ | $Q_2$ |
|---|---|---|---|---|---|---|
| 1681 | 3,4-dichlorophenyl | Me | Me | H | H | 2,6-dibromo-4-(heptafluoro-n-propylsulfinyl)phenyl |
| 1682 | 2-chloro-4-nitro phenyl | Me | Me | H | H | 2,6-dibromo-4-(heptafluoro-n-propylsulfinyl)phenyl |
| 1683 | 2-chloro-4-fluoro phenyl | Me | Me | H | H | 2,6-dibromo-4-(heptafluoro-n-propylsulfinyl)phenyl |
| 1684 | 2-chloro-6-fluoro phenyl | Me | Me | H | H | 2,6-dibromo-4-(heptafluoro-n-propylsulfinyl)phenyl |
| 1685 | 4-chloro-2-fluoro phenyl | Me | Me | H | H | 2,6-dibromo-4-(heptafluoro-n-propylsulfinyl)phenyl |
| 1686 | 4-chloro-2-nitro phenyl | Me | Me | H | H | 2,6-dibromo-4-(heptafluoro-n-propylsulfinyl)phenyl |
| 1687 | 2,3,6-trifluoro phenyl | Me | Me | H | H | 2,6-dibromo-4-(heptafluoro-n-propylsulfinyl)phenyl |
| 1688 | pyridine-2-yl | Me | Me | H | H | 2,6-dibromo-4-(heptafluoro-n-propylsulfinyl)phenyl |
| 1689 | pyridine-3-yl | Me | Me | H | H | 2,6-dibromo-4-(heptafluoro-n-propylsulfinyl)phenyl |
| 1690 | 2-fluoropyridine-3-yl | Me | Me | H | H | 2,6-dibromo-4-(heptafluoro-n-propylsulfinyl)phenyl |
| 1691 | 2-chloropyridine-3-yl | Me | Me | H | H | 2,6-dibromo-4-(heptafluoro-n-propylsulfinyl)phenyl |
| 1692 | 2-chloropyridine-5-yl | Me | Me | H | H | 2,6-dibromo-4-(heptafluoro-n-propylsulfinyl)phenyl |
| 1693 | 2-methylthio pyridine-3-yl | Me | Me | H | H | 2,6-dibromo-4-(heptafluoro-n-propylsulfinyl)phenyl |
| 1694 | pyrazine-2-yl | Me | Me | H | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1695 | furan-2-yl | Me | Me | H | H | 2,6-dibromo-4-(heptafluoro-n-propylsulfinyl)phenyl |
| 1696 | thiophene-2-yl | Me | Me | H | H | 2,6-dibromo-4-(heptafluoro-n-propylsulfinyl)phenyl |
| 1697 | phenyl | Me | Me | F | H | 2,6-dimethyl-4-(heptafluoro isopropyl) phenyl |
| 1698 | 2-methylphenyl | Me | Me | F | H | 2,6-dimethyl-4-(heptafluoro isopropyl) phenyl |
| 1699 | 4-methylphenyl | Me | Me | F | H | 2,6-dimethyl-4-(heptafluoro isopropyl) phenyl |
| 1700 | 2-fluorophenyl | Me | Me | F | H | 2,6-dimethyl-4-(heptafluoro isopropyl) phenyl |

[Table 3-36]

| Compound Nos. | $Q_1$ | $R_1$ | $R_2$ | $X_1$ | $X_2$ | $Q_2$ |
|---|---|---|---|---|---|---|
| 1701 | 3-fluorophenyl | Me | Me | F | H | 2,6-dimethyl-4-(heptafluoro isopropyl) phenyl |
| 1702 | 4-fluorophenyl | Me | Me | F | H | 2,6-dimethyl-4-(heptafluoro isopropyl) phenyl |
| 1703 | 2-chlorophenyl | Me | Me | F | H | 2,6-dimethyl-4-(heptafluoro isopropyl) phenyl |
| 1704 | 4-chlorophenyl | Me | Me | F | H | 2,6-dimethyl-4-(heptafluoro isopropyl) phenyl |
| 1705 | 2-bromophenyl | Me | Me | F | H | 2,6-dimethyl-4-(heptafluoro isopropyl) phenyl |
| 1706 | 2-iodophenyl | Me | Me | F | H | 2,6-dimethyl-4-(heptafluoro isopropyl) phenyl |
| 1707 | 3-cyanophenyl | Me | Me | F | H | 2,6-dimethyl-4-(heptafluoro isopropyl) phenyl |
| 1708 | 4-cyanophenyl | Me | Me | F | H | 2,6-dimethyl-4-(heptafluoro isopropyl) phenyl |
| 1709 | 2-nitrophenyl | Me | Me | F | H | 2,6-dimethyl-4-(heptafluoro isopropyl) phenyl |
| 1710 | 3-nitrophenyl | Me | Me | F | H | 2,6-dimethyl-4-(heptafluoro isopropyl) phenyl |
| 1711 | 4-nitrophenyl | Me | Me | F | H | 2,6-dimethyl-4-(heptafluoro isopropyl) phenyl |
| 1712 | 2-trifluoromethyl phenyl | Me | Me | F | H | 2,6-dimethyl-4-(heptafluoro isopropyl) phenyl |
| 1713 | 4-trifluoromethyl phenyl | Me | Me | F | H | 2,6-dimethyl-4-(heptafluoro isopropyl) phenyl |
| 1714 | 4-trifluoromethoxy phenyl | Me | Me | F | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1715 | 2,3-difluorophenyl | Me | Me | F | H | 2,6-dimethyl-4-(heptafluoro isopropyl) phenyl |
| 1716 | 2,4-difluorophenyl | Me | Me | F | H | 2,6-dimethyl-4-(heptafluoro isopropyl) phenyl |
| 1717 | 2,5-difluorophenyl | Me | Me | F | H | 2,6-dimethyl-4-(heptafluoro isopropyl) phenyl |
| 1718 | 2,6-difluorophenyl | Me | Me | F | H | 2,6-dimethyl-4-(heptafluoro isopropyl) phenyl |
| 1719 | 2,4-dichlorophenyl | Me | Me | F | H | 2,6-dimethyl-4-(heptafluoro isopropyl) phenyl |
| 1720 | 2,6-dichlorophenyl | Me | Me | F | H | 2,6-dimethyl-4-(heptafluoro isopropyl) phenyl |

[Table 3-37]

| Compound Nos. | $Q_1$ | $R_1$ | $R_2$ | $X_1$ | $X_2$ | $Q_2$ |
|---|---|---|---|---|---|---|
| 1721 | 3,4-dichlorophenyl | Me | Me | F | H | 2,6-dimethyl-4-(heptafluoro isopropyl) phenyl |
| 1722 | 2-chloro-4-nitro phenyl | Me | Me | F | H | 2,6-dimethyl-4-(heptafluoro isopropyl) phenyl |
| 1723 | 2-chloro-4-fluoro phenyl | Me | Me | F | H | 2,6-dimethyl-4-(heptafluoro isopropyl) phenyl |
| 1724 | 2-chloro-6-fluoro phenyl | Me | Me | F | H | 2,6-dimethyl-4-(heptafluoro isopropyl) phenyl |
| 1725 | 4-chloro-2-fluoro phenyl | Me | Me | F | H | 2,6-dimethyl-4-(heptafluoro isopropyl) phenyl |
| 1726 | 4-chloro-2-nitro phenyl | Me | Me | F | H | 2,6-dimethyl-4-(heptafluoro isopropyl) phenyl |
| 1727 | 2,3,6-trifluoro phenyl | Me | Me | F | H | 2,6-dimethyl-4-(heptafluoro isopropyl) phenyl |
| 1728 | pyridine-2-yl | Me | Me | F | H | 2,6-dimethyl-4-(heptafluoro isopropyl) phenyl |
| 1729 | pyridine-3-yl | Me | Me | F | H | 2,6-dimethyl-4-(heptafluoro isopropyl) phenyl |
| 1730 | 2-fluoropyridine-3-yl | Me | Me | F | H | 2,6-dimethyl-4-(heptafluoro isopropyl) phenyl |
| 1731 | 2-chloropyridine-3-yl | Me | Me | F | H | 2,6-dimethyl-4-(heptafluoro isopropyl) phenyl |
| 1732 | 2-chloropyridine-5-yl | Me | Me | F | H | 2,6-dimethyl-4-(heptafluoro isopropyl) phenyl |
| 1733 | 2-methylthio pyridine-3-yl | Me | Me | F | H | 2,6-dimethyl-4-(heptafluoro isopropyl) phenyl |
| 1734 | pyrazine-2-yl | Me | Me | F | H | 2,6-dimethyl-4-(heptafluoro isopropyl) phenyl |

(continued)

| Compound Nos. | $Q_1$ | $R_1$ | $R_2$ | $X_1$ | $X_2$ | $Q_2$ |
|---|---|---|---|---|---|---|
| 1735 | furan-2-yl | Me | Me | F | H | 2,6-dimethyl-4-(heptafluoro isopropyl) phenyl |
| 1736 | thiophene-2-yl | Me | Me | F | H | 2,6-dimethyl-4-(heptafluoro isopropyl) phenyl |
| 1737 | phenyl | Me | Me | F | H | 2-bromo-4-(heptafluoroisopropyl)-6-(methylsulfonyl)phenyl |
| 1738 | 2-methylphenyl | Me | Me | F | H | 2-bromo-4-(heptafluoroisopropyl)-6-(methylsulfonyl)phenyl |
| 1739 | 4-methylphenyl | Me | Me | F | H | 2-bromo-4-(heptafluoroisopropyl)-6-(methylsulfonyl)phenyl |
| 1740 | 2-fluorophenyl | Me | Me | F | H | 2-bromo-4-(heptafluoroisopropyl)-6-(methylsulfonyl)phenyl |

[Table 3-38]

| Compound Nos. | $Q_1$ | $R_1$ | $R_2$ | $X_1$ | $X_2$ | $Q_2$ |
|---|---|---|---|---|---|---|
| 1741 | 3-fluorophenyl | Me | Me | F | H | 2-bromo-4-(heptafluoroisopropyl)-6-(methylsulfonyl)phenyl |
| 1742 | 4-fluorophenyl | Me | Me | F | H | 2-bromo-4-(heptafluoroisopropyl)-6-(methylsulfonyl)phenyl |
| 1743 | 2-chlorophenyl | Me | Me | F | H | 2-bromo-4-(heptafluoroisopropyl)-6-(methylsulfonyl)phenyl |
| 1744 | 4-chlorophenyl | Me | Me | F | H | 2-bromo-4-(heptafluoroisopropyl)-6-(methylsulfonyl)phenyl |
| 1745 | 2-bromophenyl | Me | Me | F | H | 2-bromo-4-(heptafluoroisopropyl)-6-(methylsulfonyl)phenyl |
| 1746 | 2-iodophenyl | Me | Me | F | H | 2-bromo-4-(heptafluoroisopropyl)-6-(methylsulfonyl)phenyl |
| 1747 | 3-cyanophenyl | Me | Me | F | H | 2-bromo-4-(heptafluoroisopropyl)-6-(methylsulfonyl)phenyl |
| 1748 | 4-cyanophenyl | Me | Me | F | H | 2-bromo-4-(heptafluoroisopropyl)-6-(methylsulfonyl)phenyl |
| 1749 | 2-nitrophenyl | Me | Me | F | H | 2-bromo-4-(heptafluoroisopropyl)-6-(methylsulfonyl)phenyl |
| 1750 | 3-nitrophenyl | Me | Me | F | H | 2-bromo-4-(heptafluoroisopropyl)-6-(methylsulfonyl)phenyl |
| 1751 | 4-nitrophenyl | Me | Me | F | H | 2-bromo-4-(heptafluoroisopropyl)-6-(methylsulfonyl)phenyl |
| 1752 | 2-trifluoromethyl phenyl | Me | Me | F | H | 2-bromo-4-(heptafluoroisopropyl)-6-(methylsulfonyl)phenyl |
| 1753 | 4-trifluoromethyl phenyl | Me | Me | F | H | 2-bromo-4-(heptafluoroisopropyl)-6-(methylsulfonyl)phenyl |
| 1754 | 4-trifluoromethoxy phenyl | Me | Me | F | H | 2-bromo-4-(heptafluoroisopropyl)-6-(methylsulfonyl)phenyl |

(continued)

| Compound Nos. | $Q_1$ | $R_1$ | $R_2$ | $X_1$ | $X_2$ | $Q_2$ |
|---|---|---|---|---|---|---|
| 1755 | 2,3-difluorophenyl | Me | Me | F | H | 2-bromo-4-(heptafluoroisopropyl)-6-(methylsulfonyl)phenyl |
| 1756 | 2,4-difluorophenyl | Me | Me | F | H | 2-bromo-4-(heptafluoroisopropyl)-6-(methylsulfonyl)phenyl |
| 1757 | 2,5-difluorophenyl | Me | Me | F | H | 2-bromo-4-(heptafluoroisopropyl)-6-(methylsulfonyl)phenyl |
| 1758 | 2,6-difluorophenyl | Me | Me | F | H | 2-bromo-4-(heptafluoroisopropyl)-6-(methylsulfonyl)phenyl |
| 1759 | 2,4-dichlorophenyl | Me | Me | F | H | 2-bromo-4-(heptafluoroisopropyl)-6-(methylsulfonyl)phenyl |
| 1760 | 2,6-dichlorophenyl | Me | Me | F | H | 2-bromo-4-(heptafluoroisopropyl)-6-(methylsulfonyl)phenyl |

[Table 3-39]

| Compound Nos. | $Q_1$ | $R_1$ | $R_2$ | $X_1$ | $X_2$ | $Q_2$ |
|---|---|---|---|---|---|---|
| 1761 | 3,4-dichlorophenyl | Me | Me | F | H | 2-bromo-4-(heptafluoroisopropyl)-6-(methylsulfonyl)phenyl |
| 1762 | 2-chloro-4-nitro phenyl | Me | Me | F | H | 2-bromo-4-(heptafluoroisopropyl)-6-(methylsulfonyl)phenyl |
| 1763 | 2-chloro-4-fluoro phenyl | Me | Me | F | H | 2-bromo-4-(heptafluoroisopropyl)-6-(methylsulfonyl)phenyl |
| 1764 | 2-chloro-6-fluoro phenyl | Me | Me | F | H | 2-bromo-4-(heptafluoroisopropyl)-6-(methylsulfonyl)phenyl |
| 1765 | 4-chloro-2-fluoro phenyl | Me | Me | F | H | 2-bromo-4-(heptafluoroisopropyl)-6-(methylsulfonyl)phenyl |
| 1766 | 4-chloro-2-nitro phenyl | Me | Me | F | H | 2-bromo-4-(heptafluoroisopropyl)-6-(methylsulfonyl)phenyl |
| 1767 | 2,3,6-trifluoro phenyl | Me | Me | F | H | 2-bromo-4-(heptafluoroisopropyl)-6-(methylsulfonyl)phenyl |
| 1768 | pyridine-2-yl | Me | Me | F | H | 2-bromo-4-(heptafluoroisopropyl)-6-(methylsulfonyl)phenyl |
| 1769 | pyridine-3-yl | Me | Me | F | H | 2-bromo-4-(heptafluoroisopropyl)-6-(methylsulfonyl)phenyl |
| 1770 | 2-fluoropyridine-3-yl | Me | Me | F | H | 2-bromo-4-(heptafluoroisopropyl)-6-(methylsulfonyl)phenyl |
| 1771 | 2-chloropyridine-3-yl | Me | Me | F | H | 2-bromo-4-(heptafluoroisopropyl)-6-(methylsulfonyl)phenyl |
| 1772 | 2-chloropyridine-5-yl | Me | Me | F | H | 2-bromo-4-(heptafluoroisopropyl)-6-(methylsulfonyl)phenyl |
| 1773 | 2-methylthio pyridine-3-yl | Me | Me | F | H | 2-bromo-4-(heptafluoroisopropyl)-6-(methylsulfonyl)phenyl |
| 1774 | pyrazine-2-yl | Me | Me | F | H | 2-bromo-4-(heptafluoroisopropyl)-6-(methylsulfonyl)phenyl |

(continued)

| Compound Nos. | $Q_1$ | $R_1$ | $R_2$ | $X_1$ | $X_2$ | $Q_2$ |
|---|---|---|---|---|---|---|
| 1775 | furan-2-yl | Me | Me | F | H | 2-bromo-4-(heptafluoroisopropyl)-6-(methylsulfonyl)phenyl |
| 1776 | thiophene-2-yl | Me | Me | F | H | 2-bromo-4-(heptafluoroisopropyl)-6-(methylsulfonyl)phenyl |
| 1777 | phenyl | Me | Me | F | H | 2-n-propyl-6-iodo-4-(heptafluoro isopropyl)phenyl |
| 1778 | 2-methylphenyl | Me | Me | F | H | 2-n-propyl-6-iodo-4-(heptafluoro isopropyl)phenyl |
| 1779 | 4-methylphenyl | Me | Me | F | H | 2-n-propyl-6-iodo-4-(heptafluoro isopropyl)phenyl |
| 1780 | 2-fluorophenyl | Me | Me | F | H | 2-n-propyl-6-iodo-4-(heptafluoro isopropyl)phenyl |

[Table 3-40]

| Compound Nos. | $Q_1$ | $R_1$ | $R_2$ | $X_1$ | $X_2$ | $Q_2$ |
|---|---|---|---|---|---|---|
| 1781 | 3-fluorophenyl | Me | Me | F | H | 2-n-propyl-6-iodo-4-(heptafluoro isopropyl)phenyl |
| 1782 | 4-fluorophenyl | Me | Me | F | H | 2-n-propyl-6-iodo-4-(heptafluoro isopropyl)phenyl |
| 1783 | 2-chlorophenyl | Me | Me | F | H | 2-n-propyl-6-iodo-4-(heptafluoro isopropyl)phenyl |
| 1784 | 4-chlorophenyl | Me | Me | F | H | 2-n-propyl-6-iodo-4-(heptafluoro isopropyl)phenyl |
| 1785 | 2-bromophenyl | Me | Me | F | H | 2-n-propyl-6-iodo-4-(heptafluoro isopropyl)phenyl |
| 1786 | 2-iodophenyl | Me | Me | F | H | 2-n-propyl-6-iodo-4-(heptafluoro isopropyl)phenyl |
| 1787 | 3-cyanophenyl | Me | Me | F | H | 2-n-propyl-6-iodo-4-(heptafluoro isopropyl)phenyl |
| 1788 | 4-cyanophenyl | Me | Me | F | H | 2-n-propyl-6-iodo-4-(heptafluoro isopropyl)phenyl |
| 1789 | 2-nitrophenyl | Me | Me | F | H | 2-n-propyl-6-iodo-4-(heptafluoro isopropyl)phenyl |
| 1790 | 3-nitrophenyl | Me | Me | F | H | 2-n-propyl-6-iodo-4-(heptafluoro isopropyl)phenyl |
| 1791 | 4-nitrophenyl | Me | Me | F | H | 2-n-propyl-6-iodo-4-(heptafluoro isopropyl)phenyl |
| 1792 | 2-trifluoromethyl phenyl | Me | Me | F | H | 2-n-propyl-6-iodo-4-(heptafluoro isopropyl)phenyl |
| 1793 | 4-trifluoromethyl phenyl | Me | Me | F | H | 2-n-propyl-6-iodo-4-(heptafluoro isopropyl)phenyl |
| 1794 | 4-trifluoromethoxy phenyl | Me | Me | F | H | 2-n-propyl-6-iodo-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1795 | 2,3-difluorophenyl | Me | Me | F | H | 2-n-propyl-6-iodo-4-(heptafluoro isopropyl)phenyl |
| 1796 | 2,4-difluorophenyl | Me | Me | F | H | 2-n-propyl-6-iodo-4-(heptafluoro isopropyl)phenyl |
| 1797 | 2,5-difluorophenyl | Me | Me | F | H | 2-n-propyl-6-iodo-4-(heptafluoro isopropyl)phenyl |
| 1798 | 2,6-difluorophenyl | Me | Me | F | H | 2-n-propyl-6-iodo-4-(heptafluoro isopropyl)phenyl |
| 1799 | 2,4-dichlorophenyl | Me | Me | F | H | 2-n-propyl-6-iodo-4-(heptafluoro isopropyl)phenyl |
| 1800 | 2,6-dichlorophenyl | Me | Me | F | H | 2-n-propyl-6-iodo-4-(heptafluoro isopropyl)phenyl |

[Table 3-41]

| Compound Nos. | $Q_1$ | $R_1$ | $R_2$ | $X_1$ | $X_2$ | $Q_2$ |
|---|---|---|---|---|---|---|
| 1801 | 3,4-dichlorophenyl | Me | Me | F | H | 2-n-propyl-6-iodo-4-(heptafluoro isopropyl)phenyl |
| 1802 | 2-chloro-4-nitro phenyl | Me | Me | F | H | 2-n-propyl-6-iodo-4-(heptafluoro isopropyl)phenyl |
| 1803 | 2-chloro-4-fluoro phenyl | Me | Me | F | H | 2-n-propyl-6-iodo-4-(heptafluoro isopropyl)phenyl |
| 1804 | 2-chloro-6-fluoro phenyl | Me | Me | F | H | 2-n-propyl-6-iodo-4-(heptafluoro isopropyl)phenyl |
| 1805 | 4-chloro-2-fluoro phenyl | Me | Me | F | H | 2-n-propyl-6-iodo-4-(heptafluoro isopropyl)phenyl |
| 1806 | 4-chloro-2-nitro phenyl | Me | Me | F | H | 2-n-propyl-6-iodo-4-(heptafluoro isopropyl)phenyl |
| 1807 | 2,3,6-trifluoro phenyl | Me | Me | F | H | 2-n-propyl-6-iodo-4-(heptafluoro isopropyl)phenyl |
| 1808 | pyridine-2-yl | Me | Me | F | H | 2-n-propyl-6-iodo-4-(heptafluoro isopropyl)phenyl |
| 1809 | pyridine-3-yl | Me | Me | F | H | 2-n-propyl-6-iodo-4-(heptafluoro isopropyl)phenyl |
| 1810 | 2-fluoropyridine-3-yl | Me | Me | F | H | 2-n-propyl-6-iodo-4-(heptafluoro isopropyl)phenyl |
| 1811 | 2-chloropyridine-3-yl | Me | Me | F | H | 2-n-propyl-6-iodo-4-(heptafluoro isopropyl)phenyl |
| 1812 | 2-chloropyridine-5-yl | Me | Me | F | H | 2-n-propyl-6-iodo-4-(heptafluoro isopropyl)phenyl |
| 1813 | 2-methylthio pyridine-3-yl | Me | Me | F | H | 2-n-propyl-6-iodo-4-(heptafluoro isopropyl)phenyl |
| 1814 | pyrazine-2-yl | Me | Me | F | H | 2-n-propyl-6-iodo-4-(heptafluoro isopropyl)phenyl |

(continued)

| Compound Nos. | $Q_1$ | $R_1$ | $R_2$ | $X_1$ | $X_2$ | $Q_2$ |
|---|---|---|---|---|---|---|
| 1815 | furan-2-yl | Me | Me | F | H | 2-n-propyl-6-iodo-4-(heptafluoro isopropyl)phenyl |
| 1816 | thiophene-2-yl | Me | Me | F | H | 2-n-propyl-6-iodo-4-(heptafluoro isopropyl)phenyl |
| 1817 | phenyl | Me | Me | F | H | 2,6-dibromo-4-(heptafluoro-n-propylthio)phenyl |
| 1818 | 2-methylphenyl | Me | Me | F | H | 2,6-dibromo-4-(heptafluoro-n-propylthio)phenyl |
| 1819 | 4-methylphenyl | Me | Me | F | H | 2,6-dibromo-4-(heptafluoro-n-propylthio)phenyl |
| 1820 | 2-fluorophenyl | Me | Me | F | H | 2,6-dibromo-4-(heptafluoro-n-propylthio)phenyl |

[Table 3-42]

| Compound Nos. | $Q_1$ | $R_1$ | $R_2$ | $X_1$ | $X_2$ | $Q_2$ |
|---|---|---|---|---|---|---|
| 1821 | 3-fluorophenyl | Me | Me | F | H | 2,6-dibromo-4-(heptafluoro-n-propylthio)phenyl |
| 1822 | 4-fluorophenyl | Me | Me | F | H | 2,6-dibromo-4-(heptafluoro-n-propylthio)phenyl |
| 1823 | 2-chlorophenyl | Me | Me | F | H | 2,6-dibromo-4-(heptafluoro-n-propylthio)phenyl |
| 1824 | 4-chlorophenyl | Me | Me | F | H | 2,6-dibromo-4-(heptafluoro-n-propylthio)phenyl |
| 1825 | 2-bromophenyl | Me | Me | F | H | 2,6-dibromo-4-(heptafluoro-n-propylthio)phenyl |
| 1826 | 2-iodophenyl | Me | Me | F | H | 2,6-dibromo-4-(heptafluoro-n-propylthio)phenyl |
| 1827 | 3-cyanophenyl | Me | Me | F | H | 2,6-dibromo-4-(heptafluoro-n-propylthio)phenyl |
| 1828 | 4-cyanophenyl | Me | Me | F | H | 2,6-dibromo-4-(heptafluoro-n-propylthio)phenyl |
| 1829 | 2-nitrophenyl | Me | Me | F | H | 2,6-dibromo-4-(heptafluoro-n-propylthio)phenyl |
| 1830 | 3-nitrophenyl | Me | Me | F | H | 2,6-dibromo-4-(heptafluoro-n-propylthio)phenyl |
| 1831 | 4-nitrophenyl | Me | Me | F | H | 2,6-dibromo-4-(heptafluoro-n-propylthio)phenyl |
| 1832 | 2-trifluoromethyl phenyl | Me | Me | F | H | 2,6-dibromo-4-(heptafluoro-n-propylthio)phenyl |
| 1833 | 4-trifluoromethyl phenyl | Me | Me | F | H | 2,6-dibromo-4-(heptafluoro-n-propylthio)phenyl |
| 1834 | 4-trifluoromethoxy phenyl | Me | Me | F | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1835 | 2,3-difluorophenyl | Me | Me | F | H | 2,6-dibromo-4-(heptafluoro-n-propylthio)phenyl |
| 1836 | 2,4-difluorophenyl | Me | Me | F | H | 2,6-dibromo-4-(heptafluoro-n-propylthio)phenyl |
| 1837 | 2,5-difluorophenyl | Me | Me | F | H | 2,6-dibromo-4-(heptafluoro-n-propylthio)phenyl |
| 1838 | 2,6-difluorophenyl | Me | Me | F | H | 2,6-dibromo-4-(heptafluoro-n-propylthio)phenyl |
| 1839 | 2,4-dichlorophenyl | Me | Me | F | H | 2,6-dibromo-4-(heptafluoro-n-propylthio)phenyl |
| 1840 | 2,6-dichlorophenyl | Me | Me | F | H | 2,6-dibromo-4-(heptafluoro-n-propylthio)phenyl |

[Table 3-43]

| Compound Nos. | $Q_1$ | $R_1$ | $R_2$ | $X_1$ | $X_2$ | $Q_2$ |
|---|---|---|---|---|---|---|
| 1841 | 3,4-dichlorophenyl | Me | Me | F | H | 2,6-dibromo-4-(heptafluoro-n-propylthio)phenyl |
| 1842 | 2-chloro-4-nitro phenyl | Me | Me | F | H | 2,6-dibromo-4-(heptafluoro-n-propylthio)phenyl |
| 1843 | 2-chloro-4-fluoro phenyl | Me | Me | F | H | 2,6-dibromo-4-(heptafluoro-n-propylthio)phenyl |
| 1844 | 2-chloro-6-fluoro phenyl | Me | Me | F | H | 2,6-dibromo-4-(heptafluoro-n-propylthio)phenyl |
| 1845 | 4-chloro-2-fluoro phenyl | Me | Me | F | H | 2,6-dibromo-4-(heptafluoro-n-propylthio)phenyl |
| 1846 | 4-chloro-2-nitro phenyl | Me | Me | F | H | 2,6-dibromo-4-(heptafluoro-n-propylthio)phenyl |
| 1847 | 2,3,6-trifluoro phenyl | Me | Me | F | H | 2,6-dibromo-4-(heptafluoro-n-propylthio)phenyl |
| 1848 | pyridine-2-yl | Me | Me | F | H | 2,6-dibromo-4-(heptafluoro-n-propylthio)phenyl |
| 1849 | pyridine-3-yl | Me | Me | F | H | 2,6-dibromo-4-(heptafluoro-n-propylthio)phenyl |
| 1850 | 2-fluoropyridine-3-yl | Me | Me | F | H | 2,6-dibromo-4-(heptafluoro-n-propylthio)phenyl |
| 1851 | 2-chloropyridine-3-yl | Me | Me | F | H | 2, 6-dibromo-4-(heptafluoro-n-propylthio)phenyl |
| 1852 | 2-chloropyridine-5-yl | Me | Me | F | H | 2, 6-dibromo-4-(heptafluoro-n-propylthio)phenyl |
| 1853 | 2-methylthio pyridine-3-yl | Me | Me | F | H | 2, 6-dibromo-4-(heptafluoro-n-propylthio)phenyl |
| 1854 | pyrazine-2-yl | Me | Me | F | H | 2,6-dibromo-4-(heptafluoro-n-propylthio)phenyl |

(continued)

| Compound Nos. | $Q_1$ | $R_1$ | $R_2$ | $X_1$ | $X_2$ | $Q_2$ |
|---|---|---|---|---|---|---|
| 1855 | furan-2-yl | Me | Me | F | H | 2,6-dibromo-4-(heptafluoro-n-propylthio)phenyl |
| 1856 | thiophene-2-yl | Me | Me | F | H | 2,6-dibromo-4-(heptafluoro-n-propylthio)phenyl |
| 1857 | phenyl | Me | Me | F | H | 2,6-dibromo-4-(heptafluoro-n-propylsulfinyl)phenyl |
| 1858 | 2-methylphenyl | Me | Me | F | H | 2,6-dibromo-4-(heptafluoro-n-propylsulfinyl)phenyl |
| 1859 | 4-methylphenyl | Me | Me | F | H | 2,6-dibromo-4-(heptafluoro-n-propylsulfinyl)phenyl |
| 1860 | 2-fluorophenyl | Me | Me | F | H | 2,6-dibromo-4-(heptafluoro-n-propylsulfinyl)phenyl |

[Table 3-44]

| Compound Nos. | $Q_1$ | $R_1$ | $R_2$ | $X_1$ | $X_2$ | $Q_2$ |
|---|---|---|---|---|---|---|
| 1861 | 3-fluorophenyl | Me | Me | F | H | 2,6-dibromo-4-(heptafluoro-n-propylsulfinyl)phenyl |
| 1862 | 4-fluorophenyl | Me | Me | F | H | 2,6-dibromo-9-(heptafluoro-n-propylsulfinyl)phenyl |
| 1863 | 2-chlorophenyl | Me | Me | F | H | 2,6-dibromo-4-(heptafluoro-n-propylsulfinyl)phenyl |
| 1864 | 4-chlorophenyl | Me | Me | F | H | 2,6-dibromo-4-(heptafluoro-n-propylsulfinyl)phenyl |
| 1865 | 2-bromophenyl | Me | Me | F | H | 2,6-dibromo-4-(heptafluoro-n-propylsulfinyl)phenyl |
| 1866 | 2-iodophenyl | Me | Me | F | H | 2,6-dibromo-4-(heptafluoro-n-propylsulfinyl)phenyl |
| 1867 | 3-cyanophenyl | Me | Me | F | H | 2,6-dibromo-4-(heptafluoro-n-propylsulfinyl)phenyl |
| 1868 | 4-cyanophenyl | Me | Me | F | H | 2,6-dibromo-4-(heptafluoro-n-propylsulfinyl)phenyl |
| 1869 | 2-nitrophenyl | Me | Me | F | H | 2,6-dibromo-4-(heptafluoro-n-propylsulfinyl)phenyl |
| 1870 | 3-nitrophenyl | Me | Me | F | H | 2,6-dibromo-4-(heptafluoro-n-propylsulfinyl)phenyl |
| 1871 | 4-nitrophenyl | Me | Me | F | H | 2,6-dibromo-4-(heptafluoro-n-propylsulfinyl)phenyl |
| 1872 | 2-trifluoromethyl phenyl | Me | Me | F | H | 2,6-dibromo-4-(heptafluoro-n-propylsulfinyl)phenyl |
| 1873 | 4-trifluoromethyl phenyl | Me | Me | F | H | 2,6-dibromo-4-(heptafluoro-n-propylsulfinyl)phenyl |
| 1874 | 4-trifluoromethoxy phenyl | Me | Me | F | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1875 | 2,3-difluorophenyl | Me | Me | F | H | 2,6-dibromo-4-(heptafluoro-n-propylsulfinyl)phenyl |
| 1876 | 2,4-difluorophenyl | Me | Me | F | H | 2,6-dibromo-4-(heptafluoro-n-propylsulfinyl)phenyl |
| 1877 | 2,5-difluorophenyl | Me | Me | F | H | 2,6-dibromo-4-(heptafluoro-n-propylsulfinyl)phenyl |
| 1878 | 2,6-difluorophenyl | Me | Me | F | H | 2,6-dibromo-4-(heptafluoro-n-propylsulfinyl)phenyl |
| 1879 | 2,4-dichlorophenyl | Me | Me | F | H | 2,6-dibromo-9-(heptafluoro-n-propylsulfinyl)phenyl |
| 1880 | 2,6-dichlorophenyl | Me | Me | F | H | 2,6-dibromo-4-(heptafluoro-n-propylsulfinyl)phenyl |

[Table 3-45]

| Compound Nos. | $Q_1$ | $R_1$ | $R_2$ | $X_1$ | $X_2$ | $Q_2$ |
|---|---|---|---|---|---|---|
| 1881 | 3,4-dichlorophenyl | Me | Me | F | H | 2,6-dibromo-4-(heptafluoro-n-propylsulfinyl)phenyl |
| 1882 | 2-chloro-4-nitro phenyl | Me | Me | F | H | 2,6-dibromo-4-(heptafluoro-n-propylsulfinyl)phenyl |
| 1883 | 2-chloro-4-fluoro phenyl | Me | Me | F | H | 2,6-dibromo-4-(heptafluoro-n-propylsulfinyl)phenyl |
| 1884 | 2-chloro-6-fluoro phenyl | Me | Me | F | H | 2,6-dibromo-4-(heptafluoro-n-propylsulfinyl)phenyl |
| 1885 | 4-chloro-2-fluoro phenyl | Me | Me | F | H | 2,6-dibromo-4-(heptafluoro-n-propylsulfinyl)phenyl |
| 1886 | 4-chloro-2-nitro phenyl | Me | Me | F | H | 2,6-dibromo-4-(heptafluoro-n-propylsulfinyl)phenyl |
| 1887 | 2,3,6-trifluoro phenyl | Me | Me | F | H | 2,6-dibromo-4-(heptafluoro-n-propylsulfinyl)phenyl |
| 1888 | pyridine-2-yl | Me | Me | F | H | 2,6-dibromo-4-(heptafluoro-n-propylsulfinyl)phenyl |
| 1889 | pyridine-3-yl | Me | Me | F | H | 2,6-dibromo-4-(heptafluoro-n-propylsulfinyl)phenyl |
| 1890 | 2-fluoropyridine-3-yl | Me | Me | F | H | 2,6-dibromo-4-(heptafluoro-n-propylsulfinyl)phenyl |
| 1891 | 2-chloropyridine-3-yl | Me | Me | F | H | 2,6-dibromo-4-(heptafluoro-n-propylsulfinyl)phenyl |
| 1892 | 2-chloropyridine-5-yl | Me | Me | F | H | 2,6-dibromo-4-(heptafluoro-n-propylsulfinyl)phenyl |
| 1893 | 2-methylthio pyridine-3-yl | Me | Me | F | H | 2,6-dibromo-4-(heptafluoro-n-propylsulfinyl)phenyl |
| 1894 | pyrazine-2-yl | Me | Me | F | H | 2,6-dibromo-4-(heptafluoro-n-propylsulfinyl)phenyl |

(continued)

| Compound Nos. | $Q_1$ | $R_1$ | $R_2$ | $X_1$ | $X_2$ | $Q_2$ |
|---|---|---|---|---|---|---|
| 1895 | furan-2-yl | Me | Me | F | H | 2,6-dibromo-4-(heptafluoro-n-propylsulfinyl)phenyl |
| 1896 | thiophene-2-yl | Me | Me | F | H | 2,6-dibromo-4-(heptafluoro-n-propylsulfinyl)phenyl |
| 1897 | 2-fluorophenyl | Me | H | H | H | 2,6-dibromo-4-(pentafluoroethyl) phenyl |
| 1898 | 2-fluorophenyl | Me | H | H | H | 2-bromo-4-(heptafluoro isopropyl)-6-methylphenyl |
| 1899 | 2-fluorophenyl | Me | H | H | H | 2-ethyl-4-(heptafluoro isopropyl)-6-methylphenyl |
| 1900 | 2-fluorophenyl | Me | H | H | H | 4-(heptafluoroisopropyl)-2-iodo-6-methylphenyl |

[Table 3-46]

| Compound Nos. | $Q_1$ | $R_1$ | $R_2$ | $X_1$ | $X_2$ | $Q_2$ |
|---|---|---|---|---|---|---|
| 1901 | 2-fluorophenyl | Me | H | H | H | 2-chloro-6-ethyl-4-(heptafluoro isopropyl)phenyl |
| 1902 | 2-fluorophenyl | Me | H | H | H | 2-bromo-6-ethyl-4-(heptafluoro isopropyl)phenyl |
| 1903 | 2-fluorophenyl | Me | H | H | H | 2-ethyl-4-(heptafluoro isopropyl)-6-iodophenyl |
| 1904 | 2-fluorophenyl | Me | H | H | H | 4-(heptafluoroisopropyl)-2-isopropyl-6-methylphenyl |
| 1905 | 2-fluorophenyl | Me | H | H | H | 2-bromo-4-(heptafluoroisopropyl)-6-n-propylphenyl |
| 1906 | 2-fluorophenyl | Me | H | H | H | 2-bromo-4-(heptafluoroisopropyl)-6-(trifluoromethylthio)phenyl |
| 1907 | 2-fluorophenyl | Me | H | H | H | 2,6-dibromo-4-(trifluoro methylthio)phenyl |
| 1908 | 2-fluorophenyl | Me | H | H | H | 2,6-dibromo-4-(pentafluoro ethylthio)phenyl |
| 1909 | 2-fluorophenyl | Me | H | H | H | 2,6-dibromo-4-(nonafluoro-n-butylthio)phenyl |
| 1910 | 2-fluorophenyl | Me | H | H | H | 2,6-dichloro-4-(heptafluoro isopropylsulfonyl) phenyl |
| 1911 | 2-fluorophenyl | Me | H | H | H | 2,6-dibromo-4-(heptafluoro-n-propylsulfonyl) phenyl |
| 1912 | 2-fluorophenyl | Me | H | H | H | 2-bromo-6-(heptafluoroisopropyl oxy)-4-methylpyridine-3-yl |
| 1913 | 2-fluorophenyl | Me | H | H | H | 2,4-dimethyl-6-(2,2,2-trifluoro-1-trifluoromethylethoxy)pyridine-yl |
| 1914 | 2-fluorophenyl | Me | H | H | H | 2-chloro-4-methyl-6-(2,2,2-trifluoro-1-trifluoromethyl ethoxy)pyridine-3-yl |
| 1915 | 2-fluorophenyl | Me | H | H | H | 2-bromo-4-methyl-6-(2,2,2-trifluoro-1-trifluoromethyl ethoxy)pyridine-3-yl |
| 1916 | 2-fluorophenyl | Me | H | H | H | 2-iodo-4-methyl-6-(2,2,2-trifluoro-1-trifluoromethyl ethoxy)pyridine-3-yl |
| 1917 | 2-fluorophenyl | Me | H | F | H | 2,6-dibromo-4-(pentafluoro ethyl)phenyl |

(continued)

| Compound Nos. | $Q_1$ | $R_1$ | $R_2$ | $X_1$ | $X_2$ | $Q_2$ |
|---|---|---|---|---|---|---|
| 1918 | 2-fluorophenyl | Me | H | F | H | 2-bromo-4-(heptafluoroisopropyl)-6-methylphenyl |
| 1919 | 2-fluorophenyl | Me | H | F | H | 2-ethyl-4-(heptafluoroisopropyl)-6-methylphenyl |
| 1920 | 2-fluorophenyl | Me | H | F | H | 4-(heptafluoroisopropyl)-2-iodo-6-methylphenyl |

[Table 3-47]

| Compound Nos. | $Q_1$ | $R_1$ | $R_2$ | $X_1$ | $X_2$ | $Q_2$ |
|---|---|---|---|---|---|---|
| 1921 | 2-fluorophenyl | Me | H | F | H | 2-chloro-6-ethyl-4-(heptafluoro isopropyl)phenyl |
| 1922 | 2-fluorophenyl | Me | H | F | H | 2-bromo-6-ethyl-4-(heptafluoro isopropyl)phenyl |
| 1923 | 2-fluorophenyl | Me | H | F | H | 2-ethyl-4-(heptafluoro isopropyl)-6-iodophenyl |
| 1924 | 2-fluorophenyl | Me | H | F | H | 4-(heptafluoroisopropyl)-2-isopropyl-6-methylphenyl |
| 1925 | 2-fluorophenyl | Me | H | F | H | 2-bromo-4-(heptafluoroisopropyl)-6-n-propylphenyl |
| 1926 | 2-fluorophenyl | Me | H | F | H | 2-bromo-4-(heptafluoroisopropyl)-6-(trifluoromethylthio)phenyl |
| 1927 | 2-fluorophenyl | Me | H | F | H | 2,6-dibromo-4-(trifluoro methylthio)phenyl |
| 1928 | 2-fluorophenyl | Me | H | F | H | 2,6-dibromo-4-(pentafluoro ethylthio)phenyl |
| 1929 | 2-fluorophenyl | Me | H | F | H | 2,6-dibromo-4-(nonafluoro-n-butylthio)phenyl |
| 1930 | 2-fluorophenyl | Me | H | F | H | 2,6-dichloro-4-(heptafluoro isopropylsulfonyl) phenyl |
| 1931 | 2-fluorophenyl | Me | H | F | H | 2,6-dibromo-4-(heptafluoro-n-propylsulfonyl) phenyl |
| 1932 | 2-fluorophenyl | Me | H | F | H | 2-bromo-6-(heptafluoroisopropyl oxy)-4-methylpyridine-3-yl |
| 1933 | 2-fluorophenyl | Me | H | F | H | 2,4-dimethyl-6-(2,2,2-trifluoro-1-trifluoromethylethoxy)pyridine-3-yl |
| 1934 | 2-fluorophenyl | Me | H | F | H | 2-chloro-4-methyl-6-(2,2,2-trifluoro-1-trifluoromethyl ethoxy)pyridine-3-yl |
| 1935 | 2-fluorophenyl | Me | H | F | H | 2-bromo-4-methyl-6-(2,2,2-trifluoro-1-trifluoromethyl ethoxy)pyridine-3-yl |
| 1936 | 2-fluorophenyl | Me | H | F | H | 2-iodo-4-methyl-6-(2,2,2-trifluoro-1-trifluoromethyl ethoxy)pyridine-3-yl |
| 1937 | 2-fluorophenyl | Me | Me | H | H | 2,6-dibromo-4-(pentafluoro ethyl)phenyl |
| 1938 | 2-fluorophenyl | Me | Me | H | H | 2-bromo-4-(heptafluoroisopropyl)-6-methylphenyl |
| 1939 | 2-fluorophenyl | Me | Me | H | H | 2-ethyl-4-(heptafluoroisopropyl)-6-methylphenyl |
| 1940 | 2-fluorophenyl | Me | Me | H | H | 4-(heptafluoroisopropyl)-2-iodo-6-methylphenyl |

[Table 3-48]

| Compound Nos. | $Q_1$ | $R_1$ | $R_2$ | $X_1$ | $X_2$ | $Q_2$ |
|---|---|---|---|---|---|---|
| 1941 | 2-fluorophenyl | Me | Me | H | H | 2-chloro-6-ethyl-4-(heptafluoro isopropyl)phenyl |
| 1942 | 2-fluorophenyl | Me | Me | H | H | 2-bromo-6-ethyl-4-(heptafluoro isopropyl)phenyl |
| 1943 | 2-fluorophenyl | Me | Me | H | H | 2-ethyl-4-(heptafluoro isopropyl)-6-iodophenyl |
| 1944 | 2-fluorophenyl | Me | Me | H | H | 4-(heptafluoroisopropyl)-2-isopropyl-6-methylphenyl |
| 1945 | 2-fluorophenyl | Me | Me | H | H | 2-bromo-4-(heptafluoroisopropyl)-6-n-propylphenyl |
| 1946 | 2-fluorophenyl | Me | Me | H | H | 2-bromo-4-(heptafluoroisopropyl)-6-(trifluoromethylthio)phenyl |
| 1947 | 2-fluorophenyl | Me | Me | H | H | 2,6-dibromo-4-(trifluoro methylthio)phenyl |
| 1948 | 2-fluorophenyl | Me | Me | H | H | 2,6-dibromo-4-(pentafluoro ethylthio)phenyl |
| 1949 | 2-fluorophenyl | Me | Me | H | H | 2,6-dibromo-4-(nonafluoro-n-butylthio)phenyl |
| 1950 | 2-fluorophenyl | Me | Me | H | H | 2,6-dichloro-4-(heptafluoro isopropylsulfonyl) phenyl |
| 1951 | 2-fluorophenyl | Me | Me | H | H | 2,6-dibromo-4-(heptafluoro-n-propylsulfonyl) phenyl |
| 1952 | 2-fluorophenyl | Me | Me | H | H | 2-bromo-6-(heptafluoroisopropyl oxy)-4-methylpyridine-3-yl |
| 1953 | 2-fluorophenyl | Me | Me | H | H | 2,4-dimethyl-6-(2,2,2-trifluoro-1-trifluoromethylethoxy)pyridine-3-yl |
| 1954 | 2-fluorophenyl | Me | Me | H | H | 2-chloro-4-methyl-6-(2,2,2-trifluoro-1-trifluoromethyl ethoxy)pyridine-3-yl |
| 1955 | 2-fluorophenyl | Me | Me | H | H | 2-bromo-4-methyl-6-(2,2,2-trifluoro-1-trifluoromethyl ethoxy)pyridine-3-yl |
| 1956 | 2-fluorophenyl | Me | Me | H | H | 2-iodo-4-methyl-6-(2,2,2-trifluoro-1-trifluoromethyl ethoxy)pyridine-3-yl |
| 1957 | 2-fluorophenyl | Me | Me | F | H | 2,6-dibromo-4-(pentafluoro ethyl)phenyl |
| 1958 | 2-fluorophenyl | Me | Me | F | H | 2-bromo-4-(heptafluoroisopropyl)-6-methylphenyl |
| 1959 | 2-fluorophenyl | Me | Me | F | H | 2-ethyl-4-(heptafluoroisopropyl)-6-methylphenyl |
| 1960 | 2-fluorophenyl | Me | Me | F | H | 4-(heptafluoroisopropyl)-2-iodo-6-methylphenyl |

[Table 3-49]

| Compound Nos. | $Q_1$ | $R_1$ | $R_2$ | $X_1$ | $X_2$ | $Q_2$ |
|---|---|---|---|---|---|---|
| 1961 | 2-fluorophenyl | Me | Me | F | H | 2-chloro-6-ethyl-4-(heptafluoro isopropyl)phenyl |
| 1962 | 2-fluorophenyl | Me | Me | F | H | 2-bromo-6-ethyl-4-(heptafluoro isopropyl)phenyl |
| 1963 | 2-fluorophenyl | Me | Me | F | H | 2-ethyl-4-(heptafluoro isopropyl)-6-iodophenyl |
| 1964 | 2-fluorophenyl | Me | Me | F | H | 4-(heptafluoroisopropyl)-2-isopropyl-6-methylphenyl |
| 1965 | 2-fluorophenyl | Me | Me | F | H | 2-bromo-4-(heptafluoroisopropyl)-6-n-propylphenyl |

(continued)

| Compound Nos. | $Q_1$ | $R_1$ | $R_2$ | $X_1$ | $X_2$ | $Q_2$ |
|---|---|---|---|---|---|---|
| 1966 | 2-fluorophenyl | Me | Me | F | H | 2-bromo-4-(heptafluoroisopropyl)-6-(trifluoromethylthio)phenyl |
| 1967 | 2-fluorophenyl | Me | Me | F | H | 2,6-dibromo-4-(trifluoro methylthio)phenyl |
| 1968 | 2-fluorophenyl | Me | Me | F | H | 2,6-dibromo-4-(pentafluoro ethylthio)phenyl |
| 1969 | 2-fluorophenyl | Me | Me | F | H | 2,6-dibromo-4-(nonafluoro-n-butylthio)phenyl |
| 1970 | 2-fluorophenyl | Me | Me | F | H | 2,6-dichloro-4-(heptafluoro isopropylsulfonyl) phenyl |
| 1971 | 2-fluorophenyl | Me | Me | F | H | 2,6-dibromo-4-(heptafluoro-n-propylsulfonyl) phenyl |
| 1972 | 2-fluorophenyl | Me | Me | F | H | 2-bromo-6-(heptafluoroisopropyl oxy)-4-methylpyridine-3-yl |
| 1973 | 2-fluorophenyl | Me | Me | F | H | 2,4-dimethyl-6-(2,2,2-trifluoro-1-trifluoromethylethoxy)pyridine-3-yl |
| 1974 | 2-fluorophenyl | Me | Me | F | H | 2-chloro-4-methyl-6-(2,2,2-trifluoro-1-trifluoromethyl ethoxy)pyridine-3-yl |
| 1975 | 2-fluorophenyl | Me | Me | F | H | 2-bromo-4-methyl-6-(2,2,2-trifluoro-1-trifluoromethyl ethoxy)pyridine-3-yl |
| 1976 | 2-fluorophenyl | Me | Me | F | H | 2-iodo-4-methyl-6-(2,2,2-trifluoro-1-trifluoromethyl ethoxy)pyridine-3-yl |

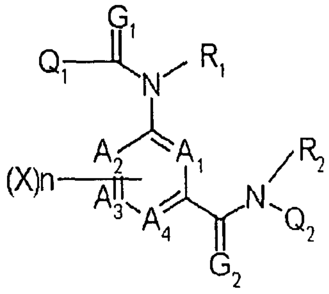

($A_3$, $A_4$ = carbon atoms; X, $R_2$ = hydrogen atoms; $G_1$, $G_2$ = oxygen atoms; n = 0)

[Table 4-1]

| Compound Nos. | $Q_1$ | $R_1$ | $A_1$ | $A_2$ | $Q_2$ |
|---|---|---|---|---|---|
| 2001 | phenyl | H | N | C | 2,6-dimethyl-4-heptafluoro isopropylphenyl |
| 2002 | 2-methylphenyl | H | N | C | 2,6-dimethyl-4-heptafluoro isopropylphenyl |
| 2003 | 4-methylphenyl | H | N | C | 2,6-dimethyl-4-heptafluoro isopropylphenyl |
| 2004 | 2-fluorophenyl | H | N | C | 2,6-dimethyl-4-heptafluoro isopropylphenyl |
| 2005 | 3-fluorophenyl | H | N | C | 2,6-dimethyl-4-heptafluoro isopropylphenyl |
| 2006 | 4-fluorophenyl | H | N | C | 2,6-dimethyl-4-heptafluoro isopropylphenyl |
| 2007 | 2-chlorophenyl | H | N | C | 2,6-dimethyl-4-heptafluoro isopropylphenyl |
| 2008 | 4-chlorophenyl | H | N | C | 2,6-dimethyl-4-heptafluoro isopropylphenyl |

(continued)

| Compound Nos. | $Q_1$ | $R_1$ | $A_1$ | $A_2$ | $Q_2$ |
|---|---|---|---|---|---|
| 2009 | 2-bromophenyl | H | N | C | 2,6-dimethyl-4-heptafluoro isopropylphenyl |
| 2010 | 2-iodophenyl | H | N | C | 2,6-dimethyl-4-heptafluoro isopropylphenyl |
| 2011 | 3-cyanophenyl | H | N | C | 2,6-dimethyl-4-heptafluoro isopropylphenyl |
| 2012 | 4-cyanophenyl | H | N | C | 2,6-dimethyl-4-heptafluoro isopropylphenyl |
| 2013 | 2-nitrophenyl | H | N | C | 2,6-dimethyl-4-heptafluoro isopropylphenyl |
| 2014 | 3-nitrophenyl | H | N | C | 2,6-dimethyl-4-heptafluoro isopropylphenyl |
| 2015 | 4-nitrophenyl | H | N | C | 2,6-dimethyl-4-heptafluoro isopropylphenyl |
| 2016 | 2-trifluoromethyl phenyl | H | N | C | 2,6-dimethyl-4-heptafluoro isopropylphenyl |
| 2017 | 4-trifluoromethyl phenyl | H | N | C | 2,6-dimethyl-4-heptafluoro isopropylphenyl |
| 2018 | 4-trifluoromethoxy phenyl | H | N | C | 2,6-dimethyl-4-heptafluoro isopropylphenyl |
| 2019 | 2,3-difluorophenyl | H | N | C | 2,6-dimethyl-4-heptafluoro isopropylphenyl |
| 2020 | 2,4-difluorophenyl | H | N | C | 2,6-dimethyl-4-heptafluoro isopropylphenyl |

[Table 4-2]

| Compound Nos. | $Q_1$ | $R_1$ | $A_1$ | $A_2$ | $Q_2$ |
|---|---|---|---|---|---|
| 2021 | 2,5-difluorophenyl | H | N | C | 2,6-dimethyl-4-heptafluoro isopropylphenyl |
| 2022 | 2,6-difluorophenyl | H | N | C | 2,6-dimethyl-4-heptafluoro isopropylphenyl |
| 2023 | 2,4-dichlorophenyl | H | N | C | 2,6-dimethyl-4-heptafluoro isopropylphenyl |
| 2024 | 2,6-dichlorophenyl | H | N | C | 2,6-dimethyl-4-heptafluoro isopropylphenyl |
| 2025 | 3,4-dichlorophenyl | H | N | C | 2,6-dimethyl-4-heptafluoro isopropylphenyl |
| 2026 | 2-chloro-4-nitro phenyl | H | N | C | 2,6-dimethyl-4-heptafluoro isopropylphenyl |
| 2027 | 2-chloro-4-fluoro phenyl | H | N | C | 2,6-dimethyl-4-heptafluoro isopropylphenyl |
| 2028 | 2-chloro-6-fluoro phenyl | H | N | C | 2,6-dimethyl-4-heptafluoro isopropylphenyl |
| 2029 | 4-chloro-2-fluoro phenyl | H | N | C | 2,6-dimethyl-4-heptafluoro isopropylphenyl |
| 2030 | 4-chloro-2-nitro phenyl | H | N | C | 2,6-dimethyl-4-heptafluoro isopropylphenyl |
| 2031 | 2,3,6-trifluoro phenyl | H | N | C | 2,6-dimethyl-9-heptafluoro isopropylphenyl |
| 2032 | pyridine-2-yl | H | N | C | 2,6-dimethyl-4-heptafluoro isopropylphenyl |
| 2033 | pyridine-3-yl | H | N | C | 2,6-dimethyl-4-heptafluoro isopropylphenyl |
| 2034 | pyridine-4-yl | H | N | C | 2,6-dimethyl-4-heptafluoro isopropylphenyl |
| 2035 | 2-fluoropyridine-3-yl | H | N | C | 2,6-dimethyl-4-heptafluoro isopropylphenyl |
| 2036 | 2-chloropyridine-3-yl | H | N | C | 2,6-dimethyl-4-heptafluoro isopropylphenyl |
| 2037 | 2-chloropyridine-5-yl | H | N | C | 2,6-dimethyl-4-heptafluoro isopropylphenyl |
| 2038 | 2-methylthio pyridine-3-yl | H | N | C | 2,6-dimethyl-4-heptafluoro isopropylphenyl |
| 2039 | pyrazine-2-yl | H | N | C | 2,6-dimethyl-4-heptafluoro isopropylphenyl |
| 2040 | furan-2-yl | H | N | C | 2,6-dimethyl-4-heptafluoro isopropylphenyl |

[Table 4-3]

| Compound Nos. | $Q_1$ | $R_1$ | $A_1$ | $A_2$ | $Q_2$ |
|---|---|---|---|---|---|
| 2041 | thiophene-2-yl | H | N | C | 2,6-dimethyl-4-heptafluoro isopropylphenyl |
| 2042 | phenyl | H | N | C | 2,6-dibromo-4-(heptafluoro-n-propylthio) phenyl |
| 2043 | 2-methylphenyl | H | N | C | 2,6-dibromo-4-(heptafluoro-n-propylthio) phenyl |
| 2044 | 4-methylphenyl | H | N | C | 2,6-dibromo-4-(heptafluoro-n-propylthio) phenyl |
| 2045 | 2-fluorophenyl | H | N | C | 2,6-dibromo-4-(heptafluoro-n-propylthio) phenyl |
| 2046 | 3-fluorophenyl | H | N | C | 2,6-dibromo-4-(heptafluoro-n-propylthio) phenyl |
| 2047 | 4-fluorophenyl | H | N | C | 2,6-dibromo-4-(heptafluoro-n-propylthio) phenyl |
| 2048 | 2-chlorophenyl | H | N | C | 2,6-dibromo-4-(heptafluoro-n-propylthio) phenyl |
| 2049 | 4-chlorophenyl | H | N | C | 2,6-dibromo-4-(heptafluoro-n-propylthio) phenyl |
| 2050 | 2-bromophenyl | H | N | C | 2,6-dibromo-4-(heptafluoro-n-propylthio) phenyl |
| 2051 | 2-iodophenyl | H | N | C | 2,6-dibromo-4-(heptafluoro-n-propylthio) phenyl |
| 2052 | 3-cyanophenyl | H | N | C | 2,6-dibromo-4-(heptafluoro-n-propylthio) phenyl |
| 2053 | 4-cyanophenyl | H | N | C | 2,6-dibromo-4-(heptafluoro-n-propylthio) phenyl |
| 2054 | 2-nitrophenyl | H | N | C | 2,6-dibromo-4-(heptafluoro-n-propylthio) phenyl |
| 2055 | 3-nitrophenyl | H | N | C | 2,6-dibromo-4-(heptafluoro-n-propylthio) phenyl |
| 2056 | 4-nitrophenyl | H | N | C | 2,6-dibromo-4-(heptafluoro-n-propylthio) phenyl |
| 2057 | 2-trifluoromethyl phenyl | H | N | C | 2,6-dibromo-4-(heptafluoro-n-propylthio) phenyl |
| 2058 | 4-trifluoromethyl phenyl | H | N | C | 2,6-dibromo-4-(heptafluoro-n-propylthio) phenyl |
| 2059 | 4-trifluoromethoxy phenyl | H | N | C | 2,6-dibromo-4-(heptafluoro-n-propylthio) phenyl |
| 2060 | 2,3-difluorophenyl | H | N | C | 2,6-dibromo-4-(heptafluoro-n-propylthio) phenyl |

[Table 4-4]

| Compound Nos. | $Q_1$ | $R_1$ | $A_1$ | $A_2$ | $Q_2$ |
|---|---|---|---|---|---|
| 2061 | 2,4-difluorophenyl | H | N | C | 2,6-dibromo-4-(heptafluoro-n-propylthio) phenyl |
| 2062 | 2,5-difluorophenyl | H | N | C | 2, 6-dibromo-4-(heptafluoro-n-propylthio) phenyl |
| 2063 | 2,6-difluorophenyl | H | N | C | 2,6-dibromo-4-(heptafluoro-n-propylthio) phenyl |
| 2064 | 2,4-dichlorophenyl | H | N | C | 2,6-dibromo-4-(heptafluoro-n-propylthio) phenyl |
| 2065 | 2,6-dichlorophenyl | H | N | C | 2,6-dibromo-4-(heptafluoro-n-propylthio) phenyl |
| 2066 | 3,4-dichlorophenyl | H | N | C | 2,6-dibromo-4-(heptafluoro-n-propylthio) phenyl |
| 2067 | 2-chloro-4-nitro phenyl | H | N | C | 2,6-dibromo-4-(heptafluoro-n-propylthio) phenyl |
| 2068 | 2-chloro-4-fluoro phenyl | H | N | C | 2,6-dibromo-4-(heptafluoro-n-propylthio) phenyl |
| 2069 | 2-chloro-6-fluoro phenyl | H | N | C | 2,6-dibromo-4-(heptafluoro-n-propylthio) phenyl |
| 2070 | 4-chloro-2-fluoro phenyl | H | N | C | 2,6-dibromo-4-(heptafluoro-n-propylthio) phenyl |
| 2071 | 4-chloro-2-nitro phenyl | H | N | C | 2,6-dibromo-4-(heptafluoro-n-propylthio) phenyl |
| 2072 | 2,3,6-trifluoro phenyl | H | N | C | 2,6-dibromo-4-(heptafluoro-n-propylthio) phenyl |
| 2073 | pyridine-2-yl | H | N | C | 2,6-dibromo-4-(heptafluoro-n-propylthio) phenyl |
| 2074 | pyridine-3-yl | H | N | C | 2,6-dibromo-4-(heptafluoro-n-propylthio) phenyl |
| 2075 | 2-fluoropyridine-3-yl | H | N | C | 2,6-dibromo-4-(heptafluoro-n-propylthio) phenyl |
| 2076 | 2-chloropyridine-3-yl | H | N | C | 2,6-dibromo-4-(heptafluoro-n-propylthio) phenyl |
| 2077 | 2-chloropyridine-5-yl | H | N | C | 2,6-dibromo-4-(heptafluoro-n-propylthio) phenyl |
| 2078 | 2-methylthio pyridine-3-yl | H | N | C | 2,6-dibromo-4-(heptafluoro-n-propylthio) phenyl |
| 2079 | pyrazine-2-yl | H | N | C | 2,6-dibromo-4-(heptafluoro-n-propylthio) phenyl |
| 2080 | furan-2-yl | H | N | C | 2,6-dibromo-4-(heptafluoro-n-propylthio) phenyl |

[Table 4-5]

| Compound Nos. | $Q_1$ | $R_1$ | $A_1$ | $A_2$ | $Q_2$ |
|---|---|---|---|---|---|
| 2081 | thiophene-2-yl | H | N | C | 2,6-dibromo-4-(heptafluoro-n-propylthio) phenyl |
| 2082 | phenyl | Me | N | C | 2,6-dimethyl-4-heptafluoro isopropylphenyl |
| 2083 | 2-methylphenyl | Me | N | C | 2,6-dimethyl-4-heptafluoro isopropylphenyl |
| 2084 | 4-methylphenyl | Me | N | C | 2,6-dimethyl-4-heptafluoro isopropylphenyl |
| 2085 | 2-fluorophenyl | Me | N | C | 2,6-dimethyl-4-heptafluoro isopropylphenyl |
| 2086 | 3-fluorophenyl | Me | N | C | 2,6-dimethyl-4-heptafluoro isopropylphenyl |
| 2087 | 4-fluorophenyl | Me | N | C | 2,6-dimethyl-4-heptafluoro isopropylphenyl |
| 2088 | 2-chlorophenyl | Me | N | C | 2,6-dimethyl-4-heptafluoro isopropylphenyl |
| 2089 | 4-chlorophenyl | Me | N | C | 2,6-dimethyl-4-heptafluoro isopropylphenyl |
| 2090 | 2-bromophenyl | Me | N | C | 2,6-dimethyl-4-heptafluoro isopropylphenyl |
| 2091 | 2-iodophenyl | Me | N | C | 2,6-dimethyl-4-heptafluoro isopropylphenyl |
| 2092 | 3-cyanophenyl | Me | N | C | 2,6-dimethyl-4-heptafluoro isopropylphenyl |
| 2093 | 4-cyanophenyl | Me | N | C | 2,6-dimethyl-4-heptafluoro isopropylphenyl |
| 2094 | 2-nitrophenyl | Me | N | C | 2,6-dimethyl-4-heptafluoro isopropylphenyl |
| 2095 | 3-nitrophenyl | Me | N | C | 2,6-dimethyl-4-heptafluoro isopropylphenyl |
| 2096 | 4-nitrophenyl | Me | N | C | 2,6-dimethyl-4-heptafluoro isopropylphenyl |
| 2097 | 2-trifluoromethyl phenyl | Me | N | C | 2,6-dimethyl-4-heptafluoro isopropylphenyl |
| 2098 | 4-trifluoromethyl phenyl | Me | N | C | 2,6-dimethyl-4-heptafluoro isopropylphenyl |
| 2099 | 4-trifluoromethoxy phenyl | Me | N | C | 2,6-dimethyl-4-heptafluoro isopropylphenyl |
| 2100 | 2,3-difluorophenyl | Me | N | C | 2,6-dimethyl-4-heptafluoro isopropylphenyl |

[Table 4-6]

| Compound Nos. | $Q_1$ | $R_1$ | $A_1$ | $A_2$ | $Q_2$ |
|---|---|---|---|---|---|
| 2101 | 2,4-difluorophenyl | Me | N | C | 2,6-dimethyl-4-heptafluoro isopropylphenyl |
| 2102 | 2,5-difluorophenyl | Me | N | C | 2,6-dimethyl-4-heptafluoro isopropylphenyl |
| 2103 | 2,6-difluorophenyl | Me | N | C | 2,6-dimethyl-4-heptafluoro isopropylphenyl |
| 2104 | 2,4-dichlorophenyl | Me | N | C | 2,6-dimethyl-4-heptafluoro isopropylphenyl |
| 2105 | 2,6-dichlorophenyl | Me | N | C | 2,6-dimethyl-4-heptafluoro isopropylphenyl |
| 2106 | 3,4-dichlorophenyl | Me | N | C | 2,6-dimethyl-4-heptafluoro isopropylphenyl |
| 2107 | 2-chloro-4-nitro phenyl | Me | N | C | 2,6-dimethyl-4-heptafluoro isopropylphenyl |
| 2108 | 2-chloro-4-fluoro phenyl | Me | N | C | 2,6-dimethyl-4-heptafluoro isopropylphenyl |
| 2109 | 2-chloro-6-fluoro phenyl | Me | N | C | 2,6-dimethyl-4-heptafluoro isopropylphenyl |
| 2110 | 4-chloro-2-fluoro phenyl | Me | N | C | 2,6-dimethyl-4-heptafluoro isopropylphenyl |
| 2111 | 4-chloro-2-nitro phenyl | Me | N | C | 2,6-dimethyl-4-heptafluoro isopropylphenyl |
| 2112 | 2,3,6-trifluoro phenyl | Me | N | C | 2,6-dimethyl-4-heptafluoro isopropylphenyl |
| 2113 | pyridine-2-yl | Me | N | C | 2,6-dimethyl-4-heptafluoro isopropylphenyl |

(continued)

| Compound Nos. | $Q_1$ | $R_1$ | $A_1$ | $A_2$ | $Q_2$ |
|---|---|---|---|---|---|
| 2114 | pyridine-3-yl | Me | N | C | 2,6-dimethyl-4-heptafluoro isopropylphenyl |
| 2115 | 2-fluoropyridine-3-yl | Me | N | C | 2,6-dimethyl-4-heptafluoro isopropylphenyl |
| 2116 | 2-chloropyridine-3-yl | Me | N | C | 2, 6-dimethyl-4-heptafluoro isopropylphenyl |
| 2117 | 2-chloropyridine-5-yl | Me | N | C | 2,6-dimethyl-4-heptafluoro isopropylphenyl |
| 2118 | 2-methylthio pyridine-3-yl | Me | N | C | 2,6-dimethyl-4-heptafluoro isopropylphenyl |
| 2119 | pyrazine-2-yl | Me | N | C | 2,6-dimethyl-4-heptafluoro isopropylphenyl |
| 2120 | furan-2-yl | Me | N | C | 2,6-dimethyl-4-heptafluoro isopropylphenyl |

[Table 4-7]

| Compound Nos. | $Q_1$ | $R_1$ | $A_1$ | $A_2$ | $Q_2$ |
|---|---|---|---|---|---|
| 2121 | thiophene-2-yl | Me | N | C | 2,6-dimethyl-4-heptafluoro isopropylphenyl |
| 2122 | phenyl | Me | N | C | 2,6-dibromo-4-(heptafluoro-n-propylthio) phenyl |
| 2123 | 2-methylphenyl | Me | N | C | 2,6-dibromo-4-(heptafluoro-n-propylthio) phenyl |
| 2124 | 4-methylphenyl | Me | N | C | 2,6-dibromo-4-(heptafluoro-n-propylthio) phenyl |
| 2125 | 2-fluorophenyl | Me | N | C | 2,6-dibromo-4-(heptafluoro-n-propylthio) phenyl |
| 2126 | 3-fluorophenyl | Me | N | C | 2,6-dibromo-4-(heptafluoro-n-propylthio) phenyl |
| 2127 | 4-fluorophenyl | Me | N | C | 2,6-dibromo-4-(heptafluoro-n-propylthio) phenyl |
| 2128 | 2-chlorophenyl | Me | N | C | 2,6-dibromo-4-(heptafluoro-n-propylthio) phenyl |
| 2129 | 4-chlorophenyl | Me | N | C | 2,6-dibromo-4-(heptafluoro-n-propylthio) phenyl |
| 2130 | 2-bromophenyl | Me | N | C | 2,6-dibromo-4-(heptafluoro-n-propylthio) phenyl |
| 2131 | 2-iodophenyl | Me | N | C | 2,6-dibromo-4-(heptafluoro-n-propylthio) phenyl |
| 2132 | 3-cyanophenyl | Me | N | C | 2,6-dibromo-4-(heptafluoro-n-propylthio) phenyl |
| 2133 | 4-cyanophenyl | Me | N | C | 2,6-dibromo-4-(heptafluoro-n-propylthio) phenyl |
| 2134 | 2-nitrophenyl | Me | N | C | 2,6-dibromo-4-(heptafluoro-n-propylthio) phenyl |
| 2135 | 3-nitrophenyl | Me | N | C | 2,6-dibromo-4-(heptafluoro-n-propylthio) phenyl |
| 2136 | 4-nitrophenyl | Me | N | C | 2,6-dibromo-4-(heptafluoro-n-propylthio) phenyl |

(continued)

| Compound Nos. | $Q_1$ | $R_1$ | $A_1$ | $A_2$ | $Q_2$ |
|---|---|---|---|---|---|
| 2137 | 2-trifluoromethyl phenyl | Me | N | C | 2,6-dibromo-4-(heptafluoro-n-propylthio) phenyl |
| 2138 | 4-trifluoromethyl phenyl | Me | N | C | 2,6-dibromo-4-(heptafluoro-n-propylthio) phenyl |
| 2139 | 4-trifluoromethoxy phenyl | Me | N | C | 2,6-dibromo-4-(heptafluoro-n-propylthio) phenyl |
| 2140 | 2,3-difluorophenyl | Me | N | C | 2,6-dibromo-4-(heptafluoro-n-propylthio) phenyl |

[Table 4-8]

| Compound Nos. | $Q_1$ | $R_1$ | $A_1$ | $A_2$ | $Q_2$ |
|---|---|---|---|---|---|
| 2141 | 2,4-difluorophenyl | Me | N | C | 2,6-dibromo-4-(heptafluoro-n-propylthio) phenyl |
| 2142 | 2,5-difluorophenyl | Me | N | C | 2,6-dibromo-4-(heptafluoro-n-propylthio) phenyl |
| 2143 | 2,6-difluorophenyl | Me | N | C | 2,6-dibromo-4-(heptafluoro-n-propylthio) phenyl |
| 2144 | 2,4-dichlorophenyl | Me | N | C | 2,6-dibromo-4-(heptafluoro-n-propylthio) phenyl |
| 2145 | 2,6-dichlorophenyl | Me | N | C | 2,6-dibromo-4-(heptafluoro-n-propylthio) phenyl |
| 2146 | 3,4-dichlorophenyl | Me | N | C | 2,6-dibromo-4-(heptafluoro-n-propylthio) phenyl |
| 2147 | 2-chloro-4-nitro phenyl | Me | N | C | 2,6-dibromo-4-(heptafluoro-n-propylthio) phenyl |
| 2148 | 2-chloro-4-fluoro phenyl | Me | N | C | 2,6-dibromo-4-(heptafluoro-n-propylthio) phenyl |
| 2149 | 2-chloro-6-fluoro phenyl | Me | N | C | 2,6-dibromo-4-(heptafluoro-n-propylthio) phenyl |
| 2150 | 4-chloro-2-fluoro phenyl | Me | N | C | 2,6-dibromo-4-(heptafluoro-n-propylthio) phenyl |
| 2151 | 4-chloro-2-nitro phenyl | Me | N | C | 2,6-dibromo-4-(heptafluoro-n-propylthio) phenyl |
| 2152 | 2,3,6-trifluoro phenyl | Me | N | C | 2,6-dibromo-4-(heptafluoro-n-propylthio) phenyl |
| 2153 | pyridine-2-yl | Me | N | C | 2,6-dibromo-4-(heptafluoro-n-propylthio) phenyl |
| 2154 | pyridine-3-yl | Me | N | C | 2,6-dibromo-4-(heptafluoro-n-propylthio) phenyl |
| 2155 | 2-fluoropyridine-3-yl | Me | N | C | 2,6-dibromo-4-(heptafluoro-n-propylthio) phenyl |
| 2156 | 2-chloropyridine-3-yl | Me | N | C | 2,6-dibromo-4-(heptafluoro-n-propylthio) phenyl |

(continued)

| Compound Nos. | $Q_1$ | $R_1$ | $A_1$ | $A_2$ | $Q_2$ |
|---|---|---|---|---|---|
| 2157 | 2-chloropyridine-5-yl | Me | N | C | 2,6-dibromo-4-(heptafluoro-n-propylthio) phenyl |
| 2158 | 2-methylthio pyridine-3-yl | Me | N | C | 2,6-dibromo-4-(heptafluoro-n-propylthio) phenyl |
| 2159 | pyrazine-2-yl | Me | N | C | 2,6-dibromo-4-(heptafluoro-n-propylthio) phenyl |
| 2160 | furan-2-yl | Me | N | C | 2,6-dibromo-4-(heptafluoro-n-propylthio) phenyl |

[Table 4-9]

| Compound Nos. | $Q_1$ | $R_1$ | $A_1$ | $A_2$ | $Q_2$ |
|---|---|---|---|---|---|
| 2161 | thiophene-2-yl | Me | N | C | 2,6-dibromo-4-(heptafluoro-n-propylthio) phenyl |
| 2162 | phenyl | H | C | N | 2,6-dimethyl-4-heptafluoro isopropylphenyl |
| 2163 | phenyl | H | C | N-oxide | 2,6-dimethyl-4-heptafluoro isopropylphenyl |
| 2164 | phenyl | H | N-oxide | C | 2,6-dimethyl-4-heptafluoro isopropylphenyl |
| 2165 | 2-fluorophenyl | H | N-oxide | C | 2,6-dimethyl-4-heptafluoro isopropylphenyl |
| 2166 | phenyl | H | N-oxide | C | 2,6-dibromo-4-(heptafluoro-n-propylthio) phenyl |
| 2167 | 2-fluorophenyl | H | N-oxide | C | 2,6-dibromo-4-(heptafluoro-n-propylthio) phenyl |
| 2168 | phenyl | Me | N-oxide | C | 2,6-dimethyl-4-heptafluoro isopropylphenyl |
| 2169 | 2-fluorophenyl | Me | N-oxide | C | 2,6-dimethyl-4-heptafluoro isopropylphenyl |
| 2170 | phenyl | Me | N-oxide | C | 2,6-dibromo-4-(heptafluoro-n-propylthio) phenyl |
| 2171 | 2-fluorophenyl | Me | N-oxide | C | 2,6-dibromo-4-(heptafluoro-n-propylthio) phenyl |

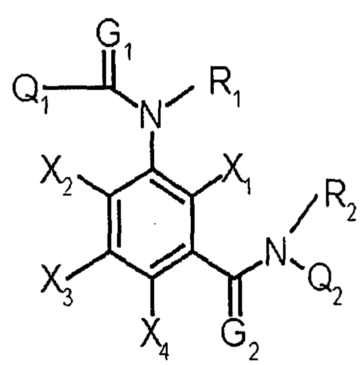

($R_1$, $R_2$, $X_1$, $X_2$, $X_3$, $X_4$ = hydrogen atoms; $Q_1$ = phenyl)

[Table 5-1]

| Compound Nos. | $G_1$ | $G_2$ | $Q_2$ |
|---|---|---|---|
| 2201 | O | S | 2,6-dimethyl-4-heptafluoroisopropylphenyl |
| 2202 | S | O | 2,6-dimethyl-4-heptafluoroisopropylphenyl |
| 2203 | S | S | 2,6-dimethyl-4-heptafluoroisopropylphenyl |
| 2204 | O | S | 2,6-dibromo-4-(heptafluoro-n-propylthio)phenyl |
| 2205 | S | O | 2,6-dibromo-4-(heptafluoro-n-propylthio)phenyl |
| 2206 | S | S | 2,6-dibromo-4-(heptafluoro-n-propylthio)phenyl |
| 2207 | O | S | 2,6-dimethyl-4-(nonafluoro-2-butyl)phenyl |
| 2208 | S | O | 2,6-dimethyl-4-(nonafluoro-2-butyl)phenyl |
| 2209 | S | S | 2,6-dimethyl-4-(nonafluoro-2-butyl)phenyl |
| 2210 | O | S | 2-bromo-4-(heptafluoroisopropyl)-6-(methylsulfonyl) phenyl |
| 2211 | S | O | 2-bromo-4-(heptafluoroisopropyl)-6-(methylsulfonyl) phenyl |
| 2212 | S | S | 2-bromo-4-(heptafluoroisopropyl)-6-(methylsulfonyl) phenyl |
| 2213 | O | S | 2-n-propyl-6-iodo-4-(heptafluoroisopropyl)phenyl |
| 2214 | S | O | 2-n-propyl-6-iodo-4-(heptafluoroisopropyl)phenyl |
| 2215 | S | S | 2-n-propyl-6-iodo-4-(heptafluoroisopropyl)phenyl |
| 2216 | O | S | 2,6-dibromo-4-(heptafluoro-n-propylsulfinyl)phenyl |
| 2217 | S | O | 2,6-dibromo-4-(heptafluoro-n-propylsulfinyl)phenyl |
| 2218 | S | S | 2,6-dibromo-4-(heptafluoro-n-propylsulfinyl)phenyl |
| 2219 | O | S | 2,6-dichloro-4-(heptafluoro-n-propylthio)phenyl |
| 2220 | s | O | 2,6-dichloro-4-(heptafluoro-n-propylthio)phenyl |

[Table 5-2]

| Compound Nos. | $G_1$ | $G_2$ | $Q_2$ |
|---|---|---|---|
| 2221 | S | S | 2,6-dichloro-4-(heptafluoro-n-propylthio)phenyl |

The physical properties of the compound represented by the general formula (1) of the present invention are shown in Table 6 below. Tetramethylsilane is used as an internal standard substance to record shift values of $^1$H-NMR as shown herein, unless otherwise particularly mentioned.

[Table 6-1]

| Compound No. | $^1$H-NMR (DMSO-$d_6$, ppm) |
|---|---|
| 1 | ($CDCl_3$) δ 2.36(6H, s), 7.36(2H, s), 7.51-7.65(5H, m), 7.73(1H, d, J = 7.8Hz), 7.86(1H, d, J = 7.8Hz), 7.89(2H, d, J = 7.8Hz), 8.01(1H, s), 8.33(1H, s). |
| 2 | δ 7.52-7.63(4H, m), 7.77(1H, d, J = 7.8Hz), 7.98-8.09(5H, m), 8.39(1H, s), 10.48(1H, s), 10.59(1H, s). |
| 3 | δ 7.32-7.39(2H, m), 7.54-7.63(2H, m), 7.67-7.72(1H, m), 7.77(1H, d, J = 7.8Hz), 7.98(1H, d, J = 7.8Hz), 8.03(2H, s), 8.34(1H, s), 10.61(1H, s), 10.65(1H, s). |

(continued)

| Compound No. | $^1$H-NMR (DMSO-$d_6$, ppm) |
|---|---|
| 4 | δ 7.53-7.63(4H, m), 7.79(1H, d, J = 8.3Hz), 7.99-8.02(2H, m), 8.08(1H, dd, J = 2.0,8.3Hz), 8.17 (2H, s), 8.39(1H, d, J = 2.0Hz), 10.50(1H, s), 10.63(1H, s). |
| 5 | δ 7.33-7.40(2H, m), 7.54-7.63(2H, m), 7.68-7.72(1H, m), 7.79(1H, d, J = 7.8Hz), 7.99(1H, d, J = 7.8Hz), 8.17(2H, s), 8.35(1H, s), 10.65(1H, s), 10.67(1H, s). |
| 6 | δ 7.52-7.62(4H,m), 7.75(1H,d,J=7.8Hz), 7.91(2H,s), 7.97(2H,d,J=7.8Hz), 8.04(1H,d,J=7.8Hz), 8.36(1H,s), 10.50(1H,s),10.61(1H,s). |
| 7 | δ 7.53-7.64(4H, m), 7.78(1H, d, J = 7.8Hz), 7.99-8.01(2H, m), 8.06(2H, s), 8.09(1H, dd, J = 2.0,7.8Hz). 8.39(1H, s), 10.51(1H, s), 10.63(1H, s). |
| 8 | δ 7.33-7.40(2H, m), 7.55-7.63(2H, m), 7.68-7.72(1H, m), 7.78(1H, d, J = 7.8Hz), 7.99(1H, d, J = 7.8Hz), 8.05(2H, s), 8.34(1H, s), 10.65(1H, s), 10.69(1H, s). |
| 9 | δ 2.29(6H, s), 7.47(2H, s), 7.51-7.62(4H, m), 7.75(1H, d, J = 7.8Hz), 7.97-8.00(2H, m), 8.03-8.06 (1H, m), 8.36(1H, s), 10.00(1H, s), 10.45(1H, s). ' |
| 10<br>11 | δ 2.37 (6H, s), 7.34 (2H, s), 7.46-7.57 (4H, m), 7.75 (1H, d, J =7.8Hz), 7.98-8.01 (2H, m), 8.12 (1H, d, J =7.3Hz), 8.34 (1H. s). 8.87 (1H, s), 9.66 (1H, s). ($CDCl_3$) δ 2.35 (6H, s), 2.52 (3H, s), 7.26-7.31 (2H, m), 7.36 (2H, s), 7.37-7.42 (1H, m). 7.49-7.54 (2H, m), 7.68-7.73 (3H, m), 7.79 (1H, d, J =7.3Hz), 8.30 (1H, s). |
| 12 | δ 2.30 (6H, s), 2.41 (3H, s), 7.42-7.48 (4H, m), 7.54 (1H, d, J =7.94Hz), 7.74-7.82 (3H, m), 8.07 (1H, d, J =7.94Hz), 8.35 (1H, s), 9.99 (1H, s), 10.43 (1H, s). |
| 13 | δ 2.30 (6H, s), 2.40 (3H, s), 7.35 (2H, d, J =8.3Hz), 7.45 (2H, s), 7.53 (1H, t, J =7.8Hz), 7.74 (1H, d, J =7.81Hz), 7.92 (2H, d, J =8.3Hz), 8.07 (1H, d, J =7.8Hz), 8.36 (1H, s), 9.98 (1H, s), 10.39 (1H, s). |
| 14 | δ 1.18 (3H, t J =7.6Hz), 2.30 (6H, s), 2.76 (2H, q, J =7.6Hz), 7.30-7.37 (2H, m), 7.42-7.46 (4H, m), 7.52 (1H, t, J =8.0Hz), 7.81 (1H, d, J =8.0Hz), 7.96 (1H, d, J =8.0Hz), 8.35 (1H, s), 9.98 (1H, s), 10.56(1H, s). |
| 16 | δ 1.22 (3H, t, J =7.6Hz), 2.31 (6H, s), 2.69 (2H, q, J =7.6Hz), 7.39 (2H, d, J =8.3Hz), 7.45 (2H, t, J =7.9Hz), 7.53 (2H, d, J=8.3Hz), 7.74 (1H, d, J =7.9Hz), 7.94 (1H, d, J =8.3Hz), 8.07 (1H, d, J =7.9Hz), 8.36 (1H, s), 9.99 (1H, s), 10.40 (1H, s). |
| 17 | δ 2.30 (6H, s), 7.33-7.76 (8H, m), 7.97 (1H, d, J =8.30Hz), 8.30 (1H, s), 10.01 (1H, s), 10.65 (1H, s). |
| 18 | δ 2.30 (6H, s), 7.45-7.64 (5H, m), 7.76-8.05 (3H, m), 8.06 (1H, d, J =8.3Hz), 8.35 (1H, s), 10.00 (1H, s), 10.54 (1H, s). |
| 19 | δ 2.30 (6H, s), 7.37-7.45 (4H, m), 7.54 (1H, t, J =7.8Hz), 7.76 (1H, d, J =7.8Hz), 8.05-8.11 (3H, m), 8.34 (1H, s), 10.00 (1H, s), 10.49 (1H, s). |
| 20 | ($CDCl_3$) δ 2.35 (6H, s), 7.36 (2H, s), 7.37-7.54 (4H, m), 7.69-7.83 (4H, m), 8.13 (1H, s), 8.33 (1H, s). |
| 22 | δ 2.30 (6H, s), 7.45 (2H, s), 7.56 (1H, dd, J =7.8,6.8Hz), 7.63 (1H, d, J =8.8Hz), 7.72 (1H, d, J =8.8Hz), 7.77 (1H, d, J =6.8Hz), 7.94 (1H, d, J =8.3Hz), 8.03 (1H, d, J =8.8Hz), 8.17 (1H, d, J =7.8Hz). 8.34 (1H, s), 9.99 (1H, s), 10.54 (1H, s). |

[Table 6-2]

| Compound No. | $^1$H-NMR (DMSO-$d_6$, ppm) |
|---|---|
| 23 | ($CDCl_3$) δ 2.36 (6H, s), 7.34-7.38 (3H, m), 7.42-7.46 (1H, m), 7.53 (1H, t, J =7.8Hz), 7.62 (1H, s), 7.65-7.68 (2H, m), 7.73-7.75 (1H, m), 7.82-7.84 (1H, m), 7.89 (1H, s), 8.32 (1H, s). |
| 26 | ($CDCl_3$) δ 2.36 (6H, s), 7.19 (1H, dt, J = 2.0,7.8Hz), 7.36 (2H, s), 7.46 (1H, t, J = 7.8Hz), 7.52-7.57 (3H, m), 7.66 (1H, s), 7.74 (1H, d, J = 7.8Hz), 7.85 (1H, d, J = 7.8Hz), 7.94 (1H, d, J = 7.8Hz), 8.31 (1H, s) |

(continued)

| Compound No. | $^1$H-NMR (DMSO-$d_6$, ppm) |
|---|---|
| 28 | δ 2.36 (6H, s), 7.33 (2H, s), 7.48 (1H, t, J =7.8Hz), 7.75-7.84 (5H, m), 8.14 (1H, d, J =7.8Hz), 8.31 (1H, s), 9.20 (1H, s), 10.04 (1H, s). |
| 29 | δ 2.30 (6H, s), 7.45 (2H, s), 7.57 (1H, d, J =7.8Hz), 7.75-7:80 (2H, m), 8.06-8.11 (2H, m), 8.29 (1H, d, J =7.8Hz), 8.34 (1H, s), 8.46 (1H, s), 10.02 (1H, s), 10.65 (1H, s). |
| 30 | δ 2.30 (6H, s), 7.45 (2H, s), 7.56 (1H, t, J =7.8Hz), 7.79 (1 H, d, J =7.8Hz), 8.04-8.06 (3H, m), 8.16 (2H, d, J =8.3Hz), 8.36 (1 H, s), 10.02 (1 H, s), 10.72 (1 H, s). |
| 31 | δ 2.30 (6H, s), 7.45 (2H, s), 7.56 (1H, d, J =7.8Hz), 7.76-7.81 (3H, m), 7.88-7.94 (2H, m), 8.1 (1H, d, J =7.8Hz), 8.24 (1 H, s), 10.02 ( 1H, s), 10.90 ( 1H, s). |
| 32 | δ 2.32(6H, s), 7.46(2H, s), 7.58(1H, t, J = 7.8Hz), 7.80-7.89(2H, m), 8.11(1H, d, J = 7.8Hz), 8.36 (1H, s), 8.44-8.48(2H, m), 8.86(1H, s), 10.04(1H, s), 10.83(1H, s). |
| 33 | δ 2.31 (6H, s), 7.45 (2H, s), 7.57 (1H, t, J =8.1Hz), 7.80 (1H, d, J =8.1Hz), 8.08 (1H, d, J =8.1Hz), 8.24 (1H, s), 8.36-8.41 (4H, m), 10.01 (1H, s), 10.79 (1H, s). |
| 34 | δ 2.30 (6H, s), 6.39 (2H, s), 6.58-6.62 (1H, m), 6.76 (1H, dd, J =1.0,8.3Hz), 7.19-7.24 (1H, m), 7.45 (2H, s), 7.51 (1H, t, J =7.8Hz), 7.66-7.73 (2H, m), 7.94-7.97 (1H, m), 8.30 (1 H, d, J =2.0Hz), 9.96 (1H, s), 10.20 (1H, s). |
| 35 | δ 2.30 (6H, s), 6.53-6.86 (1H, m), 7.20-7.21 (4H, m), 7.45 (2H, s), 7.52 (1 H, t, J =7.8Hz), 7.73 (1H, d, J =7.8Hz), 8.02 (1H, d, J =7.8Hz), 8.35 (1H, s), 9.96 (1H, s), 10.32 (1H, s). |
| 37 | ($CDCl_3$) δ 2.34 (6H, s), 7.35 (2H, s), 7.51 (1H, t, J =7.8Hz), 7.62-7.80 (8H, m), 8.25 (1H, s). |
| 39 | δ 2.31(6H, s), 7.45(2H, s), 7.57(1H, t, J = 7.8Hz), 7.79(1H, d, J = 7.8Hz), 7.94(2H, d, J = 8.3Hz), 8.07(1H, d, J = 7.8Hz), 8.20(2H, d, J = 8.3Hz), 8.36(1H, s), 10.01(1H, s), 10.70(1H, s). |
| 40 | δ 2.30 (6H, s), 6.96-7.01 (2H, m), 7.43-7.48 (3H, m), 7.56 (1H, t, J =8.3Hz), 7.78 (1H, d, J =8.3Hz), 7.97-8.00 (2H, m), 8.29 (1H, s), 10.01 (1H, s), 10.61 (1H, s). |
| 41 | δ 2.30(6H, s), 3.90(3H, s), 7.05-7.10(1H, m), 7.19(1H, d, J = 8.3Hz), 7.45(2H, s), 7.49-7.54(2H, m), 7.63(1H, dd, J = 2.0,7.8Hz), 7.72(1H, d, J = 7.8Hz), 7.96(1H, d, J = 7.8Hz), 8.33(1H, s), 9.98 (1H, s), 10.33(1H, s). |
| 45 | δ 1.33 (9H, s), 2.31 (6H, s), 7.45 (2H, s), 7.53 (1H, t, J =7.8Hz), 7.54 (2H,d,J = 8.3Hz), 7.74 (1H, d, J =7.8Hz), 7.94 (2H, d, J =8.3Hz), 8.06 (1 H, d, J =7.8Hz), 8.36 (1H,s), 9.99 (1H, s), 10.40 (1H, s). |
| 46 | δ 2.30 (6H, s), 2.98 (6H, s), 6.93-6.95 (1H, m), 7.25-7.35 (3H, m), 7.45 (2H, s), 7.53 (1H, t, J =7.8Hz), 7.74 (1H, d, J =7.8Hz), 8.06 (1H, d, J =7.8Hz), 8.35 (1H, s), 9.99 (1H, s), 10.35 (1H, s). |
| 47 | δ 2.30 (6H, s), 3.01 (6H, s), 6.77 (2H, d, J =9.3Hz), 7.45 (2H, s), 7.50 (1H, t, J =7.8Hz), 7.69 (1H, d, J =7.8Hz), 7.91 (2H, d, J =9.3Hz), 8.06 (1H, d, J =7.8Hz), 8.33 (1H, s), 9.96 (1H, s), 10.09 (1H, s). |
| 48 | δ 2.31(6H, s), 7.45(2H, s), 7.53-7.60(3H, m), 7.77(1H, d, J = 7.3Hz), 8.06(1H, d, J = 8.3Hz), 8.13 (2H, d, J = 8.3Hz), 8.35(1H, s), 10.01(1H, s), 10.59(1H, s). |
| 52 | 8 2.21 (3H, s), 2.30 (6H, s), 7.27 (1H, d, J =8.3Hz), 7.39-7.44 (1H, m), 7.45 (2H, s), 7.50-7.62 (2H, m), 7.70-7.52 (2H, m), 7.92 (1H, d, J =7.8Hz), 8.29 (1H, s), 9.99 (1 H, s), 10.57 (1H, s). |
| 54 | δ 2.30 (6H, s), 3.91 (3H, s), 7.45 (2H, s), 7.56 (1H, t, J =7.8Hz), 7.78 (1H, d, J =7.8Hz), 8.03-8.15 (5H, m), 8.36 (1H, s), 10.01 (1H, s), 10.67 (1H, s). |

[Table 6-3]

| Compound No. | $^1$H-NMR (DMSO-$d_6$, ppm) |
|---|---|
| 56 | δ 2.27 (6H, s), 2.30 (6H, s), 7.18-7.22 (1 H, m), 7.26-7.30 (2H, m), 7.45 (2H, s), 7.52 (1H, t, J =7.8Hz), 7.72 (1H, d, J =7.8Hz), 7.95 (1H, d, J =7.8Hz), 8.36 (1H, s), 9.98 (1H, s), 10.52 (1H, s). |

(continued)

| Compound No. | $^1$H-NMR (DMSO-$d_6$, ppm) |
|---|---|
| 57 | δ 2.30 (6H, s), 2.33 (3H, s), 2.38 (3H, s), 7.11-7.13 (2H, m), 7.40 (1H, d, J =7.8Hz), 7.44 (2H, s), 7.51 (1H, t, J =7.8Hz), 7.72 (1H, d, J =7.8Hz), 7.95 (1H, d, J =8.8Hz), 8.34 (1H, s), 9.98 (1H, s), 10.43 (1H, s). |
| 58 | δ 2.30 (12H, s), 7.12 (2H, d, J =7.8Hz), 7.23-7.27 (1H, m), 7.45 (2H, s), 7.52 (1H, t, J =8.3Hz), 7.75 (1H, d, J =8.3Hz), 7.94-7.99 (1H, m), 8.35 (1H, s), 10.00 (1H, s), 10.61 (1H, s). |
| 59 | δ 2.30 (6H, s), 7.34-7.40 (1H, m), 7.45 (2H, s), 7.50-7.58 (2H, m), 7.60-7.68 (1H, m), 7.77 (1 H, d, J =7.8Hz), 7.96 (1H, d, J =8.3Hz), 8.31 (1H, s), 10.02 (1H, s), 10.78 (1H, s). |
| 60 | δ 2.30 (6H, s), 7.22-7.28 (1H, m), 7.42-7.48 (3H, m), 7.53-7.57 (1H, m), 7.75-7.82 (2H, m), 7.96 (1 H, d, J =7.8Hz). 8.30 (1H, s), 10.01 (1H, s), 10.65 (1H, s). |
| 61 | δ 2.30 (6H, s), 7.45 (2H, s), 7.46-7.49 (2H, m), 7.53-7.59 (2H, m), 7.77 (1H, d, J =7.8Hz), 7.96 (1H, d, J =8.3Hz), 8.30 (1H, s), 10.02 (1H, broad), 10.72 (1H, broad). |
| 62 | δ 2.30 (6H, s), 7.25-7.30 (2H, m), 7.45 (2H, s), 7.54-7.65 (2H, m), 7.77 (1H, d, J =7.8Hz), 7.93 (1H, d, J =7.8Hz), 8.29 (1H. s), 10.03 (1H, s), 11.04 (1H, s). |
| 66 | δ 2.30(6H, s), 7.45(2H, s), 7.52-7.62(2H, m), 7.66(1H, d, J = 8.3Hz), 7.75-7.80 (2H, m), 7.94(1H, d, J = 7.8Hz), 8.30(1H, s), 10.02(1H, s), 10.77(1H, s). |
| 68 | δ 2.30 (6H, s), 7.45 (2H, s), 7.50-7.62 (4H, m), 7.78 (1H, d, J =7.8Hz), 7.94 (1H, d, J =7.8H z), 8.28 (1H, s), 10.03 (1H, s), 10.99 (1H. s). |
| 69 | δ 230(6H, s), 7.45(2H, s), 7.56(1H, t, J = 7.8Hz), 7.79(1H, d, J = 7.8Hz), 7.85(1H, d, J =8.3Hz), 7.97-8.00(1H, m), 8.05-8.08(1H, m), 8.27(1H, d, J = 2.0Hz), 8.33(1H, s), 10.00(1H, s), 10.61(1H, s). |
| 70 | δ 274(6H, s), 7.34(2H, s), 7.52(1H, t, J = 7.8Hz), 7.81(1H, d, J = 7.8Hz), 7.93(1H, d, J = 8.3Hz), 8.13-8.15(2H, m), 8.58(1H, d, J = 8.3Hz), 8.94(1H, s), 9.27(1H, s), 10.67(1H, s). |
| 71 | ($CDCl_3$) δ 1.6-2.4(6H, broad-s), 6.5-7.7(3H, broad), 7.8-8.0(4H, broad), 8.10(1H, broad-s), 8.28 (1H, d, J = 8.8Hz). |
| 72 | δ 2.30 (6H, s), 3.78 (6H, s), 6.66-6.75 (2H, m), 7.34-7.50 (4H, m), 7.67 (1H, d, J =7.8Hz), 7.91 (1H, d, J =7.8Hz), 8.34 (1H, s), 9.98 (1H, s), 10.44 (1H, s). |
| 73 | δ 2.30 (6H, s), 3.83 (6H, s), 6.73 (1H, t, J =2.4Hz), 7.15 (2H, d, J =2.4Hz), 7.45 (2H, s), 7.54 (1H, t, J =8.3Hz), 7.75 (1H, d, J =8.3Hz), 8.06 (1H, d, J =8.3Hz), 8.33 (1H, s), 9.99 (1H, s), 10.39 (1H, s). |
| 74 | ($CDCl_3$) δ 234(6H, s), 2.68(3H, s), 7.36(2H, s), 7.55(1H, t, J = 7.8Hz), 7.62(1H, s), 7.72(1H, d, J = 7.8Hz), 7.81(1H, d, J = 8.3Hz), 7.88(1H, s), 7.92(1H, d, J = 7.8Hz), 8.05(1H, d, J = 8.3Hz), 8.17 (1H, s), 8.26(1H, s). |
| 75 | δ 2.30 (6H, s), 5.22 (2H, broad-s), 6.67-6.72 (1H, m), 6.78-6.81 (1H, m), 6.97-7.02 (1H, m), 7.45 (2H, s), 7.52 (1H, t, J =7.8Hz), 7.72 (1H, d, J =7.8Hz), 7.94 (1H, d, J =7.8Hz), 8.32 (1H, s), 9.98 (1H, s), 10.46 (1H, s). |
| 77 | δ 2.30 (6H, s), 7.45 (2H, s), 7.58 (1H, t, J =7.8Hz), 7.70 (1H, t, J=8.8Hz), 7.80 (1H, d, J =7.8Hz), 7.99 (1H, d, J =7.8Hz), 8.29 (1H, s), 8.45-8.50 (1H, m), 8.57-8.60 (1H, m), 10.03 (1H, s), 10.91 (1H, s). |
| 81 | δ2.30 (6H, s), 7.56 (1H, t), 7.73-7.80 (6H, m), 7.92 (1H, d, J =7.81 Hz), 8.22 (1H, s), 10.03 (1H, s), 11.05 (1H,s). |
| 82 | δ2.30 (6H, s), 7.45 (2H, s), 7.57 (1H, t, J =7.8Hz), 7.80 (1H, d, J =7.8Hz), 7.92-7.96 (2H, m), 8.29-8.45 (2H, m), 8.45 (1H, m), 10.03 (1H, s), 10.98 (1H, s). |
| 83 | δ2.28 (6H, s), 7.33-7.38 (1H, m), 7.43 (2H, s), 7.53 (1H, t, J=7.9Hz), 7.58 (1H, d, J =2.4Hz), 7.61-7.71 (1H, m), 7.75 (1H, d, J =7.9Hz), 7.93 (1H, d, J =7.9Hz), 8.28 (1H, s), 9.98 (1H, s), 10.71 (1H, s). |

[Table 6-4]

| Compound No | $^1$H-NMR (DMSO-$d_6$, ppm) |
|---|---|
| 84 | δ 2.30 (6H, s), 7.38-7.48 (4H, m), 7.54-7.60 (2H, m), 7.78 (1H, d, J =7.8Hz), 7.93 (1H, d, J =7.8Hz), 8.28 (1H, s), 10.03 (1H, s), 11.03 (1H, s). |
| 86 | δ 2.30 (6H, s), 7.42-7.47 (3H, m), 7.55 (1H, t, J =8.0Hz), 7.64 (1H, d, J =2.0Hz), 7.66-7.77 (2H, m), 7.96 (1H, d, J =8.0Hz), 8.29 (1H, s), 10.01 (1H, s), 10.69 (1H, s). |
| 87 | δ 2.30 (6H, s), 7.45 (2H, s), 7.56 (1H, t, J =7.9Hz), 7.79 (1H, d, J =7.9Hz), 7.87 (1H, d, J =7.9Hz), 7.92 (1H, dd, J =8.2,1.6Hz), 8.00 (1H, dd, J =8.2,1.6Hz), 8.22 (1H, t, J =1.6Hz), 8.29(1H, d,J = 1.6Hz), 10.03 (1H, s), 10.94 (1H, s). |
| 88 | ($CDCl_3$) δ 237(6H, s), 4.06(3H, s), 7.37(2H, s), 7.44(1H, d, J = 9.7Hz), 7.52(1H, s), 7.58(1H, t, J = 7.8Hz), 7.70(1H, s), 7.74(1H, d. J = 7.8Hz). 7.93(1H, s), 7.95(1H, s), 8.02(1H, s), 8.26(1H, s). |
| 89 | ($CDCl_3$) δ 237(6H, s), 4.22(3H, s), 7.37(2H, s), 7.55(1H, t, J = 7.8Hz), 7.56(1H, s), 7.72(1H, d, J = 7.8Hz), 7.94-7.97(2H, m), 8.00(1H, d, J = 7.8Hz), 8.28(1H, s), 8.47(1H, d, J = 8.8Hz), 9.83(1H, s). |
| 91 | δ 2.25 (6H, s), 2.27 (3H, s), 2.29 (6H, s), 6.94 (2H, s), 7.45 (2H, s), 7.51 (1H, t, J =7.8Hz), 7.73 (1H, d, J =7.8Hz), 7.94 (1H, d, J =7.8Hz), 8.34 (1H, s), 9.97 (1H, s), 10.53 (1H, s). |
| 92 | δ 2.33 (6H, s), 7.32-7.40 (1H, m), 7.45 (2H, s), 7.58 (1H, t, J =8.06Hz), 7.67-7.75 (1H, m), 7.80 (1H, d, J =7.81Hz), 7.92 (1H, d, J =8.29Hz), 8.27 (1H, s), 10.04 (1H, s), 11.14 (1H, s). |
| 95 | δ 2.30 (6H, s), 7.45 (2H, s), 7.59 (1H, t, J =7.8Hz), 7.83 (1H, d, J =7.8Hz), 7.91-7.94 (1H, dd, J =1.5,7.8Hz), 8.25 (1H, d, J = 1.5Hz), 10.06 (1H, s), 11.27 (1H, s). |
| 96 | δ 2.30 (6H, s), 7.28-7.55 (10H, m), 7.57-7.61 (2H, m), 7.69 (1H, d, J =7.8Hz), 7.74 (1H, d, J =7.8Hz), 8.13 (1H, s), 9.94 (1H, s), 10.47 (1H, s). |
| 97 | δ 2.32 (6H, s), 7.41-7.57 (6H, m), 7.72-7.82 (3H, m), 7.85-7.88 (2H, m), 8.09-8.13 (3H, m), 8.40 (1H, s), 10.01 (1H, s), 10.53 (1H, s). |
| 98 | δ 231(6H, s), 7.45(2H, s), 7.54-7.65(4H, m), 7.76-7.80(2H, m), 8.01-8.06(2H, m), 8.10(1H, d, J = 8.3Hz), 8.21-8.23(1H, m), 8.43(1H, s), 10.01(1H, s), 10.80(1H, s). |
| 99 | δ 2.32(6H, s), 7.46(2H, s), 7.57(1H, t, J = 7.8Hz), 7.61-7.72(2H, m), 7.78(1H, d, J = 7.8Hz), 7.99-8.17 (5H, m), 8.41(1H, t, J = 2.0Hz), 8.65(1H, s), 10.01(1H, s), 10.66(1H, s). |
| 100 | δ2.31 (6H, s), 7.45 (2H, s), 7.55 (1H, t, J =7.8Hz), 7.69-7.76 (2H, m), 8.07-8.14 (2H, m), 8.19 (1H, d, J =7.8Hz), 8.54 (1H, s), 8.77 (1H, d, J =4.9Hz), 9.99 (1H, s), 10.86 (1H, s). |
| 101 | δ 2.30 (6H, s), 7.45 (2H, s), 7.54-7.61 (2H, m), 7.78 (1H, d, J =8.3Hz), 8.06 (1H, d, J =7.3Hz), 8.32-8.35 (2H, m), 8.77-8.79 (1H, m), 9.14 (1H, d, J =1.5Hz), 10.00 (1H, s), 10.66 (1H, s). |
| 102 | δ 2.30 (6H, s), 7.45 (2H, s), 7.57 (1H, t, J =7.8Hz), 7.80 (1H, d, J =7.8Hz), 7.91 (2H, d, J =5.6Hz), 8.06 (1H, d, J =7.8Hz), 8.35 (1H, s), 8.81 (2H, d, J =5.6Hz), 10.01 (1H, s), 10.72 (1H, s). |
| 103 | δ 2.27 (3H, s), 2.30 (6H, s), 7.45 (2H, s), 7.54-8.07 (6H, m), 8.35 (1H, s), 10.02 (1H, s), 10.77 (1H, s). |
| 105 | δ 2.30 (6H, s), 7.45 (2H, s), 7.52-7.58 (2H, m), 7.78 (1H, d, J =8.30Hz), 7.97 (1H, d, J =8.29Hz), 8.26-8.31 (2H, m), 8.42 (1H, d, J =4.39Hz), 10.02 (1H, s), 10.80 (1H, s). |
| 106 | δ 2.30 (6H, s), 7.45 (2H, s), 7.54-7.60 (2H, m), 7.77-7.81 (1H, m), 7.95 (1H, d, J =7.8Hz), 8.10-8.13 (1H, m), 8.30 (1H, s), 8.54-8.59 (1H, m), 10.03 (1H, s), 10.88 (1H, s). |
| 108 | δ 2.31 (6H, s), 7.45 (2H, s), 7.56 (1 H, t, J =7.8Hz), 7.78 (1H, d, J =7.8Hz), 7.82 (1H, dd, J =6.3,2.4Hz), 8.11-8.16 (3H, m), 8.47 (1H, s), 10.01 (1H, s), 10.69 (1H, s). |
| 109 | δ 2.31 (6H, s), 7.46 (2H, s), 7.57 (1H, t, J =8.3Hz), 7.74 (1H, d, J =8.3Hz), 7.80 (1H, d, J =8.3Hz), 8.06 (1H, dd, J =8.3,1.7Hz), 8.34 (1H, t, J =1.7Hz), 8.40(1H, dd, J = 8.3,1.7Hz), 9.00 (1H, d, J =1.7Hz), 10.02 (1H, s), 10.71 (1H, s). |

[Table 6-5]

| Compound No. | $^1$H-NMR (DMSO-$d_6$, ppm) |
|---|---|
| 110 | δ 2.31 (6H, s), 7.45 (2H, s), 7.56 (1H, d, J =8.1Hz), 7.78 (1H, d, J =8.1Hz), 7.86 (1H, d, J =2.1Hz), 8.11 (1H, dd, J =8.1,2.1Hz), 8.19 (1H, d, J =2.1Hz), 8.53 (1H, t, J =2.1Hz), 8.75 (1H, d, J =5.4Hz), 10.01 (1H, s), 10.96 (1H, s). |
| 111 | ($CDCl_3$) δ 2.36 (6H, s,), 7.34 (2H, s,), 7.47-8.94 (7H, m,), 9.63 (1H, s,), 10.73 (1H, s,). |
| 113 | ($CDCl_3$) δ 2.36 (6H, s,), 7.34-8.73 (15H, m,), 10.01 (1H, s,) |
| 114 | δ 2.30 (6H, s), 2.42 (3H, s), 7.25-7.28(1H, m), 7.44 (2H, s), 7.55 (1H, t, J =7.8Hz), 7.77 (1H, d, J =7.8Hz), 7.94-7.97(2H, m), 8.30 (1H, s), 8.61 (1H, dd, J =4.9,1.5Hz), 10.00 (1H, s), 10.67 (1H, s). |
| 115 | δ 2.29 (6H, s), 3.94 (3H, s), 4.06 (3H, s), 6.53 (1H, d, J =8.3Hz), 7.44 (2H, s), 7.51 (1H, t, J =7.9Hz), 7.72 (1H, d, J =7.9Hz), 7.95 (1H, d, J =7.9Hz), 8.12 (1H, d, J =8.3Hz), 8.28 (1H, s), 9.96 (1H, s), 10.07 (1H, s). |
| 116 | δ2.29 (6H, s), 7.44 (2H, s), 7.57 (1H, t, J =7.9Hz), 7.80 (1H, d, J =7.9Hz), 8.05 (1H, d, J =7.9Hz), 8.30 (1H, s), 8.67 (1H, d, J =2.2Hz), 8.93 (1H, d, J =2.2Hz), 10.01 (1H, s), 10.73 (1H, s). |
| 117 | ($CDCl_3$) δ 2.36 (6H, s), 7.37-8.50 (9H, m,), 8.97 (1H, s). |
| 118 | δ2.28 (6H, s), 7.43 (2H, s), 7.56 (1H, t, J =8.0Hz), 7.74-7.79 (2H, m), 7.92 (1H, d, J =8.0Hz), 8.20 (1H, d, J =8.3Hz), 8.25 (1H, s), 10.01 (1H, s), 10.88 (1H, s). |
| 119 | ($CDCl_3$) δ 2.36 (6H, s), 7.36-8.60 (10H, m,). |
| 120 | δ 2.31 (6H, s), 7.46 (2H, s), 7.57 (1H, t, J =7.8Hz), 7.80 (1H, d, J =7.8Hz), 8.02 (1H, d, J =7.8Hz), 8.08 (2H, d, J =1.2Hz), 8.33 (1H, t, J =20Hz), 8.40 (2H, d, J =7.3Hz), 10.02 (1H, s), 10.63 (1H, s). |
| 121 | δ 2.30 (6H, s), 3.89 (3H, s), 6.11 (1H, dd, J =2.0,3.9Hz), 7.03 (1H, t, J =2.0Hz), 7.10 (1H, dd, J =2.0,3.9Hz), 7.45 (2H, s), 7.49 (1H, t, J =7.8Hz), 7.69 (1H, d, J =7.8Hz), 7.99 (1H, d, J =7.8Hz), 8.28 (1H, s), 9.95 (2H, s). |
| 122 | δ2.31 (6H, s), 7.45 (2H, s), 7.57 (1H, t, J =7.8Hz), 7.78 (1H, d, J =7.8Hz), 8.11 (1H, d, J =7.8Hz), 8.53 (1H, s), 8.84 (1H, dd, J =1.5,2.4Hz), 8.95 (1H, d, J =24Hz), 9.33 (1H, d, J =1.5Hz), 10.00 (1H, s), 10.97 (1H, s). |
| 124 | δ 2.28 (6H, s), 7.44 (2H, s), 7.58 (1H, t, J =7.9Hz), 7.81 (1H, d, J =7.9Hz), 7.92 (1H, d, J =7.9Hz), 8.20 (1H, s), 9.43 (1H, s), 9.59 (1H, s), 10.03 (1H, s), 11.06 (1H, s). |
| 125 | δ2.30 (6H, s), 7.45 (2H, s), 7.50-7.62 (4H, m), 7.78 (1H, d, J =7.8Hz), 7.94 (1H, d, J =7.8Hz), 8.28 (1H, s), 10.03 (1H, s), 10.99 (1H, s). |
| 126 | δ2.30 (6H, s), 7.04 (1H, t, J =1.5Hz), 7.45 (2H, s), 7.53 (1H, t, J =8.0Hz), 7.74-7.82 (2H, m), 8.04 (1H, d, J =1.5Hz), 8.25 (1H, d, J =1.5Hz), 8.43 (1H, t, J =1.5Hz), 9.98 (1H, s), 10.14 (1H, s). |
| 127 | δ 1.86-1.91 (2H, m), 200-2.02 (1H, m), 2.19-2.29 (7H, m), 3.81-3.87 (1H, m), 3.98-4.03 (1H, m), 4.40-4.43 (1H, m), 7.44-7.50 (3H, m), 7.77 (1H, d, J =7.8Hz), 7.94 (1H, d, J =7.8Hz), 8.26 (1H, s), 9.89 (1H, s), 9.94 (1H, s). |
| 128 | ($CDCl_3$) δ 202-2.10 (2H, m), 2.28 (6H, s), 3.15-3.22 (1H, m), 3.80-3.98 (4H, m), 7.44 (2H, s), 7.48 (1H, t, J=7.8 Hz), 7.68 (1H, t, J=7.8 Hz), 7.87 (1H, d, J=7.8 Hz), 8.16 (1H, s), 9.96 (1H, s), 10.3 (1H, s). |
| 129 | ($CDCl_3$) δ 222(6H, s), 7.17-7.28(3H, m), 7.33-7.39(2H, m), 7.42-7.48(2H, m), 7.58-7.65(2H, m), 7.79(1H, dd, J = 1.5,8.3Hz), 7.91(1H, s), 8.27(1H, s), 8.51(1H, s). |
| 130 | ($CDCl_3$) δ 1.48-2.17(6H, m), 2.34(6H, s), 3.52-3.60(1H, m), 3.92(1H, dd, J = 2.5,11.2Hz), 4.11-4.18 (1H, m), 7.35(2H, s), 7.47(1H, t, J = 7.8Hz), 7.60(1H, broad), 7.69(1H, d, J = 7.8Hz), 7.77(1H, dd, J = 1.0,7.8Hz), 8.26(1H, s), 8.54(1H, s). |
| 131 | δ 1.97-2.07 (2H, m), 2.15-2.31 (9H, m), 2.97-3.07 (2H, m), 3.99-3.98 (2H, m), 7.46 (2H, s), 7.55 (1H, t, J =8.0Hz), 7.65 (1H, d, J =8.0Hz), 7.87 (1H, d, J =8.0Hz), 8.20 (1H, s), 9.60 (1H, s), 9.91 (1H, s). |

[Table 6-6]

| Compound No. | $^1$H-NMR (DMSO-$d_6$, ppm) |
|---|---|
| 132 | ($CDCl_3$) δ 2.35(6H, s), 7.16(1H, dd, J = 3.9,4.9Hz), 7.36(2H, s), 7.51(1H, t, J = 7.8Hz), 7.59 (1H, dd, J = 1.0,4.9Hz), 7.67(1H, dd, J = 1.0,3.9Hz), 7.70-7.74(2H, m), 7.80-7.83(1H, m), 7.95 (1H, s), 8.27(1H, s). |
| 133 | δ 2.30 (6H, s), 7.45 (2H, s), 7.54 (1H, t, J =8.0Hz), 7.67 (2H, d, J =2.4Hz), 7:75 (1H, d, J =7.8Hz), 8.07 (1H, d, J =7.8Hz), 8.31 (1H, s), 8.41 (1H, t, J =2.2Hz), 9.99 (1H, s), 10.28 (1H, s). |
| 134 | δ 2.30 (6H, s), 2.47 (3H, s), 7.04 (1H, d, J =4.2Hz), 7.45 (2H, s), 7.52 (1H, t, J =7.8Hz), 7.69 (1H, d, J =4.2Hz), 7.74 (1H, d, J =7.8Hz), 7.93 (1H, d, J =7.8Hz), 8.27 (1H, s), 9.97 (1H, s), 10.17 (1H, s). |
| 135 | δ 2.30 (6H, s), 7.45 (2H, s), 7.56 (1H, t, J =7.8Hz), 7.79 (1H, d, J =7.8Hz), 8.08 (1H, d, J =7.8Hz), 8.30 (1H, s), 8.71 (1H, d, J =2.0Hz), 8.74 (1H, d, J =2.0Hz), 10.01 (1H, s), 10.54 (1H, s). |
| 136 | δ 2.30 (6H, s), 2.50 (3H, s), 6.94 (1H, d, J =3.4Hz), 7.45 (2H, s), 7.52 (1H, t, J =7.9Hz), 7.74 (1H, d, J =7.9Hz), 7.88 (1H, d, J =3.4Hz), 8.02 (1H, d, J =7.9Hz), 8.27 (1H, s), 9.97 (1H, s), 10.32 (1H, s). |
| 137 | δ 2.29 (6H, s), 7.22 (1H, d, J =5.1Hz), 7.43 (2H, s), 7.53 (1H, t, J =8.0Hz), 7.76 (1H, d, J =8.0Hz), 7.91-7.93 (2H, m), 8.26 (1H, s), 9.98 (1H, s), 10.42 (1H, s). |
| 138 | δ 2.30 (6H, s), 7.45 (2H, s), 7.57 (1H, t, J =8.1Hz), 7.79 (1H, d, J =8.1Hz), 8.05 (1H, d, J =8.1Hz), 8.52 (1H, s), 9.97 (1H, s), 11.11 (1H, s). |
| 139 | δ 2.30 (6H, s), 7.26 (1H, d, J =5.4Hz), 7.45 (2H, s), 7.54 (1H, t, J =8.0Hz), 7.77 (1H, d, J =8.0Hz), 7.90-7.94 (2H, m), 8.27 (1H, s), 9.99 (1H, s), 10.50 (1H, s). |
| 140 | δ 2.30 (6H, s), 7.39 (1H, d, J =4.6Hz), 7.45 (2H, s), 7.54 (1H, t, J =8.1 Hz), 7.77 (1H, d, J =8.1Hz), 7.92 (1H, d, J =4.6Hz), 8.02 (1H, d, J =8.1Hz), 8.26 (1H, s), 9.99 (1H, s), 10.50 (1H, s). |
| 141 | δ 2.30 (6H, s), 7.29 (1H, d, J =4.9Hz), 7.45 (2H, s), 7.55 (1H, t, J =7.9Hz), 7.77 (1H, d, J =7.9Hz), 7.81 (1H, d, J =4.9Hz), 7.92 (1H, d, J =7.9Hz), 8.29 (1H, s), 10.00 (1H, s). 10.50 (1H, s). |
| 142 | δ 2.27 (6H, s), 7.25-7.52 (10H, m), 7.70-7.73 (1H, m), 7.81-7.20 (1H, m), 8.12 (1H, s), 9.94 (1H, s), 10.27 (1H, s). |
| 143 | δ 2.28 (6H, s), 2.40 (3H, s), 2.45 (3H, s), 6.74 (1H, s), 7.43 (2H, s), 7.49 (1H, t, J =8.1Hz), 7.71 (1H, d. J =8.1Hz), 7.90 (1H, d, J =8.1Hz), 8.24 (1H, s), 9.94 (1H, s), 9.98 (1H, s). |
| 144 | δ 231(6H, s), 7.41-7.59(5H, m), 7.78(1H, d, J = 7.8Hz), 8.00-8.09(3H, m), 8.34(1H, d, J = 2.0Hz), 8.43(1H, s), 10.02(1H, s), 10.75(1H, s). |
| 146 | δ 0.86 (3H, 7.2), 2.30 (6H, s), 4.34 (2H, q, J =7.2Hz), 7.45 (2H, s), 7.77-7.79 (3H, m), 7.84 (1H, s), 8.24 (1H, s), 8.37 (1H, s), 10.05 (1H, s), 11.11 (1H, s). |
| 147 | δ 2.30 (6H, s), 3.89 (3H, s), 7.45 (2H, s), 7.52 (1H, t, J =7.9Hz), 7.73 (1H, d, J =7.9Hz), 7.97 (1H, d, J =7.9Hz), 8.23 (1H, s), 8.45 (1H, s), 9.98 (1H, s), 10.08 (1H, s). |
| 148 | δ 2.35 (6H, s), 3.92 (3H, s), 7.26 (1H, s), 7.36 (2H, s), 7.48-7.55(2H, m)" 7.70 (1H, d, J =7.7Hz), 7.83 (1H, d, J =7.7Hz), 8.26 (1H, s), 8.47 (1H, s). |
| 149 | δ 2.36 (6H, s), 3.95 (3H, s), 7.26 (1H, s), 7.36 (2H, s), 7.50 (1H, t, J =7.7Hz), 7.70 (1H, d, J =7.7Hz), 7.83 (1H, d, J =7.7Hz), 8.00 (1H, s), 8.26 (1H, s), 8.58 (1H, s). |
| 150 | ($CDCl_3$) δ 235(6H, s), 4.01(3H, s), 7.36(2H, s), 7.51(1H, t, J = 7.8Hz), 7.68-7.73 (3H, m), 7.92(1H, s), 8.05(1H, s), 8.25(1H, s). |
| 151 | δ 2.29 (6H, s), 4.06 (3H, s), 7.44 (2H, s), 7.53 (1H, t, J =7.9Hz), 7.77 (1H, d, J =7.9Hz), 7.96 (1H, d, J =7.9Hz), 8.11 (1H, s), 8.26 (1H, s), 10.02 (1H, s), 10.58 (1H, s). |
| 152 | δ 2.30 (6H, s), 7.32 (1H, d, J =20Hz), 7.45 (2H, s), 7.58 (1H, t, J =7.8Hz), 7.81 (1H, d, J =7.8Hz), 8.04 (1H, d, J =7.8Hz), 8.35 (1H, s), 8.84 (1H, d, J =2.0Hz), 10.03 (1H, s), 10.97 (1H, s). |

[Table 6-7]

| Compound No. | $^1$H-NMR (DMSO-$d_6$, ppm) |
|---|---|
| 153 | δ 2.29 (6H, s), 7.46 (2H, s), 7.64 (1H, t), 7.72 (1H, d, J =1.0Hz), 7.81 (1H, s), 7.97 (1H, d, J =8.0Hz), 8.17 (1H, s), 8.34 (1H, s), 10.04 (1H, s). |
| 154 | δ 2.29 (6H, s), 2.51 (3H, s), 2.56 (3H, s), 7.46 (2H, s), 7.53 (1 H, t, J =8.03Hz), 7.75 (1H, d, J =8.03Hz), 7.92 (1H, d, J =8.03Hz), 8.24 (1H, s), 9.79 (1H, s), 10.30 (1H, s). |
| 155 | δ 1.36 (3H, t, J =7.3Hz), 2.30 (6H, s), 2.73(3H, s), 3.05 (2H, q, J =7.3Hz), 7.45 (2H, s), 7.55 (1H, t, J =8.3Hz), 7.78 (1H, d, J =8.3Hz), 7.98 (1H, d, J =8.3Hz), 8.29 (1H, s), 10.01(1H, s), 10.69 (1H, s). |
| 156 | δ 2.28 (6H, s), 2.57 (3H, s), 7.43 (2H, s), 7.53 (1H, t, J =7.8Hz), 7.77 (1H, d, J =7.8Hz), 7.91 (1H, d, J =7.8Hz), 8.21 (1H, s), 9.98 (1H, s), 10.47 (1H, s). |
| 157 | δ 2.31 (6H, s), 7.45 (2H, s), 7.57 (1H, t, J =7.8Hz), 7.79 (1H, d, J =7.8Hz), 8.06 (1H, d, J =7.8Hz), 8.53 (1H, s), 10.00 (1H, s), 11.12 (1H, s). |
| 158 | δ 2.36 (6H, s), 7.45 (2H, s), 7.57 (1H, t, J =8.1 Hz), 7.79 (1H, d, J =8.1 Hz), 8.06 (1H, d, J =8.1 Hz), 8.53 (1H, s), 10.01 (1H, s), 11.11 (1H, s). |
| 159 | δ 2.30(6H, s), 7.45(2H, s), 7.56-7.66(3H, m), 7.80(1H, d, J = 8.3Hz), 7.94-7.98(2H, m), 8.16-8.20 (1 H, m), 8.32(1 H, s), 10.04(1 H, s), 10.79(1 H, s). |
| 160 | δ 2.31 (6H, s), 7.45(2H, s), 7.53-7.61(2H, m), 7.78(1H, d, J = 7.8Hz), 7.92-7.95(1H, m), 8.02-8.07 (2H, m), 8.34(1 H, s), 9.99( 1H, s), 10.50( 1H, s). |
| 161 | δ 2.30(6H, s), 7,37(1H, t, J = 7.8Hz), 7.45(2H, s), 7.57(1H, t, J = 7.8Hz), 7.62-7.65(2H, m), 7.79 (1H, d, J = 7.8Hz), 7.99(1H, d, J = 7.8Hz), 8.30(1H, s), 10.01(1H, s), 10.65(1H, s). |
| 163 | δ 2.38 (3H, s), 7.53-7.63 (4H, m), 7.70 (1H, s), 7.77 (1H, d, J =7.8Hz), 7.81 (1H, s), 7.99-8.01 (2H, m), 8.08 (1H, d, J =7.8Hz), 8.37 (1H, s), 10.28 (1H, s), 10.50 (1H, s). |
| 164 | ($CDCl_3$) δ 1.20 (3H, t, J =7.3Hz), 2.32 (3H, s), 2.67 (2H, q, J =7.3Hz), 7.36 (2H, s). 7.46-7.51 (3H, m), 7.55-7.59 (1H, m), 7.67-7.72 (2H, m), 7.85-7.88 (3H, m), 8.15 (1H, s), 8.28 (1H, s). |
| 165 | δ 1.13(3H, t, J = 7.3Hz), 2.29(3H, s), 2.67(2H, q, J = 7.3Hz), 7.33-7.41(3H, m), 7.47(1H, s). 7.52-7.63 (2H, m), 7.67-7.76(2H, m), 7.97(1H, d, J = 7.8Hz), 8.32(1H, s), 10.01(1H, s), 10.65(1H, s). |
| 166 | δ 2.36 (3H, s), 7.53-7.63 (4H, m), 7.68 (1 H, s), 7.79 (1 H, d, J =7.8Hz), 7.96 (1 H, s), 7.99-8.01 (2H, m), 8.08 (1 H, dd, J =1.5,7.8Hz), 8.38 (1 H, d, J =1.5Hz), 10.27 (1 H, s), 10.50 (1H, s). |
| 167 | ($CDCl_3$) δ 2.48(3H, s), 7.05(1H, s), 7.23(1H, s), 7.50-7.62(4H, m), 7.69(1H, d, J = 7.8Hz), 7.84(1H, dd, J = 2.0,7.8Hz), 7.89(2H, d, J = 6.8Hz), 8.13(1H, s), 8.16(1H, d, J = 6.8Hz), 8.39(1H, t, J = 1.9Hz), 8.89(1H, s). |
| 168 | δ 1.15(3H, t, J = 7.3Hz), 2.73(2H, q, J = 7.3Hz), 7.50-7.63(5H, m), 7.71-7.77(2H, m), 7.94-8.01 (2H, m), 8.08(1H, d, J = 7.8Hz), 8.37(1H, s), 10.28(1H, s), 10.50(1H, s). |
| 169 | δ 1.14(3H, t, J = 7.3Hz), 2.73(2H, q, J = 7.3Hz), 7.52-7.64(5H, m), 7.76(1H, d, J = 7.8Hz), 7.83 (1H, d, J = 2.0Hz), 7.98-8.01(2H, m), 8.06-8.09(1H, m), 8.37(1H, s), 10.29(1H, s), 10.48(1H, s). |
| 170 | δ 1.14(3H, t, J = 7.3Hz), 2.72(2H, q, J = 7.3Hz), 7.33-7.39(2H, m), 7.53-7.64(3H, m), 7.67-7.72 (1H, m), 7.76(1H, d, J = 7.8Hz), 7.82(1H, s), 7.98(1H, d, J = 8.8Hz), 8.32(1H, s), 10.30 (1H, s), 10.65(1H, s). |
| 171 | δ 1.13(3H, t, J = 7.3Hz), 2.71(2H, q, J = 7.3Hz), 7.52-7.63(5H, m), 7.78(1H, d, J = 7.8Hz), 7.97-8.01 (3H, m), 8.07-8.09(1H, m), 8.37(1H, d, J = 2.0Hz), 10.28(1H, s), 10.48(1H, s). |
| 172 | δ 1.13(3H, t, J = 7.3Hz), 2.71(2H, q, J = 7.3Hz), 7.33-7.39(2H, m), 7.54-7.63(3H, m), 7.67-7.72 (1H, m), 7.78(1H, d, J = 7.8Hz), 7.97-8.00(2H, m), 8.33(1H, s), 10.30(1H, s), 10.66(1H, s). |
| 173 | δ 1.13(3H, t, J = 7.3Hz), 2.72(2H, q, J = 7.3Hz), 7.57-7.64(2H, m), 7.83(1H, d, J = 7.8Hz), 7.98 (1H, s), 8.10(1H, d, J = 7.8Hz), 8.24(2H, d, J = 8.8Hz), 8.37(1H, s), 8.40(2H, d, J = 8.8Hz), 10.32 (1H, s), 10.81(1H, s). |

[Table 6-8]

| Compound No. | $^1$H-NMR (DMSO-$d_6$, ppm) |
|---|---|
| 174 | δ 1.13(3H, t, J = 7.3Hz), 2.71(2H, q, J = 7.3Hz), 7.56-7.63(2H, m), 7.82(1H, d, J = 7.8Hz), 7.98 (1H, s), 8.04-8.10(3H, m), 8.15(2H, d, J = 8.3Hz), 8.36(1H, s), 10.31(1H, s), 10.72(1H, s). |
| 175 | δ 0.85(3H, t, J = 7.3Hz), 1.49-1.59(2H, m), 2.30(3H, s), 2.65(2H, t, J = 6.8Hz), 7.40(1H, s), 7.47 (1H, s), 7.58(1H, t, J = 7.8Hz), 7.79(1H, d, J = 7.8Hz), 8.08(1H, s), 8.22-8.25(2H, m), 8.36-8.41 (3H, m), 10.03(1H, s), 10.79(1H, s). |
| 176 | δ 1.18(6H, d, J = 6.8Hz), 2.29(3H, s), 3.23(1H, septet, J = 6.8Hz), 7.41(1H, s), 7.47(1H, s), 7.52-7.63 (4H, m), 7.75(1H, d, J = 7.8Hz), 7.99-8.01(2H, m), 8.06-8.09(1H, m), 8.36(1H, t, J = 2.0Hz), 10.00 (1H, s), 10.48(1H, s). |
| 177 | δ 1.17(6H, d, J = 6.8Hz), 2.30(3H, s), 3.24(1H, septet, J = 6.8Hz), 7.28-7.41(3H, m), 7.47(1H, s), 7.55-7.63(2H, m), 7.65-7.78(2H, m), 7.99(1H. d, J = 7.8Hz), 8.33(1H, s), 10.02(1H, s), 10.66(1H, s). |
| 178 | δ 0.85(3H, t, J = 7.3Hz), 1.47-1.60(2H, m), 2.70(2H, t, J = 7.3Hz), 7.53-7.63(5H, m), 7.75(1H, d, J = 7.8Hz), 7.83(1H, d, J = 2.0Hz), 7.98-8.01(2H, m), 8.08(1H, d, J = 7.8Hz), 8.36(1H, s), 10.29 (1H, s), 10.49(1H, s). |
| 179 | δ 0.85(3H, t, J = 7.3Hz), 1.50-1.60(2H, m), 2.69(2H, t, J = 6.8Hz), 7.29-7.40(2H, m), 7.53-7.62(3H, m), 7.67-7.76(2H, m), 7.83(1H, d, J = 2.0Hz), 7.98(1H, d, J = 7.8Hz), 8.32(1H, s), 10.31(1H, s), 10.66(1H, s). |
| 180 | δ 0.85(3H, t, J = 7.3Hz), 1.50-1.58(2H, m), 2.70(2H, t, J = 7.8Hz), 7.57-7.63(2H, m), 7.78-7.84(2H, m), 8.09(1H, d, J = 7.8Hz), 8.18-8.24(2H, m), 8.35-8.41(3H, m), 10.32(1H, s), 10.80(1H, s). |
| 181 | δ 0.85(3H, t, J = 7.3Hz), 1.50-1.60(2H, m), 2.69(2H, t, J = 7.3Hz), 7.56-7.62(2H, m), 7.79 (1H, d, J = 7.8Hz), 7.83(1H, d, J = 2.0Hz), 8.04-8.09(3H, m), 8.15(2H, d, J = 8.8Hz), 8.35(1H, s), 10.31 (1H, s), 10.72(1H, s). |
| 182 | δ 0.84(3H, t, J = 7.3Hz), 1.49-1.59(2H, m), 2.68(2H, t, J = 7.3Hz), 7.53-7.63(5H, m), 7.77(1H, d, J = 7.8Hz), 7.97-8.01(3H, m), 8.08(1H, d, J = 7.8Hz), 8.37(1H, s), 10.29(1H, s), 10.49(1H, s). |
| 183 | δ 0.84(3H, t, J = 7.3Hz), 1.49-1.59(2H, m), 2.67(2H, t. J = 7.3Hz), 7.28-7.40(2H, m), 7.51-7.63(3H, m), 7.68-7.72(1H, m), 7.77(1H, d, J = 8.3Hz), 7.97-8.00(2H, m), 8.33(1H, s), 10.31(1H, s), 10.67 (1H, s). |
| 184 | δ 0.84(3H, t, J = 7.3Hz), 1.49-1.59(2H, m), 2.68(2H, t, J = 6.8Hz), 7.57-7.62(2H, m), 7.82(1H, d, J = 7.8Hz), 7.98(1H, d, J = 2.0Hz), 8.08-8.10(1H, m), 8.15-8.41(5H, m), 10.32(1H, s), 10.80(1H, s). |
| 185 | δ 0.84(3H, t, J = 7.3Hz), 1.49-1.57(2H, m), 2.68(2H, broad), 7.56-7.61(2H, m), 7.81(1H, d, J = 7.8Hz), 7.98(1H, s), 8.05(2H, d, J = 8.3Hz), 8.09(1H, s), 8.15(2H, d, J = 8.3Hz), 8.35(1H, s). 10.31 (1H, s), 10.72(1H, s). |
| 186 | δ 0.84(3H, t, J = 7.3Hz), 1.49-1.57(2H, m), 2.68(2H, t, J = 6.8Hz), 7.56-7.61(2H, m), 7.80(1H, d, J = 7.8Hz), 7.94(2H, d, J = 8.3Hz), 7.98(1H, s), 8.09(1H, d, J = 7.8Hz), 8.20(2H, d, J = 8.3Hz), 8.36 (1H, s), 10.31(1H, s), 10.71(1H, s). |
| 187 | δ 0.83(3H, t, J = 7.3Hz), 1.21-1.31(2H, m), 1.47-1.55(2H, m), 2.72(2H, t, J = 7.8Hz), 7.53-.63(5H, m), 7.70-7.75(2H, m), 7.99-8.01(2H, m), 8.06-8.09(1H, m), 8.37(1H, t, J = 2.0Hz), 10.27(1H, s), 10.49(1H, s). |
| 188 | δ 0.83(3H, t, J = 7.3Hz), 1.21-1.31(2H, m), 1.47-1.55(2H, m), 2.72(2H, t, J = 7.8Hz), 7.33-7.40(2H, m), 7.53-7.63(3H, m), 7.67-7.75(3H, m), 7.98(1H, d. J = 7.8Hz), 8.32(1H, s), 10.29(1H, s), 10.66 (1H, s). |
| 189 | δ 0.83(3H, t, J = 7.3Hz), 1.21-1.31(2H, m), 1.47-1.55(2H, m), 2.72(2H, t, J = 7.3Hz), 7.52-7.63(5H, m), 7.75(1H, d, J = 7.8Hz), 7.82(1H, d, J = 1.5Hz), 7.99-8.01(2H, m), 8.08(1H, dd, J = 1.5,7.8Hz). 8.37(1H, t, J = 1.5Hz), 10.29(1H, s). 10,49(1H, s). |
| 190 | δ 0.83(3H, t, J = 7.3Hz), 1.21-1.31(2H, m), 1.47-1.55(2H, m), 2.71(2H, t, J = 7.3Hz), 7.28-7.37(2H, m), 7.53-7.62(3H, m), 7.72(1H, t, J = 7.3Hz), 7.75(1H, d, J = 7.8Hz), 7.82(1H. s), 7.98(1H, d, J = 7.8Hz), 8.62(1H, s), 10.31(1H, s), 10.66(1H. s). |

(continued)

| Compound No. | $^1$H-NMR (DMSO-$d_6$, ppm) |
|---|---|
| 191 | δ 0.82(3H, t, J = 7.3Hz), 1.22-1.30(2H, m), 1.46-1.54(2H, m), 2.70(2H, t, J = 7.8Hz), 7.53-7.63(5H, m), 7.78(1H, d, J = 7.8Hz), 7.93-8.02(3H, m), 8.07-8.09(1H. m), 8.37(1H, s), 10.29 (1H, s), 10.49 (1H, s). |
| 192 | δ 0.83(3H, t, J = 7.3Hz), 1.21-1.31(2H, m), 1.47-1.55(2H, m), 2.71(2H, t, J = 7.8Hz), 7.28-7.40(2H, m), 7.55-7.65(3H, m), 7.69-7.73(1H, m), 7.79(1H, d, J = 7.8Hz), 7.98-8.02(2H, m), 8.35(1H, s), 10.33(1H, s), 10.68(1H, s). |
| 193 | δ 0.75(3H, t, J = 7.3Hz), 1.18(3H, d, J = 6.8Hz), 1.55-1.60(2H, m), 3.00-3.05(1H, m), 7.49-7.67 (5H, m), 7.72-7.77(2H, m), 7.99-8.02(2H, m), 8.09(1H, d, J = 7.8Hz), 8.36(1H, s), 10.29( 1H, s). 10.49(1H, s). |

[Table 6-9]

| Compound No. | $^1$H-NMR (DMSO-$d_6$, ppm) |
|---|---|
| 194 | δ 0.75(3H, t, J = 7.3Hz), 1.17(3H, d, J = 6.8Hz), 1.55-1.60(2H, m), 2.98-3.04(1H, m), 7.52-7.63 (5H, m), 7.77(1H, d, J = 8.3Hz), 7.84(1H, s), 7.99-8.10(3H, m), 8.36(1H, s), 10.30(1H, s), 10.49 (1H, s). |
| 195 | δ 0.74(3H, t, J = 7.3Hz), 1.17(3H, d, J = 6.8Hz), 1.55-1.63(2H, m), 2.98-3.04(1H, m), 7.33-7.40 (2H, m), 7.52-7.63(3H, m), 7.67-7.77(2H, m), 7.83(1H, d, J = 1.5Hz), 7.99(1H, d, J = 8.3Hz), 8.32 (1H, s), 10.32(1H, s), 10.66(1H, s). |
| 196 | δ 0.74(3H, t, J = 6.8Hz), 1.15(3H, d, J = 6.8Hz), 1.53-1.64(2H, m), 2.94-3.04(1H, m), 7.51-7.63 (5H, m), 7.79(1H, d, J = 7.3Hz), 7.98-8.02(3H, m), 8.09(1H, dd, J = 1.5,7.8Hz), 8.37(1H, s), 10.30 (1H, s), 10.50(1H, s). |
| 197 | δ 7.33-7.41(2H, m), 7.56-7.64(2H, m), 7.68-7.73(2H, m), 7.93-8.03(2H, m), 8.38-8.40(1H, m), 8.45 (1H, d, J = 2.0Hz), 10.72(1H, s), 10.98(1H, s). |
| 198 | δ 2.50(3H, s), 7.39(1H, s), 7.48-7.63(4H, m), 7.73(1H, s), 7.77(1H, d, J = 7.8Hz), 7.99-8.01(2H, m), 8.08(1H, d, J = 7.8Hz), 8.35(1H, s), 10.36(1H, s), 10.50(1H, s). |
| 199 | δ 2.50(3H, s), 7.33-7.39(3H, m), 7.53-7.63(2H, m), 7.67-7.77(3H, m), 7.98(1H, d, J = 7.8Hz), 8.30 (1H, s), 10.38(1H, s), 10.67(1H, s). |
| 200 | δ 2.81(3H, s), 7.53-7.64(4H, m), 7.75(1H, d, J = 8.3Hz), 7.99-8.01(2H, m), 8.08-8.11(2H, m), 8.25 (1H, d, J = 2.0Hz), 8.40(1H, t, J = 2.0Hz), 10.52(1H, s), 10.61(1H, s). |
| 201 | δ 3.40(3H, s), 7.33-7.40(2H, m), 7.56-7.63(2H, m), 7.67-7.78(2H, m), 7.99(1H, d, J = 8.3Hz), 8.17 (1H, d, J = 1.5Hz), 8.35(1H, s), 8.39(1H, d, J = 1.5Hz), 10.63(1H, s), 10.69(1H, s). |
| 202 | δ 3.40(3H, s), 7.57-7.62(2H, m), 7.79(1H, d, J = 7.8Hz), 7.96(1H, dd, J = 1.5,8.3Hz), 8.12(1H, dd, J = 1 .5,8.3Hz), 8.17(1H, d, J = 2.0Hz), 8.32(1H, d, J = 2.0Hz), 8.40(1H, d, J = 2.0Hz), 8.54-8.56 (1H, m), 10.65(1H, s), 10.92(1H, s). |
| 203 | δ 3.40(3H, s), 7.53-7.63(4H, m), 7.78(1H, d, J = 7.8Hz), 7.98-8.01(2H, m), 8.07-8.10(1H, m), 8.21 (1H, s), 8.39(1H, s), 8.48(1H, d, J = 1.5Hz), 10.51(1H, s), 10.63(1H, s). |
| 204 | δ 3.39(3H, s), 7.33-7.40(2H, m), 7.56-7.63(2H, m), 7.68-7.72(1H, m), 7.78(1H, d, J = 7.8Hz), 8.00 (1H, d, J = 7.8Hz), 8.21(1H, d, J = 1.5Hz), 8.35(1H, s), 8.48(1H, d, J = 1.5Hz), 10.66(1H, s), 10.69 (1 H, s). |
| 205 | δ 3.39(3H, s), 7.36-7.42(2H, m), 7.58(1H, t, J = 7.8Hz), 7.78(1H, d, J = 7.8Hz), 8.06-8.10(3H, m), 8.21(1H, s), 8.36(1H, s), 8.48(1H, s), 10.52(1H, s), 10.63(1H, s). |
| 206 | δ 3.39(3H, s), 7.61(1H, t, J = 7.8Hz), 7.82(1H, d, J = 7.8Hz), 8.09(1H, d, J = 7.8Hz), 8.20-8.24(3H, m), 8.37-8.41(3H, m), 8.48(1H, s), 10.67(1H, s), 10.83(1H, s). |
| 207 | δ 3.39(3H, s), 7.60(1H, t, J = 7.8Hz), 7.81(1H, d, J = 7.8Hz), 7.97-8.10(3H, m), 8.14-8.21(3H, m), 8.37(1H, t, J = 2.0Hz), 8,48(1H, d, J = 2.0Hz), 10.65(1H, s), 10.74(1H, s). |

(continued)

| Compound No. | $^1$H-NMR (DMSO-$d_6$, ppm) |
|---|---|
| 208 | δ 3.39(3H, s), 7.57-7.62(2H, m), 7.80(1H, d, J = 7.8Hz), 7.96(1H, dd, J = 1.5,7.8Hz), 8.11 (1H, dd, J = 1.5,7.8Hz), 8.20(1H, s), 8.31(1H, s), 8.51(1H, s), 8.55(1H, dd, J = 1.5,4.9Hz), 10.68(1H, s), 10.92(1H, s). |
| 209 | δ 1.96(3H, s), 3.84(2H, broad), 7.53-7.63(4H, m), 7.73(1H, d, J = 7.8Hz), 7.89(1H, s), 7.99-8.01 (2H, m), 8.07(1H, dd, J = 1.5,7.8Hz), 8.19(1H, s), 8.33(1H, t, J = 2.0Hz), 10.43(1H, s), 10.49(1H, s). |
| 210 | δ 7.53-7.64(4H, m), 7.81(1H, d, J = 7.8Hz), 8.00-8.05(3H, m), 8.11(1H, d, J = 7.8Hz), 8.31(1H, d, J = 1.5Hz), 8.41(1H, s), 10.52(1H, s), 10.93(1H, s). |
| 211 | δ 2.29(6H, s), 7.47(2H, s), 7.50-7.62(4H, m), 7.75(1H, d, J = 7.8Hz), 7.97-8.00(2H, m), 8.05(1H, dd, J = 1.5,7.8Hz), 8.36(1H, s), 10.01(1H, s), 10.46(1H, s). |
| 212 | δ 2.30 (6H, s), 7.45 (2H, s), 7.51-7.63 (4H, m), 7.76 (1H, d, J =7.8Hz), 7.98-8.07 (3H, m), 8.37 (1H, d, J =2.0Hz), 9.99 (1H, s), 10.48 (1H, s). |
| 255 | δ 7.25-7.29(2H, m), 7.54-7.65(2H, m), 7.78(1H, d, J = 7.8Hz), 7.92-7.95(1H, m), 8.03(2H, s), 8.30 (1H, s), 10.58(1H, s), 11.05(1H, s). |

[Table 6-10]

| Compound No. | $^1$H-NMR (DMSO-$d_6$, ppm) |
|---|---|
| 256 | δ 7.53-7.63(4H, m), 7.78(1H, d, J = 7.3Hz), 7.99-8.01 (2H, m), 8.06-8.09(1H, m), 8.17(2H, s), 8.38 (1H, s), 10.50(1H, s), 10.55(1H, s). |
| 257 | δ 7.25-7.29(2H, m), 7.55-7.63(2H, m), 7.79(1H, d, J = 7.3Hz), 7.94(1H, d, J = 8.3Hz), 8.17(2H, s), 8.30(1H, s), 10.60(1H, s), 11.05(1H, s). |
| 258 | ($CDCl_3$) δ 7.45-7.61(4H, m), 7.76(1H, d, J=7.8Hz), 7.84-7.91(3H, m), 7.93(2H, s), 8.02(1H, s), 8.08 (1H, d, J=6.8Hz), 8.31(1H, s). |
| 259 | ($CDCl_3$) δ 7.22(1H, dd, J=7.8, 12.2Hz), 7.35(1H, t, J=7.8Hz), 7.52-7.60(2H, m), 7.77(1H, d, J=7.8Hz), 7.88(1H, s), 7.92(1H, s), 7.93(2H, d), 8.19(1H, dt, J=1.9, 7.8Hz), 8.33(1H, s), 8.64(1H, d, J=15.6Hz). |
| 260 | ($CDCl_3$) δ 2.31(6H, s), 7.41(2H, s), 7.50-7.67(5H, m), 7.71(1H, d, J=7.8Hz), 7.87-7.90(3H, m), 8.07 (1H, s), 8.31(1H, s). |
| 261 | ($CDCl_3$) δ 2.33(6H, s), 7.20-7.25(1H, m), 7.35(1H, t, J=7.3Hz), 7.44(2H, s), 7.52-7.60 (3H, m), 7.73 (1H, d, J=7.8Hz), 7.88(1H, dd, J=1.0, 7.8Hz), 8.18(1H, dt, J=2.0, 7.8Hz), 8.33 (1H, s), 8.63(1H, d, J=7.3Hz). |
| 262 | ($CDCl_3$) δ 7.44-7.57(5H, m), 7.72(2H, s), 7.78(1H, d, J=7.8Hz), 8.00(1H, d, J=6.8Hz), 8.18(1H, d, J=8.3Hz), 8.34(1H, t, J=2.0Hz), 9.46(1H, s), 9.83(1H, s). |
| 263 | ($CDCl_3$) δ 7.47-7.57(4H, m), 7.78(1H, d, J=7.8Hz), 7.93(2H, s), 7.99-8.01(2H, m), 8.18(1H, d, J=7.8Hz), 8.33(1H, t, J=2.0Hz), 9.27(1H, s), 9.65(1H, s). |
| 266 | δ 7.20-7.25(1H, m), 7.35(1H, t, J=7.8Hz), 7.53-7.60(2H, m), 7.76-7.79(2H, m), 7.95(2H, s), 7.96 (1H, s), 8.19(1H, dt, J=2.0. 7.8Hz). 8.32(1H, s), 8.63(1H, d, J=15.7Hz). |
| 276 | ($CDCl_3$) δ 7.56(1H, t, J = 7.8Hz), 7.71(1H, d, J = 7.8Hz), 7.75(1H, d, J = 7.8Hz), 7.87-7.90(3H, m), 8.04(1 H, d, J = 7.8Hz), 8.28(2H, s), 8.42(1H, dd, J = 1.0, 7.3Hz), 8.46(1H, s), 8.76(1H, t, J = 2.0Hz). |
| 284 | ($CDCl_3$) δ7.03(2H, t, J=7.8Hz), 7.42-7.49(1H, m), 7.54(1H. t, J=7.8Hz), 7.78(1H, d, J=7.8Hz), 7.81 (1H, s), 7.87-7.92(2H, m), 7.93(2H. s). 8.28(1H, t, J=2.0Hz). |
| 285 | δ 6.86(1H, d, J = 8.8Hz), 7.24(1H, t, J = 7.8Hz), 7.30-7.32(2H, m), 7.47(1H, t, J = 7.8Hz), 7.77(1H, d, J = 7.8Hz), 7.93(2H, s), 8.14(1H, d, J = 7.3Hz), 8.31(1H, s), 9.32(1H, s), 9.46(1H, s). |

(continued)

| Compound No. | $^1$H-NMR (DMSO-$d_6$, ppm) |
|---|---|
| 286 | δ 2.17(3H, s), 7.40(1H, t, J = 7.8Hz), 7.49(1H, t, J = 7.8Hz), 7.80(1H, d, J = 7.8Hz), 7.78 (1H, d, J = 7.8Hz), 7.94-7.95(3H, m). 8.06(1H, s), 8.16(1H, d, J = 7.8Hz), 8.31(1H, s), 9.50 (1H, s), 9.58(1H, s), 9.79(1H, s). |
| 287 | δ 3.00(3H, s), 7.42(1H, t, J = 7.8Hz), 7.50(1H, t, J = 7.8Hz), 7.48(1H, s), 7.74(1H, d, J = 7.8Hz), 7.79(1H, d, J = 7.8Hz), 7.88(1H, t, J = 2.0Hz), 7.93(2H, s), 8.17(1H, d, J = 7.8Hz), 8.29(1H, t, J = 2.0Hz), 9.37(1H, s), 9.49(1H, s), 9.72(1H, s). |
| 288 | ($CDCl_3$) δ 7.51(1H, t, J = 7.8Hz), 7.69(1H, d, J = 7.8Hz), 7.86-7.91(3H, m), 7.95(2H, s), 8.07(1H, s), 8.39(1H, s), 8.53-8.55(1H, m), 8.90(1H, s). |
| 289 | ($CDCl_3$) δ 7.54(1H, t, J = 8.3Hz), 7.80(1H, d, J = 7.8Hz), 7.94(2H, s), 8.02(1H, d, J = 8.3Hz), 8.26-8.27(2H, m), 8.52(1H, d, J = 8.3Hz), 8.74(1H, s), 8.87(1H, s), 10.56(1H, s). |
| 290 | δ 2.68(3H, s), 7.52(1H, t, J = 7.8Hz), 7.81(1H, d, J = 7.8Hz), 7.93(2H, s), 8.03(2H, s), 8.07(1H, s), 8.24(1H, d. J = 7.8Hz), 8.29(1H, s), 9.34(1H, s), 10.13(1H, s). |
| 291 | ($CDCl_3$) δ 4.17(2H, s), 6.80-6.84(1H, m), 6.98(1H, dd, J = 7.8, 11.2Hz), 7.33(1H, dd, J = 2.9, 6.4Hz), 7.51(1H, t, J = 7.8Hz), 7.82(1H, d, J = 7.8Hz), 7.94(2H, s), 8.10(1H, d, J = 8.2Hz), 8.22(1H, s), 9.06(1H, d, J = 13.2Hz). 9.48(1H, s). |
| 292 | ($CDCl_3$) δ 7.44(1H, dd, J = 8.8, 10.7Hz), 7.58(1H, t, J = 7.8Hz), 7.80(1H, d, J = 7.8Hz), 7.85(1H, s), 7.95(2H, s), 7.98(1H, d, J = 7.8Hz), 8.27(1H, s), 8.43-8.47(1H, m), 8.55(1H, d, J = 14.2Hz), 9.09(1H, dd, J = 3.0, 6.4Hz). |
| 293 | δ 2.97(3H, s), 7.16(1H, dd, J = 8.8, 10.8Hz), 7.49(1H, t, J = 7.8Hz), 7.51(1H, s), 7.83(1H, d, J = 7.8Hz), 7.90-7.93(1H, m), 7.94(2H, s), 8.10(1H, d, J = 7.8Hz), 8.24(1H, s), 9.15(1H, d, J = 11.2Hz), 9.38(1H, s), 9.58(1H, s). |

[Table 6-11]

| Compound No. | $^1$H-NMR (DMSO-$d_6$, ppm) |
|---|---|
| 294 | ($CDCl_3$) δ 4.22(3H, s), 7.56(1H, t, J = 7.8Hz), 7.75(1H, t, J = 7.8Hz), 7.83(1H, s), 7.94(1H, s), 7.95 (2H, s), 7.99-8.05(2H, m), 8.25(1H, s), 8.47(1H, d, J = 7.8Hz), 9.83(1H, s). |
| 295 | δ 4.06(3H, s), 7.52(1H, t, J = 7.3Hz), 7.73(1H, d, J = 8.3Hz), 7.82-7.88(2H, m), 7.89(1H, d, J = 8.3Hz), 7.93(2H, s), 8.25-8.29(2H, m), 9.48(1H, s), 10.23(1H, s). |
| 296 | ($CDCl_3$) δ 216(3H, s), 7.14(1H, dd, J = 9.3, 11.2Hz), 7.52(1H, t, J = 7.8Hz), 7.80(1H, d, J = 7.8Hz), 7.94(2H, s), 7.96(1H, d, J = 2.9Hz), 8.01(1H, d, J = 7.8Hz), 8.13-8.16(1H, m), 8.27(1H, s), 8.86 (1H, s), 8.90(1H, d, J = 14.2Hz), 9.00(1H, s). |
| 306 | ($CDCl_3$) δ 7.52-7.58(2H, m), 7.77(1H, d, J = 7.8Hz), 7.90(1H, s), 7.94(2H, s), 7.95(1H, d, J =7.8Hz), 8.01-8.03(1H, m), 8.31(1H, d, J = 7.8Hz), 8.47(1H, s), 8.65(1H, dd, J = 1.0, 4.9Hz), 10.25(1H, s). |
| 307 | ($CDCl_3$) δ 7.57(1H, t, J = 7.8Hz), 7.73-7.77(3H, m), 7.84(1H, s), 7.89(2H, s), 8.05(1H, d, J = 7.8Hz), 8.26(1H, s), 8.32(1H, s), 8.81(1H, s), 8.83(1H, s). |
| 309 | ($CDCl_3$) δ 7.44(1H, dd, J=4.8, 7.8Hz), 7.56(1H, t, J=7.8Hz), 7.80(1H, d, J=7.8Hz), 7.86(1H, s). 7.92(1H, d, J=7.3Hz), 7.95(2H, s), 8.23(1H, dd, J=20., 7.9Hz), 8.30(1H, s), 8.41(1H, s). 8.55 (1H, dd, J=20, 4.5Hz). |
| 310 | ($CDCl_3$) δ 7.46(1H, d, J = 8.3Hz), 7.55(1H, t, J = 8.3Hz), 7.74(1H, d, J = 8.3Hz), 7.88(3H, s), 8.03 (1H, d, J = 7.8Hz), 8.18(1H, dd, J = 3.0, 8.2Hz), 8.24(1H, s), 8.41(1H, s), 8.90(1H, d, J = 2.4Hz). |
| 312 | ($CDCl_3$) δ 7.57(1H, t, J = 7.8Hz), 7.70(2H, s). 7.75(1H, d, J = 7.8Hz), 7.83(1H, s), 7.88(2H, s), 8.04 (1H, d, J = 7.8Hz), 8.21(1H, s), 8.47(1H, s). |
| 313 | ($CDCl_3$) δ 7.33(1H, t, J = 7.8Hz), 7.46(1H, d, J = 8.3Hz), 7.60(1H, s), 7.76(1H, s), 7.80(1H, d, J = 7.8Hz), 7.95(2H, s), 8.18-8.23(2H, m), 8.40(1H, s). |

(continued)

| Compound No. | $^1$H-NMR (DMSO-$d_6$, ppm) |
|---|---|
| 314 | ($CDCl_3$) δ 262(3H, s), 7.29(1H. s), 7.56(1H, t, J = 7.8Hz), 7.77-7.79(2H, m), 7.91(1H, s), 7.94(2H, s), 8.16(1H, d, J = 7.8Hz), 8.29(1H, s), 8.48(1H, s). |
| 315 | ($CDCl_3$) δ 7.47-7.59(3H, m), 7.80(1H, d, J = 7.8Hz), 7.93(1H, s), 7.94(2H, s), 8.26(1H, s), 8.34(1H, d, J = 6.5Hz). 8.47(1H, t, J = 2.0Hz), 8.52-8.55(1H, m), 13.91(1H, s). |
| 316 | ($CDCl_3$) δ 7.59(1H, t, J = 7.8Hz), 7.79(1H, d, J = 7.8Hz), 7.84(1H, s), 7.95(2H, s), 8.04 (1H, d, J = 7.8Hz), 8.41(1H, t, J = 2.0Hz), 8.63(1H, t, J = 2.5Hz), 8.86(1H, d, J = 2.4Hz), 9.54(1H, d, J = 1.5Hz), 9.87(1H, s). |
| 317 | ($CDCl_3$) δ 3.93(3H, s), 7.53(1H, t, J = 7.8Hz), 7.74(1H, d, J = 7.8Hz), 7.84(1H, s), 7.87(1H, d, J = 7.8Hz), 7.94(2H, s), 8.03(1H, s). 8.26(1H, t, J = 2.0Hz), 8.48(1H, s). |
| 318 | ($CDCl_3$) δ 4.02(3H, s), 7.53(1H, t, J = 7.8Hz), 7.45(1H, d, J = 7.8Hz), 7.80(1H, d, J = 7.8Hz), 7.85 (1H, s), 7.89(1H, s), 7.94(2H, s), 8.05(1H, s), 8.24(1H, s). |
| 319 | ($CDCl_3$) δ 4.10(3H, s), 7.53(1H, t, J = 7.8Hz), 7.67(1H, s), 7.76(1H, d, J = 7.8Hz), 7.70-7.86(3H, m), 7.94(2H, s), 8.21(1H, s). |
| 320 | ($CDCl_3$) δ 1.94-2.04(2H, m), 2.17-2.22(1H, m), 237-2.42(1H, m), 3.95-4.00(1H, m), 4.05-4.09(1H, m), 4.49(1H, dd, J = 5.9, 8.3Hz), 7.50(1H, t, J = 7.8Hz), 7.72(1H, d, J = 7.8Hz), 7.83(1H, dd, J = 2.0, 7.8Hz), 7.87(1H, s), 7.94(2H, s), 8.23(1H, t, J = 2.0Hz), 8.67(1H, s). |
| 321 | ($CDCl_3$) δ 7.51-7.53(3H, m), 7.57(1H, t, J = 8.3Hz), 7.76(1H, d, J = 7.3Hz), 7.83(1H, s), 7.95(2H, s), 8.01-8.07(3H, m), 8.23(1H, s), 8.38(1H, s), 9.51(1H, s). |
| 327 | ($CDCl_3$) δ 7.45-7.61(4H, m), 7.77(1H, d, J = 7.8Hz), 7.84-7.91(3H, m), 7.97-8.18(4H, m), 8.31(1H, s). |
| 328 | ($CDCl_3$) δ 7.24(1H, d, J = 7.8Hz), 7.35(1H, t, J = 7.8Hz), 7.54-7.60(2H, m), 7.78(1H, d, J = 7.8Hz), 7.89(1H, s), 7.96(1H, d, J = 7.8Hz), 8.15-8.19(3H, m), 8.33(1H, s), 8.64(1H, d, J = 15.6Hz). |
| 329 | ($CDCl_3$) δ 7.44-7.57(4H, m), 7.70(2H, s), 7.78(1H, d, J=7.8Hz), 8.01(2H, d, J=6.8Hz), 8.17(1H, dd, J=1.0. 7.8Hz). 8.34(1H, t, J=2.0Hz), 9.45(1H, s), 9.81(1H, s). |

[Table 6-12]

| Compound No. | $^1$H-NMR (DMSO-$d_6$, ppm) |
|---|---|
| 330 | ($CDCl_3$) δ 7.22(1H, dd, J=8.3, 12.2Hz), 7.34(1H, t, J=7.3Hz), 7.52-7.67(2H, m), 7.72(2H, s), 7.76 (1H, d, J=7.9Hz), 7.90(1H, s), 7.92(1H, s), 8.18(1H, dt, J=1.4, 7.8Hz), 8.33(1H, t, J=2.0Hz), 8.64 (1H, d, J=16.6Hz). |
| 331 | ($CDCl_3$) δ 7.44(1H, dd, J=4.4, 7.8Hz), 7.57(1H, t, J=7.8Hz), 7.73(2H, s), 7.78(1H, d, J=7.8Hz), 7.84(1H, s), 7.90(1H, d, J=7.8Hz), 8.23(1H, dd, J=2.0, 7.8Hz), 8.29(1H, s), 8.41(1H, s), 8.55 (1H, dd, J=2.0, 4.9Hz). |
| 332 | δ 7.43-7.57(4H, m), 7.79(1H, d, J=7.8Hz), 7.92(2H, s), 8.00(2H, d, J=6.9Hz), 8.18(1H, d, J=8.3Hz), 8.35(1H, t, J=2.0Hz), 8.59(1H, s), 9.86(1H, s). |
| 333 | ($CDCl_3$) δ 7.30-7.62(4H, m), 7.75(1H, d, J=7.8Hz), 7.84(1H, d, J=7.8Hz), 7.89-7.92(3H, m), 7.93 (2H, s), 8.03(1H, s), 8.31(1H, s). |
| 334 | ($CDCl_3$) δ 7.20-7.25(1H, m), 7.35(1H, t, J=6.3Hz), 7.54-7.58(2H, m), 7.79(1H, d, J=6.3Hz), 7.90-7.94(2H, m), 7.95(2H, s), 8.19(1H, t, J=8.3Hz), 8.33(1H, t, J=2.0Hz), 8.64(1H, d, J=16.1Hz). |
| 335 | ($CDCl_3$) δ 7.45-7.61 (4H, m), 7.77-7.79 (1H, m), 7.87-7.91 (3H, m), 8.01 (1H, s), 8.07-8.10 (1 H, m), 8.15 (1H, s), 8.25 (1H, s), 8.38 (1H, s) |
| 338 | ($CDCl_3$) δ 7.22(1H, t, J = 7.8Hz), 7.36(1H, t, J = 7.8Hz), 7.54-7.60(2H, m), 7.78(1H, d, J = 7.8Hz), 7.90(1H, d, J = 7.8Hz), 8.03-8.04(2H, m), 8.19(1H, t, J = 7.8Hz), 8.26(1H, s), 8.41(1H, s), 8.65(1H, d, J = 16.6Hz). |

(continued)

| Compound No. | $^1$H-NMR (DMSO-$d_6$, ppm) |
|---|---|
| 369 | ($CDCl_3$) δ 7.46(1H, dd, J = 4.4, 7.8Hz), 7.59(1H, t, J = 8.3Hz), 7.81(1H, d, J = 8.3Hz), 7.89-7.92 (1H, m), 8.04(2H, s), 8.24(1H, dd, J = 2.0, 7.8Hz), 8.27(1H, s), 8.35(1H, d, J = 13.7Hz), 8.42(1H, s), 8.56(1H, dd, J = 1.4, 4.4Hz). |
| 375 | δ 7.25(1H, d, J = 8.3Hz), 7.27(1H, d, J = 7.8Hz), 7.56-7.64(2H, m), 7.79(1H, d, J = 7.8Hz), 7.94 (1H, d, J = 8.3Hz), 8.32(1H, s), 8.42(2H, s), 10.87(1H, s), 11.05(1H, s). |
| 376 | δ 7.53-7.64(4H, m), 7.80(1H, d, J = 7.8Hz), 7.99-8.01(2H, m), 8.09(1H, dd, J = 1.5,7.8Hz), 8.41 (1H, d, J = 1.5Hz), 8.54(2H, s), 10.52(1H, s), 10.83(1H. s). |
| 377 | δ 7.19-7.30(2H, m), 7.57-7.66(2H, m), 7.81(1H, d, J = 7.8Hz), 7.95(1H, dd, J = 1.5,7.8Hz), 8.33 (1H, t, J = 1.5Hz), 8.53(2H, s), 10.89(1H, s), 11.08(1H, s). |
| 378 | ($CDCl_3$) δ 7.21-7.23(1H, m), 7.36(1H, t, J=6.9Hz), 7.55-7.59(2H, m), 7.79(1H, d, J=8.3Hz), 7.84 (1H, d, J=8.0Hz), 8.05(2H, s), 8.17-8.21(2H, m), 8.43(1H, t, J=2.0Hz), 8.65(1H, d, J=6.9Hz). |
| 379 | ($CDCl_3$) δ 7.46-7.63(4H, m), 7.77(1H, d, J=7.8Hz), 7.84-7.91(3H, m), 8.00(1H, s), 8.07(2H, s), 8.14 (1H, s), 8.40(1H, t, J=2.0Hz). |
| 380 | ($CDCl_3$) δ 7.52-7.63(4H, m), 7.77(1H, d, J = 7.8Hz), 7.89(1H, s), 7.90(2H, d, J = 7.8Hz), 7.99(1H, s), 8.03(1H, s), 8.26(2H, s), 8.39(1H, t J = 2.0Hz). |
| 383 | ($CDCl_3$) δ 7.21(1H, d, J = 8.3Hz), 7.36(1H, t, J = 7.8Hz), 7.55-7.61(2H, m), 7.78(1H, d, J = 7.8Hz), 7.90(1H, d, J = 8.3Hz), 8.02(1H, s), 8.19(1H, dt, J = 1.9, 8.3Hz), 8.27(2H, s), 8.41(1H, s), 8.65(1H, d, J = 16.6Hz). |
| 414 | ($CDCl_3$) δ 7.44(1H, dd, J = 4.9, 7.8Hz), 7.59(1H, t, J = 8.3Hz), 7.81(1H, d, J = 7.8Hz), 7.89(1H, d, J = 8.3Hz), 8.04(1H, s), 8.23(1H, dd, J = 1.9, 7.8Hz), 8.27(2H, s), 8.37(1H, s), 8.43(1H, s), 8.55 (1H, dd, J = 1.9, 4.3Hz). |
| 460 | δ 7.25(1H, d, J = 8.3Hz), 7.27(1H, d, J = 7.8Hz), 7.56-7.64(2H, m), 7.79(1H, d, J = 7.8Hz), 7.94 (1H, d, J = 8.3Hz), 8.32(1H, s), 8.42(2H, s), 10.87(1H, s), 11.05(1H, s). |
| 461 | ($CDCl_3$) δ 2.47 (3H, s), 7.51-7.62 (5H, m), 7.75 (1H, d, J =7.8Hz), 7.89-7.93 (4H, m), 8.00 (1H, broad-s), 8.35 (1H, t, J =2.0Hz). |
| 462 | ($CDCl_3$) δ 2.47 (3H, s), 7.20-7.23 (1H, m), 7.36 (1H, t, J =7.8Hz), 7.55-7.60 (3H, m), 7.76 (1H, d, J =7.8Hz), 7.89 (1H, s), 7.92 (1H, s), 8.18-8.22 (1H, m), 8.39 (1H, s), 8.62 (1H, broad-s). |
| 463 | ($CDCl_3$) δ 2.27 (3H, s), 2.41 (3H, s), 6.59 (1H, septet, J =6.4Hz), 6.72 (1H, s), 7.49-7.61 (5H, m), 7.70 (1H, d, J =7.8Hz), 7.83-7.89 (3H, m), 8.05 (1H, broad-s), 8.33 (1H, t, J =1.5Hz). |

[Table 6-13]

| Compound No. | $^1$H-NMR (DMSO-$d_6$, ppm) |
|---|---|
| 464 | ($CDCl_3$) δ 2.38 (3H, s), 6.34 (1H, septet, J =6.4Hz), 6.87 (1H, s), 7.50-7.63 (5H, m), 7.72 (1H, d, J =7.8Hz), 7.88-7.90 (3H, m), 7.99 (1H, brs), 8.31 (1H, broad-s). |
| 465 | ($CDCl_3$) δ 2.37 (3H, s), 6.36 (1H, septet, J =5.9Hz), 6.87 (1H, s), 7.50-7.61 (4H, m), 7.72-7.73 (2H, m), 7.88-7.90 (3H, m), 8.06 (1H, broad-s), 8.32 (1H, s). |
| 466 | ($CDCl_3$) δ 2.39 (3H, s), 6.36 (1H, septet, J =5.9Hz), 6.89 (1H, s), 7.20-7.25 (1H, m), 7.35 (1H, t, J =6.8Hz), 7.52-7.60 (2H, m), 7.70 (1H, broad-s), 7.75 (1H, d, J =7.8Hz), 7.89 (1H, d, J =7.8Hz), 8.17-8.21 (1H, m), 8.36 (1H, s), 8.64 (1H, broad-d, J =16.1Hz). |
| 467 | ($CDCl_3$) δ 2.53 (3H, s), 6.35 (1H, septet, J =5.9Hz), 6.83 (1H, s), 7.49-7.61 (4H, m), 7.66 (1H, s), 7.74 (1H, d, J =8.3Hz), 7.88-7.92 (3H, m), 8.32 (1H, broad-s), 8.33 (1H, t J =1.9Hz). |
| 601 | δ 2.34(6H, s), 7.37(1H, t, J = 7.8Hz), 7.45(2H, s), 7.53-7.65(4H, m), 7.77-7.82 (1H, m), 8.00-8.02 (2H, m), 10.10(1H, s), 10.29(1H, s). |

(continued)

| Compound No. | $^1$H-NMR (DMSO-$d_6$, ppm) |
|---|---|
| 602 | δ 2.36 (6H, s), 2.56 (3H, s), 7.29-7.43 (7H, m), 7.55-7.57 (1H, m), 7.75-7.78 (1H, m), 7.84-7.88 (1H, m), 8.64-8.66 (1H, m). |
| 603 | δ 2.37 (6H, s), 2.46 (3H, s), 7.34-7.42 (5H, m), 7.69-7.85 (4H, m), 8.11 (1H, s), 8.59-8.63 (1H, s). |
| 604 | δ 2.38 (6H, s), 2.45 (3H, s), 7.33-7.38 (5H, m), 7.78-7.85 (4H, m), 8.10 (1H, s), 8.61-8.65 (1H, m). |
| 605 | δ 2.34 (6H, s), 7.39 (1H, t, J =7.4Hz), 7.44 (2H, s), 7.50-7.54 (1H, m), 7.76-7.80 (2H, m), 7.88 (1H, t J =7.4Hz), 8.12 (1H, t, J =7.4Hz), 8.20 (1H, d, J =1.0Hz), 10.12 (1H, s), 10.73 (1H, s). |
| 606 | δ 2.35 (6H, s), 7.40 (1H, t, J =7.8Hz), 7.45 (2H, s), 7.59-7.62 (1H, m), 7.82-7.90 (2H, m), 8.44-8.50 (2H, m), 8.86 (1H, d, J =2.0Hz), 10.12 (1H, s), 10.72 (1H, s). |
| 607 | δ 2.34 (6H, s), 7.40 (1H, t, J =7.8Hz), 7.45 (2H, s), 7.57-7.62 (1H, m), 7.81-7.85 (1H, m), 8.22-8.25 (2H, m), 8.39-8.42 (2H, m), 10.12 (1H, s), 10.66 (1H, s). |
| 609 | δ 2.34 (6H, s), 7.39 (1H, t, J =6.9Hz), 7.45 (2H, s), 7.58 (1H, t, J =6.9Hz), 7.82 (1H, t, J =6.9Hz), 8.06 (2H. d, J =8.8Hz), 8.15 (2H, d, J =8.8Hz), 10.12 (1H, s), 10.58 (1H, s). |
| 610 | δ 234(6H, s), 7.33-7.40(3H, m), 7.45(2H, s), 7.52-7.56(1H, m), 7.59-7.65(1H, m), 7.72-7.77(1H, m), 8.00(1H, t, J = 7.8Hz), 10.12(1H, s), 10.35(1H, s). |
| 611 | δ 2.34 (6H, s), 7.38 (1H, t, J =7.6Hz), 7.45-7.65 (5H, m), 7.78-7.83 (2H, m), 7.87 (1H, d, J =7.6Hz), 10.10 (1H, s), 10.39 (1H, s). |
| 612 | δ 2.34 (6H, s), 7.35-7.45 (5H, m), 7.55-7.59 (1H, m), 7.77-7.81 (1H, m), 8.07-8.12 (2H, m), 10.09 (1 H. s). 10.32 (1H, s). |
| 616 | δ 234(6H, s), 7.22-7.27(1H, m), 7.38(1H, t, J = 7.8Hz), 7.46(2H, s), 7.50-7.55(3H, m), 7.95(1H, d, J = 7.8Hz), 7.99-8.03(1H, m), 10.12(1H, s), 10.50(1H, s). |
| 618 | δ 2.34 (6H, s), 7.39 (1H, t, J =7.7Hz), 7.45 (2H, s), 7.60 (1H, t, J =7.7Hz), 7.83 (1H, t, J =7.7Hz), 7.95 (2H, d, J =8.3Hz), 8.20 (2H, d, J =8.3Hz), 10.12 (1H, s), 10.56 (1H, s). |
| 619 | δ 2.34 (6H, s), 7.38 (1H, t, J =7.4Hz), 7.45 (2H, s), 7.55-7.60 (3H, m), 7.81 (1H, t, J =7.4Hz), 8.14 (2H, d, J =8.8Hz), 10.11 (1H, s), 10.40 (1H, s). |
| 620 | δ 2.34 (6H, s), 3.01 (6H, s), 6.77 (2H, d, J =9.0Hz), 7.33 (1H, t, J =7.0Hz), 7.45 (2H, s), 7.52 (1H, t, J =7.0Hz), 7.78 (1H, t, J =7.0Hz), 7.90 (2H, d, J =9.0Hz), 9.86 (1H, s), 10.07 (1H, s). |
| 624 | δ 234(6H, s), 7.23-7.28(2H, m), 7.38(1H, t, J = 7.8Hz), 7.45(2H, s), 7.52-7.64(2H, m), 8.05-8.10 (1H, m), 10.13(1H, s), 10.88(1H, s). |

[Table 6-14]

| Compound No. | $^1$H-NMR (DMSO-$d_6$, ppm) |
|---|---|
| 628 | δ 2.34 (6H, s), 7.37-7.42(1H, m), 7.40 (2H, s), 7.55-7.58 (1H, m), 7.95-8.07 (2H, m), 8.21 (1H, dd, J =8.9,2.1 Hz), 8.30 (1 H, dd, J =8.9,2.1 Hz), 10.13 (1H, s), 10.75 (1 H, s). |
| 629 | δ 2.34 (6H, s), 7.39 (1H, t, J =7.4Hz), 7.45 (2H, s), 7.52 (1H, 7.4), 7.81 (1H, dd, J =8.3,2.7Hz), 7.88 (1 H, dd, J =8.3,5.6Hz), 8.10-8.16 (2H, m), 10.13 (1H, s), 10.75 (1 H, s). |
| 630 | δ 2.33 (6H, s), 7.34-7.38 (2H, m), 7.43 (2H, s), 7.51-7.54 (1H, m), 7.58-7.60 (1H, m), 7.67-7.71 (1H, m), 8.00-8.04 (1H, m), 10.10 (1H, s), 10.54 (1H, s). |
| 631 | δ 2.34 (6H, s), 7.37 (1H, t, J =7.9Hz), 7.45-7.47 (3H, m), 7.52-7.56 (1H, m), 7.65 (1H, dd, J =10.2,2.0Hz), 7.77 (1H, t, J =7.9Hz), 7.99-8.02 (1H, m), 10.11 (1H, s), 10.41 (1H, s). |
| 633 | δ 2.34 (6H, s), 7.40 (1H, t, J =8.1 Hz), 7.45 (2H, s), 7.55 (1H, t, J =6.5Hz), 7.92 (1H, d, J =8.1Hz), 8.10 (1H, t, J =6.5Hz), 8.32 (1H, t, J =8.1Hz), 8.43 (1H, s), 10.13 (1H, s), 10.84 (1H, s). |
| 634 | δ 2.34 (6H, s), 7.39 (1H, t, J =8.0Hz), 7.45 (2H, s), 7.51-7.55 (1H, m), 7.83 (1H, d, J =8.0Hz), 7.99 (1H, dd, J =7.7,2.2Hz), 8.12 (1H, t, J =7.7Hz), 8.30 (1H, d, J =2.2Hz), 10.13 (1H, s), 10.78 (1H, s). |

(continued)

| Compound No. | $^1$H-NMR (DMSO-$d_6$, ppm) |
|---|---|
| 638 | δ 2.33 (6H, s), 7.37 (1H, t, J =8.1Hz), 7.44 (2H, s), 7.50-7.55 (2H, m), 8.03-8.07 (1H, m), 8.26-8.31 (1H, m), 8.41-8.42 (1H, m), 10.10 (1H, s), 10.54 (1H, s). |
| 639 | ($CDCl_3$) δ 2.38 (6H, s), 7.38 (2H, s), 7.41-7.49 (2H, m), 7.80 (1H, broad-d, J =11.4Hz), 7.90-7.94 (1H, m), 8.32-8.35 (1H, m), 8.57-8.59 (1H, m), 8.62-8.65 (1H, m), 8.74 (1H, s). |
| 648 | δ 1.80-1.86 (2H, m), 2.05 (3H, s), 2.33-2.38 (8H, m), 3.99 (2H, t, J =5.1Hz), 7.29 (1H, t, J =7.4Hz), 7.44-7.48 (3H, m), 7.79 (1H, d, J =7.4Hz), 9.25 (1H, s), 10.04 (1H, s). |
| 649 | δ 2.29(6H, s), 7.45(2H, s), 7.54-7.66(3H, m), 7.77(1H, d, J =8.8Hz), 7.94(1H, dd, J =2.0,8.1Hz), 8.00-8.03(2H, m), 8.19(1H, d, J =2.0Hz), 10.10(1H, s), 10.29(1H, s). |
| 650 | δ 2.29(6H, s), 7.45(2H, s), 7.48-7.65(4H, m), 7.93-8.02(3H, m), 8.23(1 H, dd, J =2.4, 7.3Hz), 10.03 (1H, s), 10.32(1H, s). |
| 651 | δ 2.29(6H, s), 7.45(2H, s), 7.54(1H, dd, J = 8.8,9.8Hz), 7.96-8.01(1H, m), 8.23(2H, d, J = 8.8Hz), 8.26(1H, dd, J = 2.4,8.8Hz), 8.40(2H, d, J = 8.8Hz), 10.05(1H, s), 10.70(1H, s). |
| 652 | δ 2.29(6H, s), 7.45(2H, s), 7.51-7.56(1H, m), 7.96-8.00(1H, m), 8.06(2H, d, J = 8.3Hz), 8.15(2H, d, J = 8.3Hz), 8.25(1H, dd, J = 2.0,7.3Hz), 10.05(1H, s), 10.61(1H, s). |
| 653 | δ 2.29(6H, s), 7.33-7.40(2H, m), 7.45(2H, s), 7.49-7.54(1H, m), 7.59-7.65(1H, m), 7.73-7.77(1H, m), 7.91-7.95(1H, m), 8.42(1H, d, J = 6.3Hz), 10.05(1H, s), 10.35(1H, s). |
| 654 | δ 2.29(6H, s), 7.37-7.45(4H, m), 7.51(1H, dd, J = 8.8,9.8Hz), 7.93-7.98(1H, m), 8.06-8.10(2H, m), 8.22(1H, dd, J = 2.0,7.3Hz), 10.03(1H, s), 10.37(1H, s). |
| 655 | δ 2.29(6H, s), 7.45(2H, s), 7.51-7.56(1H, m), 7.94-8.00(3H, m), 8.20(2H, d, J = 8.3Hz), 8.25(1H, dd, J = 2.0,7.3Hz), 10.05(1H, s), 10.59(1H, s). |
| 656 | δ 2.29(6H, s), 7.23-7.28(1H, m), 7.42-7.54(4H, m), 7.80-7.87(1H, m), 7.91-7.95(1H, m), 8.41(1H, d, J = 5.9Hz), 10.05(1H, s), 10.36(1 H, s). |
| 657 | δ 2.30(6H, s), 7.46(2H, s), 7.50-7.59(2H, m), 7.92-7.96(1H, m), 8.10(1H, dd, J = 2.0,7.3Hz), 8.52-8.56(2H, m), 10.07(1H, s), 10.73(1H, s). |
| 658 | δ 2.31(6H, s), 7.47(2H, s), 7.55-7.59(2H, m), 7.62-7.66(1H, m), 8.01-8.04(2H, m), 8.09(1H, s), 8.54 (1H, s), 8.66(1H, s), 10.27(1H, s), 10.79(1H, s). |
| 659 | δ2.34(6H, s), 7.40(1H, t, J =9.3Hz), 7.45(2H, s), 7.53-7.64(3H, m), 7.97-8.05(3H, m), 8.14(1H, dd, J =2.9,6.3Hz), 10.03(1H, s), 10.48(1H, s). |

[Table 6-15]

| Compound No | $^1$H-NMR (DMSO-$d_6$, ppm) |
|---|---|
| 660 | δ 2.40(6H, s), 7.45(2H, s), 7.54-7.65(4H, m), 7.97-8.03(3H, m), 8.09(1H, d, J =2.4Hz), 10.20(1H, s), 10.56(1H, s). |
| 661 | δ 2.41(6H, s), 7.45(2H, s), 7.54-7.65(3H, m), 7.72(1H, d, J = 8.8Hz), 7.94-7.99(3H, m), 8.08(1H, d, J = 2.9Hz), 10.20(1H, s), 10.56(1H, s). |
| 662 | δ 2.44(6H, s), 7.45(2H, s), 7.53-7.65(3H, m), 7.79(1H, dd, J =2.4,8.3Hz), 7.90-7.98 (3H, m), 8.05 (1H, d, J =2.4Hz), 10.15(1H, s), 10.53(1H, s). |
| 663 | δ 2.35(6H,s),7.32(1H,t,J=8.3),7.46(2H,s),7.54-7.77(4H,m),8.00(2H,dd,J=1.5,J=8.3), 10.3(1H,s), 10.6(1H,s). |
| 664 | ($CDCl_3$) δ 2.53(6H, s), 7.35(2H, s), 7.52-7.63(5H, m), 7.92(2H, d, J = 8.8Hz), 8.46(1H, d, J = 8.8Hz), 8.57(1H. s). |
| 665 | δ 234(6H, s), 7.37(1H, t, J = 7.8Hz), 7.44(2H, s), 7.53-7.65(4H, m), 7.77-7.81(1H, m), 7.99-8.02 (2H, m), 10.09(1H, broad), 10.29(1H, broad). |

(continued)

| Compound No | $^1$H-NMR (DMSO-$d_6$, ppm) |
|---|---|
| 668 | δ 2.34(6H, s), 7.33-7.40(3H, m), 7.44(2H, s), 7.51-7.56(1H, m), 7.58-7.65(1H, m), 7.72-7.77(1H, m), 8.00(1H, t, J = 8.3Hz), 10.10(1H, s), 10.34(1H, s). |
| 670 | δ 2.28 (6H, s), 7.31-7.44 (5H, m), 7.57 (1H, t, J = 6.3Hz), 7.79 (1H, t, J = 7.3Hz), 8.07-8.09 (2H, m), 10.09 (1H, s), 10.32 (1H, s). |
| 676 | δ 7.34 (6H, s), 7.39 (1H, t, J =7.2Hz), 7.44 (2H, s), 7.59 (1H, t, J =7.2Hz), 7.83 (1H, t J =7.2Hz), 7.99 (2H, d, J =8.8Hz), 8.15 (2H, d, J =8.8Hz), 10.1 (1H, s), 10.57 (1H, s). |
| 679 | δ 2.35 (6H,s), 7.4 (1H, t, J =7.3Hz), 7.44 (2H, s), 7.61 (1H, t, J =7.3Hz), 7.84 (1H, t, J =7.3Hz), 8.24 (2H, d, J =8.8Hz), 8.41 (2H, d, J =8.8Hz), 10.11 (1H, s), 10.66 (1H, s). |
| 682 | δ 2.35 (6H, s), 7.38 (1H, t, J =8.1Hz), 7.44 (2H, s), 7.49 (1H, d, J =8.1Hz), 7.56 (1H, d, J =8.1Hz), 8.07 (2H, d, J =8.8Hz), 8.14 (2H, d, J =8.8Hz), 10.1 (1H, s), 10.43 (1H, s). |
| 686 | δ 234(6H, s), 7.23-7.28(2H, m), 7.38(1H, t, J = 7.8Hz), 7.44(2H, s), 7.52-7.65(2H, m), 8.05-8.10 (1H, m), 10.12(1H, s), 10.88(1H, s). |
| 699 | δ 2.34 (6H, s), 3.39 (3H, s), 7.39 (1H, t, J =7.8Hz), 7.44 (2H, s), 7.49-7.59 (2H, m), 8.08-8.13 (2H, m), 8.55 (1H, dd, J =4.9,2.0Hz), 10.12 (1 H, s), 10.73 (1H, s). |
| 708 | ($CDCl_3$) δ 7.39(1H, t, J = 7.8Hz), 7.48-7.64(3H, m), 7.88-7.96(4H, m), 8.09-8.13(2H, m), 8.69(1H, t, J = 7.8Hz), 8.75(1H, d, J = 7.8Hz). |
| 711 | ($CDCl_3$) δ 7.22(1H, d, J = 8.3Hz), 7.35-7.40(2H, m), 7.56-7.62(1H, m), 7.91(1H, t, J = 7.3Hz), 7.96 (2H, s), 8.15(1H, d, J = 13.3Hz), 8.22(1H, dt J = 1.9, 8.3Hz), 8.73 (1H, dt, J = 1.5. 8.3Hz), 8.92 (1H, d, J = 17.1Hz). |
| 719 | ($CDCl_3$) δ 7.41(1H, t, J = 8.3Hz), 7.85(2H, d, J = 8.3Hz), 7.92(1H, d, J = 6.9Hz), 7.96(2H, s), 8.03 (2H, d, J = 8.3Hz), 8.06(1H, s), 8.10(1H, s), 8.63(1H, dt, J = 1.5, 8.3Hz). |
| 722 | ($CDCl_3$) δ 7.42(1H, t, J = 8.3Hz), 7.93(1H, d, J = 5.3Hz), 7.96(2H, s), 8.06(1H, d, J = 12.2Hz), 8.10 (2H, d, J = 8.8Hz), 8.13(1H, s), 8.40(2H, d, J = 8.8Hz), 8.64(1H, dt, J = 1.5. 8.3Hz). |
| 791 | ($CDCl_3$) δ 2.34(6H, s), 7.37(1H, t, J=7.8Hz), 7.45(2H, s), 7.54(2H, t, J=7.8Hz), 7.61(1H, d, J=7.8Hz), 7.80(1H, d, J=11.7Hz), 7.82-7.87(1H, m), 7.92(2H, d, J=7.8Hz), 8.12(1H, s), 8.62 (1H, dt, J=20. 7.8Hz). |
| 831 | ($CDCl_3$) δ 7.46-7.64(6H, m), 7.93-7.96(4H, m), 8.61(1H, s), 7.75(1H, dd, J = 1.9, 8.3Hz). |
| 832 | ($CDCl_3$) δ 7.24(1H, d, J = 8.3Hz), 7.36(1H, t, J = 8.3Hz), 7.47(1H, t, J = 8.3Hz), 7.55-7.62(3H, m), 7.96(2H, s), 8.21(1H, dt J = 2.0, 8.3Hz), 8.77(1H, dd, J = 2.0, 8.3Hz), 9.33(1H, d, J = 16.6Hz). |

[Table 6-16]

| Compound No. | $^1$H-NMR (DMSO-$d_6$. ppm) |
|---|---|
| 833 | ($CDCl_3$) δ 7.45-7.52(3H, m), 7.60(1H, d, J = 8.8Hz), 7.96(2H. s), 8.29(1H, d, J = 7.8Hz), 8.57(1H, dd, J = 20, 4.4Hz), 8.72(1H, d, J = 7.8Hz), 9.00(1H, s). |
| 1001 | δ 2.20 (6H, s), 3.45 (3H, s), 7.23-7.30 (5H, m), 7.43-7.45 (4H, m), 7.73-7.76 (2H, m), 9.88 (1H, s). |
| 1013 | δ 2.20(6H, s), 3.48(3H, s), 7.39-7.97(8H, m), 7.43(2H, s), 9.90(1H, s). |
| 1016 | δ 2.21 (6H, s), 3.46 (3H, s), 7.40-8.03 (10H, m), 9.91 (1H. s). |
| 1032 | δ 208(3H, s), 2.30(6H, s), 7.45(2H, s), 7.47(1H, d, J = 7.8Hz), 7.54(1H, t, J = 7.8Hz), 7.66(1H, d, J = 7.8Hz), 7.75(1H, d, J = 7.8Hz), 7.82(1H, d, J = 7.8Hz), 8.04(1H. dd, J = 2.0,7.8Hz), 8.13(1H, s), 8.35(1H, s), 9.99(1H, s), 10.16(1H, s), 10.48(1H, s). |
| 1043 | ($CDCl_3$) δ 1.38(6H, m), 2.37(6H, s), 3.13(1H, broad), 3.33(3H, broad), 3.78(1H, broad), 3.89(1H, broad), 7.37(2H, s), 7.48(1H, d, J = 7.8Hz), 7.58(1H, t, J = 7.8Hz), 7.77(1H, s), 7.90(1H, s), 7.93 (1H, broad). |

(continued)

| Compound No. | $^1$H-NMR (DMSO-$d_6$. ppm) |
|---|---|
| 1089 | ($CDCl_3$) δ 0.89(3H, t, J = 7.3Hz), 1.53-1.62(2H, m), 2.61 (2H, t, J = 7.3Hz), 3.50(3H, broad), 6.80 (1H, broad), 7.03(1H, broad), 7.22(1H, broad), 7.34(3H, broad), 7.47(1H, s), 7.67-7.76 (3H, broad-m), 7.93(1H, s). |
| 1091 | ($CDCl_3$) δ 0.88(3H, t, J = 7.3Hz), 1.53-1.63(2H, m), 2.62(2H, t, J = 7.8Hz), 3.52(3H, s), 6.83-6.89 (2H, m), 7.26-7.32(3H, m), 7.41(1H, t, J = 7.8Hz), 7.48(1H, s), 7.66(1H, s), 7.76(2H, d, J = 8.8Hz), 7.93(1H, d, J = 1.5Hz). |
| 1097 | ($CDCl_3$) δ 0.90(3H, t, J = 7.3Hz), 1.55-1.65(2H, m), 2.64(2H, t, J = 7.8Hz), 3.55(3H, s), 7.27(1H, s), 7.40-7.44(3H, m), 7.49-7.51(3H, m), 7.59(1H, s), 7.69(1H, s), 7.76(1H, d, J = 7.8Hz), 7.95(1H, s). |
| 1100 | ($CDCl_3$) δ 0.88(3H, t, J = 7.3Hz), 1.54-1.64(2H, m), 2.63(2H, t, J = 7.8Hz), 3.56(3H, s), 7.29(1H, s), 7.40-7.50(4H, m), 7.59(1H, s), 7.71(1H, s), 7,76(1H, d, J = 7.3Hz), 7.94(1H, d, J = 1.5Hz), 8.06 (2H, d, J = 8.8Hz). |
| 1125 | ($CDCl_3$) δ 2.25(6H, s), 3.54(3H, s), 6.84(1H, broad-s), 7.00-7.10(2H, m), 7.20-7.40(6H, m), 7.50-7.60(1H, broad), 7.60-7.70(1H, broad). |
| 1126 | ($CDCl_3$) δ 3.57(3H, s), 7.20-7.24(2H, m), 7.29-7.32(3H, m), 7.34(1H, t, J=7.8Hz), 7.40-7.44(2H, m), 7.57(1H, d, J=7.8Hz), 7.86-7.91(1H, m), 7.92(2H, s). |
| 1206 | δ 1.17 (3H, broad), 2.22 (6H, s), 3.94 (2H, broad), 7.01-7.08 (2H, m), 7.29-7.43 (6H, m), 7.72-7.77 (2H, m), 9.90 (1H, s). |
| 1207 | δ 1.26 (3H, t, J =6.8Hz), 2.04 (6H, s), 4.11 (2H, q, J =6.8Hz), 7.16-7.70 (12H, m). |
| 1208 | δ 2.28 (6H, s), 3.36 (3H, s), 7.27-7.32 (6H, m), 7.43 (2H, s), 7.55-7.57 (2H, broad), 9.96 (1H, s). |
| 1209 | δ 2.28 (6H, s), 3.47 (3H, s), 6.98 (1H, broad), 7.11 (2H, broad), 7.19 (1H, broad), 7.37 (1H. broad), 7.44 (2H, s), 7.51 (1H, broad), 7.74 (1H, broad), 9.94 (1H, s). |
| 1210 | δ 2.23 (3H, s), 2.29 (6H, s), 7.07-7.26 (5H, m), 7.44 (2H, s), 7.56-7.77 (2H, m), 9.98 (1H, s). |
| 1211 | δ 2.24 (3H, s), 2.28 (6H, s), 7.08-7.09 (2H, m), 7.22-7.28 (2H, m), 7.44 (2H, s), 7.51-7.58 (3H, m), 9.99 (1H, s). |
| 1212 | δ 2.29 (6H, s), 3.12 (3H, s), 7.17-8.02 (9H, m), 9.95 (1H, s). |
| 1213 | δ 2.26 (6H, s), 3.41 (3H, s), 7.12-8.34 (9H, m), 9.92 (1H, s). |

[Table 6-17]

| Compound No. | $^1$H-NMR (DMSO-$d_6$, ppm) |
|---|---|
| 1214 | δ 2.26 (6H, s), 3.40 (3H, s), 7.29 (1H, broad), 7.44 (2H, s), 7.59-7.81 (4H, m), 8.12 (2H, broad), 9.91 (1H, s). |
| 1215 | δ 2.26 (6H, s), 3.40 (3H, s), 7.31-7.39 (7H, m), 7.50-7.56 (1H, m), 7.81-7.83 (1H, m), 9.94 (1H, s). |
| 1216 | δ 2.27 (6H, s), 3.39 (3H, s), 7.31 (1H, m), 7.47 (2H, s), 7.60-7.67 (3H, m), 7.72-7.80 (3H, m), 9.96 (1 H, s). |
| 1217 | δ 2.27 (6H, s), 3.37 (3H, s), 7.29 (2H, broad), 7.44-7.48 (3H, m), 7.59-7.64 (2H, m), 7.76 (2H, broad), 9.94 (1H, s). |
| 1218 | δ 2.27 (6H, s), 3.39 (3H, s), 7.03-7.72 (9H, m), 9.94 (1H, s). |
| 1219 | δ 2.28 (6H, s), 3.36 (3H, s), 7.18-8.04 (9H, m), 9.98 (1H, m). |
| 1220 | δ 2.28 (6H, s), 3.34 (3H, s), 7.12-7.56 (9H, m), 9.97 (1H, s). |
| 1229 | δ 2.28 (6H, s), 3.39 (3H, s), 7.02-7.28 (2H, m), 7.35-7.43 (2H, m), 7.55-7.70 (2H, m), 7.93-7.99 (2H, m), 9.95 (1H, m). |

(continued)

| Compound No. | $^1$H-NMR (DMSO-$d_6$, ppm) |
|---|---|
| 1235 | δ 2.26(6H, s), 3.43(3H, s), 7.27(1H, t, J = 7.8Hz), 7.44(2H, s), 7.58-7.65(2H, m), 7.71(1H, t, J = 7.8), 8.00(1H, dd, J = 8.3.2.0Hz), 8.04(1H, dd, J = 9.3,2.0Hz), 9.91(1H, s). |
| 1236 | δ 2.29 (6H, s), 3.41 (3H, s), 7.44-7.46 (3H, m), 7.59-7.61 (2H, m), 7.72-7.77 (1H, m), 7.88 (1H, d, J =6.8Hz), 7.95-7.99 (1H, m), 9.95 (1H, s). |
| 1237 | δ 2.29 (6H, s), 3.40 (3H, s), 7.08-7.91 (8H, m), 9.94 (1H, s). |
| 1238 | δ 2.28 (6H, s) 3.39 (3H, s), 7.21-7.28 (1H, m), 7.34-7.44 (3H, m), 7.54-7.60 (2H, m), 7.79-7.91 (2H, m), 9.95 (1 H, m). |
| 1244 | ($CDCl_3$) δ 2.29(6H, s), 3.52(3H, s), 7.21-7.23(1H, m), 7.28-7.30(1H, m), 7.35(2H, m), 7.41(1H, m), 7.72(2H, m), 8.01(1H, t, J = 6.8Hz), 8.53(2H, m). |
| 1245 | δ 2.28 (6H, s), 3.41 (3H, s), 7.25 (1H, t, J =7.6Hz), 7.36 (1H, d, J =4.7Hz), 7.44 (2H, s), 7.57-7.64 (2H, m), 7.92 (1H, d, J =7.6Hz), 8.32 (1H, dd, J =4.7,1.9Hz), 9.97 (1H, s). |
| 1246 | δ 2.31 (6H, s), 3.60 (3H, s), 7.25-7.31 (2H, m), 7.44 (2H, s), 7.57-7.59 (2H, m), 7.97-8.01 (1H, m), 8.17-8.18 (1H, m), 9.97 (1H, s). |
| 1247 | δ 2.28 (6H, s), 3.39 (3H, s), 7.33 (1H, d, J =7.6Hz), 7.44 (2H, s), 7.61-7.69 (3H, m), 7.80 (1H, broad), 8.30 (1H, broad), 10.01(1H, s). |
| 1255 | δ 2.29 (6H, s), 3.35 (3H, s), 7.19-7.70 (10H, m), 9.98 (1H, s). |
| 1256 | δ 2.28 (6H, s), 2.30 (3H, s), 3.32 (3H, s), 6.98-7.72 (9H, m), 9.93 (1H, s). |
| 1257 | δ 2.23 (3H, s), 2.29 (6H, s), 3.34 (3H, s), 7.07-7.38 (5H, m), 7.53-7.76 (2H, m), 7.43 (2H, s), 9.98 (1H, s). |
| 1258 | δ 2.27 (6H, s), 2.33 (3H, s), 3.31 (3H, s), 6.98-7.51 (9H, s), 9.93 (1H, s). |

[Table 6-18]

| Compound No. | $^1$H-NMR (DMSO-$d_6$, ppm) |
|---|---|
| 1259 | δ 2.29 (6H, s), 3.41 (3H, s), 7.18 (1H, J = 7.3Hz), 7.44(2H, s), 7.46-7.57 (2H, m), 7.67 (1H, t, J =7.3Hz), 7.73-7.82 (2H, m), 8.01 (1H, d, J =7.8Hz), 9.95 (1H, s). |
| 1260 | δ 2.26 (6H, s), 3.36 (3H, s), 7.42 (2H, s), 7.59 (1H, broad), 7.7 (1H, broad), 7.82 (1H, t, J =7.9Hz), 8.2 (1H, broad), 8.34-8.37 (1H, m), 8.48 (1H, dd, J =7.9,1.7Hz), 8.62 (1H, t, J =2.0Hz), 9.92 (1H, s). |
| 1261 | δ 2.27 (6H, s), 3.37 (3H, s), 7.43 (2H, s), 7.59-7.65 (2H, m), 8.11 (1H, broad), 8.18 (2H, d, J =8.8Hz), 8.29 (2H, d, J =8.8Hz), 9.91 (1H, s). |
| 1262 | δ 2.33 (6H, s), 3.35 (3H, s), 7.30-7.83 (9H, m), 9.93 (1H, s). |
| 1263 | δ 2.27 (6H, s), 3.37 (3H, s), 7.18-7.80 (9H, m), 9.96 (1H, s). |
| 1264 | δ 2.27 (6H, s), 3.35 (3H, s), 7.43 (2H, s), 7.48 (1H, broad), 7.58 (1H, broad), 7.75 (1H, broad), 7.99 (2H, d, J =8.5Hz), 8.08 (2H, d, J =8.5Hz), 9.95 (1H, s). |
| 1265 | δ 2.27 (6H, s), 3.36 (3H, s), 7.03-7.73 (9H, m), 9.93 (1H, s). |
| 1266 | δ 2.28 (6H, s), 3.35 (2H, s), 7.18-7.61 (9H, m), 9.99 (1H, s). |
| 1267 | δ 2.28 (6H, s), 3.39 (3H, s), 7.11-7.18 (3H, m), 7.26-7.30 (1H, t, J =7.8Hz), 7.40-7.47 (3H, m), 7.58 (2H, t, J =7.6Hz), 9.96 (1H, s). |
| 1274 | δ 2.27 (6H, s), 3.37 (3H, s), 7.29 (3H, broad), 7.41-7.47 (4H, m), 7.59-7.61 (2H, m), 9.95 (1H, s). |
| 1293 | δ 2.28 (6H, s), 3.41 (3H, s), 7.25 (1H, t, J =7.6Hz), 7.35 (1H, dd, J =7.3,4.9Hz), 7.43 (2H, s), 7.57-7.63 (2H, m), 7.91 (1H, d. J =7.6Hz), 8.32 (1H, dd, J =4.9,2.0Hz), 9.96 (1H, s). |

(continued)

| Compound No. | $^1$H-NMR (DMSO-$d_6$, ppm) |
|---|---|
| 1294 | δ 2.28 (6H, s), 3.39 (3H, s), 7.31-7.35 (1H, m), 7.42 (2H, s), 7.43-7.48 (1H, m), 7.61-7.75 (2H, m), 7.80 (1H, s), 8.32 (1H, broad), 10.01 (1H, s). |
| 1463 | δ 2.25(6H, s), 3.38(3H, s), 7.27-7.41(6H, m). 7.45(2H, s), 7.90(1H, broad), 8.05(1H, d, J = 6.8Hz), 9.96(1H, s). |
| 1464 | δ 223(6H, s), 3.42(3H, s), 7.41(1H, broad), 7.45(2H, s), 7.60(2H, broad), 7.90(1H, broad), 8.08-8.13 (3H, broad), 9.93(1H, s). |
| 1465 | δ 225(6H, s), 3.40(3H, s), 7.39-7.42(1H, m), 7.45(2H, s), 7.50(1H, broad), 7.78(1H, broad), 7.91 (1H, broad), 7.97-8.10(3H, m), 9.94(1H, s). |
| 1478 | δ 229(6H, s), 3.24(3H, s), 6.84(1H, d, J = 7.8Hz), 7.12(1H, t, J = 7.8Hz), 7.33(2H, s). 7.50-7.64 (4H, m), 7.85-7.88(2H, m), 7.98-8.03(1H, m), 10.22(1H, s). |
| 1479 | δ 2.41(3H, s), 3.25(3H, s), 6.95(1H, dd, J = 1.5,7.8Hz), 7.16(1H, t, J = 7.8Hz), 7.50-7.64(4H, m), 7.68(1H, s), 7.86-7.88(2H, m), 7.93(1H, t, J = 1.5Hz), 7.98-8.00(1H, m), 10.24(1H, s). |
| 1480 | ($CDCl_3$) δ 3.34(3H, s), 7.13-7.19(2H, m), 7.49-7.58(3H, m), 7.70-7.73(2H, m), 7.78-7.91(4H, m), 8.12(1H, s). |
| 1481 | ($CDCl_3$) δ 3.35(3H, s), 7.15-7.20(3H, m), 7.32(1H, t, J = 7.8Hz), 7.51-7.55(1H, m), 7.71(1H, d, J = 2.9Hz), 7.72(1H, d, J = 2.0Hz), 7.80(2H, s), 8.14(1H, dt, J = 2.0, 7.8Hz), 8.37(1H, d, J = 16.1Hz). |
| 1482 | δ 1.18(3H, t, J = 7.3Hz), 2.30(6H, s), 3.76(2H, q, J = 7.3Hz), 6.81(1H, d, J = 7.8Hz), 7.11(1H, t, J = 7.8Hz), 7.33(2H, s), 7.50-7.62(4H, m), 7.84-7.88(2H, m), 7.95-8.00 (1H, m). 10.20(1H, s). |

[Table 6-19]

| Compound No. | $^1$H-NMR(DMSO-$d_6$, ppm) |
|---|---|
| 1483 | δ 1.44(6H, d, J = 6.3Hz), 2.07(6H, s), 5.35(1H, septet, J = 6.3Hz), 6.84(1H, d, J = 7.8Hz), 7.21(1H, t, J = 7.8Hz), 7.21(2H, s), 7.50-7.61(3H, m), 7.75(1H, dd, J = 1.5, 7.8Hz), 7.86-7.89(3H, m), 10.29 (1H, s). |
| 1484 | δ 2.18 (3H, s), 2.32 (6H, s), 7.37-7.59 (11H, m), 10.42 (1H, s). |
| 1485 | δ 2.34 (3H, s), 2.35 (6H, s), 7.34-8.02 (10H, m), 10.33 (1H, s). |
| 1486 | δ 2.33 (3H, s), 2.36 (6H, s), 7.29-8.12 (9H, m), 10.37 (1H, s). |
| 1487 | δ 2.20 (6H, s), 3.08 (3H, s), 3.20 (3H, s), 6.93-7.39 (10H, m), 7.45-7.51 (1H, m). |
| 1607 | ($CDCl_3$) δ 3.31(3H, s), 3.35(3H, s), 6.81(1H, dt, J = 6.8, 1.0Hz), 6.94(1H, t, J = 7.8Hz), 7.10-7.24 (5H, m), 7.35-7.40(1H, m), 7.41(1H, s), 7.78(2H, s). |
| 1617 | ($CDCl_3$) δ 3.30(3H, s), 3.33(3H, s), 6.76-7.00(4H, m), 7.19-7.23(3H, m), 7.37(1H, s), 7.77(2H, s). |
| 1645 | ($CDCl_3$) δ 3.30(3H, s), 3.36(3H, s), 6.96-7.06(3H, m), 7.12-7.16(1H, m), 7.39-7.42(2H, m), 7.95 (2H, s), 8.24(1H, s). |
| 1654 | ($CDCl_3$) δ 3.30(3H, s), 3.42(3H, s), 7.01(1H, d, J = 7.3Hz), 7.10(1H, t, J = 7.8Hz), 7.16(1H, dd, J = 1.4, 7.8Hz), 7.41(1H, t, J = 1.4Hz), 7.54(1H, dd, J = 1.9Hz), 7.56(1H, d, J = 1.9Hz), 7.80(1H, s), 7.81(2H, s). |
| 1655 | ($CDCl_3$) δ 3.29(3H, s), 3.38(3H, s), 3.78(3H, s), 6.73(1H, d, J = 8.3Hz), 6.96(1H, d, J = 8.3Hz), 7.04(1H, t, J = 7.8Hz), 7.08(1H, d, J = 1.5Hz), 7.14(1H, d, J = 7.8Hz), 7.40(1H, s), 7.54(1H, d, J = 8.3Hz), 7.81(2H, s). |
| 1697 | δ 2.23 (6H, s), 3.32 (3H, s), 3.39 (3H, s), 7.15-7.43 (10H, m). |
| 2001 | ($CDCl_3$) δ 2.36 (6H, s), 7.36 (2H, s), 7.53-7.57 (2H, m), 7.61-7.65 (1H, m), 7.95-8.03 (3H, m), 8.08 (1H, dd, J =7.3,1.0Hz), 8.52 (1H, broad-s), 8.62 (1H, dd, J =8.3,1.0Hz), 9.19 (1H, broad-s). |

(continued)

| Compound No. | $^1$H-NMR(DMSO-$d_6$, ppm) |
|---|---|
| 2004 | δ 2.30 (6H, s), 7.37-7.43 (2H, m), 7.46 (2H, s), 7.65 (1H, d, J =8.1Hz), 7.83 (1H, dd, J =7.5,5.6Hz), 7.88 (1H, d, J =7.5Hz), 8.13 (1H, t, J =8.1Hz), 8.40 (1H, d, J =8.1Hz), 10.08 (1H, s), 10.62 (1H, s). |
| 2032 | δ 2.30 (6H, s), 7.46 (2H, s), 7.75-7.78 (1H, m), 7.91 (1H, dd, J =7.3,1.0Hz), 8.13-8.18 (2H, m), 8.27 (1H, d, J =8.0Hz), 8.56 (1H, d, J =8.0Hz), 8.77 (1H, d, J =1.0Hz), 10.62 (1H, s), 10.75 (1H, s). |
| 2033 | δ 2.27(6H, s), 6.16(2H, s), 6.71(1H, d, J = 7.6Hz), 7.01(2H, d, J = 1.0Hz), 7.24(1H, d, J = 6.9Hz), 7.42(2H, s), 7.59(1H, dd, J = 7.6,6.9Hz), 7.65(1H, s), 9.94(1H, s). |
| 2034 | δ 2.32 (6H, s), 7.47 (2H, s), 7.90-7.93 (3H, m), 8.15 (1H, t, J =8.0Hz), 8.37 (1H, d, J =8.0Hz), 8.83 (2H, dd, J =4.6,1.7Hz), 10.12 (1H, s), 10.92 (1H, s). |
| 2035 | δ2.30 (6H, s), 7.46 (2H, s), 7.55-7.56 (1H, m), 7.89 (1H, d, J =7.4Hz), 8.14 (1H, t, J =7.8Hz), 8.34-8.41 (2H, m), 8.45 (1H, dd, J =5.4,1.2Hz), 10.03 (1H, s), 10.90 (1H, s). |
| 2036 | δ2.29 (6H, s), 7.45 (2H, s), 7.59 (1H, t. J =6.3Hz), 7.88 (1 H, d, J =6.3Hz), 8.12-8.16 (2H, m), 8.39 (1H, m), 8.55 (1H, m), 9.93 (1H, s), 11.25 (1H, s). |
| 2037 | δ2.32 (6H, s), 7.47 (2H, s), 7.67 (1H, d, J =7.6Hz), 7.75 (1H, d, J =8.3Hz), 7.90 (1H, d. J =7.6Hz), 8.14 (1H, t, J =7.6Hz), 8.29 (1H, dd, J =8.3Hz, 2.0Hz), 8.89 (1H, d, J =2.0Hz), 10.07 (1H, s), 10.97 (1H, s). |
| 2082 | δ2.20 (6H, s), 3.58 (3H, s), 7.29-7.39 (5H, m), 7.43 (2H, s), 7.50 (1H, d, J =7.4Hz), 7.83 (1H, t, J =7.4Hz), 7.94 (1H, t, J =7.4Hz), 9.91 (1H, s). |

[Table 6-20]

| compound No. | $^1$H-NMR (DMSO-$d_6$, ppm) |
|---|---|
| 2085 | δ2.22 (6H, s), 3.57 (3H, s), 7.12 (1H, t, J =9.2Hz), 7.20 (1H, t, J =7.3Hz), 7.28-7.30 (1H, m), 7.44 (2H, s), 7.55 (1 H, t, J =7.2Hz), 7.63 (1 H, broad), 7.87 (1 H, d, J =7.2Hz), 7.98 (1H, t, J =7.2Hz), 9.90 (1 H, s). |
| 2093 | δ 2.14(6H, s), 3.57(3H, s), 7.42(2H, s), 7.66-7.87(3H, m), 7.96-8.09(4H, m), 9.77(1H, s). |
| 2116 | δ 2.23 (6H, s), 3.55 (3H, s), 7.45 (3H, s), 7.89-9.91 (2H, m), 8.03-8.10 (3H, m), 9.82 (1H, s). |
| 2117 | δ 2.13 (6H, s), 3.58 (3H, s), 7.42 (2H, s), 7.46 (1H, d, J =8.2Hz), 7.72-7.75 (2H, m), 7.90 (1 H, d, J =8.2Hz), 8.08 (1H, t, J =8.2Hz), 8.35 (1 H, d, J =2.0Hz), 9.83 (1H, s). |
| 2162 | ($CDCl_3$) δ 2.38 (6H, s), 7.38 (2H, s), 7.53-7.57 (2H, m), 7.62 (1H, d, J =7.8Hz), 7.68 (1H, dd, J =4.9,1.5Hz), 7.85 (1H, broad-s), 7.95 (2H, d, J =7.8Hz), 8.52 (1H, d, J =4.9Hz), 8.22 (1H, broad-s), 8.88 (1H, s). |
| 2163 | ($CDCl_3$) δ 2.36 (6H, s), 7.38 (2H, s), 7.55-7.59 (2H, m), 7.64-7.72 (2H, m), 7.75 (1H, broad-s), 8.01 (2H, d, J =7.3Hz), 8.41 (1 H, d, J =6.8Hz), 9.14 (1H, d, J =2.4Hz), 10.9 (1 H, broad-s). |
| 2164 | ($CDCl_3$) δ 2.34 (6H, s), 7.47 (2H, s), 7.62-7.65 (2H, m), 7.70-7.81 (2H, m), 8.04-8.04 (3H, m), 8.64 (1H, dd, J =8.3,1.5Hz), 10.9 (1H, broad-s), 12.3 (1H, broad-s). |
| 2165 | δ 2.35 (6H, s), 7.29-8.03 (10H, m), 8.75 (1H, d, J =2.0Hz). |
| 2168 | δ 2.25 (6H, s), 3.32 (3H, s), 7.26 (1H, d, J =7.7Hz), 7.38 (1H, d, J =7.7Hz), 7.44 (2H, s), 7.55 (1H, t, J =7.7Hz), 7.90 (3H, m), 8.11 (2H, m), 12.40 (1H, s). |
| 2201 | ($CDCl_3$) δ 2.38(6H,s),7.25-8.00(11H,m),8.34(1H,s),8.85(1H,broad.). |
| 2202 | ($COCl_3$) δ 2.36 (6H, s), 7.37 (2H, s), 7.47-7.61(5H,m), 7.85-8.03 (4H,m), 8.57 (1 H,s),9.18(1H,s). |
| 2203 | ($COCl_3$) δ 2.38 (6H,s), 7.41 (2H, s), 7.45-7.55 (4H, m), 7.90-7.96 (4H,m) ,8.57 (1H, broad),8.74 (1H,broad), 9.18(1H,broad). |

Typical compounds of the compound represented by the general formula (2) that is an active ingredient of the

insecticide of the present invention are illustrated in Table 7 below, but the present invention is not restricted thereto.

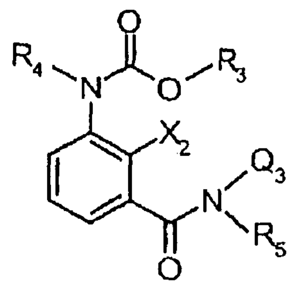

[Table 7]

| Compound No. | $X_2$ | $R_3$ | $R_4$ | $R_5$ | $Q_3$ |
|---|---|---|---|---|---|
| 3000 | F | 2,2,2-trifluoroethyl | H | H | 2,6-dimethyl-4-(hepta fluoroisopropyl) phenyl |
| 3001 | H | 1,3-difluoro-2-propyl | H | H | 2,6-dimethyl-4-(hepta fluoroisopropyl) phenyl |
| 3002 | F | 2-chloroethyl H | | H | 2,6-dimethyl-4-(hepta fluoroisopropyl) phenyl |

Typical compounds of the compound represented by the general formula (3) that is an active ingredient of the fungicide of the present invention are illustrated in Table 8 below, but the present invention is not restricted thereto.

Incidentally, in Table 8, Me refers to a methyl group, i-Pr refers to an isopropyl group, and t-Bu refers to a tertiary butyl group.

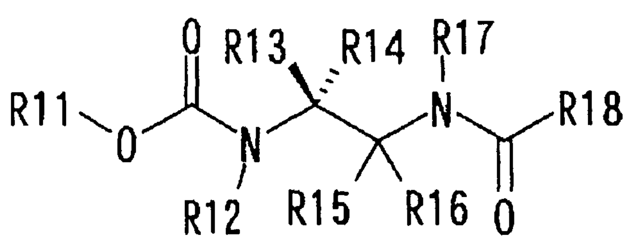

[Table 8]

| Compound No. | R11 | R12 | R13 | R14 | R15 | R16 | R17 | R18 |
|---|---|---|---|---|---|---|---|---|
| 3003 | i-Pr | H | i-Pr | H | H | H | H | 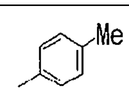 |
| 3004 | i-Pr | H | t-Bu | H | H | H | H | 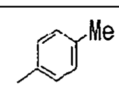 |
| 3005 | i-Pr | H | i-Pr | H | H | H | H | 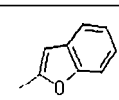 |

Typical compounds of the compound represented by the general formula (4) that is an active ingredient of the fungicide of the present invention are illustrated in Table 9 below, but the present invention is not restricted thereto.

Incidentally, in Table 9, Me refers to a methyl group, i-Pr refers to an isopropyl group, and t-Bu refers to a

tertiary butyl group.

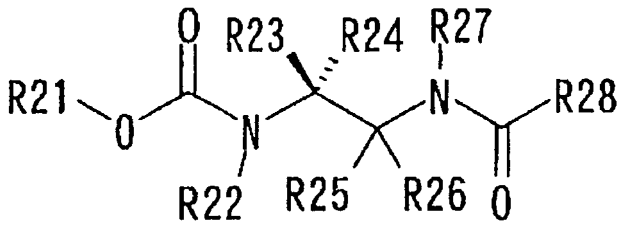

[Table 9]

| Compound No. | R21 | R22 | R23 | R24 | R25 | R26 | R27 R28 |
|---|---|---|---|---|---|---|---|
| 3006 | F3CCH2 | H | i-Pr | H | H | H | 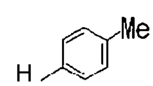 |
| 3007 | F3CCH2 | H | t-Bu | H | H | H | 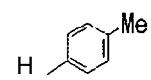 |
| 3008 | F3CCH2 | H | i-Pr | H | H | H | 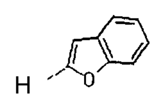 |

The insecticidal and fungicidal composition of the present invention exhibits excellent insecticidal and fungicidal effects and exerts an accurate control effect on harmful diseases and insect pests. As such insect pests, there can be exemplified, for example, LEPIDOPTERA such as swift moth (Endoclyta excrescens), grape tree-borer (Endoclyta sinensis), swift moth (Palpifer sexnotata), strawberry tortrix moth (Acleris comariana), summer fruit tortrix moth (Adoxophyes orana fasciata), small tea tortrix moth (Adoxophyes sp.), Asiatic leaf roller (Archips breviplicanus), apple tortrix (Archips fuscocupreanus), brown oak tortrix (Archips xylosteanus), tortrix moth (Bactra furfurana), tobacco leaf worm (Cnephasia cinereipalpana), nut fruit tortrix (Cydia kurokoi), greenish chestnut moth (Eucoenogenes aestuosa), Manchurian fruit moth (Grapholita inopinata), oriental fruit moth (Grapholita molesta), oriental tea tortrix moth (Homona magnanima), leaf roller (Hoshinoa adumbratana), soybean pod borer (Leguminivora glycinivorella), adzuki bean pod worm (Matsumuraeses azukivora), soybean pod worm (Matsumuraeses falcana), soybean pod worm (Matsumuraeses phaseoli), mulberry leaf roller (Olethreutes mori), apple fruit licker (Spilonota lechriaspis), eye-spotted bud moth (Spilonota ocellana), European grape berry moth (Eupoecillia ambiguella), arrowhead moth (Phalonidia mesotypa), mugwort moth (Phtheochroides clandestine), codling moth (Cydia pomonella), grape berry moth (Endopiza viteana), mulberry bagworm (Bambalina sp.), giant bagworm (Eumeta japonica), tea bagworm (Eumeta minuscula), European grain moth (Nemapogon granellus), case making clothes moth (Tinea translucens), pear leaf miner (Bucculatrix pyrivorella), peach leaf miner (Lyonetia clerkella), apple leaf miner (Lyonetia prunifoliella), soybean leaf roller (Caloptilia soyella), tea leaf roller (Caloptilia theivora), apple leaf miner (Caloptilia zachrysa), persimmon leaf miner (Cuphodes diospyrosella), apple leaf miner (Phyllonorycter ringoniella), pear bark miner (Spulerina astaurota), citrus leaf miner (Phyllocnistis citrella), grape leaf miner (Phyllocnistis toparcha), allium leaf miner (Acrolepiopsis sapporensis), yam leaf miner (Acrolepiopsis suzukiella), diamondback moth (Plutella xylostella), apple fruit moth (Argyresthia conjugella), grape clearwing moth (Paranthrene regalis), cherry tree borer (Synanthedon hector), persimmon fruit moth (Stathmopoda masinissa), sweet potato leaf folder (Brachmia triannulella), pink bollworm (Pectinophora gossypiella), potato tuber moth (Phthorimaea operculella), peach fruit moth (Carposina niponensis), pear leaf worm (Illiberis pruni), Chinese cochlid (Latoia sinica), oriental moth (Monema flavescens), pear stinging caterpillar (Narosoideus flavidorsalis), green stinging caterpillar (Parasa consocia), persimmon cochlid (Scopelodes contracus), rice striped stem borer (Chilo suppressalis), rice leaffolder (Cnaphalocrocis medinalis), yellow peach moth (Conogethes punctiferalis), cucumber moth (Diaphania indica), pear fruit moth (Ectomyelois pyrivorella), tobacco moth (Ephestia elutella), Mediterranean flour moth (Ephestia kuehniella), limabean pod borer (Etiella zinckenella), persimmon bark borer (Euzophera batangensis), mulberry pyralid (Glyphodes pyloalis), cabbage webworm (Hellulla undalis), rice leaf roller (Marasmia exigua), legume pod borer (Maruca testulalis), cotton leaf roller (Notarcha derogate), Asian corn borer (Ostrinia furnacalis), adzuki bean borer (Ostrinia scapulalis), butterbur

borer (Ostrinia zaguliaevi), bluegrass webworm moth (Parapediasia teterrella), peppered moth (Pleuroptya ruralis), Indian-meal moth (Plodia interpunctella), yellow stem borer (Scirpophaga incertulas), common straight swift butterfly (Parnara guttata), large swallowtail butterfly (Papilio helenus), papilionid butterfly (Papilio machaon hippocrates), citrus swallowtail butterfly (Papilio xuthus), Eastern pale clouded yellow (Colias erate poliographus), small white butterfly (Pieris rapae crucivora), long-tailed pea-blue (Lampides boeticus), orange moth (Angerona prunaria), Japanese giant looper (Ascotis selenaria), giant geometrid moth (Biston robustum), plum cankerworm (Cystidia couaggaria), pine moth (Dendrolimus spectabilis), tent moth (Malacosoma neustria testacea), apple caterpillar (Odonestis pruni japonensis), coffee hawk moth (Cephonodes hylas), hawk moth (Acosmeryx castanea), scarce chocolate-tip (Clostera anachoreta), poplar tip moth (Clostera anastomosis), black-marked prominent (Phalera flavescens), drab-brown moth (Phalerodonta manleyi), lobster moth (Stauropus fagi persimilis), tea tussock moth (Euproctis pseudoconspersa), brown tail moth (Euproctis similis), oriental tussock moth (Euproctis subflava), Asian gypsy moth (Lymantria dispar), white-spotted tussock moth (Orgyia thyellina), fall webworm moth (Hyphantria cunea), mulberry tiger moth (Spilosoma imparilis), three-spotted plusia (Acanthoplusia agnata), sweet potato leaf worm (Aedia leucomelas), black cutworm (Agrotis ipsilon), turnip moth (Agrotis segetum), cotton looper (Anomis flava), hibiscus leaf caterpillar (Anomis mesogona), beet semi-looper (Autographa nigrisigna), tiger moth (Trichoplusia ni), American boll worm (Helicoverpa armigera), oriental tobacco budworm (Helicoverpa assulta), flax budworm (Heliothis maritima), cabbage moth (Mamestra brassicae), green rice semilooper (Naranga aenescens), growth-blocking peptide (Pseudaletia separata), pink stem borer (Sesamia inferens), Japanese lawn grass cutworm (Spodoptera depravata), beet armyworm (Spodoptera exigua), oriental leafworm moth (Spodoptera litura), apple dagger moth (Triaena intermedia), sorrel cutworm (Viminia rumicis), spotted cutworm moth (Xestia c-nigrum) and the like;

Heteroptera of HEMIPTERA such as globular stink bug (Megacopta punctatissimum), black-shouldered shield bug (Carpocoris purpureipennis), sloe bug (Dolycoris baccarum), cabbage bug (Eurydema pulchrum), cabbage bug (Eurydema rugosum), 2-spotted sesame bug (Eysarcoris guttiger), white-spotted larger spined bug (Eysarcoris lewisi), white-spotted bug (Eysarcoris parvus), white-spotted stink bug (Eysarcoris ventralis), fruit-piercing stink bug (Glaucias subpunctatus), red-striped stink bug (Graphosoma rubrolineatum), brown marmorated stink bug (Halyomorpha mista), rice stink bug (Lagynotomus elongatus), eastern green stink bug (Nezara antennata), southern green stink bug (Nezara viridula), redbanded shield bug (Piezodorus hybneri), brownwinged green bug (Plautia stali), black rice bug (Scotinophara lurida), shield bug (Starioides iwasakii), winter cherry bug (Acanthocoris sordidus), Coreid bug (Anacanthocoris striicornis), narrow squash bug (Cletus punctiger), slender rice bug (Cletus trigonus), leaf-footed bug (Molipteryx fulginosa), paddy bug (Leptocorisa acuta), rice bug (Leptocorisa chinensis), rice bug (Leptocorisa oratorius), bean bug (Riptortus clavatus), carrot bug (Aeschynteles maculatus), plant bug (Liorhyssus hyalinus), oriental chinch bug (Cavelerius saccharivorus), chinch bug (Macropes obnubilus), ground bug (Pachybrachius luridus), lygaeid bug (Paromius exguus), seed bug (Togo hemipterus), red cotton bug (Dysdercus cingulatus), red bug (Dysdercus poecilus), chrysanthemum lace bug (Galeatus spinifrons), lace bug (Metasalis populi), silver magnolia lace bug (Stephanitis fasciicarina), pear lace bug (Stephanitis nashi), azalea lace bug (Stephanitis pyrioides), chestnut lace bug (Uhlerites debile), walnut lace bug (Uhlerites latius), alfalfa plant bug (Adelphocoris lineolatus), plant bug (Adelphocoris triannulatus), green leaf bug (Apolygus lucorum), pale green plant bug (Apolygus spinolai), sweet potato yellow bug (Creontiades pallidifer), tobacco leaf bug (Cyrtopeltis tennuis), plant bug (Ectometopterus micantulus), plant bug (Halticiellus insularis), apple leaf bug (Heterocordylus flavipes), mirid bug (Lygus disponsi), lygus bug (Lygus saundersi), mirid bug (Orthotylus flavosparsus), plant bug (Stenodema calcaratum), mired plant bug (Stenotus binotatus), sorghum plant bug (Stenotus rubrovittatus), broken back bug (Taylorilygus pallidulus), rice leaf bug (Trigonotylus coelestialium) and the like;

Homoptera such as large brown cicada (Graptopsaltria nigrofuscata), spittle bug (Aphrophora costalis), pine spittle bug (Aphrophora flavipes), grape spittle bug (Aphrophora vitis), spittle bug (Clovia punctata), meadow spittle bug (Philaenus spumarius), black-tipped leafhopper (Bothrogonia japonica), green leafhopper (Cicadella viridis), white leafhopper (Cofana spectra), oak leafhopper (Aguriahana quercus), polyphagous leafhopper (Alnetoidia alneti), citrus leafhopper (Apheliona ferruginea), grape leafhopper (Arboridia apicalis), small green leafhopper (Edwardsiana flavescens), rose leafhopper (Edwardsiana rosae), spruce leafhopper (Empoasca abietis), tea green leafhopper (Empoasca onukii), yellow rice leafhopper (Thaia subrufa), small citrus leafhopper (Zyginella citri), aster leafhopper (Macrosteles fascifrons), green rice leafhopper (Nephotettix cincticeps), green rice leafhopper (Nephotettix nigropictus), green leafhopper (Nephotettix virescens), apple leafhopper (Orientus ishidai), zigzag leafhopper (Recilia dorsalis), wheat leafhopper (Sorhoanus tritici), leafhopper (Speusotettix subfusculus), small brown plant hopper (Laodelphax striatellus), brown plant hopper (Nilaparvata lugens), planthopper (Numata muiri), maize planthopper (Peregrinus maidis), sugarcane planthopper (Perkinsiella saccharicida), white backed planthopper (Sogatella furcifera), panicum planthopper (Sogatella panicicola), mulberry psyllid (Anomoneura mori), psyllid (Calophya nigridorsalis), Asian citrus psyllid (Diaphorina citri), psyllid (Mesohomotoma camphorae), abies sucker (Psylla abieti), jumping plant louse (Psylla alni), Japanese louse (Psylla jamatonica), apple psyllid (Psylla mali), black apple sucker (Psylla malivorella), larger pear sucker (Psylla pyrisuga), Tobira sucker (Psylla tobirae), camphor sucker (Trioza camphorae), sucker (Trioza quercicola), spiny whitefly (Aleurocanthus spiniferus), grape whitefly (Aleurolobus taonabae), sweet potato whitefly (Bemisia tabaci), citrus whitefly (Dialeurodes citri), greenhouse whitefly (Trialeurodes vaporariorum), silver leaf whitefly (Bemisia argentifolii), grape phylloxera (Viteus vitifolii), root aphid (Aphidounguis mali), woolly apple aphid (Eriosoma lanigerum), sugarcane root aphid (Geoica lucifuga), pea aphid (Acyrthosiphon pisum), spiraea aphid (Aphis citricola), cowpea aphid (Aphis craccivora), willow aphid (Aphis farinose yanagicola), cotton-melon aphid (Aphis gossypii), foxglove aphid (Aulacorthum solani), leafcurl plum aphid (Brachycaudus helichrysi), cabbage aphid (Brevicoryne brassicae), tulip bulb aphid (Dysaphis tulipae), European birch aphid (Euceraphis punctipennis), mealy plum aphid (Hyalopterus pruni), mustard aphid (Lipaphis erysimi), chrysanthemum aphid (Macrosiphoniella sanborni), potato aphid (Macrosiphum euphorbiae), bean aphid (Megoura crassicauda), pear aphid (Melanaphis siphonella), apple leaf-curling aphid (Myzus malisuctus), plum aphid (Myzus mumecola), green peach aphid (Myzus persicae), onion aphid (Neotoxoptera formosana), apple aphid (Ovatus malicolens), waterlily aphid (Rhopalosiphum nymphaeae), wheat aphid (Rhopalosiphum padi), rice root aphid (Rhopalosiphum rufiabdominalis), wormwood root aphid (Sappaphis piri), pear aphid (Schizaphis piricola), corn leaf aphid (Sitobion akebiae), rose aphid (Sitobion ibarae), black citrus aphid (Toxoptera aurantii), black citrus aphid (Toxoptera citricidus), peach aphid (Tuberocephalus momonis), Formosan lettuce aphid (Uroleucon formosanum), greenbug aphid (Schizaphis graminum), giant mealybug (Drosicha corpulenta), cottony cushion scale (Icerya purchasi), Matsumoto mealybug (Crisicoccus matsumotoi), pine mealybug (Crisicoccus pini), pear mealybug (Dysmicoccus wistariae), citrus mealybug (Planococcus citri), Japanese mealybug (Planococcus kraunhiae), citrus mealybug (Pseudococcus citriculus), comstock mealybug (Pseudococcus comstocki), Indian white wax scale (Ceroplastes ceriferus), pink wax scale (Ceroplastes rubens), soft scale (Coccus discrepans), brown soft scale (Coccus hesperidum), citricola scale (Coccus pseudomagnoliarum), Chinese white-wax scale (Ericerus pela), European fruit scale (Lecanium corni), European peach scale (Lecanium persicae), citrus cottony scale (Pulvinaria aurantii), cottony citrus scale (Pulvinaria citricola), cottony mulberry scale (Pulvinaria kuwacola), black scale (Saissetia oleae), citrus scale (Andaspis kashicola), California red scale (Aonidiella aurantii), citrus yellow scale (Aonidiella citrina), coconut scale (Aspidiotus destructor), oleander scale (Aspidiotus hederae), Florida red scale (Chrysomphalus ficus), San Jose scale (Comstockaspis perniciosa), dupla scale (Duplaspidiotus claviger), purple scale (Lepidosaphes beckii), oystershell scale (Lepidosaphes ulmi), pear scale (Lepholeucaspis japonica), pear scale (Parlatoreopsis pyri), armored scale (Parlatoria camelliae), tea black scale (Parlatoria theae), black parlatoria scale (Parlatoria ziziphi), fern scale (Pinnaspis aspidistrae), camphor scale (Pseudaonidia duplex), Japanese camellia scale (Pseudaonidia paeoniae), white peach scale (Pseudaulacaspis pentagona), white prunicola Scale (Pseudaulacaspis prunicola), arrowhead scale (Unaspis yanonensis) and the like;

COLEOPTERA such as brown chafer (Adoretus tenuimaculatus), cupreous chafer (Anomala cuprea), soybean beetle (Anomala rufocuprea), flower chafer (Eucetonia pilifera), flower beetle (Eucetonia roelofsi), yellowish elongate chafer (Heptophylla picea), cockchafer (Melolontha japonica), Japanese cockchafer (Mimela splendens), smaller green flower chafer (Oxycetonia jucunda), Japanese beetle (Popillia japonica), variegated carpet beetle (Anthrenus verbasci), black carpet beetle (Attagenus unicolor japonicus), cigarette beetle (Lasioderma serricorne), powder post beetle (Lyctus brunneus), corn sap beetle (Carpophilus dimidiatus), dried fruit beetle (Carpophilus hemipterus), herbivorous ladybird beetle (Epilachna vigintioctomaculata), spotted ladybird beetle (Epilachna vigintioctopunctata), Mexican bean beetle (Epilachna varivestis), black fungus beetle (Alphitobius laevigatus), beetle (Neatus picipes), flour beetle (Palorus ratzeburgii), depressed flour beetle (Palorus subdepressus), yellow mealworm beetle (Tenebrio molitor), rust red flour beetle (Tribolium castaneum), red flour beetle (Tribolium confusum), Japanese blister beetle (Epicauta gorhami), long-horn beetle (Aeolesthes chrysothrix), white-spotted longicorn beetle (Anoplophora malasiaca), Japanese pine sawyer beetle (Monochamus alternatus), yellow-spotted longicorn beetle (Psacothea hilaris), grape borer (Xylotrechus pyrrhoderus), monkeypod roundheaded borer (Xystrocera globosa), bean weevil (Acanthoscelides obtectus), Chinese bean weevil (Callosobruchus chinensis), southern cowpea weevil (Callosobruchus maculatus), cucurbit leaf beetle (Aulacophora femoralis), leaf beetle (Basilepta balyi), tortoise beetle (Cassida nebulosa), brown-blackish beetle (Chaetocnema concinna), chrysomelid leaf beetle (Colasposoma dauricum), asparagus leaf beetle (Crioceris quatuordecimpunctata), rice rootworm (Donacia provosti), alder chrysomelid beetle (Linaeidea aenea), leaf beetle (Luperomorpha tunebrosa), two-striped leaf beetle (Medythia nigrobilineata), rice leaf beetle (Oulema oryzae), tropical legume leaf beetle (Pagria signata), daikon leaf beetle (Phaedon brassicae), crucifer flea beetle (Phyllotreta striolata), Colorado potato beetle (Leptinotarsa decemlineata), corn root worm (Diabrotica sp.), weevil (Involvulus cupreus), peach curculio (Rhynchites heros), sweet potato weevil (Cylas formicarius), apple blossom weevil (Anthonomus pomorum), weevil (Ceuthorhynchidius albosuturalis), chestnut weevil (Curculio sikkimensis), rice-plant weevil (Echinocnemus squameus), West Indian sweet potato weevil (Euscepes postfasciatus), lesser clover leaf weevil (Hypera nigrirostris), Alfalfa weevil (Hypera postica), rice water weevil (Lissorhoptrus oryzophilus), Australian tomato weevil (Listroderes costirostris), common leaf weevil (Phyllobius armatus), Japanese weevil (Sitona japonicus), boll weevil (Anthonomus grandis), rice weevil (Sitophilus oryzae), maize weevil (Sitophilus zeamais), hunting billbug (Sphenophrus venatus vestitus), pine shoot beetle (Tomicus piniperda) and the like;

THYSANOPTERA such as grass thrips (Anaphothrips obscurus), cocksfoot thrips (Chirothrips manicatus), black tea thrips (Dendrothrips minowai), flower thrips (Frankliniella intonsa), thrips (Frankliniella lilivora), greenhouse thrips (Heliothrips haemorrhoidalis), composite thrips (Microcephalothrips abdominalis), oriental soybean thrips (Mycterothrips glycines), mulberry thrips (Pseudodendrothrips mori), yellow tea thrips (Scirtothrips dorsalis), redbanded thrips (Selenothrips rubrocinctus), oriental rice thrips (Stenchaetothrips biformis), thrips (Thrips alliorum), loquat thrips (Thrips coloratus), Eurasian yellow flower thrips (Thrips flavus), banana flower thrips (Thrips hawaiiensis), chrysanthemum thrips (Thrips nigropilosus), melon thrips (Thrips palmi), western flower thrips (Frankliniella occidentalis), light brown soybean thrips (Thrips setosus), gladiolus thrips (Thrips simplex), onion thrips (Thrips tabaci), rye thrips (Haplothrips aculeatus), Chinese thrips (Haplothrips chinensis), predatory thrips (Haplothrips kurdjumovi), red clover thrips (Haplothrips niger), thrips (Leeuwenia pasanii), camphor thrips (Liothrips floridensis), lily thrips (Liothrips vaneeckei), thrips (Litotetothrips pasaniae), Japanese gall-forming thrips (Ponticulothrips diospyrosi) and the like;
ORTHOPTERA such as American cockroach (Periplaneta americana), smokybrown cockroach (Periplaneta fuliginosa), Japanese cockroach (Periplaneta japonica), German cockroach (Blattella germanica), wild cockroach (Blattella lituricollis), Northern cone-headed long horn grasshopper (Homorocoryphus jezoensis), walker (Homorocoryphus lineosus), mole cricket (Gryllotalpa sp.), small rice grasshopper (Oxya hyla intricata), rice grasshopper (Oxya yezoensis), migratory locust (Locusta migratoria) and the like;
DIPTERA such as rice crane fly (Tipula aino), fungus gnat (Bradysia agrestis) , soybean pod gall midge (Asphondylia sp.), melon fly (Dacus cucurbitae) , oriental fruit fly (Dacus dorsalis) , Japanese orange fly (Dacus tsuneonis), Japanese cherry fruit fly (Rhacochlaena japonica), rice leaf miner (Hydrellia griseola), rice whorl maggot (Hydrellia sasakii), fruit fly (Drosophila suzukii), rice stem maggot (Chlorops oryzae), wheat stem maggot (Meromyza nigriventris), rice leaf miner (Agromyza oryzae), garden pea leaf miner (Chromatomyia horticola), tomato leaf miner (Liriomyza bryoniae), stone leek leaf miner (Liriomyza chinensis) , American serpentine leaf miner (Liriomyza trifolii), vegetable leaf miner (Liriomyza sativae), pea leaf miner (Liriomyza huidobrensis), onion maggot (Delia antiqua), onion maggot (Delia platura), beet leaf miner (Pegomya cunicularia), green bottle fly (Phormia regina), house fly (Musca domestica), mosquito (Culex pipiens pallens), malaria vector (Anopheles sinensis), Asian tiger mosquito (Aedes albopictus), mosquito (Culex pipiens molestus) and the like;
HYMENOPTERA such as cabbage sawfly (Athalia japonica), turnip sawfly (Athalia rosae ruficornis), apple argid sawfly (Arge mali) , large rose sawfly (Arge pagana), oriental chestnut gall wasp (Dryocosmus kuriphilus), wood ant (Formica japonica) and the like;
ACARINA such as broad mite (Polyphagotarsonemus latus), cyclamen mite (Steneotarsonemus pallidus), fungus mite (Tarsonemus waitei), straw itch mite (Pyemotes ventricosus), blue oat mite (Penthaleus major), citrus flat mite (Brevipalpus lewisi), privet mite (Brevipalpus obovatus), pineapple flat mite (Dolichotetranychus floridanus), persimmon false spider mite (Tenuipalpus zhizhilashviliae), flat mite (Brevipalpus phoenicis), Tuckerellid mite (Tuckerella pavoniformis), clover mite (Bryobia praetiosa), brown almond mite (Bryobia rubrioculus), apricot spider mite (Eotetranychus boreus), spider mite (Eotetranychus geniculatus), spider mite (Eotetranychus pruni), 6-spotted mite (Eotetranychus sexmanaculatus), tetranychid mite (Eotetranychus smithi), red spider mite (Eotetranychus uncatus), sugi spider mite (Oligonychus hondoensis), southern red mite (Oligonychus ilicis), larch mite (Oligonychus karamatus), citrus red mite (Panonychus citri), European red mite (Panonychus ulmi), carmine spider mite (Tetranychus cinnabarinus), tea red spider mite (Tetranychus kanzawai), 2-spotted spider mite (Tetranychus urticae), hawthorn spider mite (Tetranychus viennensis), pink tea rust mite (Acaphylla theae), tulip bulb mite (Aceria tulipae), pink citrus rust mite (Aculops pelekassi), plum rust mite (Aculus fockeui), apple rust mite (Aculus schlechtendali), ribbed tea mite (Calacarus carinatus), grape leaf rust mite (Calepitrimerus vitis), pear rust mite (Epitrimerus pyri), Japanese pear rust mite (Eriophyes chibaensis), flour mite (Acarus siro), brown legged grain mite (Aleuroglyphus ovatus), bulb mite (Rhizoglyphus robini), mould mite (Tyrophagus putrescentiae), tropical rat mite (Ornithonyssus bacoti), scrub typhus mite (Leptotrombidium akamushi), moth (Leptotrombidium scutellaris), chigger mite (Leptotrombidium pallidum) and the like;
TYLENCHIDA such as bent grass nematode (Anguina agrostis), ear-cockle nematode (Anguina tritici), potato rot nematode (Ditylenchus destructor), tobacco stunt nematode (Tylenchorhynchus claytoni), sugar cane stylet nematode (Tylenchorhynchus martini), stunt nematode (Tylenchorhynchus sp.) , rice root nematode (Hirschmanniella imamuri), rice root nematode (Hirschmanniella oryzae), coffee root-lesion nematode (Pratylenchus coffeae), lesion nematode (Pratylenchus convallariae), root lesion nematode (Pratylenchus fallax), root lesion nematode of tea (Pratylenchus loosi), California root lesion nematode (Pratylenchus neglectus), Cobb's root lesion nematode (Pratylenchus penetrans), plant root lesion nematode (Pratylenchus sp.), Steiner's spiral nematode (Helicotylenchus dihystera), grass spiral nematode (Helicotylenchus erythrinae), spiral nematode (Helicotylenchus sp.), lance nematode (Hoplolaimus sp.), reniform nematode (Rotylenchulus reniformis), British spiral nematode (Scutellonema brachyurum), oat nematode (Bidera avenae), cactus cyst nematode (Cactodera cacti), cyst nematode (Cryphodera sp.), gold-plated nematode (Globodera rostochiensis); Japanese cyst nematode (Heterodera elachista), soybean cyst nematode (Heterodera glycines), clover cyst nematode (Heterodera trifolii), peanut root-knot nematode (Meloidogyne arenaria), camellia root-knot nematode (Meloidogyne camelliae), root-knot nematode (Meloidogyne graminis), northern root-knot nematode (Meloidogyne hapla), southern root-knot nematode (Meloidogyne incognita), root-knot nematode (Meloidogyne sp.), citrus root nematode (Tylenchulus semipenetrans), fungivorous nematode (Aphelenchus avenae) and the like;
DORYLAIMIDA such as needle nematode (Longidorus martini), needle nematode (Longidorus sp.), American dagger nematode (Xiphinema americanum), dagger nematode (Xiphinema sp.), stubby root nematode (Trichodorus sp.) and

the like;
THYSANURA such as oriental silverfish (Ctenolepisma villosa), silverfish (Lepisma saccharina), firebrat (Thermobia domestica) and the like;
ISOPTERA such as drywood termite (Cryptotermes domesticus), Formosan subterranean termite (Coptotermes formosanus), Japanese subterranean termite (Reticulitermes speratus), fungus-growing termite (Odontotermes formosanus) and the like;
PSOCOPTERA such as booklouse (Liposcelis bostrychophilus) and the like;
SIPHONAPTERA such as dog flea (Ctenocephalides canis) and the like;
ANOPLURA such as body louse (Pediculus humanus humanus) and the like;
CHILOPODA such as house centipede (Thereuronema tuberculata) and the like;
DIPLOPODA such as flat-backed millipede (Oxidus gracilis) and the like; and
MOLLUSCA such as terrestrial slug (Incilaria bilineata) and the like.

Furthermore, as such diseases, rice blast (Pyricularia oryzae) can be cited.

As the application methods of the insecticidal and fungicidal composition of the present invention, there can be exemplified, for example, application to the plant itself (foliar spraying), application to the nursery box (nursery box application), application to the soil (soil treatments such as soaking into soil, mixture into soil, side dressing, dispersion on soil or spraying on soil) , application of paddy water (submerged application or rice field application), application to the seed (seed treatment) and the like.

The insecticidal and fungicidal composition of the present invention is generally prepared into conveniently usable forms according to an ordinary manner for preparation of agricultural and horticultural chemicals. That is, the composition may be blended with a suitable inert carrier, optically along with an adjuvant, in a proper proportion and prepared into a suitable preparation form such as a suspension, emulsifiable concentrate, soluble concentrate, wettable powder, granules, dust, tablets or the like through dissolution, separation, suspension, mixing, impregnation, adsorption or adhering.

The inert carrier which can be used in the present invention may be either solid or liquid. Such a material which can be an inert solid carrier includes, for example, soybean flour, cereal flour, wood flour, bark flour, saw dust, powdered tobacco stalks, powdered walnut shells, bran, powdered cellulose, extraction residue of vegetables, synthetic polymers such as powdered synthetic resins, inorganic mineral powder such as lays (for example, kaolin, bentonite, acid clay and the like), talcs (for example, talc, pyrophyllite and the like), silica powders or flakes (for example, diatomaceous earth, silica sand, mica, white carbon [synthetic, high-dispersion silicic acid, also called finely divided hydrated silicon, hydrated silicic acid, some of commercially available products contain calcium silicate as the major component]), activated carbon, powdered sulfur, pumice stone, calcined diatomite, brick groats, fly ash, sand, calcium carbonate powder, calcium phosphate powder and other inorganic mineral powders, chemical fertilizers (for example, ammonium sulfate, ammonium phosphate, ammonium nitrate, urea, ammonium chloride and the like), compost and the like. These carriers can be used singly or in combination of two or more kinds.

A material which can be the inert liquid carrier is selected from such a material which itself has solvency or which does not have such solvency but is capable of dispersing an effective ingredient compound with the aid of an adjuvant. The following are typical examples of the carrier and can be used singly or in combination of two or more kinds. Examples thereof include water, alcohols (for example, methanol, ethanol, isopropanol, butanol, ethylene glycol and the like), ketones (for example, acetone, methylethyl ketone, methylisobutyl ketone, diisobutyl ketone, cyclohexanone and the like), ethers (for example, ethyl ether, dioxane, cellosolve, diisopropyl ether, tetrahydrofuran and the like), aliphatic hydrocarbons (for example, kerosene, mineral oil and the like), aromatic hydrocarbons (for example, benzene, toluene, xylene, solvent naphtha, alkyl naphthalene and the like), halogenated hydrocarbons (for example, dichloromethane, chloroform, carbon tetrachloride, chlorobenzene and the like), esters (for example, ethyl acetate, butyl acetate, ethyl propionate, diisobutyl phthalate, dibutyl phthalate, dioctyl phthalate and the like), amides (for example, dimethylformamide, diethylformamide, dimethylacetamide and the like) and nitriles (for example, acetonitrile and the like).

As an adjuvant, typical adjuvants mentioned below can be exemplified. These adjuvants can be used depending on purposes and used singly or in combination of two or more kinds or cannot be used at all in some cases.

To emulsify, disperse, dissolve and/or wet a compound as an active ingredient, a surfactant is used. Examples thereof include surfactants such as polyoxyethylene alkyl ethers, polyoxyethylene alkylaryl ethers, polyoxyethylene higher fatty acid esters, polyoxyethylene resinates, polyoxyethylene sorbitan monolaurate, polyoxyethylene sorbitan monooleate, alkylarylsulfonates, naphthalenesulfonates, lignin sulfonates, higher alcohol sulfate esters and the like.

Furthermore, to stabilize the dispersion of a compound as an active ingredient, adhere it and/or bind it, the following adjuvants can be used. Examples thereof include casein, gelatin, starch, methyl cellulose, carboxymethyl cellulose, gum Arabic, polyvinyl alcohols, pine oil, bran oil, bentonite, Xanthan gum, lignin sulfonates and the like.

In order to improve the fluidity of a solid product, the following adjuvants can be used. For example, adjuvants such as waxes, stearates, alkyl phosphates and the like can be used. Adjuvants such as naphthalenesulfonic acid condensation products and polycondensates of phosphates may be used as a peptizer for suspendible products. As a

defoaming agent, adjuvants such as silicon oils can also be used.

Incidentally, the insecticidal and fungicidal composition of the present invention is stable to light, heat, oxidation and the like. However, an anti-oxidant or an ultraviolet absorber, for example, a phenol derivative such as BHT (2,6-di-t-butyl-4-methylphenol) and BHA (butylated hydroxyanisole), a bisphenol derivative or arylamines such as phenyl-α-naphthylamine, phenyl-β-naphthylamine, condensates of phenetidine and acetone, or a stabilizer such as a benzophenone-based compound is added in a proper amount when necessary, whereby it is possible to obtain a composition with much stabilized effect.

The weight ratio of the active compound in the present invention can be varied in a relatively wide range. The fungicidal active compound represented by the general formula (3) or (4) is contained from 0.02 to 50 weight parts and preferably from 0.1 to 20 weight parts per 1 weight part of the insecticidal active compound represented by the general formula (1) or (2). Furthermore, the content of the active ingredient of the insecticidal and fungicidal composition of the present invention is usually from 0.1 weight % to 20 weight % for dust formulation, from 5 weight % to 50 weight % for emulsifiable concentrate, from 10 weight % to 90 weight % for wettable powder, from 0.1 weight % to 20 weight % for granule, and from 10 weight % to 90 weight % for flowable formulation. On the other hand, the amount of the carrier in each formulation is usually from 60 weight % to 99 weight % for dust formulation, from 40 weight % to 95 weight % for emulsifiable concentrate, from 10 weight % to 90 weight % for wettable powder, from 80 weight % to 99 weight % for granule, and from 10 weight % to 90 weight % for flowable formulation. Meanwhile, the amount of the adjuvant is usually from 0.1 weight % to 20 weight % for dust formulation, from 1 weight % to 20 weight % for emulsifiable concentrate, from 0.1 weight % to 20 weight % for wettable powder, from 0.1 weight % to 20 weight % for granule, and from 0.1 weight % to 20 weight % for flowable formulation.

In order to control various kinds of diseases and insect pests, the insecticidal and fungicidal composition of the present invention may be applied to crops which are expected to create diseases and insect pests or places where such creation is not desired in an amount effective in controlling diseases and insect pests as intact, as appropriately diluted with water or the like, or as suspended, and used accordingly. The amount thereof is varied according to various factors such as purpose, target diseases and insect pests, reared status of crops, occurrence trend of diseases and insect pests, weather, environmental conditions, the type of formulation, method of application, place of application, time of application and the like. However, generally, the active ingredient is preferably used at a concentration of from 0.0001 to 5000 ppm and preferably from 0.01 to 1000 ppm. Furthermore, the amount of the composition applied per 10 a is generally from 1 to 500 g as the active ingredient.

The insecticidal and fungicidal composition of the present invention may be used singly for preventing various diseases and insect pests which are injurious to paddy rice, fruit trees, vegetables, other crops, flowers and the like. Also, it may be used in combination of one or more kinds of other insecticides and/or fungicides in order to obtain an excellent control effect.

When the insecticidal and fungicidal composition of the present invention is used in combination with one or more kinds of other insecticides and/or fungicides, the insecticidal and fungicidal composition of the present invention may be used as a mixed solution with other insecticides and/or fungicides, or the insecticidal and fungicidal composition of the present invention may be used as a mixture with other insecticides and/or fungicides at the time of application of the agrochemicals. In addition to the above insecticides and fungicides, the insecticidal and fungicidal composition of the present invention can be used as a mixture with a plant protection agent such as a herbicide, a fertilizer, a soil conditioner, a plant growth regulator and the like or a material, whereby a multi-purpose composition with an excellent effect can be prepared.

## EXAMPLES

The typical examples for preparing the compound represented by the general formula (1) of the present invention are illustrated below with reference to the following Examples. However, the present invention is not restricted to these Examples.

### Example 1-1

Preparation of N-(2,6-dimethyl-4-heptafluoroisopropyl)phenyl 3-nitrobenzamide

To a solution of 20.0 g of 2,6-dimethyl-4-heptafluoroisopropylaniline and 11.0 g of pyridine added to 100 ml of tetrahydrofuran and stirred at room temperature was introduced dropwise 13.0 g of 3-nitrobenzoyl chloride dissolved in 20 ml of tetrahydrofuran little by little. The reaction solution was stirred at room temperature for 10 hours, and then ethyl acetate and water were added thereto. Solution separation was performed for taking out an organic layer. The organic layer was dried over anhydrous magnesium sulfate. The solution was filtered off, the filtrate was collected, and the solvent was removed under a reduced pressure to obtain a residue. The resulting residue was washed with a mixed

solvent of hexane and diisopropyl ether to obtain 26.0 g of the desired product (Yield: 85%) as a white solid.
$^1$H-NMR ($CDCl_3$,ppm) δ 2.33(6H, s), 7.37(2H, s), 7.68(1H, s), 7.72(1H, t, J = 8.1Hz), 8.28(1H, d, J = 8.1Hz), 8.94(1H, dd, J = 1.2, 8.1Hz), 8.75(1H, t, J = 1.2Hz)

Example 1-2

Preparation of N-(2,6-dimethyl-4-heptafluoroisopropyl)phenyl 3-aminobenzamide

To a solution of 0.90 g of N-(2,6-dimethyl-4-heptafluoroisopropyl)phenyl 3-nitrobenzamide and 1.56 g of anhydrous stannous chloride added to 25 ml of ethanol and stirred at room temperature was added 2 ml of concentrated hydrochloric acid, and the resulting mixture was stirred at 60 degree centigrade for 1 hour. The reaction solution was returned to room temperature, poured into water, and then neutralized with potassium carbonate. Ethyl acetate was added thereto, the insoluble substance was filtered off, and then the organic layer was separated and dried over anhydrous magnesium sulfate. The solution was filtered off, the filtrate was collected, and the solvent was removed under a reduced pressure to obtain a residue. The resulting residue was washed with hexane to obtain 0.44 g of the desired product (Yield: 53%) as a white solid.
$^1$H-NMR($CDCl_3$,ppm) δ 2.34(6H, s), 3.87(2H, broad), 6.86-6.89(1H, m), 7.20-7.35(6H, m)

Example 1-3

Preparation of N-(2,6-dimethyl-4-heptafluoroisopropyl)phenyl 3-(benzoylamino)benzamide (Compound No. 10)

To a solution of 0.25 g of N-(2,6-dimethyl-4-heptafluoroisopropyl)phenyl 3-aminobenzamide and 0.06 g of pyridine added to 5 ml of tetrahydrofuran and stirred at room temperature was introduced dropwise 0.09 g of benzoyl chloride dissolved in 1 ml of tetrahydrofuran. The reaction solution was stirred at room temperature for 1 hour, and then ethyl acetate and 1N hydrochloric acid were added thereto for separating an organic layer. The organic layer was washed with saturated baking soda solution one time and then dried over anhydrous magnesium sulfate. The solution was filtered off, the filtrate was collected and the solvent was removed under a reduced pressure to precipitate a solid. The precipitated solid was washed with diisopropyl ether to obtain 0.29 g of the desired product (Yield: 92%) as a white solid.
$^1$H-NMR (DMSO-$d_6$, ppm) 52.37 (6H, s), 7.34 (2H, s), 7.46-7.57 (4H, m), 7.75 (1H, d, J=7.8Hz), 7.98-8.01 (2H, m), 8.12 (1H, d, J=7.3Hz), 8.34 (1H, s), 8.87 (1H, s), 9.66 (1H, s).

Example 2-1

Preparation of N-(2,6-dimethyl-4-heptafluoroisopropyl)phenyl-N-methyl 3-nitrobenzamide

To a solution of 0.18 g of 60% sodium hydride suspended in 15 ml of tetrahydrofuran was introduced dropwise 2.0 g of N-(2,6-dimethyl-4-heptafluoroisopropyl)phenyl 3-nitrobenzamide dissolved in 5 ml of tetrahydrofuran at room temperature. The reaction solution was stirred at room temperature for 30 minutes, and then 0.65 g of methyl iodide dissolved in 5 ml of tetrahydrofuran was introduced dropwise. Subsequently, the reaction solution was heated to 50 degree centigrade and stirred for 4 hours and then returned to room temperature, and ethyl acetate and water were added thereto. An organic layer was separated, washed with water one time, and then dried over anhydrous magnesium sulfate. The solvent was removed under a reduced pressure. The resulting residue was purified by silica gel column chromatography using an eluent (development solvent; hexane : ethyl acetate = 6:1) to obtain 1.73 g of the desired product (Yield: 84%) as a white solid.
$^1$H-NMR($CDCl_3$,ppm) δ2.31(6H, s), 3.38(3H, s), 7.27(2H, s), 7.37(1H, t, J = 7.8Hz), 7.62-7.65(1H, m), 8.05(1H, t, J = 2.0Hz), 8.11-8.14(1H, m).

Example 2-2

Preparation of N-(2,6-dimethyl-4-heptafluoroisopropyl)phenyl-N-methyl 3-aminobenzamide

A solution of 1.50 g of N-(2,6-dimethyl-4-heptafluoroisopropyl)phenyl-N-methyl 3-nitrobenzamide and 0.15 g of 10% palladium carbon added to 20 ml of methanol was stirred in an ordinary pressure, in a hydrogen atmosphere for 2 hours. The catalyst was filtered out and then the solvent was removed under a reduced pressure. Subsequently, the precipitated solid was washed with hexane to obtain 1.24 g of the desired product (Yield: 88%) as a white solid.
$^1$H-NMR($CDCl_3$, ppm) δ2.27(6H, s), 3.31(3H, s), 3.80 (2H, broad), 6.40-6.43 (1H, m), 6.54-6.58(1H, m), 6.71(1H, t, J = 2.0Hz), 6.76-6.86(1H, m), 7.22(2H, s).

Example 2-3

Preparation of N-(2,6-dimethyl-4-heptafluoroisopropyl)phenyl-N-methyl 3-(benzoylamino)benzamide (Compound No. 1478)

A desired title product was prepared according to the conditions as described in Example 1-3 as a white solid. $^1$H-NMR(DMSO-$d_6$,ppm) δ2.29(6H, s), 3.24(3H, s), 6.84(1H, d, J = 7.8Hz), 7.12(1H, t, J = 7.8Hz), 7.33(2H, s), 7.50-7.64 (4H, m), 7.85-7.88(2H, m), 7.98-8.03(1H, m), 10.22(1H, s).

Example 3

Preparation of N-(2,6-dimethyl-4-heptafluoroisopropyl)phenyl 3-[(2-chloropyridine-3-yl)carbonylamino]benzamide (Compound No. 106)

To a solution of 0.6 g of N-(2,6-dimethyl-4-heptafluoroisopropyl)phenyl 3-aminobenzamide and 0.4 g of pyridine added to 10 ml of tetrahydrofuran was added 0.35 g of 2-chloronicotic acid chloride hydrochloride, and the resulting solution was stirred at room temperature for 4 hours. Ethyl acetate was added thereto and then the reaction solution was washed with saturated baking soda solution two times, and the solvent was removed under a reduced pressure. The precipitated solid was washed with a mixed solvent of hexane and diisopropyl ether and dried to obtain 0.64 g of the desired product (Yield: 75%) as a white solid.
$^1$H-NMR(DMSO-$d_6$,ppm) δ2.30 (6H, s), 7.45 (2H, s), 7.54-7.60 (2H, m), 7.77-7.80 (1H, m), 7.95 (1H, d, J= 7.8Hz), 8.10-8.12 (1H, m), 8.30 (1H, s), 8.54-8.59 (1H, m), 10.03 (1H, s), 10.88 (1H, s).

Example 4

Preparation of N-(2,6-dimethyl-4-heptafluoroisopropyl)phenyl 3-[(pyridine-3-yl)carbonylamino]benzamide (Compound No. 101)

A solution of 99 mg of nicotic acid and 153 mg of 1,1'-oxalyldiimidazole added to 10 ml of acetonitrile was stirred at room temperature for 15 minutes and at 40 degree centigrade for 40 minutes. The reaction solution was returned to room temperature, and then 300 mg of N-(2,6-dimethyl-4-heptafluoroisopropyl)phenyl 3-aminobenzamide was added thereto and stirred at 60 degree centigrade for 5 hours. Subsequently, the solvent was removed under a reduced pressure to obtain a residue. While ethyl was added to the resulting residue, the organic layer was washed with saturated baking soda solution two times, and the solvent was removed under a reduced pressure again. The obtained residue was purified by silica gel column chromatography using an eluent (development solvent; hexane : ethyl acetate = 1:3) to obtain 70 mg of the desired product (Yield: 18%) as a white solid.
$^1$H-NMR(DMSO-$d_6$,ppm) δ2.30 (6H, s), 7.45 (2H, s), 7.54-7.61 (2H, m), 7.78 (1H, d, J = 8.3Hz), 8.06 (1H, d, J = 7.3Hz), 8.32-8.35 (2H, m), 8.77-8.79 (1H, m), 9.14 (1H, d, J = 1.5Hz), 10.00 (1H, s), 10.66 (1H, s).

Example 5-1

Preparation of N-methyl-2-bromo-4-heptafluoroisopropyl-6-methylaniline

To a solution of 1.0 g of N-methyl-4-heptafluoroisopropyl-2-methylaniline added to 5 ml of N,N-dimethylformamide was introduced dropwise 0.8 g of N-bromosuccinic acid imide dissolved in 3 ml of N,N-dimethylformamide. The resulting solution was stirred at room temperature for 5 hours, and then ethyl acetate and water were added thereto for separating an organic layer. The organic layer was washed with water two times, and then dried over anhydrous magnesium sulfate and the solvent was removed under a reduced pressure to obtain a residue. The resulting residue was purified by silica gel column chromatography using an eluent (development solvent; hexane : ethyl acetate = 9:1) to obtain 0.86 g of the desired product (Yield: 68%) as red oil.
$^1$H-NMR ($CDCl_3$, ppm) 52.41 (3H, s), 2.93 (3H, s), 3.90 (1H, broad), 7.23 (1H, s), 7.54 (1H, s).

Example 5-2

Preparation' of N-(2-bromo-4-heptafluoroisopropyl-6-methyl)phenyl-N-methyl 3-(benzoylamino)benzamide (Compound No. 1479)

A desired title product was prepared from N-methyl-2-bromo-4-heptafluoroisopropyl-6-methylaniline according

to the conditions as described in Example 1 as a white solid.
$^1$H-NMR(DMSO-$d_6$,ppm) δ2.41(3H, s), 3.25(3H, s), 6.95(1H, dd, J = 1.5,7.8Hz), 7.16(1H, t, J = 7.8Hz), 7.50-7.64(4H, m), 7.68(1H, s), 7.86-7.88(2H, m), 7.93(1H, t, J = 1.5Hz), 7.98-8.00(1H, m), 10.24(1H, s).

Example 6

Preparation of N-(2,6-dimethyl-4-heptafluoroisopropyl)phenyl-N-methyl 3-(N-methylbenzoylamino)benzamide (Compound No. 1487)

To a solution of 40 mg of 60% sodium hydride suspended in 10 ml of tetrahydrofuran was introduced dropwise 0.3 g of N-(2,6-dimethyl-4-heptafluoroisopropyl)phenyl-N-methyl 3-(benzoylamino)benzamide dissolved in 5 ml of tetrahydrofuran at room temperature. The reaction solution was stirred at room temperature for 1 hour, and then 0.16 g of methyl iodide dissolved in 5 ml of tetrahydrofuran was introduced dropwise. Subsequently, the reaction solution was heated to 50 degree centigrade, stirred for 4 hours and then returned to room temperature, and ethyl acetate and water were added thereto. An organic layer was separated and washed with water one time, and then dried over anhydrous magnesium sulfate. The solvent was removed under a reduced pressure. The resulting residue was washed with diisopropyl ether to obtain 1.73 g of the desired product (Yield: 84%) as a white solid.
$^1$H-NMR (DMSO-$d_6$, ppm) δ2.20 (6H, s), 3.08 (3H, s), 3.20 (3H, s), 6.93-7.39 (10H, m), 7.45-7.51 (1H, m).

Example 7-1

Preparation of N-(2,6-dimethyl-4-heptafluoroisopropyl)phenyl 3-aminobenzthioamide

0,35 g of N-(2,6-dimethyl-4-heptafluoroisopropyl)phenyl 3-aminobenzamide and 0.19 g of a Lawson reagent were added to 10 ml of toluene, and the resulting solution was heated and stirred at a reflux temperature for 6 hours. The reaction solution was concentrated under a reduced pressure for removing the solvent, and then the resulting residue was purified by silica gel column chromatography using an eluent (development solvent; hexane : ethyl acetate = 3:1) to obtain 0.07 g of the desired product (Yield: 20%).
$^1$H-NMR ($CDCl_3$,ppm) δ2.36 (6H, s) , 3.87 (2H, broad-s), 6.89-6.87 (1H, m), 7.18-7.24 (2H, m), 7.33 (1H, s), 7.39 (2H, s), 8.56 (1H, broad-s).

Example 7-2

Preparation of N-(2,6-dimethyl-4-heptafluoroisopropyl)phenyl 3-(benzoylamino)benzthioamide (Compound No. 2201)

A desired title product was prepared from N-(2,6-dimethyl-4-heptafluoroisopropyl)phenyl 3-aminobenzthioamide according to the conditions as described in Example 1-3.
$^1$H-NMR ($CDCl_3$,ppm) δ2.38 (6H, s), 7.25-8.00 (11H, m), 8.34 (1H, s), 8.85 (1H, broad.).

Example 8

Preparation of N-(2,6-dimethyl-4-heptafluoroisopropyl)phenyl 3-(phenylthiocarbonylamino)benzamide (Compound No. 2202) and N-(2,6-dimethyl-4-heptafluoroisopropyl)phenyl 3-(phenylthiocarbonylamino)benzthioamide (Compound No. 2203)

A solution of 0.37 g of N-(2,6-dimethyl-4-heptafluoroisopropyl)phenyl 3-(benzoylamino)benzamide and 0.30 g of a Lawson reagent added to 10 ml of toluene was stirred at 70 degree centigrade for 6 hours. The reaction solution was concentrated under a reduced pressure, and the resulting residue was purified by silica gel column chromatography using an eluent (development solvent; hexane : ethyl acetate = 3:1) to prepare 0.18 g of N-(2,6-dimethyl-4-heptafluoroisopropyl)phenyl 3-(phenylthiocarbonylamino)benzamide (Yield: 47%) and 0.05 g of N-(2,6-dimethyl-4-heptafluoroisopropyl)phenyl 3-(phenylthiocarbonylamino)benzthioamide (Yield: 13%) respectively.
Physical properties of Compound No. 2202
$^1$H-NMR ($CDCl_3$, ppm) δ2.36 (6H, s), 7.37 (2H, s), 7.47-7.61(5H, m), 7.85-8.03 (4H, m), 8.57 (1H, s), 9.18 (1H, s).
Physical properties of Compound No. 2203
$^1$H-NMR ($CDCl_3$, ppm) δ2.38 (6H, s), 7.41 (2H, s), 7. 45-7. 55 (4H, m), 7.90-7.96 (4H, m), 8.57 (1H, broad),8.74 (1H, broad), 9.18(1H,broad).

Example 9-1

Preparation of N-benzyl-N-(2,6-dimethyl-4-heptafluoroisopropyl)phenyl 3-nitrobenzamide

Using N-(2,6-dimethyl-4-heptafluoroisopropyl)phenyl 3-nitrobenzamide and benzyl bromide, a desired title product was prepared according to the method as described in Example 6.

Example 9-2

Preparation of N-benzyl-N-(2,6-dimethyl-4-heptafluoroisopropyl)phenyl 3-(2-fluorobenzoylamino)benzamide

Using N-benzyl-N-(2,6-dimethyl-4-heptafluoroisopropyl)phenyl 3-nitrobenzamide and 2-fluorobenzoyl chloride, a desired title product was prepared according to the method as described in Examples 1-2 and 1-3.

Example 9-3

Preparation of N-benzyl-N-(2,6-dimethyl-4-heptafluoroisopropyl)phenyl 3-[N-ethyl-N-(2-fluorobenzoyl)amino]benzamide

Using N-benzyl-N-(2,6-dimethyl-4-heptafluoroisopropyl)phenyl 3-(2-fluorobenzoylamino)benzamide and ethyl iodide, a desired title product was prepared according to the method as described in Example 6.

Example 9-4

Preparation of N-(2,6-dimethyl-4-heptafluoroisopropyl)phenyl 3-[N-ethyl-N-(2-fluorobenzoyl)amino]benzamide (Compound No. 1206)

A solution of 1.07 g of N-benzyl-N-(2,6-dimethyl-4-heptafluoroisopropyl)phenyl 3-[N-ethyl-N-(2-fluorobenzoyl) amino]benzamide and 0.15 g of 10% palladium carbon added to 10 ml of methanol was stirred at 45 degree centigrade in a hydrogen atmosphere for 6 hours. The catalyst was filtered out and then the solvent was removed under a reduced pressure. Subsequently, the resulting residue was purified by silica gel (NH Silica by Fuji Silysia Chemical Ltd.) column chromatography using an eluent (development solvent; hexane : ethyl acetate = 1:1) to obtain 0.30 g of the desired product (Yield: 32%) as a white solid.
$^1$H-NMR (DMSO-$d_6$, ppm)$\delta$1.17 (3H, broad), 2.22 (6H, s), 3.94 (2H, broad), 7.01-7.08 (2H, m), 7.29-7.43 (6H, m), 7.72-7.77 (2H, m), 9.90 (1H, s).

Example 10-1

Preparation of N-(2,6-dimethyl-4-heptafluoroisopropyl)phenyl 2-fluoro-3-nitrobenzamide

2.35 g of N-(2,6-dimethyl-4-heptafluoroisopropyl)phenyl 2-chloro-3-nitrobenzamide prepared in accordance with the method as described in Example 1-1 and 0.87 g of potassium fluoride (spray drying product) were added to 25 ml of N,N-dimethylformamide dried using molecular sieves, and the mixture was heated and stirred at 150 degree centigrade for 3 hours. The reaction solution was returned to room temperature, and then ethyl acetate and water were added thereto for solution separation. An organic layer was separated, washed with water two times, and dried over anhydrous magnesium sulfate. The solution was filtered off, the filtrate was collected and the solvent was removed under a reduced pressure to obtain a residue. The resulting residue was purified by silica gel column chromatography using an eluent (development solvent; hexane : ethyl acetate =4:1) to obtain 1. 02 g of the desired product (Yield: 45%) as a solid.
$^1$H-NMR ($CDCl_3$, ppm) $\delta$ 2.37 (6H, s), 7.39 (2H, s), 7.48-7.53 (1H, m), 7.87 (1H, d, J = 11.5Hz ), 8.23-8.28 (1H, m), 8.42-8.46 (1H, m) .

Example 10-2

Preparation of N-(2,6-dimethyl-4-heptafluoroisopropyl)phenyl 3-(benzoylamino)-2-fluorobenzamide (Compound No. 601)

A desired title product was prepared according to the method as described in Examples 1-2 and 1-3.

$^1$H-NMR (DMSO-$d_6$,ppm) δ 2.34(6H, s), 7.37(1H, t, J = 7.8Hz), 7.45(2H, s), 7.53-7.65(4H, m), 7.77-7.82(1H, m), 8.00-8.02 (2H, m), 10.10(1H, s), 10.29(1H, s).

Example 11-1

Preparation of N-(2,6-dimethyl-4-heptafluoroisopropyl)phenyl 4-fluoro-3-nitrobenzamide

5.22 g of 4-fluoro-3-nitrobenzoic acid and 0.1 g of N, N-dimethylformamide were introduced to 30 ml of toluene, and then 3.7 g of thionyl chloride was added thereto. The resulting solution was stirred at 80 degree centigrade for 1 hour and then stirred under a reflux condition for 2 hours. The solution was cooled down to room temperature, the solvent was removed under a reduced pressure, the resulting residue was dissolved in 10 ml of tetrahydrofuran, and added dropwise to a mixed solution of 8.1 g of 2,6-dimethyl-4-heptafluoroisopropylaniline, 4.4 g of pyridine and 20 ml of tetrahydrofuran. The solution was stirred at room temperature for 2 hours, and then ethyl acetate was introduced thereinto. The organic layer was washed successively with water and saturated baking soda solution, and dried over anhydrous magnesium sulfate. Then, the solvent was removed under a reduced pressure to obtain a residue. The resulting residue was purified by silica gel column chromatography using an eluent (development solvent; hexane : ethyl acetate = 4: 1) to obtain 5.9 g of the desired product (Yield: 46%) as a white solid.
$^1$H-NMR($CDCl_3$,ppm) δ2.11(6H, s), 7.26-7.31(3H, m), 8.12-8.15(1H, m), 8.60-8.62(1H, m), 8.70(1H, s).

Example 11-2

Preparation of N-(2,6-dimethyl-4-heptafluoroisopropyl)phenyl 3-amino-4-fluorobenzamide

A desired title product was obtained according to the conditions as described in Example 1-2 as a white solid.
$^1$H-NMR(DMSO-$d_6$,ppm) δ2.26(6H, s), 5.42(2H, broad-s), 7.10-7.19(2H, m) , 7.37(1H, dd, J = 2.0,8.8Hz) , 7.42(2H, s) , 9.78(1H, s) .

Example 11-3

Preparation of N-(2,6-dimethyl-4-heptafluoroisopropyl)phenyl 4-fluoro-3-(methylamino)benzamide

18 ml of 98% sulfuric acid was cooled from 0 to 5 degree centigrade and stirred, and 2.50 g of N-(2,6-dimethyl-4-heptafluoroisopropyl)phenyl 3-amino-4-fluorobenzamide was added thereto. The reaction solution was stirred for 15 minutes, and then 18 ml of 37% aqueous formaldehyde solution was added dropwise thereto. The solution was stirred at 0 degree centigrade for 1 hour and at room temperature for 3 hours. To the reaction solution cooled down to 0 degree centigrade again was added 28% ammonia water for neutralization and ethyl acetate was added thereto for separating an organic layer. The organic layer was dried over anhydrous magnesium sulfate and the solvent was removed under a reduced pressure to obtain a residue. The resulting residue was purified by silica gel column chromatography using an eluent (development solvent; hexane : ethyl acetate = 4:1) to obtain 1.74 g of the desired product (Yield: 67%) as an amorphous substance.
$^1$H-NMR($CDCl_3$, ppm) δ2.32(6H, s), 2.94(3H, d, J = 4.9Hz), 4.14(1H, broad), 7.03(1H, dd, J = 8.3,11.2Hz), 7.10-7.13 (1H, m), 7.24(1H, s), 7.34(2H, s), 7.42(1H, s).
The following compounds can be prepared in accordance with the method as described in Example 11-3.
N-(2,6-dimethyl-4-heptafluoroisopropyl)phenyl 2-fluoro-3-(methylamino)benzamide
$^1$H-NMR(DMSO-$d_6$) δ 2.32(6H, s), 2.76(3H, d, J = 4.9Hz), 5.84(1H, broad), 6.77-6.81(2H, m), 7.10(1H, t, J = 7.8Hz), 7.43(2H, s), 9.90(1H, s).
N-[2,6-dimethyl-4-(nonafluoro-2-butyl)]phenyl 2-fluoro-3-(methylamino)benzamide
$^1$H-NMR(DMSO-$d_6$) δ 2.32(6H, s), 2.77(3H, d, J = 4.9Hz), 5.82(1H, broad), 6.79(1H, t, J = 7.8Hz), 7.08-7.21(2H, m), 7.42(2H, s), 9.88(1H, s).
N-(2,6-dimethyl-4-heptafluoroisopropyl)phenyl-N-methyl 2-fluoro-3-(methylamino)benzamide
$^1$H-NMR(DMSO-$d_6$) δ 2.33(6H, s), 2.76(3H, d, J= 4.9Hz), 4.55(3H, s), 6.58-6.62(1H, m), 6.70-6.78(1H, m), 7.13(1H, t, J = 7.8Hz), 7.31(1H, s), 7.50(2H, s).

Example 11-4

Preparation of N-(2,6-dimethyl-4-heptafluoroisopropyl)phenyl 4-fluoro-3-[N-methyl-N-(4-nitrobenzoyl)amino]benzamide

(Compound No. 1464)

Using 4-nitrobenzoyl chloride, a desired title product was obtained according to the conditions as described in Example 1-3 as a white solid.
$^1$H-NMR(DMSO-$d_6$, ppm) δ2.23(6H, s), 3.42 (3H, s), 7.41(1H, broad), 7.45(2H, s), 7.60(2H, broad), 7.90(1H, broad), 8.08-8.13(3H, broad), 9.93(1H, s).

Example 12-1

Preparation of 2,6-dibromo-4-heptafluoroisopropylaniline

To a solution of 2.0 g of 4-heptafluoroisopropylaniline added to 5 ml of N,N-dimethylformamide was introduced 2.73 g of N-bromosuccinic acid imide dissolved in 10 ml of N,N-dimethylformamide at 5 degree centigrade. The reaction solution was returned to room temperature and stirred for 2 hours, and then ethyl acetate and water were added thereto for separating an organic layer. The organic layer was further washed with water one time. After the solvent was removed under a reduced pressure, the resulting residue was purified by silica gel column chromatography using an eluent (development solvent; hexane : ethyl acetate = 20:1) to obtain 2.20 g of the desired product (Yield: 69%) as orange oil.
$^1$H-NMR($CDCl_3$,ppm) δ4.89(2H, broad-s), 7.59(2H, s).

Example 12-2

Preparation of N-(2,6-dibromo-4-heptafluoroisopropyl)phenyl 3-nitrobenzamide

A mixed solution of 2.20 g of 2,6-dibromo-4-heptafluoroisopropylaniline, 1.46 g of 3-nitrobenzoyl chloride and 10 ml of pyridine was stirred at 70 degree centigrade for 20 hours. The resulting solution was returned to room temperature, and then ethyl acetate and IN hydrochloric acid were added thereto. An organic layer was separated and then washed with saturated baking soda solution. The solvent was removed under a reduced pressure and the resulting residue was dissolved in a mixed solvent of 8 ml of tetrahydrofuran and 2 ml of methanol. Subsequently, the reaction solution was cooled down to 5 degree centigrade, 0.30 g of sodium hydroxide was added thereto, the mixture was stirred for 2 hours, and then ethyl acetate and water were added thereto. An organic layer was separated and washed with saturated baking soda solution, and then dried over anhydrous magnesium sulfate. The solvent was removed under a reduced pressure to obtain a residue. The resulting residue was washed with hexane to obtain 2.19 g of the desired product (Yield: 73%) as a light brown solid.
$^1$H-NMR(DMSO-$d_6$,ppm) δ7.92(1H, t, J = 7.8Hz), 8.08(2H, s), 8.45(1H, d, J = 7.8Hz), 8.53(1H, dd, J 1. 5, 7. 8Hz) , 8.85 (1H, d, J = 1.5Hz), 11.08(1H, s).

Example 12-3

Preparation of N-(2,6-dibromo-4-heptafluoroisopropyl)phenyl 3-aminobenzamide

A desired title product was obtained according to the conditions as described in Example 1-2 as a white solid.
$^1$H-NMR(DMSO-$d_6$, ppm) δ5.39(2H, broad-s), 6.77-6.80(1H, m), 7.13-7.20(3H, m), 8.02(2H, s), 10.35(1H, s).

Example 12-4

Preparation of N-(2,6-dibromo-4-heptafluoroisopropyl)phenyl 3-(2-fluorobenzoyl)aminobenzamide (Compound No. 8)

Using 2-fluorobenzoyl chloride, a desired title product was obtained according to the conditions as described in Example 1-3 as a white solid.
$^1$H-NMR (DMSO-$d_6$, ppm) δ7.33-7.40(2H, m), 7.55-7.63(2H, m), 7.68-7.72(1H, m), 7.78(1H, d, J = 7.8Hz), 7.99(1H, d, J = 7.8Hz), 8.05(2H, s), 8.34(1H, s), 10.65(1H, s), 10.69(1H, s).

Example 13-1

Preparation of 4-(heptafluoro-n-propylthio)aniline

To 20 ml of an acetonitrile solution of 1.25 g of 4-aminothiophenol and 1.11 g of triethylamine was added 5.91 g of 1-iodoheptafluoro-n-propane. The resulting mixture was stirred at room temperature for 3 hours, diluted with ether,

and then washed with aqueous 1N sodium hydroxide solution, and purified by silica gel column chromatography using an eluent (development solvent; hexane : ethyl acetate = 4: 1) to obtain 1.85 g of the desired product (Yield: 63%).
$^1$H-NMR($CDCl_3$, ppm) δ 3.95 (2H, s), 6.66(2H, d, J=8.8Hz), 7.40(2H, d, J = 8.8Hz).

Example 13-2

Preparation of 2,6-dibromo-4-(heptafluoro-n-propylthio)aniline

To a solution of 0.77 g of 4-(heptafluoro-n-propylthio) aniline added to 15 ml of N,N-dimethylformamide was introduced 0.98 g of N-bromosuccinic acid imide. The resulting solution was stirred at 60 degree centigrade for 2 hours, and then ether and water were added thereto for separating an organic layer. The organic layer was washed with water two times, and then dried over anhydrous magnesium sulfate. The solvent was removed under a reduced pressure to obtain a residue. The resulting residue was purified by silica gel column chromatography using an eluent (development solvent; hexane : ethyl acetate = 9:1) to obtain 1.19 g of the desired product (Yield: 100%) as red oil.
$^1$H-NMR($CDCl_3$, ppm) δ4.98(2H, broad-s), 7.66(2H, s).

Example 13-3

Preparation of N-{2,6-dibromo-4-(heptafluoro-n-propylthio)}phenyl 3-nitrobenzamide

To a solution of 1.08 g of 2,6-dibromo-4-(heptafluoro-n-propylthio)aniline and 0.4 g of pyridine added to 20 ml of tetrahydrofuran and stirred at room temperature was introduced dropwise 0.55 g of 3-nitrobenzoyl chloride dissolved in 20 ml of tetrahydrofuran little by little. The reaction solution was stirred at room temperature for 10 hours, and then ethyl acetate and water were added thereto. An organic layer was separated and dried over anhydrous magnesium sulfate. The solution was filtered out, the filtrate was collected, and the solvent was removed under a reduced pressure to obtain a residue. The resulting residue was purified by silica gel column chromatography using an eluent (development solvent; hexane : ethyl acetate = 4:1) to obtain 0.86 g of the desired product (Yield: 48%) as a white solid.
$^1$H-NMR($CDCl_3$,ppm) δ7.73(1H, s, J = 7.8Hz), 7.77(1H, t, J = 7.8Hz), 7.96(2H, s), 8.31(1H, s) , 8.47-8.50(1H, m), 8.79 (1H, t, J = 2.0Hz).

Example 13-4

Preparation of N-{2,6-dibromo-4-(heptafluoro-n-propylthio)}phenyl 3-aminobenzamide

To a solution of 0.97 g of N-{2,6-dibromo-4-(heptafluoro-n-propylthio)}phenyl 3-nitrobenzamide and 0.95 g of anhydrous stannous chloride added to 20 ml of ethanol and stirred at room temperature was added 2 ml of concentrated hydrochloric acid, and the resulting mixture was heated and stirred at 60 degree centigrade for 1 hour. The reaction solution was returned to room temperature, poured into water, and then neutralized with potassium carbonate. Ethyl acetate was added thereto, the insoluble substance was filtered out, and then an organic layer was separated and dried over anhydrous magnesium sulfate. The solution was filtered off, the filtrate was collected, and the solvent was removed under a reduced pressure to obtain a residue. The resulting residue was washed with hexane to obtain 0.75 g of the desired product (Yield: 81%) as a white solid.
$^1$H-NMR($CDCl_3$,ppm) δ3.89(2H, broad-s), 6.90(1H, dt, J = 2.5,6.4Hz), 7.28-7.30(3H, m), 7.60(1H, s), 7.93(2H, s).

Example 13-5

Preparation of N-(2,6-dibromo-4-heptafluoro-n-propylthio)phenyl 3-(benzoylamino)benzamide (Compound No. 263)

To a solution of 0.10 g of N-(2,6-dibromo-4-heptafluoro-n-propylthio)phenyl 3-aminobenzamide and 0.02 g of pyridine added to 5 ml of tetrahydrofuran and stirred at room temperature was introduced dropwise 0.03 g of benzoyl chloride dissolved in 1 ml of tetrahydrofuran. The resulting mixture was stirred at room temperature for 1 hour, and then ethyl acetate and 1N hydrochloric acid were added thereto for separating an organic layer. The organic layer was washed with saturated baking soda solution one time and then dried over anhydrous magnesium sulfate. The solution was filtered off, the filtrate was collected, and the solvent was removed under a reduced pressure to obtain a residue. The resulting residue was purified by silica gel column chromatography using an eluent (development solvent; hexane : ethyl acetate = 3:1) to obtain 0.10 g of the desired product (Yield: 67%) as a white solid.
$^1$H-NMR ($CDCl_3$, ppm) δ7.47-7.57 (4H, m), 7.78 (1H, d, J = 7.8Hz), 7.93 (2H, s), 7.99-8.01 (2H, m), 8.18 (1H, d, J=7.8Hz), 8.33 (1H, t, J = 2.0Hz), 9.27 (1H, s), 9.65 (1H, s).

Example 13-6

Preparation of N-(2,6-dibromo-4-heptafluoro-n-propylthio)phenyl 3-[(2-chloropyridine-3-yl)carbonylamino]benzamide (Compound No. 309)

To a solution of 0.15 g of N-(2,6-dibromo-4-heptafluoro-n-propylthio)phenyl 3-aminobenzamide and 0.03 g of pyridine added to 5 ml of tetrahydrofuran was added 0.05 g of 2-chloronicotic acid chloride hydrochloride, and the mixture was stirred at room temperature for 4 hours. Ethyl acetate was added thereto, and then the solution was washed with saturated baking soda solution two times, and the solvent was removed under a reduced pressure. The precipitated solid was purified by silica gel column chromatography using an eluent (development solvent; hexane : ethyl acetate = 3:1) to obtain 0.17 g of the desired product (Yield: 92%) as an amorphous substance.
$^1$H-NMR($CDCl_3$,ppm) δ7.44 (1H, dd, J = 4.8, 7.8Hz), 7.56 (1H, t, J = 7.8Hz), 7.80 (1H, d, J = 7.8Hz), 7.86 (1H, s), 7.92 (1H, d, J= 7.8Hz), 7.95(2H, s), 8.23 (1H, dd, J = 2.0., 7.8Hz), 8.30 (1H, s), 8.41 (1H, s), 8.55 (1H, dd, J = 2.0, 4.5Hz).

Example 13-7

Preparation of N-(2,6-dibromo-4-heptafluoro-n-propylsulfinyl)phenyl 3-nitrobenzamide

To a solution of 0.5 g of N-(2,6-dibromo-4-heptafluoro-n-propylthio)phenyl 3-nitrobenzamide added to 15 ml of chloroform and stirred at room temperature was introduced 0.5 g of m-chloroperbenzoic acid. The mixture was stirred at room temperature for 2 days, and then an aqueous solution of sodium sulfite was added thereto and stirred. While solution separation was performed, the reaction solution was washed with aqueous sodium hydroxide solution and saturated salt water, and the solvent was removed under a reduced pressure to obtain a residue. The resulting residue was purified by silica gel column chromatography using an eluent (development solvent; hexane : ethyl acetate = 4 : 1) to obtain 0. 36 g of the desired product (Yield: 70%) as a white solid.
$^1$H-NMR($CDCl_3$, ppm) δ7.76-7.82 (2H, m), 8.06 (1H, s), 8.29 (1H, s), 8.33-8.35 (1H, m), 8.49-8.53 (1H, m), 8.81 (1H, s).

Example 13-8

Preparation of N-(2,6-dibromo-4-heptafluoro-n-propylsulfinyl)phenyl 3-aminobenzamide

Using N-(2,6-dibromo-4-heptafluoro-n-propylsulfinyl)phenyl 3-nitrobenzamide, a desired title product was obtained according to the method as described in Example 1-2.
$^1$H-NMR($CDCl_3$,ppm) δ6.90-6.94 (1H, m), 7.28-7.33 (3H, m), 7.73 (1H, s), 8.02 (1H, s), 8.25 (1H, s).

Example 13-9

Preparation of N-(2,6-dibromo-4-heptafluoro-n-propylsulfinyl)phenyl 3-(benzoylamino)benzamide (Compound No. 335)

Using N-(2,6-dibromo-4-heptafluoro-n-propylsulfinyl)phenyl 3-aminobenzamide, a desired title product was obtained according to the method as described in Example 1-3.
$^1$H-NMR($CDCl_3$,ppm) δ7.45-7.61 (4H, m), 7.77-7.79 (1H, m), 7.87-7.91 (3H, m), 8.01 (1H, s), 8.07-8.10 (1H, m), 8.15 (1H, s), 8.25 (1H, s), 8.38 (1H, s)

Example 13-10

Preparation of 2,6-dimethyl-4-heptafluoro-n-propylthioaniline

3.0 g (1.3 mmole) of 2,6-dibromo-4-heptafluoro-n-propylthioaniline, 3.0 g (21.9 mmole) of potassium carbonate, 0.75 g (0.65 mmole) of tetrakis(triphenylphosphine)palladium and 0.17 g (1.3 mmole) of trimethylboroxin were added to 20 ml of DMF, and the resulting solution was stirred at 135 degree centigrade for 6 hours. The reaction solution was returned to room temperature, and then the insoluble substance was removed with celite, and the filtrate was concentrated under a reduced pressure. The resulting residue was purified by silica gel column chromatography using an eluent (development solvent; hexane : ethyl acetate = 12:1 to 4:1) to obtain 1.17 g of the desired product (Yield: 55%) as oil.
$^1$H-NMR($CDCl_3$,ppm) δ2.17(6H, s), 3.86(2H, broad-s), 7.22(2H, s).

Example 14

Preparation of N-(2,6-dimethyl-4-heptafluoroisopropyl)phenyl 3-(methylamino)benzamide

A mixture of 20.0 g of N-(2,6-dimethyl-4-heptafluoroisopropyl)phenyl 3-aminobenzamide, 4.40 g of 37% aqueous formaldehyde solution, 2.0 g of 10% palladium carbon and 200 ml of ethyl acetate was stirred in an ordinary pressure, in a hydrogen atmosphere at room temperature. An insoluble substance of the reaction solution was filtered out and the filtered product was washed with ethyl acetate. The filtrate was collected and the solvent was removed under a reduced pressure to obtain a residue. The resulting residue was washed with diisopropyl ether to obtain 13.5 g of the desired product (Yield: 65%) as a white solid.
$^1$H-NMR($CDCl_3$, ppm) $\delta$2.35(6H, s), 2.91(3H, s), 6.82(1H, d, J = 7.3Hz), 7.18-7.52(7H, m).

Example 15-1

Preparation of 3-(benzoylamino)benzoic acid

To a solution of 1.37 g of 3-aminobenzoic acid and 0.4 g of sodium hydroxide added to 50 ml of water was added dropwise a solution of 1.41 g of benzoyl chloride and 0.4 g of sodium hydroxide dissolved in 5 ml of water under an ice bath at the same time, and the resulting mixture was stirred at room temperature for 6 hours. 1N hydrochloric acid was added to the reaction solution which was adjusted to pH 1, and then the precipitated solid was filtered off and collected to obtain 1.92 g of the desired product (Yield: 80%) as a white solid.
$^1$H-NMR($CDCl_3$, ppm) $\delta$7.40-7.56 (5H, m), 7.78(1H, d, J=7.8Hz), 8.00(2H, d, J=8.3Hz), 8.15(1H, d, J=7.8Hz), 8.35(1H, t, J=2.0Hz), 9.89(1H, s).

Example 15-2

Preparation of 3-(benzoylamino)benzoic acid chloride

To a solution of 1.5 g of 3-(benzoylamino)benzoic acid suspended in 10 ml of toluene was added 2 ml of thionyl chloride and the resulting mixture was stirred under a reflux condition for 2 hours. The reaction solution was returned to room temperature, and then the solvent was removed under a reduced pressure to obtain 1.53 g of the desired product (Yield: 95%) as a white solid.
$^1$H-NMR($CDCl_3$,ppm) $\delta$ 7.51-7.62(4H, m), 7.90(2H, d, J = 7.3Hz), 7.93(1H, s), 7.97(1H, s), 8.15(1H, dt, J = 1.0,5.9Hz), 8.28(1H, t, J = 2.0Hz).

Using benzoic acids which can be easily available, the following compounds can be prepared in accordance with the methods as described in Examples 15-1 and 15-2.
3-[(2-fluorobenzoyl)amino]benzoic acid chloride
3-[(3-fluorobenzoyl)amino]benzoic acid chloride
3-[(4-fluorobenzoyl)amino]benzoic acid chloride
3-[(2-chlorobenzoyl)amino]benzoic acid chloride
3-[(3-chlorobenzoyl)amino]benzoic acid chloride
3-[(4-chlorobenzoyl)amino]benzoic acid chloride
3-[(3-cyanobenzoyl)amino]benzoic acid chloride
3-[(4-cyanobenzoyl)amino]benzoic acid chloride
3-[(2-methylbenzoyl)amino]benzoic acid chloride
3-[(3-methylbenzoyl)amino]benzoic acid chloride
3-[(4-methylbenzoyl)amino]benzoic acid chloride
3-[(2-nitrobenzoyl)amino]benzoic acid chloride
3-[(3-nitrobenzoyl)amino]benzoic acid chloride
3-[(4-nitrobenzoyl)amino]benzoic acid chloride
3-[(2-trifluoromethylbenzoyl)amino]benzoic acid chloride
3-[(3-trifluoromethylbenzoyl)amino]benzoic acid chloride
3-[(4-trifluoromethylbenzoyl)amino]benzoic acid chloride
3-[(2-trifluoromethoxybenzoyl)amino]benzoic acid chloride
3-[(3-trifluoromethoxybenzoyl)amino]benzoic acid chloride
3-[(4-trifluoromethoxybenzoyl)amino]benzoic acid chloride
3-[(2,3-difluorobenzoyl)amino]benzoic acid chloride
3-[(2,4-difluorobenzoyl)amino]benzoic acid chloride

3-[(2,5-difluorobenzoyl)amino]benzoic acid chloride
3-[(2,6-difluorobenzoyl)amino]benzoic acid chloride
3-[(3,4-difluorobenzoyl)amino]benzoic acid chloride
3-[(pyridine-3-yl)carbonylamino]benzoic acid chloride
3-[(2-fluoropyridine-3-yl)carbonylamino]benzoic acid chloride
3-[(2-chloropyridine-3-yl)carbonylamino]benzoic acid chloride
3-[(2,4-dichlorobenzoyl)amino]benzoic acid chloride
3-[(2,6-dichlorobenzoyl)amino]benzoic acid chloride
3-[(3,4-dichlorobenzoyl)amino]benzoic acid chloride
3-[(2-chloro-4-fluorobenzoyl)amino]benzoic acid chloride
3-[(4-chloro-2-fluorobenzoyl)amino]benzoic acid chloride
3-[(2-chloro-6-fluorobenzoyl)amino]benzoic acid chloride
3-[(2,3,6-trifluorobenzoyl)amino]benzoic acid chloride

Example 15-3

Preparation of N-(2,6-dimethyl-4-heptafluoro-n-propylthio)phenyl 3-(benzoylamino)benzamide (Compound No. 260)

To a solution of 0.1 g of 2,6-dimethyl-4-(heptafluoro-n-propylthio)aniline and 0.03 g of pyridine added to 5 ml of tetrahydrofuran and stirred at room temperature was introduced dropwise 0.09 g of 3-(benzoylamino)benzoic acid chloride dissolved in 1 ml of tetrahydrofuran. The resulting mixture was stirred at room temperature for 1 hour, and then ethyl acetate and 1N hydrochloric acid were added thereto for separating an organic layer. The organic layer was washed with saturated baking soda solution one time and then dried over anhydrous magnesium sulfate. The solution was filtered off, the filtrate was collected, and the solvent was removed under a reduced pressure to obtain a residue. The resulting residue was purified by silica gel column chromatography using an eluent (development solvent; hexane : ethyl acetate = 3:1) to obtain 0.10 g of the desired product (Yield: 53%) as a white solid.
$^1$H-NMR($CDCl_3$,ppm) δ2.31(6H, s), 7.41(2H, s), 7.50-7.67(5H, m), 7.71(1H, d, J=7. 8Hz), 7.87-7.90(3H, m), 8.07(1H, s), 8.31(1H, s).

Example 16-1

Preparation of 2,6-dimethyl-4-[1-hydroxy-2,2,2-trifluoro-1-(trifluoromethyl)e thyl]aniline

While 24.4 g of 2,6-dimethylaniline and 50.0 g of hexafluoroacetone hydrate were mixed at room temperature, 0.5 g of p-toluenesulfonic acid monohydrate was added thereto. The reaction solution was stirred at 100 degree centigrade. After disappearance of the starting raw material was confirmed by means of TLC, to the reaction solution were added ethyl acetate and 1N aqueous sodium hydroxide solution for solution separation and extraction. Anhydrous magnesium sulfate was added to an organic layer, and the organic layer was dried and then filtered off. The filtrate was concentrated under a reduced pressure, and then hexane was added to the residue for washing. The suspension was filtered off and the resulting filtered product was vacuum-dried at room temperature to obtain 24.3 g of the desired product (Yield: 69%) in the form of powder.
$^1$H-NMR($CDCl_3$,ppm) δ2.20(6H, s), 3.26(1H, broad-s), 3.76(2H, broad-s), 7.25(2H, s).

Example 16-2

Preparation of N-[2,6-dimethyl,-4-{1-hydroxy-2,2,2-trifluoro-1-(trifluoromethy 1)ethyl}phenyl] 3-nitrobenzamide

At room temperature, 5.0 g of 2,6-dimethyl-4-[1-hydroxy-2,2,2-trifluoro-1-(trifluoromethyl)e thyl]aniline, 3.9 g of 3-nitrobenzoyl chloride and 2.1 g of pyridine were introduced to 50 ml of tetrahydrofuran in a reaction vessel, and the resulting mixture was stirred at room temperature. After disappearance of the starting raw material was confirmed by means of TLC, to the reaction solution was added saturated baking soda solution and stirred for a while. Subsequently, ethyl acetate and water were added to the reaction solution for solution separation. Anhydrous magnesium sulfate was added to the separated organic layer, the organic layer was dried and filtered off. The filtrate was evaporated to dryness and the resulting solid was pulverized to obtain 7.5 g of the desired product (Yield: 95%) in the form of powder.
$^1$H-NMR(DMSO-$d_6$,ppm) δ2.26(6H, s), 7.46(2H, s), 7.88(1H, t, J = 7.8Hz) , 8.43-8.48(2H, m), 8.73(1H s), 8.81(1H, s), 10.27(1H, s).

Example 16-3

Preparation of N-[2,6-dimethyl-4-{1-hydroxy-2,2,2-trifluoro-1-(trifluoromethy 1)ethyl}phenyl] 3-aminobenzamide

A solution of 8.0 g of N-[2,6-dimethyl-4-(1-hydroxy-2,2,2-trifluoro-1-(trifluoromethy l)ethyl}phenyl] 3-nitrobenzamide and 0.8 g of 10% palladium carbon added to 50 ml of methanol was stirred in a hydrogen atmosphere at room temperature. After disappearance of the starting raw material was confirmed by means of TLC, the reaction solution was filtered off and the obtained filtrate was concentrated under a reduced pressure. The resulting residue was purified by silica gel column chromatography using an eluent (development solvent; hexane : ethyl acetate = 3:1) to obtain 6. 3 g of the desired product (Yield: 85%) in the form of powder.
$^1$H-NMR(DMSO-$d_6$,ppm) δ2.35(6H, s), 4.31(2H, broad), 6.84-6.87(1H, m), 7.21-7.25(1H, m), 7.29-7.31(2H, m), 7.47-7.49 (2H, m), 7.83(1H, s), 8.94(1H, s).

Example 16-4

Preparation of N-[2,6-dimethyl-4-(1-hydroxy-2,2,2-trifluoro-1-(trifluoromethy l)ethyl}phenyl] 3-(benzoylamino)benzamide

At room temperature, 6.0 g of N-[2,6-dimethyl-4-{1-hydroxy-2,2,2-trifluoro-1-(trifluoromethy 1)ethyl}phenyl] 3-aminobenzamide, 2.5 g of benzoyl chloride and 1.8 g of pyridine were introduced to 50 ml of tetrahydrofuran. After disappearance of the starting raw material was confirmed by means of TLC, the reaction solution was filtered off and the obtained filtrate was concentrated under a reduced pressure. The resulting residue was purified by silica gel column chromatography using an eluent (development solvent; hexane : ethyl acetate = 3:1) to obtain 6.3 g of the desired product (Yield: 85%) in the form of powder.
$^1$H-NMR(DMSO-$d_6$,ppm) δ2.26(6H, s), 7.44(2H, s), 7.51-7.63(4H, m), 7.74(1H, d, J = 7.8Hz), 7.98-8.07(3H, m), 8.35 (1H, s), 8.71(1H, s), 9.90(1H, s), 10.47(1H, s).
Using 2-fluorobenzoyl chloride instead of benzoyl chloride, N-[2,6-dimethyl-4-{1-hydroxy-2,2,2-trifluoro-1-(trifluoromethy l)ethyl}phenyl] 3-[(2-fluorobenzoyl)amino]benzamide was prepared according to Example 16-4.
$^1$H-NMR(DMSO-$d_6$, ppm) δ2.34(6H, s), 7.21(1H, dd, J=8.2,11.2Hz), 7.32(1H, t, J = 7.8Hz), 7.49-7.56(4H, m), 7.78(1H, d, J = 7.8Hz), 8.04-8.08(2H, m), 8.23(1H, s), 8.71(1H, s), 9.08(1H, d, J = 11.2Hz).

Example 16-5

Preparation of N-[2,6-dimethyl-4-{1-chloro-2,2,2-trifluoro-1-(trifluoromethyl )ethyl}phenyl] 3-(benzoylamino)benzamide

At room temperature, 8.0 g of N-[2,6-dimethyl-4-(1-hydroxy-2,2,2-trifluoro-1-(trifluoromethy 1)ethyl}phenyl] 3-(benzoylamino)benzamide and 1.0 g of pyridine were introduced to 40 ml of thionyl chloride. Thereafter, the mixture was heated and stirred under a reflux condition. After disappearance of the starting raw material was confirmed by means of TLC, the reaction solution was cooled down and concentrated under a reduced pressure. The resulting residue was purified by silica gel column chromatography using an eluent (development solvent; hexane : ethyl acetate =3:1) to obtain 6.2 g of the desired product (Yield: 75%) in the form of powder.
$^1$H-NMR(DMSO-$d_6$, ppm) δ2.34(6H, s), 7.49-7.63(6H, m), 7.76(1H, d, J = 7.8Hz), 7.99-8.08(3H, m), 8.37(1H, s), 9.99 (1H, s), 10.48(1H, s).

Example 16-6

Preparation of N-(2,6-dimethyl-4-heptafluoroisopropyl)phenyl 3-(benzoylamino)benzamide (Compound No. 10)

At room temperature, 300 mg of N-[2,6-dimethyl-9-(1-chloro-2,2,2-trifluoro-1-(trifluoromethyl )ethyl}phenyl] 3-(benzoylamino)benzamide and 165 mg of potassium fluoride were introduced to 20 ml of N,N-dimethylformamide. Thereafter, the mixture was heated to 120 degree centigrade and stirred for 4 hours. After the reaction solution was cooled down to room temperature, ethyl acetate and water were added thereto for separating an organic layer. Anhydrous magnesium sulfate was added thereto, the organic layer was dried and filtered off, and the filtrate was concentrated under a reduced pressure. The resulting residue was washed with diisopropyl ether. The suspension was filtered off and the obtained filtered product was vacuum-dried at room temperature to obtain 250 mg of the desired product (Yield: 85%) in the form of powder. The physical properties were described in Example 1-3.

Example 16-7

Preparation of N-[2,6-dimethyl-4-{1-hydroxy-2,2,2-trifluoro-1-(trifluoromethy l)ethyl}phenyl] 3-(benzoylamino)benzamide

At room temperature, 2.0 g of 2,6-dimethyl-4-[1-hydroxy-2,2,2-trifluoro-1-(trifluoromethyl)e thyl]aniline, 2.7 g of 3-(benzoylamino)benzoyl chloride and 1.2 g of pyridine were introduced to 50 ml of tetrahydrofuran, and the resulting solution was stirred at room temperature. After disappearance of the starting raw material was confirmed by means of TLC, saturated baking soda solution was added to the reaction solution and the mixture was stirred for a while. Ethyl acetate and water were added to the reaction solution for solution separation. To the separated organic layer was added anhydrous magnesium sulfate, and the organic layer was dried and filtered off. The filtrate was evaporated to dryness under a reduced pressure and the resulting solid was pulverized to obtain 3.4 g of the desired product (Yield: 95%) in the form of powder. The physical properties were described in Example 16-4.

Example 16-8

Preparation of N-(2,6-dimethyl-4-heptafluoroisopropyl)phenyl 3-(benzoylamino)benzamide (Compound No. 10)

At room temperature, 300 mg of N-[2,6-dimethyl-4-{1-hydroxy-2,2,2-trifluoro-1-(trifluoromethy 1)ethyl}phenyl] 3-(benzoylamino)benzamide was introduced to 20 ml of methylene chloride. Next, 480 mg of 2,2-difluoro-1,3-dimethyl-2-imidazolidinone was added dropwise thereto and stirred at room temperature for 8 hours. Water was added to the reaction solution and an organic layer was separated. Anhydrous magnesium sulfate was added thereto, and the organic layer was dried and filtered off. The obtained filtrate was evaporated to dryness under a reduced pressure and the resulting solid was pulverized to obtain 180 mg of the desired product (Yield: 60%) in the form of powder. The physical properties were described in Example 1-3.

Next, typical formulation examples of the present invention will be illustrated. However, the present invention is not restricted to these formulation examples. Incidentally, in the formulation examples, part(s) refers to weight part(s).

Formulation Example 1

30 parts of the compound (3006), 3 parts of the compound (1245), 22 parts of bentonite, 42 parts of talc and 3 parts of Sorpol 5060 (a surfactant, a product of Toho Chemical Industry, Co., Ltd., product name) were uniformly kneaded, granulated using a basket granulating machine, and then dried to obtain 100 parts of a granule.

Formulation Example 2

2 parts of the compound (1217), 15 parts of the compound (3003), 58 parts of bentonite, 21 parts of talc, 1 part of dodecylbenzenesulfonic acid soda, 1 part of polyoxyethylene alkylaryl ether and 2 parts of lignin sulfonic acid soda were added, uniformly kneaded, granulated using a basket granulating machine, and then dried to obtain 100 parts of a granule.

Formulation Example 3

10 parts of the compound (639), 30 parts of the compound (3007), 40 parts of diatomaceous earth, 5 parts of Sorpol 5039 (a mixture of an anionic surfactant and white carbon, a product of Toho Chemical Industry, Co., Ltd., product name) and 15 parts of white carbon were uniformly mixed and pulverized to obtain a wettable powder.

Formulation Example 4

30 parts of the compound (3004), 20 parts of the compound (3001), 43 parts of kaolinite, 5 parts of Sorpol 5039 (a mixture of an anionic surfactant and white carbon, a product of Toho Chemical Industry, Co., Ltd., product name) and 2 parts of white carbon were uniformly mixed and pulverized to obtain a wettable powder.

Formulation Example 5

10 parts of the compound (601), 5 parts of Sorpol 3074 (a nonionic surfactant, a product of Toho Chemical Industry, Co., Ltd., product name), 5 parts of a 1% aqueous solution of Xanthan gum, 40 parts of water and 10 parts of ethylene glycol were uniformly dissolved. Subsequently, 30 parts of the compound (3008) were added thereto and the resulting mixture was well stirred, followed by wet grinding with a sand mill to obtain a flowable formulation.

Formulation Example 6

5 parts of the compound (3005) , 0.5 part of the compound (210), 94.3 parts of clay and 0.2 part of Driless A were uniformly mixed to obtain a powder formulation.

Furthermore, to make sure that the insecticidal and fungicidal composition of the present invention has excellent insecticidal and fungicidal activities, the following test examples are illustrated. However, the present invention is not restricted to these test examples.

Test Example 1

Insecticidal Test on Rice Striped Stem Borer (Chilo suppressalis) and Control Test on Rice Blast (Pyricularia oryzae) by Nursery Box Application of Paddy Rice

Rice (cultivar: koshihikari) cultured in a nursery box was treated with a granule formulation of a prescribed amount, and then 4 seedlings thereof planted in a 1/5000a pot were transplanted to 8 pots. After 14 days from the treatment, canopies in 4 pots were cut and put into a plastic cup (diameter: 10 cm, height: 10 cm) along with 10 two-year-old larvae of Chilo suppressalis. After 4 days, the mortality was examined (4 replications). Furthermore, after 30 days from the treatment, the other 4 pots were put into an artificial weather chamber (set condition: 25 degree centigrade, 12-12 hr light-dark cycle), and a spore suspension of Pyricularia oryzae was spray-inoculated. The humidity at the weather chamber was kept high and, after 7 days, the number of Pyricularia oryzae lesions was examined. The control value was calculated according to the following equation (4 replications). The results are shown in Table 10. In the Table, gai represents the amount of active ingredients (g).

$$\text{Control Value} = (1 - \text{number of lesions in the treated area} / \text{number of lesions in the untreated area}) \times 100$$

[Table 10-1]

| Supplied chemical | Amount of treated chemical (gai/box) | Mortality (%) | Pyricularia oryzae Control value |
|---|---|---|---|
| Compound 106 + Compound 3003 | 5+15 | 100 | 100 |
| Compound 106 + Compound 3004 | 5+15 | 100 | 100 |
| Compound 106 + Compound 3005 | 5+15 | 100 | 100 |
| Compound 106 + Compound 3006 | 5+7.5 | 100 | 100 |
| Compound 106 + Compound 3007 | 5+7.5 | 100 | 100 |
| Compound 106 + Compound 3008 | 5+7.5 | 100 | 100 |
| Compound 1217 + Compound 3003 | 5+15 | 100 | 100 |
| Compound 1217 + Compound 3004 | 5+15 | 100 | 100 |
| Compound 1217 + Compound 3005 | 5+15 | 100 | 100 |

(continued)

| Supplied chemical | Amount of treated chemical (gai/box) | Mortality (%) | Pyricularia oryzae Control value |
|---|---|---|---|
| Compound 1217 + Compound 3006 | 5+7.5 | 100 | 100 |
| Compound 1217 + Compound 3007 | 5+7.5 | 100 | 100 |
| Compound 1217 + Compound 3008 | 5+7.5 | 100 | 100 |
| Compound 1245 + Compound 3003 | 5+15 | 100 | 10.0 |
| Compound 1245 + Compound 3004 | 5+15 | 100 | 100 |
| Compound 1245 + Compound 3005 | 5+15 | 100 | 100 |
| Compound 1245 + Compound 3006 | 5+7.5 | 100 | 100 |
| Compound 1245 + Compound 3007 | 5+7.5 | 100 | 100 |
| Compound 1245 + Compound 3008 | 5+7.5 | 100 | 100 |
| Compound 639 + Compound 3003 | 5+15 | 100 | 100 |
| Compound 639 + Compound 3004 | 5+15 | 100 | 100 |
| Compound 639 + Compound 3005 | 5+15 | 100 | 100 |
| Compound 639 + Compound 3006 | 5+7.5 | 100 | 100 |
| Compound 639 + Compound 3007 | 5+7.5 | 100 | 100 |
| Compound 639 + Compound 3008 | 5+7.5 | 100 | 100 |
| [0414] | | | |

[Table 10-2]

| Supplied chemical | Amount of treated chemical (gai/box) | Mortality (%) | Pyricularia oryzae Control value |
|---|---|---|---|
| Compound 1246 + Compound 3003 | 5+15 | 100 | 100 |
| Compound 1246 + Compound 3004 | 5+15 | 100 | 100 |
| Compound 1246 + Compound 3005 | 5+15 | 100 | 100 |

(continued)

| Supplied chemical | Amount of treated chemical (gai/box) | Mortality (%) | Pyricularia oryzae Control value |
|---|---|---|---|
| Compound 1246 + Compound 3006 | 5+7.5 | 100 | 100 |
| Compound 1246 + Compound 3007 | 5+7.5 | 100 | 100 |
| Compound 1246 + Compound 3008 | 5+7.5 | 100 | 100 |
| Compound 106 | 5 | 95 | 4 |
| Compound 1217 | 5 | 95 | 0 |
| Compound 1245 | 5 | 97.5 | 5 |
| Compound 639 | 5 | 95 | 5 |
| Compound 1246 | 5 | 97.5 | 0 |
| Compound 3003 | 15 | 0 | 100 |
| Compound 3004 | 15 | 0 | 100 |
| Compound 3005 | 15 | 0 | 100 |
| Compound 3006 | 7.5 | 0 | 100 |
| Compound 3007 | 7.5 | 0 | 100 |
| Compound 3008 | 7.5 | 0 | 100 |
| Untreated plot | | 0 | 0 |

Test Example 2

Insecticidal Test on Rice Striped Stem Borer (Chilo suppressalis) and Control Test on Rice Blast (Pyricularia oryzae) by Submerged Application of Paddy Rice

A granule formulation of a prescribed amount was used in a submerged application for 4 pots of 1/5000a rice (cultivar: koshihikari; 4 leaf stage) pots. After 7 days from the treatment, canopies in 2 pots were cut and put into a plastic cup (diameter: 10 cm, height: 10 cm) along with 10 two-year-old larvae of Chilo suppressalis. After 4 days, the mortality was examined (2 replications). Furthermore, after 14 days from the treatment, the other 2 pots were put into an artificial weather chamber (set condition: 25 degree centigrade, 12-12 hr light-dark cycle), and a spore suspension of Pyricularia oryzae was spray-inoculated. The humidity at the weather chamber was kept high and, after 7 days, the number of Pyricularia oryzae lesions was examined. The control value was calculated according to the following equation (2 replications). The results are shown in Table 11. In the Table, gai represents the amount of active ingredients (g).

$$\text{Control Value} = (1 - \text{number of lesions in the treated area} / \text{number of lesions in the untreated area}) \times 100$$

[Table 11-1]

| Supplied chemical | Amount of treated chemical (gai/10a) | Mortality (%) | Pyricularia oryzae Control value |
|---|---|---|---|
| Compound 106 + Compound 3003 | 300+450 | 100 | 100 |
| Compound 106 + Compound 3004 | 300+450 | 100 | 100 |
| Compound 106 + Compound 3005 | 300+450 | 100 | 100 |
| Compound 106 + Compound 3006 | 300+225 | 100 | 100 |
| Compound 106 + Compound 3007 | 300+225 | 100 | 100 |
| Compound 106 + Compound 3008 | 300+225 | 100 | 100 |
| Compound 1217 + Compound 3003 | 300+450 | 100 | 100 |
| Compound 1217 + Compound 3004 | 300+450 | 100 | 100 |
| Compound 1217 + Compound 3005 | 300+450 | 100 | 100 |
| Compound 1217 + Compound 3006 | 300+225 | 100 | 100 |
| Compound 1217 + Compound 3007 | 300+225 | 100 | 100 |
| Compound 1217 + Compound 3008 | 300+225 | 100 | 100 |
| Compound 1245 + Compound 3003 | 300+450 | 100 | 100 |
| Compound 1245 + Compound 3004 | 300+450 | 100 | 100 |
| Compound 1245 + Compound 3005 | 300+450 | 100 | 100 |
| Compound 1245 + Compound 3006 | 300+225 | 100 | 100 |
| Compound 1245 + Compound 3007 | 300+225 | 100 | 100 |
| Compound 1245 + Compound 3008 | 300+225 | 100 | 100 |
| Compound 639 + Compound 3003 | 300+450 | 100 | 100 |
| Compound 639 + Compound 3004 | 300+450 | 100 | 100 |
| Compound 639 + Compound 3005 | 300+450 | 100 | 100 |
| Compound 639 + Compound 3006 | 300+225 | 100 | 100 |

(continued)

| Supplied chemical | Amount of treated chemical (gai/10a) | Mortality (%) | Pyricularia oryzae Control value |
|---|---|---|---|
| Compound 639 + Compound 3007 | 300+225 | 100 | 100 |
| Compound 639 + Compound 3008 | 300+225 | 100 | 100 |

[Table 11-2]

| Supplied chemical | Amount of treated chemical (gai/box) | Mortality (%) | Pyricularia oryzae Control value |
|---|---|---|---|
| Compound 1246 + Compound 3003 | 300+450 | 100 | 100 |
| Compound 1246 + Compound 3004 | 300+450 | 100 | 100 |
| Compound 1246 + Compound 3005 | 300+450 | 100 | 100 |
| Compound 1246 + Compound 3006 | 300+225 | 100 | 100 |
| Compound 1246 + Compound 3007 | 300+225 | 100 | 100 |
| Compound 1246 + Compound 3008 | 300+225 | 100 | 100 |
| Compound 106 | 300 | 90 | 3 |
| Compound 1217 | 300 | 95 | 5 |
| Compound 1245 | 300 | 95 | 0 |
| Compound 639 | 300 | 90 | 0 |
| Compound 1246 | 300 | 95 | 4 |
| Compound 3003 | 450 | 0 | 100 |
| Compound 3004 | 450 | 0 | 100 |
| Compound 3005 | 450 | 0 | 100 |
| Compound 3006 | 225 | 0 | 100 |
| Compound 3007 | 225 | 5 | 100 |
| Compound 3008 | 225 | 0 | 100 |
| Untreated plot | | 0 | 0 |

Test Example 3

Insecticidal Test on Rice Striped Stem Borer (Chilo suppressalis) and Control Test on Rice Blast (Pyricularia oryzae) of Paddy Rice

A liquid chemical which was prepared to the prescribed concentration was sprayed on 4 pots of rice (cultivar: koshihikari; 4 leaf stage) pots. After air-drying, canopies in 2 pots were cut and put into a plastic cup (diameter: 10 cm, height: 10 cm) along with 10 two-year-old larvae of Chilo suppressalis. After 4 days, the mortality was examined (2 replications). Furthermore, after 1 day from spraying, the other 2 pots were put into an artificial weather chamber (set condition: 25 degree centigrade, 12-12 hr light-dark cycle), and a spore suspension of Pyricularia oryzae was spray-inoculated. The

humidity at the weather chamber was kept high and, after 7 days, the number of Pyricularia oryzae lesions was examined. The control value was calculated according to the following equation (2 replications). The results are shown in Table 12.

$$\text{Control Value} = (1 - \text{number of lesions in the treated area} / \text{number of lesions in the untreated area}) \times 100$$

[Table 12-1]

| Supplied chemical | Amount of treated chemical (gai/10a) | Mortality (%) | Pyricularia oryzae Control value |
|---|---|---|---|
| Compound 601 + Compound 3003 | 100+150 | 100 | 100 |
| Compound 601 + Compound 3004 | 100+150 | 100 | 100 |
| Compound 601 + Compound 3005 | 100+150 | 100 | 100 |
| Compound 601 + Compound 3006 | 100+60 | 100 | 100 |
| Compound 601 + Compound 3007 | 100+60 | 100 | 100 |
| Compound 601 + Compound 3008 | 100+60 | 100 | 100 |
| Compound 1208 + Compound 3003 | 100+150 | 100 | 100 |
| Compound 1208 + Compound 3004 | 100+150 | 100 | 100 |
| Compound 1208 + Compound 3005 | 100+150 | 100 | 100 |
| Compound 1208 + Compound 3006 | 100+60 | 100 | 100 |
| Compound 1208 + Compound 3007 | 100+60 | 100 | 100 |
| Compound 1208 + Compound 3008 | 100+60 | 100 | 100 |
| Compound 210 + Compound 3003 | 100+150 | 100 | 100 |
| Compound 210 + Compound 3004 | 100+150 | 100 | 100 |
| Compound 210 + Compound 3005 | 100+150 | 100 | 100 |
| Compound 210 + Compound 3006 | 100+60 | 100 | 100 |
| Compound 210 + Compound 3007 | 100+60 | 100 | 100 |
| Compound 210 + Compound 3008 | 100+60 | 100 | 100 |

(continued)

| Supplied chemical | Amount of treated chemical (gai/10a) | Mortality (%) | Pyricularia oryzae Control value |
|---|---|---|---|
| Compound 3000 + Compound 3003 | 100+150 | 100 | 100 |
| Compound 3000 + Compound 3004 | 100+150 | 100 | 100 |
| Compound 3000 + Compound 3005 | 100+150 | 100 | 100 |
| Compound 3000 + Compound 3006 | 100+60 | 100 | 100 |
| Compound 3000 + Compound 3007 | 100+60 | 100 | 100 |
| Compound 3000 + Compound 3008 | 100+60 | 100 | 100 |

[Table 12-2]

| Supplied chemical | Amount of treated chemical (gai/box) | Mortality (%) | Pyricularia oryzae Control value |
|---|---|---|---|
| Compound 3001 + Compound 3003 | 100+150 | 100 | 100 |
| Compound 3001 + Compound 3004 | 100+150 | 100 | 100 |
| Compound 3001 + Compound 3005 | 100+150 | 100 | 100 |
| Compound 3001 + Compound 3006 | 100+60 | 100 | 100 |
| Compound 3001 + Compound 3007 | 100+60 | 100 | 100 |
| Compound 3001 + Compound 3008 | 100+60 | 100 | 100 |
| Compound 3002 + Compound 3003 | 100+150 | 100 | 100 |
| Compound 3002 + Compound 3004 | 100+150 | 100 | 100 |
| Compound 3002 + Compound 3005 | 100+150 | 100 | 100 |
| Compound 3002 + Compound 3006 | 100+60 | 100 | 100 |
| Compound 3002 + Compound 3007 | 100+60 | 100 | 100 |
| Compound 3002 + Compound 3008 | 100+60 | 100 | 100 |
| Compound 601 | 100 | 95 | 2 |
| Compound 1208 | 100 | 95 | 5 |

(continued)

| Supplied chemical | Amount of treated chemical (gai/box) | Mortality (%) | Pyricularia oryzae Control value |
|---|---|---|---|
| Compound 210 | 100 | 95 | 0 |
| Compound 3000 | 100 | 90 | 3 |
| Compound 3001 | 100 | 95 | 0 |
| Compound 3002 | 100 | 90 | 3 |
| Compound 3003 | 150 | 0 | 100 |
| Compound 3004 | 150 | 0 | 100 |
| Compound 3005 | 150 | 0 | 100 |
| Compound 3006 | 60 | 0 | 100 |
| Compound 3007 | 60 | 5 | 100 |
| Compound 3008 | 60 | 0 | 100 |
| Untreated plot | | 0 | 0 |

## Claims

**1.** An insecticidal and fungicidal composition comprising;
one or two or more compounds selected from compounds represented by the general formula (1) or (2); and
one or two or more compounds selected from compounds represented by the general formula (3) or (4) as active ingredients,

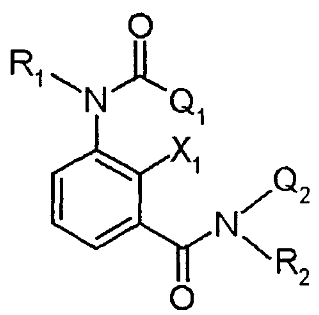

(1)

wherein, in the formula (1), $X_1$ is a hydrogen atom or a fluorine atom; $R_1$ and $R_2$ are independently a hydrogen atom or a C1-C4 alkyl group; $Q_1$ is a phenyl group,
a substituted phenyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group, a C1-C4 alkylcarbonyloxy group, a C1-C4 alkoxycarbonyl group, an acetylamino group and a phenyl group,
a pyridyl group, or
a pyridyl group having one or more substituents which may be the same or different and are selected from a halogen atom, a C1-C4 alkyl group, a C1-C4 haloalkyl group, a C2-C4 alkenyl group, a C2-C4 haloalkenyl group, a C2-C4 alkynyl group, a C2-C4 haloalkynyl group, a C3-C6 cycloalkyl group, a C3-C6 halocycloalkyl group, a C1-C3 alkoxy group, a C1-C3 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group, a C1-C4 alkylamino group, a di C1-C4 alkylamino group, a cyano group, a nitro group, a hydroxy group, a C1-C4 alkylcarbonyl group,

a C1-C4 alkylcarbonyloxy group, a C1-C4 alkoxycarbonyl group, an acetylamino group and a phenyl group; and $Q_2$ is represented by the general formula (A),

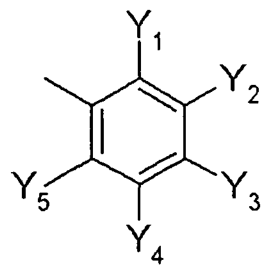

(A)

wherein, in the formula (A), $Y_1$ and $Y_5$ may be the same or different and represent a halogen atom, a C1-C4 alkyl group, a C1-C4 haloalkyl group, a C1-C4 alkoxy group, a C1-C4 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group or a cyano group; $Y_3$ represents a C2-C6 perfluoroalkyl group, a C2-C6 perfluoroalkylthio group, a C1-C6 perfluoroalkylsulfinyl group or a C1-C6 perfluoroalkylsulfonyl group; and $Y_2$ and $Y_4$ represent a hydrogen atom, a halogen atom or a C1-C4 alkyl group, or

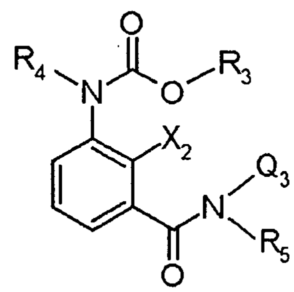

(2)

wherein, in the formula (2), $X_2$ is a hydrogen atom or a fluorine atom; $R_4$ and $R_5$ are independently a hydrogen atom or a C1-C4 alkyl group; $R_3$ represents a C1-C6 alkyl group, a C1-C6 haloalkyl group, a C2-C6 alkenyl group, a C2-C6 haloalkenyl group, a C2-C6 alkynyl group, a C2-C6 haloalkynyl group, a C3-C8 cycloalkyl group, a C3-C8 halocycloalkyl group, $-E_1-Z_1-R_6$ (wherein, in the formula, $E_1$ represents a C1-C4 alkylene group, a C2-C4 alkenylene group, a C3-C4 alkynylene group, a C1-C4 haloalkylene group, a C2-C4 haloalkenylene group or a C3-C4 haloalkynylene group; $R_6$ represents a hydrogen atom, a C1-C6 alkyl group, a C2-C6 alkenyl group, a C2-C6 alkynyl group, a C1-C6 haloalkyl group, a C2-C6 haloalkenyl group or a C2-C6 haloalkynyl group; $Z_1$ represents -O-, -S-, -SO-, $-SO_2-$, -C(=O)-, -C(=O)O-, -OC(=O)-, $-N(R_7)-$, $-C(=O)N(R_7)-$ or $-N(R_7)C(=O)-$($R_7$ represents a hydrogen atom, a C1-C4 alkyl group, a C1-C4 alkylcarbonyl group, a C1-C4 haloalkylcarbonyl group or a C1-C4 alkoxycarbonyl group)) or $-E_2-R_8$ (wherein, in the formula, $E_2$ represents a C1-C4 alkylene group, a C2-C4 alkenylene group, a C3-C4 alkynylene group, a C1-C4 haloalkylene group, a C2-C4 haloalkenylene group or a C3-C4 haloalkynylene group; $R_8$ represents a C3-C8 cycloalkyl group, a C3-C8 halocycloalkyl group, a cyano group, a nitro group, a hydroxy group, a phenyl group,

a substituted phenyl group having one or more substituents which may be the same or different and are selected from a halogen atom, a C1-C6 alkyl group, a C1-C6 haloalkyl group, a C1-C6 alkoxy group, a C1-C6 haloalkoxy group, a C1-C6 alkylthio group, a C1-C6 haloalkylthio group, a C1-C6 alkylsulfinyl group, a C1-C6 haloalkylsulfinyl group, a C1-C6 alkylsulfonyl group, a C1-C6 haloalkylsulfonyl group, a cyano group, a nitro group, a hydroxy group, a C1-C4 alkylcarbonyl group, a C1-C4 haloalkylcarbonyl group, a C1-C4 alkylcarbonyloxy group and a C1-C4 alkoxycarbonyl group,

a pyridyl group,

a substituted pyridyl group having one or more substituents selected from a halogen atom, a C1-C6 haloalkyl group and a C1-C6 haloalkoxy group,

a thienyl group, or

a tetrahydrofuran group); and

$Q_3$ is represented by the general formula (B),

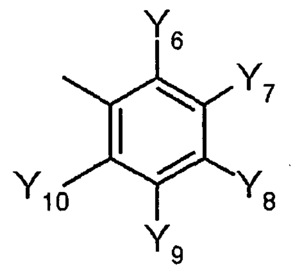

(B)

wherein, in the formula (B), $Y_6$ and $Y_{10}$ may be the same or different and represent a halogen atom, a C1-C4 alkyl group, a C1-C4 haloalkyl group, a C1-C4 alkoxy group, a C1-C4 haloalkoxy group, a C1-C3 alkylthio group, a C1-C3 haloalkylthio group, a C1-C3 alkylsulfinyl group, a C1-C3 haloalkylsulfinyl group, a C1-C3 alkylsulfonyl group, a C1-C3 haloalkylsulfonyl group or a cyano group; $Y_8$ represents a C2-C6 perfluoroalkyl group, a C1-C6 perfluoroalkylthio group, a C1-C6 perfluoroalkylsulfinyl group or a C1-C6 perfluoroalkylsulfonyl group; and $Y_7$ and $Y_9$ represent a hydrogen atom, a halogen atom or a C1-C4 alkyl group, and

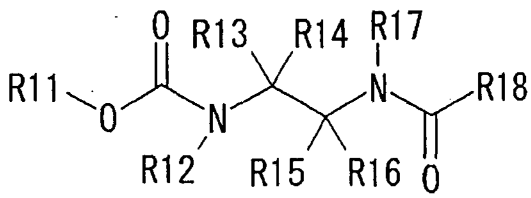

(3)

wherein, in the formula (3), R11 represents an alkyl group having 1 to 6 carbon atoms, an alkenyl group having 2 to 6 carbon atoms, an arylalkyl group or a heterocyclic alkyl group; R12 and R17 independently represent a hydrogen atom; R13 and R14 each independently represent a hydrogen atom or an alkyl group having 1 to 6 carbon atoms; R15 and R16 independently represent a hydrogen atom; and R18 represents an aryl group or a heterocycle, or

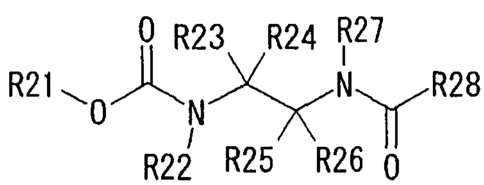

(4)

wherein, in the formula (4), R21 represents an alkyl group having 1 to 6 carbon atoms substituted with halogen, a cycloalkyl group having 3 to 6 carbon atoms substituted with halogen or an alkenyl group having 2 to 6 carbon atoms substituted with halogen; R22 and R27 independently represent a hydrogen atom; R23 and R24 each independently represent a hydrogen atom or an alkyl group having 1 to 6 carbon atoms; R25 and R26 independently represent a hydrogen atom; and R28 represents an aryl group or a heterocycle.

**2.** An insecticidal and fungicidal composition containing one or two or more compounds selected from compounds represented by the general formula (1) as set forth in claim 1 and one or two or more compounds selected from compounds represented by the general formula (3) as set forth in claim 1 as active ingredients.

**3.** An insecticidal and fungicidal composition containing one or two or more compounds selected from compounds represented by the general formula (1) as set forth in claim 1 and one or two or more compounds selected from compounds represented by the general formula (4) as set forth in claim 1 as active ingredients.

**4.** An insecticidal and fungicidal composition containing one or two or more compounds selected from compounds represented by the general formula (2) as set forth in claim 1 and one or two or more compounds selected from compounds represented by the general formula (3) as set forth in claim 1 as active ingredients.

**5.** An insecticidal and fungicidal composition containing one or two or more compounds selected from compounds

represented by the general formula (2) as set forth in claim 1 and one or two or more compounds selected from compounds represented by the general formula (4) as set forth in claim 1 as active ingredients.

**INTERNATIONAL SEARCH REPORT**

International application No. PCT/JP2006/314246

A. CLASSIFICATION OF SUBJECT MATTER
*A01N37/24*(2006.01)i, *A01N41/10*(2006.01)i, *A01N41/12*(2006.01)i, *A01N43/08*(2006.01)i, *A01N43/10*(2006.01)i, *A01N43/36*(2006.01)i, *A01N43/40*(2006.01)i, *A01N47/20*(2006.01)i

According to International Patent Classification (IPC) or to both national classification and IPC

B. FIELDS SEARCHED

Minimum documentation searched (classification system followed by classification symbols)
A01N37/24, A01N41/10, A01N41/12, A01N43/08, A01N43/10, A01N43/36, A01N43/40, A01N47/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| P,Y | WO 2005/073165 A1 (Mitsui Chemicals, Inc.), 11 August, 2005 (11.08.05), (Family: none) | 1-3 |
| Y<br>A | WO 2005/021488 A1 (Mitsui Chemicals, Inc.), 10 March, 2005 (10.03.05), & AU 2004268104 A & CA 2537124 A & EP 1661886 A1 | 1,4,5<br>2,3 |
| Y | WO 03/008372 A1 (Mitsui Chemicals, Inc.), 30 January, 2003 (30.01.03), & JP 2003-96046 A & EP 1408027 A1 & BR 2002011291 A & CN 1628095 A & US 2005/075512 A1 | 1,2,4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 August, 2006 (21.08.06) | 29 August, 2006 (29.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/314246

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2005/042474 A1 (Mitsui Chemicals, Inc.), 12 May, 2005 (12.05.05), & AU 2004284997 A & EP 1681285 A1 | 1,3,5 |
| Y | WO 2004/076421 A1 (BAYER CROPSCIENCE GMBH), 10 September, 2004 (10.09.04), BSP.NrJ, 710, 712, 722 & DE 10307845 A & EP 1601654 A1 & BR 2004007842 A & US 20006/173022 A1 | 1,2,4 |
| Y | JP 11-240857 A (Nihon Nohyaku Co., Ltd.), 07 September, 1999 (07.09.99), Compound Nos.1990, 1991 & EP 919542 A2 & AU 9893292 A & ZA 9810677 A & EP 1447396 A1 & IL 127204 A & EG 22230 A & CN 1222506 A & BR 9805060 A | 1,2,4 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 200055120 B
- US 6548514 B
- US 20007980 B
- US 2002032238 A
- US 200521488 B
- US 2003008372 A
- US 2005042474 A
- US 20038372 B
- US 200542474 B
- WO 200521488 A
- WO 20038372 A
- WO 200542474 A


### Non-patent literature cited in the description


- *Chem. Ber.,* 1970, 788
- *J. Am. Chem. Soc.,* 1967, 5012
- *Synthesis,* 1993, 463
- *Synthesis,* 1984, 829
- *J. Org. Chem.,* 1958, 280
- *J. Fluorine Chem.,* 1994, 207
- *Synth. Commun.,* 1989, 1261
- *Tetrahedron Lett.,* 1994, 4955
- *Tetrahedron Lett.,* 2000, 6237